(19) Europäisches Patentamt
European Patent Office
Office européen des brevets

(11) Publication number: **0 007 153**
**A2**

# (12) EUROPEAN PATENT APPLICATION

(21) Application number: 79300538.0

(51) Int. Cl.$^3$: G 05 B 19/04

(22) Date of filing: 02.04.79

(30) Priority: 12.04.78 US 895581

(43) Date of publication of application: 23.01.80 Bulletin 80/2

(84) Designated Contracting States: BE CH DE FR GB LU SE

(71) Applicant: GOULD INC. MODICON DIVISION
10 Gould-Center
Rolling Meadows Illinois 60008(US)

(72) Inventor: Hill, Lawrence W.
163 Waverley St.
Arlington Mass.(US)

(72) Inventor: Stoodley III, Thomas J.
26 Lura St.
Lowell Mass.(US)

(72) Inventor: Malcolm, Ronald
7 Richard Circle
Andover Mass.(US)

(74) Representative: Wilson, Joseph Martin et al,
WITHERS & ROGERS 4 Dyer's Buildings Holborn
London EC1N 2JT(GB)

## (54) Improved programmable controller.

(57) A small, low cost, programmable controller is described capable of solving user programs represented in networks having up to seven rows and eleven columns. A column solver is utilized to provide efficient and fast solution of the user control network. The programmable controller also solves calculate functions having multiple outputs to facilitate use of the output information in the control program.

A programming panel using a CRT display shows one or more selected control networks and, in conjunction with the central processing unit of the programmable controller, provides for the insertion of networks between two existing networks. Since the networks are solved by the controller mainframe in a sequential fashion, this network insertion allows the user to optimize his or her control program when solution order of the networks is important.

The output coil numbers of network rows may also be assigned by the user independent of their placement in the control program to further facilitate programming the controller. The programming panel includes a movable cursor on the CRT display which, in conjunction with a light-emitting diode (LED), allows the user to monitor the real-time power flow at any particular point in the displayed ladder diagram network. Specialized search features can also be specified by the user to simplify monitoring and de-bugging the control program.

The present invention relates to programmable controllers used in industrial control applications such as those found to control material handling, metal cutting, packaging, assembly, batch sequencing, grinding, welding, polymer blending and handling, as well as energy management.

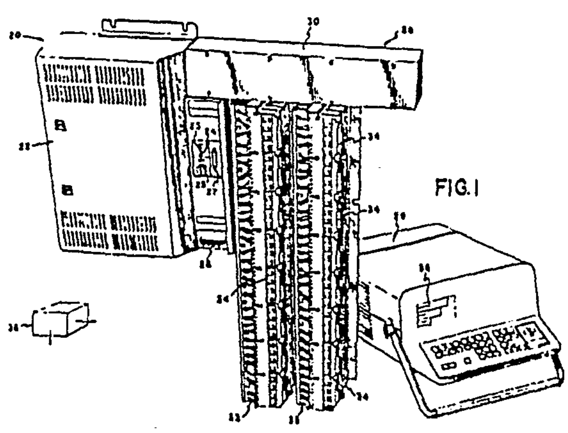

FIG.1

EP 0 007 153 A2

BACKGROUND ART

Since the advent of programmable controllers in the early 1970's (such as that disclosed in U.S. Patent 3,686,639), these devices have been able to replace the hard wire relay logic control systems used in many industrial control applications. In the ensuing years, they have become more powerful, replacing not only relay ladder-type control programs, but also performing non-relay functions such as timing and counting, as well as performing data manipulation and transfer such as that disclosed in U.S. Patent 3,930,233. Indeed, programmable controllers have become so powerful in recent years, controlling virtually thousands of outputs and performing many diverse and complicated data manipulation and transfer operations that they in many circumstances can replace the minicomputer for controlling complex industrial control systems. The Modicon 1084 Programmable Controller disclosed in pending U.S. Patent Applications Serial No. 646,412 filed January 2, 1976 and Divisional Application Serial No. 873,407 filed January 30, 1978 are characteristic of these large, high-powered controllers/data processors.

It has also been found during the relatively short history of the programmable controller that a need existed for small, low cost programmable controllers to replace control programs that would normally utilize eight or more hard-wired relays. It has further been found that it is at times desirable to allow the control engineer to program not only ladder-type control programs with each rung of the ladder representing an electrical circuit line having one or more nodes or contacts and a coil output which may be referenced to other nodes, but also a network of logic lines with interconnections between nodes of adjacent lines. Some companies such as Texas Instruments and Allen-Bradley have provided programmable controllers with programming panels capable of being programmed with control networks which can have interconnections between adjacent lines within the network. However, it has been found that, due to the type of solution employed by these programmable controllers, constraints had to be placed upon the user in terms of the number of vertical connections that could be placed between adjacent lines as well as the number of nodes that could be encompassed within two vertical lines of the control program. The present invention eliminates these problems in prior art programmable controllers by providing a control network without any limitations on the user in terms of the number of vertical interconnections that can be made within the network nor in the arrangement of nodes between vertical interconnections of the network. This is achieved by the utilization of what is called a "column solver" which for each network solves the vertical power flow in both the up and down directions for each node in a column.

The present invention also provides a programmable controller with improvements not found in prior art programmable controllers, such as the capability of inserting one or more networks between two existing networks so as to effectively re-number the remaining networks and thereby insure correct sequential solution of the networks where such a solution is desired.

The output point in the I/O system to which the coil output of a user line references, is assignable by the user and not dictated by line number. This further reduces the constraints placed on the user in formulating his or her control program.

The present invention also provides a programmable controller that has multiple discrete outputs on some calculate functions. These multiple outputs facilitate use of the result of the calculate function by the control engineer. Furthermore, the present invention not only provides for discrete input/output but also register input/output on the same I/O modules for the transferral of data to and from the programmable controller and interconnected devices such as other programmable controllers in a hierarchical control arrangement. In addition, the present invention provides a cursor display on its CRT which allows the user to have the real-time display of power status at any particular node in any selected line of the ladder-diagram network. Specialized search features are also present to the user.

In addition, the present programmable controller is housed in a unique modular arrangement suitable to a rugged industrial environment. The various features of the mechanical aspects of the present invention are disclosed and claimed in a co-pending patent application filed simultaneously with the present patent application.

All of the improvements synergistically combine to provide a low cost, flexible, and easily viable programmable controller.

## DISCLOSURE OF INVENTION

An improved programmable controller according to the present invention comprises a power supply and central processing unit (CPU) and memory forming a mainframe enclosed in a first housing, and an input/output assembly having an input/output (I/O) bus interconnected to the mainframe at one end and to one or more I/O housings in a daisy chain fashion. Depending on their length, each I/O housing has from one to four or from one to eight I/O modules. Each I/O module has either four discrete input points or four discrete output points. There are separate I/O modules for AC and DC inputs and outputs. The I/O bus is housed in I/O duct which provides easy installation as well as effective electromagnetic interference (EMI) protection.

Insertion of a user generated control program is performed by an interconnectable programming panel which allows for the generation of electrical ladder diagram networks up to seven rows in length and eleven columns in width, representing up to 77 nodes. The programming panel in conjunction with the mainframe allows the user to move a cursor to any node in the network with an associated light-emitting diode (LED) on the programming panel indicating the real-time power status of that node.

The CPU further comprises a column solver which solves the vertical power status between adjacent nodes in different lines or rows on a column-by-column basis interacting with the solution of the nodes by other portions of the mainframe.

The programming panel allows the user to insert one or more networks between two existing networks in such a manner that the networks below the inserted network are effectively pushed down not only on the CRT display but also in the solution order as performed by the mainframe. This feature coupled with the user assignability of coil outputs to any I/O point allows for more effective user programming, especially where solution order of the program is important.

Finally, the programming panel in conjunction with the memory has a percentage memory feature and an associated check count which is stored during a power-down sequence and compared with the count obtained during a power-up sequence in order to prevent the operation of the controller in solving the user networks if the two check counts do not match. This prevents the use of incorrectly stored data in memory in a power-up sequence.

Therefore, it is a principal object of the present invention to provide an improved programmable controller which is able to generate and solve multi-node electrical ladder-diagram networks in conjunction with a column solver for the rapid and efficient columnar solving of interconnections between adjacent lines of the ladder-diagram network;

It is a further object of the present invention to provide an improved programmable controller of the above description utilizing a CRT programming panel which displays the user generated ladder-diagram networks and which has a user movable cursor that can be placed at any node within the ladder-diagram network for displaying on an associated LED the real-time power status of that node as it is solved by the CPU;

Another object of the present invention is to provide an improved programmable controller of the above character capable of performing calculate functions with multiple outputs so as to facilitate use of the resultant output in other portions of the control program;

A still further object of the present invention is to provide an improved programmable controller of the above character in which the I/O system incorporates one or more I/O housings, each housing connecting with one or more input or output modules which can communicate with the mainframe not only discrete input/output data but also register input/output data for data processing purposes;

Another object of the present invention is to provide an improved programmable controller of the above description which has a programming panel and associated mainframe which allows the user to insert networks between existing networks and which provides for the sequential solution of the inserted networks;

An additional object of the present invention is to provide a programmable controller of the above character having coil I/O assignability independent of its line and network location;

Another object of the present invention is to provide a programmable controller of the above character having specialized search techniques to facilitate monitoring and de-bugging of the user program.

A still further object of the present invention is to provide a programmable controller of the above character which generates a check count during a power-down sequence indicative of the contents of memory and to generate a second check count during a power-up sequence representative of the same status of the memory and to prevent operation of the controller if the two check counts are not the same;

Other objects of the present invention will in part be obvious and will in part appear hereinafter.

BRIEF DESCRIPTION OF DRAWINGS

For a fuller understanding of the nature and objects of the present invention, reference should be made to the following detailed description and the accompanying drawings, in which:

FIGURE 1 is a perspective view of the programmable controller according to the present invention illustrating the housing enclosing the mainframe comprising the central processing unit, memory and power supply, the I/O duct housing the I/O bus for communicating between the CPU and the illustrated I/O housings interconnected to the I/O bus and in turn housing up to eight I/O modules, each module being either an input or an output module and intercommunicating at four points with external devices, and further illustrating the programming panel interconnected to the mainframe housing by a front mounted connector for user monitoring, programming and debugging of the control program as generated by the user on the programming panel;

FIGURE 1A is a perspective view of a portion of the mainframe housing and I/O system showing the I/O duct with its front cover removed and illustrating interconnection of the I/O bus with the I/O housings;

FIGURE 1B is a diagrammatic block diagram of the programmable controller shown in FIGURE 1;

FIGURE 2 is a plan view of the keyboard, LED, and portion of the CRT display of the programming panel shown in FIGURE 1;

FIGURE 3 is an illustration of the top level subsystem hierarchy of the programmable controller shown in FIGURE 1;

FIGURE 4 illustrates a typical electrical ladder-diagram network that may be programmed by a control engineer with the programming panel shown in FIGURE 1;

FIGURE 5 illustrates another typical electrical ladder-diagram network that may be programmed on the programming panel;

FIGURE 6A illustrates the CRT format for both the user network and status/assembly areas;

FIGURE 6B illustrates the status/assembly area for a normally open contact with a vertical interconnection;

FIGURE 6C illustrates the status/assembly area for a normally open contact and a START function;

FIGURE 6D illustrates the status/assembly area for a normally open contact with memory protect;

FIGURE 6E sets forth the legend for the symbols used in FIGURES 6A-6D;

FIGURE 7 illustrates the displays generated by the programming panel CRT for a selected node when various changes to the node are made by the user;

FIGURES 8A-8H illustrate the assembly portion of the CRT display when a search function is desired utilizing various parameters of the control program;

FIGURE 9 is a control flow diagram of the mainframe software of the programmable controller shown in FIGURE 1;

FIGURE 10A is a data flow diagram of the mainframe software during normal operation of the programmable controller following startup;

FIGURE 10B is a data flow diagram similar to that shown in FIGURE 10A representing the data flow during power-down and power-up operations;

FIGURE 11 is a timing diagram for the mainframe of the programmable controller shown in FIGURE 1;

FIGURE 12 is a software state diagram for the mainframe of the programmable controller shown in FIGURE 1;

FIGURES 13A-13D are schematic diagrams of the memory addressing counters and read gates of the central processing unit shown in FIGURE 1;

FIGURE 13E is a diagram showing how FIGURES 13A-13D are placed together;

FIGURES 14A-14D are schematic diagrams of the I/O interface of the CPU;

FIGURE 14E is a diagram showing how FIGURES 14A-D are placed together;

FIGURES 15A-15D are schematic diagrams of the control select logic of the CPU ;

FIGURE 15E is a diagram showing how FIGURES 15A-15D are placed together;

FIGURES 16A-16D are schematic diagrams of the processor and program ROM interface of the CPU;

FIGURE 16E is a diagram showing how FIGURES 16A-16D are placed together;

FIGURES 17A-17D are schematic diagrams of the peripheral port and scratchpad of the CPU;

FIGURE 17E is a diagram showing how FIGURES 17A-17D are placed together;

FIGURES 18A-18D are schematic diagrams of the connectors used in the central processing unit shown in FIGURE 1;

FIGURE 18E is a diagram showing how FIGURES 18A-18D are placed together;

FIGURES 19A-19D, 20A-20D, 21A-21D, 22A-22D, and 23A-23B are schematic diagrams of the memory boards for storing the user ladder-diagram network, coil data and register data, this memory schematic diagram forming a portion of the central processing unit of the programmable controller shown in FIGURE 1;

FIGURES 19E, 20E, 21E, 22E, and 23C are diagrams showing how FIGURES 19A-19D, 20A-20D, 21A-21D, 22A-22D, and 23A-23B are respectively put together;

FIGURES 24A-24D, 25A-25D, 26A-26D, 27A-27D, and 28A-28D are schematic diagrams of the programming panel shown in FIGURE 1;

FIGURES 24E, 25E, 26E, 27E, and 28E are diagrams showing how FIGURES 24A-24D, 25A-25D, 26A-26D, 27A-27D, and 28A-28D are respectively put together;

FIGURE 29 is a diagrammatic view of a user network illustrating how the column solver functions; and

FIGURE 30 is a diagrammatic view of another user network which can pose difficulties for prior art programmable controllers.

# BEST MODE OF CARRYING OUT THE INVENTION

## GENERAL DESCRIPTION

As best seen in FIGURES 1-1A, 1B and 2, a programmable controller 20 according to the present invention includes a housing 22 enclosing a mainframe 39 comprising a central processing unit, memory 21, and a power supply 37 for providing DC power to the remainder of the programmable controller. The housing includes a power indicator 23, a run indicator 24, a memory protect key lock switch 25, a utility AC connector 26, and a peripheral port connector 27. As shown on FIGURE 1A, a battery low light 51 may also be used to show when battery backup power is low. The peripheral port connector provides intercommunication between the programmable controller and a programming panel 29 by means of a cable (not shown).

The programmable controller further includes an I/O system 28 comprising an I/O duct 30, I/O bus 32, I/O housings 33, and I/O modules 34. I/O duct 30 houses the input/output bus 32 (see FIGURES 1A and 1B) which interconnects the mainframe with each of the interconnected I/O housings 33 depending from the I/O duct. Each I/O housing incorporates from one to eight I/O modules 34 each module being an input module or output module for either AC or DC voltages. Each I/O module has four output points or input points for interconnection with discrete external devices or, when operating in a register I/O mode, with data processing devices such as minicomputers or hierarchical programmable controllers. The programmable controller in its maximum configuration can control 256 discrete outputs and respond to up to 256 discrete inputs. These additional I/O points are provided by additional I/O modules housed on additional I/O housings not shown in FIGURE 1. Indeed, the duct 30 may be extended on both the sides shown in FIGURE 1 as well as below housing 22 in order to provide for the additional I/O housings and modules. In addition to the programming panel 29 that may be interconnected to the peripheral port connector 27, a tape loader, other CRT programming panels, and a monitoring computer may all be connected through connector 27 by means of a peripheral port adapter 35.

The full range of the programmable controller is diagrammatically shown in FIGURE 3 which illustrates the various subsystems of the controller and the various interconnections between the subsystems and the external world.

The mainframe is an integral assembly within housing 22 containing a processor, E5 (see FIGURES 16A-16D), read-only memory (ROM), a resident executive program, battery backed up random access memory (RAM), a resident user program and interfaces to the I/O programming panel 29, other peripheral devices and to the I/O system 28. As best seen in FIGURES 1 and 2, the programming panel 29 consists of a cathode ray tube (CRT) 36, a keyboard 38, and an LED power status light 40, all of which is supported by a microprocessor (see FIGURES 24A-28D) as more fully discussed later. The programming panel displays the user generated program in terms of one or more networks such as shown in FIGURES 4 and 5, each network comprising up to seven electrical ladder-diagram rows or rungs containing nodes comprising user selected elements which may be interconnected vertically as more fully described later. The programming panel further displays the power status and register contents and permits changes to the control program.

Thus, the basic programmable controller according to the present invention performs logic solution processing which interfaces to I/O, a programming panel and other peripherals. The mainframe memory 21 includes a minimum of 256 bytes of user memory which allows the user to nominally program 96 nodes in his or her electrical ladder-diagram networks including 64 discrete inputs, 64 discrete outputs, 64 internal coils, and 62 holding registers. Registers are represented as 12-bit binary quantities in the CPU and are converted to three decimal digits for display on programming panel 29 and to three binary coded decimal digits (BCD) for I/O via a register multiplexer. For limited register data transferral discrete I/O modules may be used with the CPU software making the necessary BCD to binary and binary to BCD conversions. The user instruction set includes relays, latches, timers, counters, all represented on a multi-node seven row by eleven column program format per network as best seen in typical networks shown in FIGURES 4 and 5. The programmable controller can additionally perform register I/O up to 32 input and 32 output registers and transitional contacts sensing true to false or false to true transitions as well as calculate functions with multiple outputs and step sequencers. The user memory can also be extended from 256 bytes up to 4,096 bytes.

## Functional Description

### CONTROLLER MAINFRAME

The controller mainframe 39 within housing 22 performs the processing necessary to convert inputs to outputs in accordance with the user's control program. It contains an interface to the I/O bus 32 and a serial interface 27 for communication with peripherals such as programming panel 29. Control and indicators consist of the run light 24, a power O.K. light 23, a battery low light 51 and a memory protect switch 25. Physically, the mainframe is approximately six inches deep, fifteen inches wide and eighteen inches high and can hang vertically from mounting screws and is normally intended for installation with an eight inch NEMA cabinet. It is packaged in a drip-proof enclosure and cooled by convection; thereby making it suitable for harsh industrial environments. The mainframe CPU scans and solves the user program once every twenty milliseconds maximum, and the system can support up to 256 discrete inputs, 256 discrete outputs and register I/O. The CPU software, as described more fully later, cycles continuously. Appendix A sets forth the entire mainframe software.

In each cycle it reads all field inputs, executes a logical transfer function defined by the user entered program which relates inputs to outputs, and generates field outputs accordingly. In addition, the software interfaces the CPU to the programming panel and/or additional EIA devices via the peripheral port adapter 35. This interface accommodates changes to the user entered program and provides output status information for display on the programming panel 29. The user program represented on the programming panel is in the

BAD ORIGINAL

form of a relay ladder-diagram network having nodes including normally open and normally closed switches, open and shorted connections both vertically and horizontally, timers and counters, transitional contacts, arithmetic functions including add, subtract, multiply and divide, sequencers, and binary-to-BCD and BCD-to-binary converts.

The field inputs consist of up to 256 discrete points, four per input module 34, each with a state of ON or OFF, plus of up to 32 words of register data. Each word of register data represents a binary number in the range of Ø to 999 (base 10). These values are read into the controller from the I/O bus 32. BCD to binary conversion is made by the register multiplexer. All inputs are read at least once every 20 milliseconds.

Field outputs consists of up to 256 discrete points each with the state ON or OFF plus up to 32 ten-bit words of register data. These values are sent from the controller to the I/O bus 32 and are generated at least once every 20 milliseconds based on completing execution of the user program.

The mainframe contains a peripheral port 27 whose purpose is to interface to the programming panel or via a peripheral port adapter 35 to any EIA protocol device. The CPU accepts commands and data from this port whose purpose is to modify the user program residing in the controller, to alter the controller's state or to extract data from the controller. This data may either be a portion of the user program or the state of the programmable controller.

For all transfers of information, the peripheral device such as the programming panel 29 initiates a command and the controller mainframe responds thereto. This is true even for power data. Redundant bits are transmitted to aid in detecting transmission errors.

In addition, the mainframe displays operational and non-operational status via the run light 24. This light is ON whenever the executive program within the controller is being executed properly and is OFF when the executive program is halted due to a power failure, failure of onboard diagnostics, or other intermediate failures. All discrete outputs are turned OFF in the event of such failure and remain OFF until primary power has been cycled on in the power-up sequence.

The mainframe senses the status of the memory protect keylock switch 25. If the memory protect is engaged, attempts to change the user program by the programming panel are not permitted and result in transmission of error code.

The mainframe displays proper power supply output via the power O.K. light 23.

The basic CPU processing can be set forth in five systems:

1) power-up, power-down,
2) logic solving;
3) peripheral port I/O handling;
4) field I/O handling; and
5) onboard diagnostics.

Upon power-up, the CPU executes a set of appropriate diagnostic tests to insure that the hardware is functioning properly. If these tests fail, the system halts, leaving data in predetermined locations of memory identifying what has failed. If these tests are passed, then the following sequence occurs:

1) all outputs are set OFF with the exception of latches and disabled outputs which were ON when power was last removed, these outputs retain their ON state;
2) read all inputs; and
3) illuminate the run light 24 and start solving the user logic.

Upon an indication of imminent power failure, appropriate parameters are stored to permit orderly start-up of the programmable controller.

The CPU interprets the user program data base and generates field outputs based on field inputs as determined by the contents of the data base. The instruction set and syntax of the interpretive language used to represent the user's relay ladder-diagram networks in the data base is set forth below. Details of the operation and representation of various instructions, addressing conventions, and range constraints also appear below.

INSTRUCTION SET

The instruction set of the programmable controller includes the following:

1) relays-normally open, relays-normally closed, horizontal open, horizontal short, vertical short, vertical open;
2) timers, 0.1 second, 1 second, and Ø.Ø1 seconds, 3 BCD digit magnitude;
3) counters, 3 BCD digit magnitude;
4) coil, latched or unlatched; may be disabled ON or OFF;
5) transitional relay contacts conduct ON with a transition from OFF to ON or conduct ON on a transition from OFF to ON of the designated reference;
6) sequencer stepping switches;
7) binary-to-BCD and BCD-to-binary converts;
8) calculate B + C = D;
9) calculate; B - C = D; three discrete outputs; one output ON if B greater than C, a second output ON if B = C, a third output ON if B is less than C;
10) B x C = D; one discrete output always equal to the logical value of input I1; (see Table 10C);
11) B ÷ C = D; one discrete output ON if the division is proper, a second discrete output ON if there is a dividend overflow, and a third discrete is ON if the divisor is equal to zero.

The syntax for the instructions is a ladder-diagram network of a maximum size of eleven columns by seven rows as best seen in FIGURES 4 and 5. Coils appear only in the rightmost column of the network on any or all of the rows. All coils are latchable and coils and inputs may be disabled ON or OFF from the programming panel. Coil designations for output I/O points is independent of the line or network number.

An important aspect of the present invention is the order of solution of the user program. The user program is solved in a sequential network basis and is from left to right by column within each network. This left-to-right column solution is performed in part by a column solver described more fully later which defines the input power status to the next node in a line based upon the output power from the node to its immediate left as well as any power transferred by vertical interconnections to that line from adjacent lines.

The I/O is serviced at the end of each scan solving all of the user networks and includes an update of both inputs and outputs. The network order is under the control of the user and thus, a network may be inserted between networks in a situation where the sequential order of the solving of the networks is important to the control engineer.

The CPU performs data validity checking necessary to insure that all register values, address, and reference number values are within valid ranges and that all operation codes are valid. An invalid instruction is prevented from being entered into the user memory by the CPU. If, in the process of executing the user program an invalid instruction or an invalid random access memory check sum or a stuck I/O bit is encountered, the CPU processing is halted; i.e., discrete outputs are dropped and logic solution ceases.

PROGRAMMING PANEL SUBSYSTEM

As shown in FIGURE 1, the programming panel 29 provides the primary operator/user interface for determining the functions to be performed by the programmable controller. The programming panel is a small portable device having a rugged CRT display 36 and a small dedicated function keyboard 38. The CRT displays one or more networks representing relay ladder-diagrams. The display shows a seven by eleven array of nodes containing contacts or function blocks. The system provides near real-time power display for one network at a time; however, since the network is updated less frequently than the scan time of the CPU for solving the network, it is possible that beating between the CRT refresh rate and the scan rate can result in spurious displays of power for an oscillating contact. This is overcome by the programming panel having a true real-time power display light-emitting diode (LED) 40 which displays the power for a selected contact in the displayed network as selected by the user with a cursor. The network includes a numeric key pad and a set of function buttons enabling the user to enter, edit and delete portions of his or her program.

The programming panel enables the user to enter, modify and delete logic networks as well as to monitor registers and discrete I/O points.

FIGURES 4 and 5 illustrate how a network of the control program is displayed on the CRT. Each line of the user logic program uses two rows of display on the CRT. The lower of the two rows indicates the contact type inserted at a particular column within a particular line by the user. The two lines define a series of nodes 41, each node including a contact type element such as normally open contact 42 in the lowermost row of the display and a reference number to that contact in the uppermost row such as the number 1 shown for the upper left-handmost node of FIGURE 4. The references to the elements within nodes 41 can be any coil and need not be in the sequential order shown in FIGURES 4 and 5. Horizontal connections between adjacent nodes is made by dashed lines 43 while vertical interconnections between adjacent nodes in different lines is made by dashed vertical lines 44. By use of the dashed vertical lines, it is readily apparent that user programs need not have a coil output for each line but may reference nodes from one line to vertically higher or lower nodes of other lines.

A cursor 47 (shown by dashed slanted lines) is available under user control by means of switches 45 (see FIGURE 2) to move the cursor from node to node on the network. The cursor is displayed by a reverse shading with respect to the remainder of the CRT display. The "current network" is defined as that network on the programming panel CRT which is identified by having the cursor positioned somewhere within the network. If the cursor is not positioned on any network, no network is current. Power flow is indicated by an intensified vertical and horizontal power connections and is displayed for the current network. The start of a network is indicated by a break in the left hand power rail 46 as shown in FIGURES 4 and 5.

It is readily apparent that networks need not be rectangular in shape due to the vertical interconnections available. However, they will occupy a rectangular area on the CRT display. Thus, a network whose largest column is five elements deep (that is it includes five rows) requires an eleven-by-five array on the screen. Unused elements in a network are displayed as blank areas. Vertical opens and horizontal opens are defined as used elements.

Networks are displayed on the screen only if the entire network can fit on the screen. As scrolling causes networks to shift on the screen, any network that cannot be completely displayed is blanked out from the screen.

The programmable controller does not allow the user to insert via the programming panel more data than the controller has memory to hold. Any attempt to do so results in an error code displayed on the CRT.

The lower two lines of the CRT screen form the status/assembly area. The status/assembly area consists of seven sections; all sections arranged vertically. Typical status assembly area format is shown in FIGURES 6A, 6B, 6C, 6D and 6E.

As also shown in FIGURES 6A-6E, one of the status/assembly areas displays discrete data which allows up to a maximum of six data values to be displayed from the programmable controller as shown by the six groups of NNNN. The first line is labeled "REF" and contains the reference numbers for the items being displayed. The second line is the current value of those reference elements and is labeled "VAL". Reference elements may be holding registers, input registers, discrete inputs and outputs, or internal coils. If the reference is for a register value, the current contents of the register are displayed as a four digit value. If the reference is for an I/O point, the first position of the value field contains either a D or a blank. The D indicates that the contact is disabled. The other three characters in the field are either OFF or ON which is that state of the contact. References are placed in the discrete display area via the cursor which may be placed on any of the six reference locations.

A second status/assembly area is designated "USED" with a number beneath it which indicates the number of bytes of memory that is filled by the user's control program. This number is automatically updated as changes are made in the user data base.

Another of the seven areas displays a step number (Step #) and is the position or number of the current network shown on the CRT display. It indicates the order of solution of this user network with respect to the other networks. A step number of "N" implies that there are "N-1" networks which precede this network in the data base and in the solution order.

A fourth area is the error field. It is normally blank. It is used only when the panel has an error message to display as shown in the status/assembly area by "EEEEEEEEEEE". The error field is cleared by the first error reset key 48 shown in FIGURE 2. A fifth area is the advisory field shown by "AAAAAAAAAA". It is used to display a status message. The message indicates to the user that activity is taking place during extended execution time such as a search or enter function as explained later in this description. It also indicates that the programming panel is waiting on the availability of a peripheral port. The advisory field is cleared when the message is no longer applicable.

The SHIFT field is a sixth area of the status/assembly and is shown by "S" which is normally blank. It contains the letter "S" only after the shift key 49 (FIGURE 2) has been struck. It remains on the screen for only the next key stroke. It indicates that the next key stroke will be interpreted as a shifted key stroke as shown by the upper level indicia on some of the keys of keyboard 38.

The last area is the assembly area. This area is on the extreme lower left-hand side of a six-by-two character array which is used to build the contact-type, reference number and vertical connections of a node. It is shown in FIGURE 6A as "CCCCV
RRRRV"; as defined in the legend of FIGURE 6E.

The LED 40 shown in FIGURE 2 generates a real-time display of the status of the power output of any one node in the current network as selected by the cursor position.

As shown in FIGURE 2, the keyboard 38 is the user input device of the programming panel. It consists of a set of dedicated keys and a set of keys which may be used in conjunction with shift key 49. The keys may be divided into three basic types; data keys, 40, cursor control keys 45, control keys 52 and function keys 54.

DATA KEYS

The data keys 50 shown in FIGURE 2 are defined as those keys which are entered into the assembly area. They consist of contact types and numbers. The data keys are set forth in Table 1 with an indication of the key that is used, its name and the symbol as shown on the CRT display.

The assembly area is a six-by-two array of characters which represents the contact, reference number and vertical connection currently being keyed by the user. The assembly area is not entered into the controller memory until a proper FUNCTION key is struck.

Data is keyed into the assembly area in a simple manner. Numerics cause the current reference number to be shifted left one position and a new character to enter the least significant digit. Contact-type and vertical connectors replace the current value in the assembly area for that type. The data in the assembly area is retentive; i.e., it is not cleared unless the CLEAR key is struck. The reference data area is filled with leading zeros when a new numeric key is depressed following operation of any function key that uses a numeric argument from the assembly area as discussed later in this specification.

Table 1

| KEY | NAME | SYMBOL |
|---|---|---|
| 0-9 | Numeric | 0-9 |
| -[ ]- | Normally Open Relay | -[ ]- |
| -[\]- | Normally Closed Relay | -[\]- |
| -[↑]- | Positive Going Contact | -[↑]- |
| -[↓]- | Negative Going Contact | -[↓]- |
| -( )- | Coil | -( )- |
| -(L)- | Latch | -(L)- |
| : | Vertical Open | : |
| ! | Vertical Short | ! |
| . . | Horizontal Open | . . |
| . - . | Horizontal Short | . - . |
| Shift 0 | Counter | CTR |
| Shift 1 | Timer - 0.01 sec. | T.01 |
| Shift 2 | Timer - 0.10 sec. | T 0.1 |
| Shift 3 | Timer - 1.0 sec. | T 1.0 |
| Shift 7 | Add | + |
| Shift 4 | Subtract | - |
| Shift 9 | Multiply | x |
| Shift 6 | Divide | ÷ |
| Shift 8 | Convert | CON |

CURSOR CONTROL KEYS 45

The programming panel supports four cursor control keys as set forth in Table 2 below.

The cursor 41 (see FIGURE 4) wraps around horizontally on the CRT screen but does not have vertical wrap-around.

If the cursor crosses from one network to another, the new network is re-fetched from the controller and becomes the current network.

Unrestricted cursor movement is permitted throughout the user logic display and the discrete display area. The cursor location is indicated by a reverse video image of the cursor location. Each cursor position is a six-by-two array of characters on the screen.

FUNCTION KEYS

Function keys cause activity to occur within the programmable controller. Table 3 describes the function keys and the key stroke or keystrokes used to generate them.

The ENTER function moves data from the assembly area to the cursor position on the screen and updates the controller memory. No changes are made on the screen until the change is made in the controller memory. Three restrictions are imposed:

1) reference numbers must be valid for the node type and controller capacity;
2) certain node replacements are not valid; and
3) placement of nodes along a network has certain restrictions.

Table 2

| KEY | NAME |
|---|---|
| ↑ | Move cursor up one position |
| ↓ | Move cursor down one position |
| --> | Move cursor right one position |
| <-- | Move cursor left one position |

Table 3

| KEY | FUNCTION | SYMBOL |
| --- | --- | --- |
| ENTER | Move data from assembly area to position indicated by cursor. | ENTER |
| START NEXT | Create a new network in the controller following the current network. | START |
| DELETE | Delete node at cursor position. | DELETE NODE |
| SHIFT DELETE | Delete current network from data base. | DELETE NETWORK |
| SEARCH | Using data in assembly area, search for a match beginning with the first network. | SEARCH |
| SHIFT SEARCH | Using data in assembly area, search for a match beginning at the current cursor position and network. | SEARCH CONTINUE<br><br>SEARCH |
| GET NEXT | Fetch the network following the current network to the panel. | GET NEXT |
| GET PREV | Fetch the network preceding the current network to the panel. | GET PREVIOUS |
| CLEAR | Blank the assembly area. | CLEAR |
| SHIFT CLEAR | Blank the entire screen. | CLEAR ALL |
| GET | Fetch the status of the contact or register specified by reference part of the assembly area. | GET |

Table 3 (cont.)

| | | |
|---|---|---|
| DISABLE | Invert the status of the enable/disable flag for an input, output coil, or internal coil indicated by the cursor. | ENABLE/ DISABLE |
| FORCE | Invert the state of the contact specified by the cursor if disabled. | CHANGE STATE |
| SUPERVISORY | Enter supervisory state. | SUPERVISORY |
| ERROR RESET | Resets error condition. | ERROR RESET |

When a modification of an existing node is attempted, only that data currently in the assembly area is used. A field which has not been defined is not modified. An undefined field is maintained as null reversed vidio in the assembly area. A defined field reverts to normal video at the start of entry. FIGURE 7 illustrates the display in the assembly area, the contact at the cursor, and the result at the cursor when modifications to an existing node are made.

Reference numbers must be valid for the node type and the controller capacity. For example, if a controller has 62 registers and an attempt is made to reference register 4063, an error code is generated. Valid references are defined for descrete I/0 and register space for each programmable controller. The controller validates all changes before changing any user logic. Changing contact types is allowed under the rules set forth in Table 4.

Table 4

| OLD CONTACTS | NEW CONTACTS | RULES |
| --- | --- | --- |
| Non-CTR/TMR/CALC | Non-CTR/TMR/CALC | No Restrictions. |
| Non-CTR/TMR/CALC | CTR/TMR/CALC | Allowed at node (row if node (I+1,J) and node (I+2,J)* are blank horizontal open, or horizontal short and 1+2.LE.8. |
| CTR/TMR/CALC | Non-CTR/TMR/CALC | Not allowed. |
| CTR/TMR/CALC | CTR/TMR/CALC | One for one replacement allowed. |

* for CALC only

Because programming is performed on line (that is, while the controller is operating) and because even partially entered programs must be interpretable by the controller, there are some restrictions on the order of entering nodes in a network. Thus, the first node programmed must always be at the top left-hand corner of the network. The next node programmed may be either adjacent below or adjacent to the right of the first node. Programming thus continues, observing the following rules:

1) there may be no unprogrammed nodes to the left of the rightmost programmed node in the top row;
2) for any programmed node in the top row, a column may be extended below it without regard for the presence of nodes in the column to the right or left.

If the cursor is positioned in the reference display area of the screen, the ENTER key will move the reference number to the VALUE area and update the reference register in the controller. ENTER may be used only with a register already referenced in the reference area. The ENTER key does not function if memory protect is enabled.

START NEXT

The START NEXT key is used to create a new network in the controller memory. Networks are inserted into the data base after the current network. If the cursor is on a networ whose network (step) number is N, the network number of the new network is N+1. Networks are inserted at the beginning of the logic data base by using the CLEAR key to reset the network number and then the START NEXT places the new network at the start of the data base. The new network has a network number of 1. When START is depressed, the START INDICATOR in the status area is loaded with the word "START" and space is made on the CRT display for the new network. If the insertion takes place at other than the start of logic, the network is built on the screen after the current network. A blank line is preserved with the cursor pointing to the leftmost position of the line. If there is a network on the screen after the old current network having a step number tha

does not immediately follow the old current network, it is shifted down one line if possible. If this causes part of the network to disappear, this entire network is removed. If the old network is at the bottom of the screen and occupies the last row, the screen is shifted up to create space. Only if the old current network occupies seven rows is it removed from the screen. Insertions at the start of the data base have an empty screen on which to compose logic as this is accomplished by the CLEAR key.

When a new network is created, the network number on the CRT is updated and the new network is then designated the current network for power display purposes. The START key does not function if memory protect is enabled.

DELETE

The DELETE key removes the current node from the data base in the controller. Nodes may be deleted only at the bottom of a column. A node in the top row may be deleted if there are no contacts to the right of it. This is necessary to preserve the integrity of the data base. Deleting a multi-node contact (TIMER/COUNTER/CALCULATE) results in all the nodes of that contact being deleted. The deletion may take place only in the PRESET node for timers and counters and the "B" node for calculate functions.

A user may delete all contacts in a network and still not delete the network itself. The DELETE NETWORK function must be used to delete the entire network. A network with no nodes is displayed as a line with a START OF NETWORK indicator and null nodes across the remainder of screen. A null network occupies one line on the screen. The DELETE key does not function if memory protect is enabled.

DELETE NETWORK

The DELETE NETWORK function removes the current network from the logic data base. The current network is removed from the data base and the area on the screen occupied by the network is blank. The cursor remains in the blank space. The remainder of the screen is not altered. The network number is set to zero. The DELETE NETWORK key does not function when memory protect is enabled.

SEARCH

The SEARCH function is used to fetch networks satisfying specified parameters to the panel. The SEARCH function is implemented using the contents of the assembly area to form a mask and object data. SEARCH commences at the start of the logic data base and continues sequentially until either a match is found or the end of user logic is reached. The elements of the assembly area form the search arguments. Any element left blank is assumed to be not important in finding a match. The elements which are defined are compared against the user logic until a match is found. Examples of assembly areas that are used to claify these SEARCH functions are set forth in FIGURES 8A-8H and indicate that a search can be made for the first node, for the first occurrence of a particular contact-type, for the first occurrence of a particular reference number, for the first occurrence of a vertical connector, for the first occurrence of a contact-type having a vertical connector, for the first occurrence of a contact-type with a particular reference number, for the first occurrence of a particular reference number with a vertical interconnection, and for the first occurrence of a particular node.

If the SEARCH is successful, the network containing the matched node is put on the bottom of the CRT screen along with its network number. The network is designated as the current network and a power display is activated for it. The screen display of other networks is shifted upwards to make room for the new network. The cursor is placed on the node which was the match for the search. If the search fails, an error code is displayed in the error code section of the CRT/assembly area.

The SEARCH function thus provides a powerful tool to the control engineer when a control program is first generated and for later monitoring and de-bugging. It is an improvement found in prior art controllers that allowed the user to scroll through the control program lines or to trace to a line to which a node in a current line was referenced. Such trace and scroll functions are disclosed in U.S. Patent 3,944,984.

SEARCH CONTINUE

The SEARCH CONTINUE function performs the same function as the SEARCH function except that the search is started at the cursor position. The search operates in a top-to-bottom scan down each column and moves from left to right in a network. All search arguments and return codes are the same as for the SEARCH function.

GET NEXT

The GET NEXT key causes the network following the current network in sequence of solution to be fetched to the panel and treated as the current network. If there are no networks on the screen, the first network in the data base is retrieved.

A check is first made to ascertain whether the network to be fetched is already on the screen. If it is, the cursor is placed on that network. It is also re-fetched from the controller to verify its contents. If the network is not already on the screen, it is fetched from the controller data base. If there are no more networks in the controller, an error code is returned. Placement of the next network on the screen is determined by the following rules:

> Unless already on the screen, the next network is placed below the old current network on the screen. If any network exists on the screen below the old current network having a step number (network number) that does not immediately follow the old current network, it is pushed downward to make room. If any part of this network disappears, the entire network is removed from the screen. If the next network fills the portion of the screen below the old current network and more space is required, the old current network and any networks above it on the screen are pushed upward. Only complete networks are allowed on the screen.

The GET NEXT function causes the network number to be updated on the screen. Power display is made for the network. The cursor is placed in the upper-lefthand corner of the network.

GET PREVIOUS

The GET PREVIOUS key causes the network before the current network in sequence solution to be fetched to the panel and treated as the current network. If there are no networks on the screen, the last network in the data base is fetched. A check is first made to ascertain whether the network to be fetched is already on the screen. If it is, the cursor is moved to that network. The network is also re-fetched from the data base to verify its contents. If the network is not already on the screen, it is fetched from the controller data base. If the current network is the first network, an error code is generated to indicate that there are no more previous networks.

Placement of the new work on the screen follows this rule:

> Unless it is already on the screen, the previous network is placed on the screen above the old current network. If any networks exist on the screen above the old current network having a step number that does not immediately precede the old current network, they are shifted upward to make room. If any part of these networks disappear, the entire network is removed from the screen. If the previous network fills the space above the old current network, the old current network and any networks beneath it are shifted down. If any part of these networks disappear, the entire network is removed from the screen. As mentioned earlier, only complete networks are displayed.

The GET PREVIOUS key causes the network number to be updated on the screen. The power display for the new network is initiated. The cursor is placed in the upper-lefthand corner of the network.

CLEAR

The CLEAR key is used to blank the assembly register. All previous contents of the composition area are removed. The assembly register is returned to reversed video, nulled condition. No other portion of the display is affected.

SHIFT CLEAR

The SHIFT CLEAR key is used to reset the entire display. The assembly area is blank. The error code is cleared. The user logic space on the screen is set to all blank. The network number is set to zero. The cursor is placed in the top left corner of the screen.

Following a SHIFT CLEAR key depression, certain keys have different functions as defined in TABLE 5.

The SHIFT CLEAR key has no affect on the controller data base. It is a panel command only that returns it to a virgin state.

Table 5

| Key | Function |
|---|---|
| START NEXT | Insert network at start of data base. |
| GET NEXT | Fetches first network from data base. |
| GET PREV | Fetches last network from data base. |

Table 6

1 - EXIT

2 - STOP

3 - GO

4 - INITIALIZE

5 - DUMP

6 - LOAD

7 - VERIFY

BAD ORIGINAL

GET

The GET key permits references to be monitored. The GET key requires that a proper reference number exists in the reference portion of the status/assembly area. The reference number is moved to the discrete display REF line specified by the cursor and the referenced value is then updated at the screen refresh rate. The GET function does not change any data base values. The cursor must be positioned in the discrete display area or an error code is generated. The display of sequences step references (2xxx) is not allowed, although the sequencer register may be monitored. If the reference is to a register (3xxx or 4xxx), the number below is the contents of the register. If the reference is to a contact, a "D" in the first position indicates that the point is disabled. The words ON or OFF then refer to the current state of the contact.

DISABLE

The DISABLE key is used to enable and disable discrete I/O points. Each input point and each output point may be enabled or disabled. If a point is enabled, its state is that which is determined by the controller. An input is the sense of the input channel as determined during the I/O sweep.

A disabled point cannot be changed automatically by the system. It may be changed via the FORCE key. Disabled points retain their state through power failure. Disabled coils are indicated by a "\–" in the network. An input point enabled/disabled is enabled/disabled globably.

The DISABLE key complements the disable state of the point. If the point was enabled, it is disabled. If the point was disabled, it is enabled. The point is indicated by the cursor. The cursor must be pointing to an I/O reference in the discrete display area. All points are initially enabled. The DISABLE key does not function if memory protect is enabled.

FORCE

The FORCE key is used to change the state of discrete I/O points. It is designed to be used with the DISABLE key. An I/O point may not be forced unless it is disabled. Enabled points are redefined by the next controller I/O sweep.

FORCE complements the state (ON/OFF) of the discrete point indicated by the cursor. It works only on relay or coil type nodes. Reference to other node types or to relays not disabled causes an error code to be generated.

If the discrete point is ON it is turned OFF. If the discrete point is OFF it is turned ON. FORCE does not function if memory protect is enabled.

SUPERVISORY

The SUPERVISORY key places the programming panel in a supervisory state. Table 6 is displayed on the CRT display when the SUPERVISORY key is depressed. The programming panel remains in the supervisory state until an exit function is executed. A function is executed by striking the numeric key corresponding to the function. All other keys are invalid.

ERROR RESET

When the programming panel detects an error during normal operations, a message is displayed in the error message portion of the status/assembly area (see FIGURES 6A and 6E). The keyboard is then locked out from the user until the ERROR RESET key is struck. This clears the error message and allows normal processing to resume.

REFERENCE NUMBER CONVENTIONS

Reference numbers are used to identify I/O points, internal coils, sequencer states, input registers, and holding registers. By convention, the reference number is four digits long except when used as a constant in which case it is three digits long. Table 7 defines the reference number conventions.

PROGRAMMING PANEL NODE TYPES

Relays/Coils/Shorts/Opens/Sequencers

Relays, coils, shorts, opens and sequencers are single node elements in the programmable controller. They are called single node elements because all information about them is expressed in one node in the data base. Tables 8A through 8H respectively define a normally open relay, a normally closed relay, a positive transitional relay, a negative transitional relay, a coil, a latch, a horizontal short, and a horizontal open.

SEQUENCER REFERENCE

Normally opened, normally closed, and relay transitional contacts may refer to a sequencer. The referencing of sequencers is in the following form:

2YXX were Y, in the range of 1 to 8 represents the sequencer register (405Y). The XX is in the range of 01 to 32 and is the sequence step. 8 sequencer registers are provided in the programmable controller numbered 4051 through 4058.

When a reference to a sequencer is encountered, the "XX" portion of the node is compared to the proper sequencer register (defined by "Y"). If the two values are equal, the solution is true (normally open nodes pass power, normally closed nodes do not pass power). Otherwise the solution is false (normally open nodes do not pass power, normally closed nodes do pass power ). If the contents of the sequence register is zero or is greater than 32, all references are false.

Table 7

| RANGE | USE |
|---|---|
| 0001 - 0256 | DISCRETE OUTPUTS |
| 0257 - 0512 | INTERNAL COILS |
| 1001 - 1256 | DISCRETE INPUTS |
| 2YXX | SEQUENCER STATES - STEP XX OF SEQUENCER Y. |
| 3XXX | INPUT REGISTERS - NUMBER XXX |
| 4XXX | HOLDING REGISTERS - NUMBERS XXY |

Table 8A

RELAY - Normally Open

| Symbol: --] [-- XXXX | Input Power | XXXX State | Result |
| --- | --- | --- | --- |
| | 0 | 0 | 0 |
| | 0 | 1 | 0 |
| | 1 | 0 | 0 |
| | 1 | 1 | 1 |

XXXX = 0001 - 0256 DISCRETE OUTPUT*
0257 - 0512 INTERNAL COIL
1001 - 1256 DISCRETE INPUT
2YXX SEQUENCER STATE

Table 8B

3.5.4.1.2 RELAY - Normally Closed

| Symbol: --]\[-- XXXX | Input Power | XXXX State | Result |
| --- | --- | --- | --- |
| | 0 | 0 | 0 |
| | 0 | 1 | 0 |
| | 1 | 0 | 1 |
| | 1 | 1 | 0 |

XXXX = 0001 - 0256 DISCRETE OUTPUT
0257 - 0512 INTERNAL COIL
1001 - 1255 DISCRETE INPUT
2YXX SEQUENCER STATE

Table 8C

RELAY - Positive Transitional

Symbol: --]↑[--

XXXX

| Input Power | XXXX State | XXXX Previous State | Result |
|---|---|---|---|
| 0 | X | X | 0 |
| 1 | 0 | X | 0 |
| 1 | 1 | 0 | 1 |
| 1 | 1 | 1 | 0 |

XXXX = 0001 - 0256 DISCRETE OUTPUTS
0257 - 0512 INTERNAL COILS
1001 - 1256 DISCRETE INPUTS
2XXX SEQUENCER STATE

Table 8D

RELAY - Negative Transitional

Symbol: --]↓[--

XXXX

| Input Power | XXXX State | XXXX Previous State | Result |
|---|---|---|---|
| 0 | X | X | 0 |
| 1 | 0 | 0 | 0 |
| 1 | 0 | 1 | 1 |
| 1 | 1 | X | 0 |

XXXX = 0001 - 0256 DISCRETE OUTPUTS
0257 - 0512 INTERNAL COILS
1001 - 1256 DISCRETE INPUTS
2YXX SEQUENCER STATE

Table 8E

COIL

| Symbol: | Input Power | Result |
|---|---|---|
| Enabled -( )- XXXX<br>Disabled -\-( )- XXXX | 0<br>1 | 0<br>1 |

XXXX = 0001 - 0256 DISCRETE OUTPUT
0257 - 0512 INTERNAL COIL

Table 8F

LATCH

| Symbol: | Input Power | Result |
|---|---|---|
| Enabled -(L)- XXXX<br>Disabled -\-(L)- XXXX | 0<br>1 | 0<br>1 |

XXXX = 0001 - 0256 DISCRETE OUTPUT
0257 - 0512 INTERNAL COIL

Table 8G

HORIZONTAL SHORT

Symbol: .-.

| Input Power | Result |
|---|---|
| 0 | 0 |
| 1 | 1 |

Table 8H

HORIZONTAL OPEN

Symbol: . .

| Input Power | Result |
|---|---|
| 0 | 0 |
| 1 | 0 |

TIMERS AND COUNTERS

Timers and counters are 2-node elements. The symbol for the counter is shown in Table 9A and the symbol for the timer is shown in Table 9B. The nodes are arranged vertically. The top node is the preset value while the bottom node is the holding register where counts are accumulated. Each element has two inputs and two outputs. When input EI is activated the holding register is incremented for a counter and clock pulses accumulated for a timer. Input RI is the reset line. When RI is false, the holding register is cleared regardless of the state of EI. Output EO is true if the contents of the holding register is greater than or equal to the preset value. Output RO is always false.

Table 9A

COUNTER

Symbol:

```
         -------
 BI-- ! XXXX!--BO
      !      !
      ! CTR  !
 RI-- !      !--RO
      ! 4XXX!
      ---------
```

| RI | BI | REGISTER ACTION | RO | EO |
|---|---|---|---|---|
| 0 | X | 4XXX <--0 | 0 | 0 |
| 1 | 0 | No change | 0 | 0 |
| | | | 0 | 0 1 if 4XXX.GE. Preset |
| 1 | 1 | 4XXX <4XXX+1 | 0 | 0 If 4XXX.LT.Preset |
| | | | 0 | 1 If 4XXX.GE.Preset |

| | | |
|---|---|---|
| PRESET | XXXX = 0000 - 0999 | NUMERIC CONSTANT |
| | 3XXX | INPUT REGISTER |
| | 4XXX | HOLDING REGISTER |

If PRESET is a numeric content, it is compared directly against the contents of the holding register.

If PRESET is a register (3XXX or 4XXX), the contents of the register are compared against the contents of the holding register.

Table 9B

TIMBER

Symbol:

```
      -------
BI --!XXXX!--EO
     !    !
     !TXXX!
RI --!    !--RO
     !4XXX!
      -------
```

| RI | BI | REGISTER ACTION | RO | EO |
|---|---|---|---|---|
| 0 | X | 4XXX <-- 0 | 0 | 0 |
| 1 | 0 | No change | 0 | 0 |
| | | | 0 | 0 1 if 4XXX.GE.Preset |
| 1 | 1 | 4XXX + No. of | 0 | 0 If 4XXX.LT.Preset |
| | | ticks since Last | 0 | 1 If 4XXX.GE.Preset |
| | | pass | | |

PRESET XXXX = 0000 - 0999 NUMERIC CONSTANTS
3XXX INPUT REGISTER
4XXX HOLDING REGISTER

HOLDING REGISTER = 4XXX

TIMER VALUE TXXX = 1.0 One Second Timer
0.1 Tenth Second Timer
.01 Hundredths Second Timer

If PRESET is a numeric value, it is compared directly against the contents of the holding register.

If PRESET is a register value, its contents are compared against the contents of the holding register.

CALCULATE FUNCTIONS

All calculate functions (add, subtract, multiply and divide) are 3-node elements. Tables 10A, 10B, 10C and 10D describe the add, subtract, multiply and divide functions respectively. The top node of each function is the "B-node" and must reference a register. The middle or "C-node" may be either a register or a constant. The bottom or "D-node" is a register reference. The general format for a calculate function is that the B node is operated on by the C node with the result placed in the D node.

Each element has three possible input lines and three possible discrete output lines. Input I1, when true, activates the function. Inputs 2 and 3 are ignored. Such multiple output calculate functions are unique in the programmable controller art. By use of multiple discrete outputs the user is able to more easily and definitively utilize the result of a calculate function in his or her control program. Thus, for example, in the subtract mode, the three discrete outputs - only one of which may be true at any particular time depending upon the result of the subtract operation - may be used to indicate to other portions of the control program the result of the calculation by means of binary on and off states.

Similarly, in the division function the first output indicates whether the division was proper while the second and third outputs indicate whether or not various kinds of input errors have occurred. When output 2 is true there is a dividend overflow and when output 3 is true the divisor equals zero. Thus the multiple outputs gives the user more information than just the value of the result of the calculate function as stored in the D register.

Table 10A

ADD

Symbol:

```
I1--!XXXX!--01       B
    !  +  !
    !     !        + C
I2--!XXXX!--02    ------
    !  ↓  !
    !     !
I3--!4XXX!--03       D
    !     !
    ------
```

```
01 = 0 => B+C. LE. 999
   = 1 => B+C. GT. 999
02 = No function, always false
03 = No function, always false
```

```
B-Node =ØXXX   NUMERIC CONSTANT
        3XXX   INPUT REGISTER
        4XXX   HOLDING REGISTER

C-NODE =0XXX   NUMERIC CONSTANT
        3XXX   INPUT REGISTER
        4XXX   HOLDING REGISTER

D-NODE =4XXX   HOLDING REGISTER
```

If B+C > 999, the D-Node register receives the result module 1000. For example:

```
    B = 700       B = 700
    C = 450       C = 291
  B+C = 1150    B+C = 991
    D = 150       D = 991
   01 = 1        01 = 0
```

Table 10B

SUBTRACT

Symbol:

```
         ------
I1--!XXXX!--01        B
    !  —   !
    !      !          - C
I2--!XXXX!--02      -------
    !  ↓   !
    !      !
I3--!4XXX!--03        D
    !      !
     ------
```

```
01 = 0 =       B.LE.C
   = 1 =       B.G.T.C.
02 = 0 =       B.NE.C
   = 1 =       B.EG.C
03 = 0 =       B.GE.C
   = 1 =       B.LT.C
```

```
B-NODE = 0XXX  NUMERIC CONTACT
         3XXX  INPUT REGISTER
         4XXX  HOLDING REGISTER

C-NODE = 0XXX  NUMERIC CONSTANT
         3XXX  INPUT REGISTER
         4XXX  HOLDING REGISTER

D-NODE = 4XXX  HOLDING REGISTER
```

If B.LT.C, the D-Node register contains the absolute value of the result. For example:

| | | |
|---|---|---|
| B = 700 | B = 450 | B = 300 |
| C = 450 | C = 700 | C = 300 |
| B-C = 250 | B-C = 250 | B-C = 0 |
| D = 250 | D = 250 | D = 0 |
| 01 = 1 | 01 = 0 | 01 = 0 |
| 02 = 0 | 02 = 0 | 02 = 1 |
| 03 = 0 | 03 = 1 | 03 = 0 |

BAD ORIGINAL

Table 10C

MULTIPLY

Symbol:

```
       --------
I1----! XXXX !----01      B - Multiplicand
      !  X   !
I2----! 4444 !----02      C - Multiplier
      !      !
I3----! 4ZZZ !----03      D - Product
       --------
```

| | | | | |
|---|---|---|---|---|
| Multiplicand: | XXXX | = | 000 - 999 | NUMERIC CONSTANT |
| | | = | 3XXX | INPUT REGISTER |
| | | = | 4XXX | HOLDING REG. |

If MULTIPLICAND is a NUMERIC CONSTANT, it's value is used in the multiply. If it is a REGISTER, the contents of the REGISTER are used in the multiply.

| | | | | |
|---|---|---|---|---|
| Multiplier: | YYYY | = | 000 - 999 | NUMERIC CONSTANT |
| | | | 3YYY | INPUT REGISTER |
| | | | 4YYY | HOLDING REGISTER |

If MULTIPLIER is a NUMERIC CONSTANT, it's value is used directly in the multiply. If it is a REGISTER, the contents of the REGISTER are used in the multiply.

| | | |
|---|---|---|
| Product | 4ZZZ | Specifies the first of 2 consecutive HOLDING REGISTERS which will contain the Product. Must be HOLDING REGISTER, can NOT BE THE LAST HOLDING REGISTER. The 484/P180 will disallow entry of the Last HOLDING REGISTER as the product register on the multiply node. |

01 is always equal to I1. I2, I3, 02, and 03 are unused.

Table 10C (cont'd)

Function: When I1 is ON (= 1), multiply the Single Register MULTIPLICAND VALUE by the Single Register MULTIPLIER VALUE. This yields a Double Register (Double Precision) PRODUCT. The most significant three digits (with leading zeros) are stored in REGISTER 4ZZZ, the least significant three digits are stored in REGISTER 4ZZZ + 1.

When I1 is OFF (0) the product is uneffected.

Table 10D

DIVIDE

Symbol:

```
        --------
I1----! XXXX !----01      B-Dividend (Numerator)
      !      !
I2----! YYYY !----02      C-Divisor (Denominator)
      !      !
I3----! 4ZZZ !----02      D-Quotient
        --------
```

Dividend: The DIVIDEND is a Double Precision (double register) Value.

| | | |
|---|---|---|
| XXXX = | 000 - 999 | NUMERIC CONSTANT |
| = | 3XXX | INPUT REGISTER |
| = | 4XXX | HOLDING REGISTER |

If the DIVIDEND is a NUMERIC CONSTANT, the value is used as the LOW ORDER DIVIDEND, with the High ORDER DIVIDEND assumed to be ZERO (0). (i.e. a NUMERIC CONSTANT DIVIDEND is in the range 000000-000999, inclusive.)

If the DIVIDEND is a REGISTER (3XXX or 4XXX), then the REGISTER specified is the first of two REGISTERS to contain the Double Precision DIVIDEND. The first REGISTER (3XXX or 4XXX) contains the HIGH ORDER DIVIDEND (the most significant three digits), the second REGISTER (3XXX + 1 or 4XXX + 1) contain the LOW ORDER DIVIDEND (the least significant three digits). The REGISTER specified CAN NOT be the last INPUT REGISTER or the last HOLDING REGISTER. The 484/P180 will disallow their use as the Dividend Register on Dividend Node.

Divisor: The DIVISOR is a Single Precision (single register) Value.

| | | |
|---|---|---|
| YYYY = | 000 - 999 | NUMERIC CONSTANT |
| = | 3YYY | INPUT REGISTER |
| = | 4YYY | HOLDING REGISTER |

Quotient: 4ZZZ = HOLDING REGISTER only.
The QUOTIENT is a Single Precision.

Table 10D (cont'd)

I1 is ENABLE, I2 and I3 are unused.
01 is DIVISION OR.
02 is DIVIDEND Overflow.
03 is DIVISOR = 0.

FUNCTION: When I1 is ON (1), DIVIDE the Double Precision DIVIDEND by the Single Precision DIVISOR, giving a Single Precision QUOTIENT. No remainder or fractional part is kept.

RULES: The DIVISOR X 1000 must be greater than the DIVIDEND. AND,
The DIVISOR must be NON-ZERO.

Output indications when I1 is ON:

03 = 1 if DIVIDE performed OK.

02 = 1 if DIVISOR X 1000.LE.DIVIDEND,
QUOTIENT ← 0.

03 = 1 if DIVISOR. EQ.0.
QUOTIENT ← 0.

If I1 is OFF, the Quotient will be uneffected, and 01, 02, and 03 will be OFF (0).

ERROR CODES

Error codes are displayed in the error section of the screen. A code is displayed when the programming panel detects an error condition. The code is displayed until the RESET key is struck. The error section on the screen is normally blank (see FIGURES 6A and 6E).

On power-up the programming panel performs certain internal diagnostics to verify that it is capable of functionin The system software is verified via a ROM check sum test. The RAM in the programming panel is tested via several diagnostics. A mini-instruction test is also performed. If any of these tests fail, the system keeps the screen blank and attempts to sound the system alarm.

SYSTEM ERROR CODE

Systems errors are defined as those error conditions which are internal to the programmable controller and not the result of any user action. They are displayed when they are detected. Table 11 defines the system error codes.

Table 11

| Code | Meaning |
|---|---|
| CN | Controller not responding; two seconds have elapsed without a response to a command from the controller. |
| CE | Communications error; a hard communications failure (16 retries) exist. |
| TE | Trap error; an internal processor error has been detected. |
| IK | Illegal keystroke; an illegal keystroke has been sensed. |

FUNCTION KEY ERRORS

The function key errors have a lower priority than system level errors. They indicate a malfunction with an attempted function key operation. Table 12 defines the function key errors.

Thus the functionality of the programmable controller according to the present invention has been defined in the preceding pages. It is readily apparent that this programmable controller not only performs those functions found earlier in the programmable controller art but also is able to perform several new functions such as the search function, the multiple output calculate function, the real time power display of a selected node on the CRT panel, and the ability to allow the user to form a multi-node control program with minimal constraints on the format of the network. The circuitry and software necessary for allowing the programmable controller and programming panel to perform these functions is next described.

Table 12

| Function Key | Code | Meaning |
|---|---|---|
| ENTER | MP | Memory protect; memory protect feature is enabled. |
| | IR | Illegal reference number; the reference number is illegal for the node type. |
| | NC | Not configured; the element referenced is not configured in the controller. |
| | BR | Bad replacement; the element type in the assembly area can not be used as a replacement for the element type at the cursor. |
| | DI | Date incomplete; an attempt to replace a null node with a contact has failed because the contact was not fully defined. |
| | BP | Bad position; an attempt to replace a null node with a contact has failed because the column is not defined fully above the cursor. |
| | FU | Full; the controller data base is full and no further inserts may be made until some logic is deleted. |
| | TC | Two coils; an attempt has been made to place a second coil or a line. |
| START NEXT | MP | Memory protect; see ENTER key. |

Table 12 (Cont.)

| Function Key | Code | Meaning |
|---|---|---|
| | FU | Full; see ENTER key. |
| | DI | Data incomplete; see ENTER key. |
| DELETE | MP | Memory protect; see ENTER key. |
| | MC | Middle of column; deletion not allowed in middle of columns. |
| | MN | Middle of Node; deletion not allowed in middle of calculate or timer/counter nodes. |
| DELETE NETWORK | MP | Memory protect; see ENTER key. |
| SEARCH | NF | Not found; target data was not found in data base. |
| SEARCH CONTINUE | NF | Not found; target data was not found in portion of data base searched. |
| GET NEXT | EL | End of Logic; user is at end of logic data base. |
| GET PREV | BL | Beginning of Logic; user is at beginning of logic data base. |
| CLR | | No codes. |
| SHIFT CLR | | No codes. |
| GET | IR | Illegal reference number; see ENTER key. |
| | NC | Not configured; see ENTER key. |
| DISB | MP | Memory protect; see ENTER key. |

Table 12 (Cont.)

| Function Key | Code | Meaning |
|---|---|---|
| | IN | Illegal contact; contact type at cursor may not be disabled. |
| FORCE | IN | Illegal contact; see DISB key. |
| LOAD REG | TL | Too Large; value is greater than 999. |
| | NR | No register; no register has been specified in the register display area. |

MAINFRAME HARDWARE DESCRIPTION

The central processing unit and memory which in conjunction with the power supply form the mainframe enclosed within housing 22 shown in FIGURE 1 is set forth in detail in FIGURES 13A-18D for the CPU and FIGURES 19A-23D for the memory. The power supply is not detailed since its implementation would be well known to one of ordinary skill in electronics. The only requirements on the power supply are that it provide the necessary direct current power to drive the CPU and memory. The schematic diagrams for the CPU and memory, and programming panel schematics (FIGURES 24A-28D), designate each component with a reference number and further identify the values of discrete components and identify the type of integrated circuits used (for example discrete capacitor C5 shown in FIGURE 16C). Inputs and outputs are identified so that all interconnections between the various figures is readily ascertainable. Unless otherwise noted, all resistive values are in ohms, 1/4 watt, 5%, all capacitors are in microfarads, 50 VDC, 20%, all IC's are of the 74 series except components E2, F2-F4, C1, C2, C11, C12, E5, A2, A3, and H1 for the CPU schematics and components D3-N3, D5-N5, D7-N7, D8-N8, H1 and N1 for the memory boards. These components are identified with other numbers well known to those skilled in the art so as to specify the type of integrated circuit component used.

Destination of interrupted circuit runs are indicated in parentheses in the schematic drawings by a sheet number and zone. The sheet number must be increased by the numbers set forth in Table 13 in order to find the proper drawing to which the signal is directed to or from. The zone number is a letter followed by a number within the parentheses which corresponds to the perimeter letters and numbers about the figures. The zone number is used to find the precise location for that signal, similar to finding a geographical location in an atlas.

Thus, referring to FIGURE 13A at its upper lefthand corner, the signal LRSELL is from a location designated as "(3C1)". Thus, the sheet number within the parentheses is "3". Referring to Table 13, this number is converted to 15, representing FIGURE 15A-D. Referring to FIGURES 15A-D, it is seen that zone "C1" refers to FIGURE 15B where the signal "LRSELL" is found having designated destination (1D4) corresponding to the upper lefthand corner of FIGURE 13A.

References to components within these schematic diagrams is made by the part number associated with schematic diagram. Thus, referring to FIGURE 13D, capacitor C1 refers to the 10 microfarad 35 volt capacitor shown in the lefthand portion hereof. Integrated circuit components are referred to by the letter-number combination shown within or near the block designating the IC component. Again referring to FIGURE 13D, an integrated circuit is shown having outputs LA3L through LA0L designated as "A7". This IC component is of the "74" series with component number "LS169A". For designating integrated circuit components with multiple components within the IC component, reference is made to the output lead number of that particular component within the integrated circuit component. Thus in FIGURE 13A, integrated circuit component H6 has eight drivers. If the uppermost driver is referred to, it would be identified as H6-9; the number "9" referring to lead 9 of the output associated with that driver.

In addition, logic gates are defined by the part number and output line. Referring to FIGURE 15C, the lower lefthand nand gate would be referred to as H2-8.

Table 13

| FIGURE | NUMBER TO BE ADDED TO PARENTHESIS SHEET NUMBER |
|---|---|
| 13A-18D | 12 |
| 19A-23D | 18 |
| 24A-28D | 23 |

MAINFRAME HARDWARE

FIGURES 13A-18D are schematic diagrams fully illustrating the central processing unit 31 (see FIGURE 1B) utilized in the mainframe 39 of programmable controller 20. As best seen in FIGURE 16B, a signetics 8X300 microprocessor E5 serves as the processor. A 1K by 16-bit program ROM (components F1, F2, F3 and F4) contains the control software. Additional functionality can be provided by replacing the 1K ROM with a larger ROM. The contents of the program ROM is not directly accessible to the control software. It is available at test points for diagnostic and system testing.

INTERFACE VECTORS

The Signetics 8X300 has no random storage as an integral part of the processor. All interfacing to the processor E5 is done via the interface vectors (IV) on interface vector lines IV0-IV7. There are two sets of interface vectors, one on the "left bank" and one on the "right bank". Each bank can support 256 vectors. The right bank is used for the scratchpad memory, logic RAM read and coil RAM low address. The scratchpad memory is shown in FIGURE 17B and 17C as integrated circuit components A2 and A3 and driver B2. The left bank of the interface vectors have the registers, status and control information, the column solver (discussed later), and the peripheral port interface. Since the architecture of processor E5 allows for simultaneous input and output port utilization, interbank data movement is possible on the same instruction. That is, data can be moved from the left bank to the right bank, or vise versa during the instruction.

SCRATCHPAD RAM

As noted above, the scratchpad RAM is shown in FIGURES 17B and 17C as integrated circuit components A2 and A3 and driver B2. The scratchpad RAM provides 256 bytes of temporary data storage. It is not retentive through a power failure.

It is located on the right interface vector bank register. The following timing restrictions are applicable to accessing the scratchpad:

| | |
|---|---|
| Load address register to read data | 1 Instruction Wait |
| Write data to load address register | 1 Instruction Wait |
| Write data to read data | 2 Instruction Wait |
| Write data to write data | 1 Instruction Wait |

LOGIC RAM

The logic RAM is fully shown in FIGURES 19A-19B and 20A-20D. In addition to the actual RAM memory shown by integrated circuit components D3, D5, E3, E5, F3, F5, H3, H5, K3, K5, L3, L5, M3, M5, N3, N5 in FIGURES 19A-D and components D7, D8, E7, E8, F7, F8, H7, H8, K7, K8, L7, L8, M7, M8, N7, N8 in FIGURES 20A-D, the other addressing and driving circuitry shown in FIGURES 19A-D and 20A-D all comprise what is broadly called the logic RAM.

The logic RAM is used to store the user program. It resides on the left bank for writing and right bank for reading. It has two address registers which are concatenated to form the physical address. A signal to increment the address registers is available. The contents of the logic RAM are retentive through power failure. The following timing restrictions apply to the logic RAM:

| | |
|---|---|
| Load address register to read data | 3 Instruction Wait |
| Load address register to write data | 1 Instruction Wait |
| Write data to read data | 2 Instruction Wait |
| Write data to Write data | 1 Instruction Wait |

COIL/REGISTER RAM

The coil/register RAM is shown in FIGURES 21A-21D. Like the logic RAM, the coil/register RAM in addition to the memory integrated circuit components K1, H1, L1, M1 and N1 also encompasses addressing and buffer circuitry as shown in FIGURES 21A through 21D. The coil/register RAM is used to store input, output data, and register values.

Its data is retentive through a power failure, and it has two address registers which are concatenated to form the physical address. There is a memory address increment function available. The basic size of the coil/register RAM is 256 by 4 bits. The coil/register RAM is on the left bank and it has the same timing restrictions as the logic RAM.

REAL-TIME CLOCK

The real-time clock is shown in FIGURES 15A and 15B and comprises integrated circuit components H8, H7, H6, H5 and H11. This real-time clock generates a pulse at a fixed rate of once every ten milliseconds. The pulse sets a bit in the status sense register (discussed later). The software within the processor acknowledges the real-time clock via the control register (discussed later). The clock continues to generate pulses regardless of whether it is acknowledged.

WATCHDOG TIMER

The watchdog timer is shown in FIGURE 15C as integrated circuit component E7 and generates a watchdog timer signal (WDTH) which is enabled by the software as part of the end-of-sweep (or scan) processing. If the software fails to enable the watchdog timer signal at least once every 50 milliseconds, the mainframe run light 24 (see FIGURE 1) goes off and the I/O outputs are shut down. The state of the watchdog timer is also available through the status sense register.

PERIPHERAL PORT INTERFACE

The peripheral port interface shown in FIGURES 17A and 17C provides a serial input to the mainframe. This interface is used by the programming panel 29 and a peripheral port adapter 35 (see FIGURE 1). Status information is available on the interrupt sense register and the status sense register. The peripheral port adapter provides input data from peripherals and transmits data back to those peripherals.

INPUT/OUTPUT

FIGURES 14A-14B show the electrical circuitry for performing input/output transferrals of data from the mainframe to the I/O bus 32 forming part of the I/O system 28 (see FIGURE 1). There are two types of I/O in the programmable controller. Discrete I/O is used to interface to input points and output points on the I/O bus via the I/O modules. Word I/O can be obtained by use of the discrete I/O modules and converted from typical binary coded decimal (BCD) format to the binary format utilized by the controller for reading data from external registers. Binary output data is also converted by software to BCD data for writing data into external registers. The higher level code describing the conversions is shown in Table 32. Register I/O in 10 bit words can also be accommodated by the controller via Register Multiplexer Modules.

SYSTEM CONTROL

The system control includes the control register and interrupt sense register and is shown in FIGURES 15A, B, C and D as integrated circuit components C6, E9, D8, H11, F10, F9, F8, H10, H9, D4, E12, F12, F11, and E11. The system control including the control register is used to trigger control pulses which are signals activated when the control register is loaded. The contents of the control register is decoded as follows:

| Code | Pulse |
|---|---|
| 7 | Reset Processor |
| 6 | Acknowledge Real-Time Clock |
| 5 | Watchdog Timer |
| 4 | Clear peripheral port interface receiver ready |
| 3 | Not used |
| 2 | Not used |
| 1 | Increment coil address register and 0 increment logic register |

## Interrupt Sense Register

The interrupt sense register is shown in FIGURES 15C and 15D as integrated circuit components C4 and C5. The interrupt sense register is used to provide a sensory mechanism for the four real-time system activities; power-failure detection, real-time clock tick, peripheral port interface receiver ready, and peripheral port interface transmitter ready. There is no true interrupt structure in that software must check for any of these conditions at an interval which guarantees that data will not be lost (See Appendix A).

The interrupt sense register provides two additional signals which indicate when the I/O test connector and the CPU tester (MOT) are attached. The interrupt sense register is decoded as follows:

| Bit | Condition |
|---|---|
| 7 | I/O tester connected |
| 6 | CPU tester connected |
| 5 | I/O busy |
| 4 | Not used |
| 3 | Peripheral port interface transmitter ready |
| 2 | Peripheral port interface receiver data ready |
| 1 | Real-time clock (100 hertz) |
| 0 | Power failure |

## Status Sense Register

The status sense register utilizes the same integrated circuit components as the interrupt sense register and is part of the interrupt sense system. The status sense register is used to provide hardware status information to the mainframe software. The contents of the status sense register are decoded as follows:

| Bit | Status |
|---|---|
| 7 | Not used |
| 6 | Peripheral Port interface status (EIA=1) |
| 5 | No overrun error in peripheral port interface |
| 4 | Parity/framing error in peripheral port interface |
| 3 | Watchdog timer RUN (WDT RUN = 1) |
| 2 | Memory protect |
| 1 | Register I/O Input - Bit 9 |
| 0 | Register I/O Input - Bit 8 |

Software Overview

The mainframe software overview is presented in its entirety in Appendix A. The software block diagram is shown in FIGURE 9. It indicates that the executive program (EXEC) stored in the microprocessor ROM communicates with the logic solver, peripheral port handler, I/O handler and on-line diagnostics as well as power up and power down sequences. Likwise, the interrupt handler communicates to and from the logic solver peripheral port handler, I/O handler and on-line diagnostics. The power up sequence also communicates with the CPU tester (MOT monitor).

FIGURES 10A and 10B show the data flow paths for the software. FIGURE 10A is directed to the normal operation of the programmable controller while FIGURE 10B illustrates the software data flow paths during power up and power down sequences.

FIGURE 11 illustrates the general timing during power up, executive, interrupt handling, I/O handling, logic solving, command handling, and on-line diagnostics with information in letters within pulses explained at the bottom portion of FIGURE 11.

FIGURE 12 is a state diagram of the software, showing the interrelationship of the power up and power down sequences, the normal scan in which the users' networks are solved, the error stop and halt routines as well as the CPU tester (MOT).

The actual executive program for the processor E5 (FIGURE 16C) as stored in the control ROM is set forth in Appendix A to this patent application. This software in conjunction with the mainframe hardware and programming panel hardware (FIGURES 24A-28D) and programming panel software (Appendix B) performs the functions of the programmable controller as set forth in Table 14.

Table 14

1. Power-up diagnostics
2. Power-down functions
3. Executive
4. I/O interrupt handling including a real-time clock, peripheral port interface and power-down,
5. Logic solutions using a multi-node 7 x 11 format including
   - A) relays, normally open, normally closed, and transitional contacts,
   - B) coils, latches, internal coils, disabled coils, and disabled latches,
   - C) counters,
   - D) timers, 1.0, 0.1, 0.01 seconds,
   - E) calculate with multiple outputs (add, subtract, multiply and divide) and
   - F) sequencers
6. I/O handling, 128 inputs and outputs, register I/O, and extension to 256 discrete inputs and outputs.
7. Peripheral port interface for the programming panel and the peripheral port adapter for other types of peripherals including a computer interface.
8. On-line diagnostics.

Scan Time

The maximum scan time including logic solution, I/O handling and peripheral port service and on-line diagnostics is no more than 20 milliseconds.

I/O Service Time

All field I/O is serviced once per scan.

Peripheral Port Interface Response Time

All characters are read before data overrun occurs. Data overrun is a system error condition. Once a command has been received, a response is initiated in no more than 1 second after receipt of a complete request.

Inputs

This section describes the inputs to the mainframe software.

User Logic

User logic is the input to the logic solution module. It consists of the user program formed as entered via the programming panel or other peripheral device. All entries in the user logic data consist of two-byte nodes, each byte having 8 bits. Node format is described later. The user logic is solved sequentially by the logic solver with processing beginning with the first node and terminating with the end-of-logic node.

Discrete Inputs

A discrete input is the state of an input point which is located on an I/O input module interconnected to the I/O bus (see FIGURE 1). It is either true or false which is indicated by a "1" or a "0" respectively. Discrete inputs are specified in a user program by reference designation 1 followed by three X's. A discrete input may be disabled which means that its state is not updated during each I/O scan.

Register Input

Register inputs of a limited number can be transferred to the mainframe by the discrete I/O modules. Mainframe software performs the conversion from BCD to binary and binary to BCD for reading and writing register information to and from external devices. Register I/O Modules transfer 10 bit binary words to and from the mainframe directly, allowing a greater number of I/O registers.

Communication Peripherals

The peripheral port interface allows a set of devices to be interfaced to the mainframe. A programming panel 29 and the peripheral port adaptor 35 interface directly to the mainframe. A tape loader and other types of programming panels can be interfaced to the peripheral port adaptor. An EIA type computer interface may also be interconnected to the peripheral port adaptor. These devices communicate using the mainframe communications protocol.

Real-Time Clock

A real-time clock operating at 100 hertz frequency provides an interrupt signal via the interrupt sense register. The clock is used to provide a time base for timers and internal clocking functions.

Power-Failure Sense

The power failure sensing is available in the interrupt status register. Five milliseconds of power are required to execute the power-down fail routine. Following completion of power failure processing, the reset processor command is issued via the control register.

Watch-Dog Timer Sense

The watch-dog timer sense provides a mechanism for checking the status of the watch-dog timer. If the software fails to enable the watch-dog timer at least once every 50 milliseconds, it expires and causes the outputs to shut down and the run light to turn off.

OUTPUTS

This section covers the outputs generated by the controller's software in response to inputs and internal processing.

Discrete Outputs

A discrete output is the state of an output point on an I/O output module interconnected to the I/O bus 34 (see FIGURE 1). This state is determined in one of two ways: first, the state of the coil as determined by the network driving the coil; and second, a disabled coil is not changed by the logic. A coil that is latched maintains its state through power failure. Discrete outputs are updated once per scan.

Register Outputs

A set of register values may be transferred to the discrete I/O modules via the software which converts the binary data used in the mainframe processing to BCD data for use with data processing external devices. Register I/O modules receive 10 bit binary register values directly from the mainframe allowing a greater number of output registers.

Communication Peripherals

Via the peripheral port interface, the mainframe sends data to peripherals attached to it. These communications take place using the mainframe communications protocol.

Real-Time Clock Acknowledge

This is a signal which clears the real-time clock sense bit in the interrupt sense register enabling the next clock pulse to be detected.

Watch-Dog Timer

The watch-dog timer pulse (WDT) is a control signal issued by the processor once per scan to indicate that the system is running. Before issuing a watch-dog timer pulse, the controller checks the watch-dog timer sense input to verify that the system is still functioning properly. The watch-dog timer controls all discrete outputs in that it must be on for outputs to be electronically enabled.

DATA BASE

Address Assignments

The address assignments are set forth in Appendix A at pages 9-20.

External Access Conventions

This section defines the mechanisms and conventions used to access the various memories, data registers, address registers, and control registers in the mainframe.

Interface Vector Bus

All activity takes place on the interface vector (IV) bus (see processor E5, FIGURE 16C). Addressing on the IV bus is via the IV left bank and registers. IVL (interface vector left) and IVR (interface vector right) select one of the 256 address locations on the left bank and the right bank respectively.

The mainframe's architecture permits 4 points to be selected simultaneously: input left, output left, input right, and output right. This is controlled via the IVL selection mechanism. Once the IVL or IVR address is loaded, the data is available on the left bank (LB) and the right bank (RB) or in sub fields as defined by the instruction set.

Scratchpad Access

Scratchpad access is by the right IV bank. The IV register must be loaded with the proper select information to allow either scratchpad read or scratchpad write as needed. Once the IV register has been loaded with the address, a "1" instruction wait time is needed to allow the address and data to settle on the bus for the operation to be read. A write takes place on the next operation with no wait. Example:

| | | | |
|---|---|---|---|
| Read | XMT | ADDR, IVR | Load Address |
| | XMT | 00010000B, IVL | Select Read (wait cycle) |
| | MOV | RB, R1 | Read Data |
| Write | XMT | 00000001B, IVL | Select Write |
| | XMT | ADDR, IVR | Load Address |
| | MOV | R1, LB | Write Data |

Logic RAM And Coil/Register RAM Access

The access mechanisms for the logic RAM and the coil/register RAM are similar. First, the address to be accessed is loaded into the memory address register. The memory address register is loaded in two pieces, the lower eight bits and the upper eight bits. This is done using the IVL select to locate the proper item on the bus. When the address has been loaded, a three instruction wait is required for read operation and the one instruction wait for the write operation. An example is shown in Table 15.

Peripheral Port Interface

The peripheral port interface is a serial data channel offering full duplex communications. During the interrupt sense check, the state of the two peripheral port interface status lines are checked. If the receiver ready signal (INTRRCVR) is true, the peripheral port interface has a character ready for processing and the receiver handler is used to read the data from the interface so as to do some preliminary processing of the data prior to buffering the character. If the transmitter ready signal (INTRXMIT) is true, the transmitter is capable of sending a character. It there is data in the transmitter buffer, the next character is loaded to the interface.

Table 15

| | | | | |
|---|---|---|---|---|
| Read | XMT | 00000011B, | IVL | Select Lo-order Addr |
| | XMT | ADDRL0, LB | | Load Addr. Low |
| | XMT | 00000100B | IVL | Select High-order Addr |
| | XMT | ADDRHI, LB | | Load ADDR High |
| | XMT | 00000000B, | IVL | Select Logic Input |
| | MOP | | | Wait 2 |
| | NOP | | | Wait 3 |
| | MOV | RE, Rl | | READ DATA |
| Write | XMT | 00000011B, | IVL | Select Lo-Order Addr |
| | XMT | ADDRL0, LB | | Load Addr. Low |
| | XMT | 00000100B, | IVL | Select High-order Addr |
| | XMT | ADDRHI, LB | | Load Addr. High |
| | XMT | 00001001B, | IVL | Select Output Data |
| | MOV | DATA, LB | | Write Data |

Discrete I/O

Discrete I/O is serviced once per scan for each I/O address on the I/O bus. Once the I/O address register is loaded, the input enable is turned on. A wait of 35 instructions is required before data is available. During this time period, the output data is assembled from the coil/register RAM and packed into a byte for the output points corresponding to the input points. The input data is read and output data is loaded. The output enable is turned on and the output strobe follows 17 instructions later. During this time, the input data is decoded and stored in the coil/register RAM. The output strobe is cleared and the output enable is turned off. This cycle is repeated for each of the 8 I/O points in the system.

Register I/O

Register I/O follows the same sequence as discrete I/O except the register enables are used. Similar timing inserts are used.

Memory Organization

Scratchpad

The scratchpad organization is set forth in Appendix A at pages 14-18.

Logic RAM Organization

The first ten bytes of the logic RAM are reserved for system status information as set forth in Table 16.

Coil/Register RAM Organization

The I/O information is allocated one 4 bit nibble per I/O point as set forth in Table 17. This table also sets forth the history extension and the register information arrangement.

Node Types

Node type arrangement is set forth in Table 18 and the node format set forth in Table 19.

Communications Protocol

I/O Assignments

The I/O assignments are set forth below:

| Bit | Pinout |
| --- | --- |
| 0 | 1 |
| 1 | 2 |
| 3 | 2 |
| 3 | 4 |
| 4 | 5 |
| 5 | 6 |
| 6 | 7 |
| 7 | 8 |

Strip and byte select on the I/O bus is of a 1-of-4 code as set forth in Table 20.

This format gives a maximum of 16 data byte addresses with 8 points per data byte; i.e., 128 I/O points.

Table 16

MAIN MICRO CONTROLLER CROSS ASSEMBLER VER 1.1

```
            *
            *** LOGIC RAM BIT ASSIGNMENTS
            *
            *
            *** SYSCONE1
            *
            *** MASK DEFINITIONS
            *
000200      SYS4096M    EQU   10000000B    4096 BYTE LOGIC RAM
000100      SYS2048M    EQU   01000000B    2048 BYTE LOGIC RAM
000040      SYS1024M    EQU   00100000B    1024 BYTE LOGIC RAM
000020      SYS0512M    EQU   00010000B    0512 BYTE LOGIC RAM
000010      SYS0256M    EQU   00001000B    0256 BYTE LOGIC RAM
            *           EQU   00000100B    NOT USED
            *           EQU   00000010B    NOT USED
            *           EQU   00000001B    NOT USED
            *
            ***BIT DEFINITIONS
            *
000 7  1    SYS4096B    RIV   0,7,1        4096 BYTE LOGIC RAM
000 6  1    SYS2048B    RIV   0,6,1        2048 BYTE LOGIC RAM
000 5  1    SYS1024B    RIV   0,5,1        1024 BYTE LOGIC RAM
000 4  1    SYS0512B    RIV   0,4,1        0512 BYTE LOGIC RAM
000 3  1    SYS0256B    RIV   0,3,1        0256 BYTE LOGIC RAM
            *           RIV   0,2,1        NOT USED
            *           RIV   0,1,1        NOT USED
            *           RIV   0,0,1        NOT USED
            *
            *** SYSCONE 2
            *
            *** MASK DEFINITIONS
            *
000200      SYSC256M    EQU   10000000B    256 I/0 POINTS
000100      SYSC192M    EQU   01000000B    192 I/0 POINTS
000040      SYSC128M    EQU   00100000B    128 I/0 POINTS
000020      SYSC064M    EQU   00010000B    064 I/0 POINTS
            *       EQU EQU   00001000B    NOT USED
000004      SYSTRANM    EQU   00000100B    TRANSITIONAL OPTION
000002      SYSERHM     EQU   00000010B    ENHANCED EXECUTIVE
            *           EQU   00000001B    NOT USED
            *
            *** BIT DEFINITIONS
            *
```

Table 16, cont.

```
000 7  1    SYSC256B   RIV   0,7,1          256 I/O POINTS
000 6  1    SYSC192B   RIV   0,6,1          192 I/O POINTS
000 5  1    SYSC128B   RIV   0,5,1          128 I/O POINTS
000 4  1    SYSC064B   RIV   0,4,1          064 I/O POINTS
            *          RIV   0,3,1          NOT USED
000 2  1    SYSTRANB   RIV   0,2,1          TRANSITIONAL OPTION
000 1  1    SYSENHB    RIV   0,1,1          ENHANCED EXECUTIVE
            *          RIV   0,0,1          NOT USED
            *
            *** STATE VECTOR
            *
            *** MASK DEFINITIONS
            *
 000200     SYSSRUNM   EQU   10000000B      RUN STATE
 000100     SYSSPUPM   EQU   01000000B      POWER-UP STATE
 000040     SYSSPDNM   EQU   00100000B      POWER-DOWN STATE
 000020     SYSSTOPM   EQU   00010000B      STOP STATE
 000017     SYSCODEM   EQU   00001111B      ERROR CODE MASK
            *
            *** BIT DEFINITIONS
            *
000 7  1    SYSSRUNB   RIV   0,7,1          RUN STATE
000 6  1    SYSSPUPB   RIV   0,6,1          POWER-UP STATE
000 5  1    SYSSPDNB   RIV   0,5,1          POWER-DOWN STATE
000 4  1    SYSSTOPB   RIV   0,4,1          STOP STATE
000 0  4    SYSCODEB   RIV   0,0,4          ERROR STATE CODE
            *          RIV   0,2,0
            *          RIV   0,1,0
            *          RIV   0,0,0
            *
            *** ERROR STATE CODES
            *
 000001     SYSEOVR    EQU   1              COMMUNICATIONS OVERRU
 000002     SYSELCHK   EQU   2              MEMORY CHECKSUM FAILE
 000003     SYSENODE   EQU   3              INVALID NODE TYPE FOUND
 000004     SYSEIO     EQU   4              I/O PORT ERROR
 000005     SYSESPD    EQU   5              SCRATCHPAD DIAGNOSTIC
                                            FAILED
 000006     SYSECCHK   EQU   6              COIL RAM CHECKSUM FAILE
 000007     SYSEDIAG   EQU   7              CPU DIAGNOSTIC FAILED
 000010     SYSFMEM    EQU   8              ILLEGAL MEMORY CONFIGU
                                                              ATION
 000011     SYSERTC    EQU   9              REAL-TIME CLOCK NOT
                                            FUNCTIONING
 000012     SYSEWDT    EQU   10             WATCH-DOG TIMER EXPIRE
```

BAD ORIGINAL

Table 16 cont.

| | | | | |
|---|---|---|---|---|
| 000013 | SYSECOL | EQU | 11 | ILLEGAL COLUMN DETECTED |
| 000014 | SYSEEOL | EQU | 12 | NO END-OF-LOGIC NODE |
| | * | EQU | 13 | NOT USED |
| | * | EQU | 14 | NOT USED |
| | * | EQU | 15 | NOT USED |

Table 17

I/O information is allocated one nibble per I/O point as follows:

| Bit | Name | Use |
|---|---|---|
| 3 | CRINDISB | Input disable (1=DISABLED, 0=ENABLED) |
| 2 | CRINPUT | Input state (1=ON, 0=OFF) |
| 1 | CROUTPUT | Output state (1=ON, 0=OFF) |
| 0 | CRINTRNL | Internal Coil State (1=)N, 0=OFF) |

History extension is as follows:

| Bit | Name | Use |
|---|---|---|
| 7 | - | Not Used |
| 6 | CRINHIS | Input History (1=ON, 0=OFF) |
| 5 | CROUTHIS | Output History (1=ON, 0=OFF) |
| 4 | CRINTHIS | Internal History (1=ON, 0=OFF) |

Register information is arranged in three 4-bit nibble as follows:

| Nibble | Name | Use |
|---|---|---|
| n | CRREGHI | Register value - Bits 11-8 |
| r+256 | CRREGMID | Register value - Bits 7-4 |
| r+512 | CRREGLOW | Register value - Bits 3-0 |

Table 18

| Index | Name | Use |
|---|---|---|
| 0 | NODESON | Start of network |
| 1 | NODEEOL | End-of-Logic |
| 2 | NODEEOC | End-of-column |
| 3 | NODENULL | Null node |
| 4 | NODESKIP | Skip node |
| 5 | NODEOREL | Normally-open relay |
| 6 | NODECREL | Normally-closed relay |
| 7 | NODEPOST | Positive-going transitional |
| 8 | NODENEGT | Negative-going transitional |
| 9 | NODECOIL | Coil |
| 10 | NODELATC | Latch |
| 11 | NODEDCOL | Disabled coil |
| 12 | NODEDLAT | Disabled latch |
| 13 | NODEHOZO | Horizontal Open |
| 14 | NODEHOZS | Horizontal Short |
| 15 | NODECPRE | Preset constant |
| 16 | NODERPRE | Preset register value |
| 17 | NODECTR | Counter |
| 18 | NODET100 | Timer - 1.00 secs |
| 19 | NODET010 | Timer - 0.10 secs |
| 20 | NODET001 | Timer - 0.01 secs |
| 21 | NODEBCON | Calculate - B node constant |
| 22 | NODEBREG | Calculate - B node register |
| 23 | NODECCON | Calculate - C node constant |
| 24 | NODECREG | Calculate - C node register |
| 25 | NODECALC | Calculate node |
| 26 | | |
| 27 | | |
| 28 | | |
| 29 | | |
| 30 | | |
| 31 | | |

Table 19

Node Format

```
 7 6 5 4 3 2 1 0
-----------------
!X!Y!Y!Y!Y!Y!Z!Z!
-----------------   BYTE 0
!Z!Z!Z!Z!Z!Z!Z!Z!   BYTE 1
-----------------
```

| | |
|---|---|
| X- | 1=>End-of-Column<br>0=>Not End-of-Column |
| YYYYY- | Node Type |
| ZZZZZZZZZZ- | Operand |

Table 20

| Bit | Select | Name |
|---|---|---|
| 7 | STRIP D | IOSTRIPD |
| 6 | STRIP C | IOSTRIPC |
| 5 | STRIP B | IOSTRIPB |
| 4 | STRIP A | IOSTRIPA |
| 3 | BYTE 3 | IOBYTE3 |
| 2 | BYTE 2 | IOBYTE2 |
| 1 | BYTE 1 | IOBYTE1 |
| 0 | BYTE 0 | IOBYTE0 |

Register I/O and extended discrete I/O can take place through the register address space as set forth in Table 21.

Data Format Conventions

The low order bit of all address and data buses is numbered "0" with the number increasing by 1 for each higher order bit. Thus, the high order bit of the several buses are:

| | | |
|---|---|---|
| IV Bus | = | 7 |
| Instruction Data | = | 15 |
| Instruction Address | = | 12 |

This is not consistent with the Signetics 8X300 processor manufacturing conventions and is consequently compensated for in the CPU hardware (See FIGURES 13A-18D).

Bus Assignments

When the destination address field of an instruction defines the IVR Register (17), the eight bit operand is loaded into the scratchpad addressing register. All future references to the scratchpad memory are made to the word (1 of 256) selected by this operand.

IV Bus Addressing

Instructions specifying the IVL register (07) as the destination address send an eight bit operand to the IV select register. This operand specifies which registers and data ports are to be accessed on the IV bus by the CPU on all future references to registers 2N and 3N.

Table 21

| Bit | Name | Use |
|---|---|---|
| 7-0 | IOWORDSL | Word Select |

The CPU instructions read from either the "left bank" (2N) or the "right bank" (3N). The four choices are defined by the eight bit operand sent to the IVL register.

Output Assignments

The output assignments are set forth in Table 22.

IV Input Assignments

The IV input assignments are set forth in Table 23.

Control Pulse Bit Assignments

The control pulses are decoded from the low order three bits of the control register as set forth in Table 24.

Status Input Assignments, Interrupt Sense

The status input assignments, interrupt sense is set forth in Table 25.

Status Sense

The status sense assignments are set forth in Table 26.

Memory Timing

The scratchpad, logic, and coil RAM's operate at lower speeds than the CPU and thus require wait cycles (instructions not affecting the memory) between some operations. The instructions affecting memory are address (A), read (R), and write (W). The wait cycles are set forth in Table 27.

The address cycles are those that load the scratchpad address, or increment or load either the byte of the coil address or the logic address. The write cycle to any one of the three memories, the peripheral interface, or vertical column solver has at least one wait cycle before another write cycle to any of these devices.

Table 22

| IVL Register | Left Bank (Reg 2N) | Right Bank (Reg 3N) |
|---|---|---|
| X XXX 0000 | Control Pulses | Coil Low Address |
| X XXX 0001 | Coil High Address | Scratchpad Write |
| X XXX 0010 | Coil Write Data | " |
| X XXX 0011 | Logic Low Address | " |
| X XXX 0100 | Logic High Address | " |
| X XXX 0101 | Interface Data | " |
| X XXX 0110 | Interface Address | " |
| X XXX 0111 | Interface Control | " |
| X XXX 1000 | Peripheral Data | " |
| X XXX 1001 | Logic Write Data | " |
| X XXX 1010 | Column Solver Pwr | " |
| X XXX 1011 | | " |
| X XXX 1100 | | " |
| X XXX 1101 | | " |
| X XXX 1110 | | " |
| X XXX 1111 | | " |

Table 23

| IVL Register | Left Bank (Reg 3N) | Right Bank (Reg 3N) |
|---|---|---|
| X 000 XXXX | Coil Read Data | Logic Read Data |
| X 001 XXXX | Column Solver | Scratchpad Read |
| X 010 XXXX | Status Sense | " |
| X 011 XXXX | Interrupt Sense | " |
| X 100 XXXX | Interface Input | " |
| X 101 XXXX | Peripheral Data | " |
| X 110 XXXX | | " |
| X 111 XXXX | | " |

Table 24

| Code | | Pulse |
|---|---|---|
| 7 | = | Reset Processor |
| 6 | = | Acknowledge RTC |
| 5 | = | Pulse WDT |
| 4 | = | Clear Prog. Pnl. ROV Ready |
| 3 | = | |
| 2 | = | |
| 1 | = | Increment Coil Address |
| 0 | = | Increment Logic Address |

Table 25

| Bit # | | Input |
|---|---|---|
| 7 | = | I/O Tester Connected |
| 6 | = | CPU Tester Connected |
| 5 | = | I/O Busy |
| 4 | = | |
| 3 | = | Peripheral XMT Ready |
| 2 | = | Peripheral RCV Ready |
| 1 | = | Real Time Clock (100 HZ) |
| 0 | = | Power Down Warning |

Table 26

| Bit # | | Input |
|---|---|---|
| 7 | = | |
| 6 | = | EIA Peripheral Device |
| 5 | = | Peripheral Not Overrun |
| 4 | = | Peripheral Comm Err |
| 3 | = | WDT Run |
| 2 | = | Memory Protect |
| 1 | = | Interface Data Bit 9 |
| 0 | = | Interface Data Bit 8 |

Table 27

| | A to R | A to W | A to A | W to A | W to R | W to W | R to A | R to W | R to R |
|---|---|---|---|---|---|---|---|---|---|
| Logic/Coil | 3 | 1 | 0 | 0 | 2 | 1 | 0 | 0 | 0 |
| Scratchpad | 1 | 0 | 0 | 1 | 2 | 1 | 0 | 0 | 0 |

Power Down

A warning signal is provided to the status sense whenever power has turned off or a failure on the power line occurs. The controller is able to function for five milliseconds after the warning occurs. The software completes its pass within five milliseconds of the warning signal and issues a "reset processor" instruction.

During a power dip, the warning signal may go on and off several times with a warning occurring during the power up routine. For this reason, the maximum time from power up to the time the warning is polled plus the power down routine time is less than five milliseconds.

On power up the instruction in location zero of the instruction ROM is executed immediately after power up stabilization. If a "reset processor" instruction is executed when the warning signal is off, the instruction is treated as a non-operation. Due to this treatment, and due to the possibility of bounce on the warning signal, the instruction after "reset processor" is the jump instruction to zero.

Watchdog Timer

The watchdog timer (WDT) drives the run light 24 (see FIGURE 1) and allows interface outputs to turn on. The WDT remains enabled as long as the CPU updates it with the "pulsed WDT" control pulse more often than once every 50 milliseconds.

Interface Control

The interface control register is loaded by the CPU with an 8 bit byte as set forth in Table 28.

Table 28

| | | |
|---|---|---|
| Bit #7 | = | Programming Panel Power Light |
| 6 | = | |
| 5 | = | Register Input Enable |
| 4 | = | Register Output Strobe |
| 3 | = | Discrete Input Enable |
| 2 | = | Discrete Output Strobe |
| 1 | = | Interface Data Bit |
| 0 | = | Interface Data Bit |

Vertical Column Solver

As shown in FIGURES 4, 5, and 29 the user networks allow for vertical interconnections between adjacent nodes in adjacent lines. The solving of the user networks by the mainframe of the programmable controller incorporates both hardware and software so as to perform the solution on a column-by-column basis from left to right. After the power flow is determined across each node from left to right; that is, whether or not a particular contact is passing power due to the condition of the reference element, the vertical conductivity power flow is determined by a hardwired vertical column solver 60 shown in FIGURES 22A-22D inclusively. This vertical column solving could, like any other logical operation, be performed by an appropriately programmed data processor.

This vertical column solver is shown in detail in FIGURES 22A-D for a typical relay logic ladder diagram network such as that shown in FIGURE 29. The user's ladder diagram is programmed into the controller in the form of a nodal matrix or network where each node 41 embodies some logic element in the user's diagram. The nodes in FIGURE 29 are uniquely identified by their row and column position in the network. For example, the node in the second row and first column is identified as "$N_{2,1}$". In general, each node is identified as "$N_{i,j}$", where "i" is an integer representing the row number and "j" is an integer representing the column number of the node. These logic elements can comprise, among others, normally-closed or normally-open contacts or switches, counters, timers or coils. The logical solution of each line of the ladder diagram or each row of the matrix is displayed in an output coil node corresponding to that line. Any node within the matrix can be referenced to any output coil in order to utilize the logical state of that output coil as an input to a node. The nodal matrix in the preferred embodiment of the present invention has a maximum size of eight rows and eleven columns. Of course, it would be obvious to use either a larger or smaller network nodal matrix size.

The method of solving of the relay logic ladder diagram will now be described. Referring to FIGURE 29, there is shown a typical programmed relay logic ladder diagram network 60 comprising eight rows 61, 62, 63, 64, 65, 66, 67 and 68. Logic Rows through 68 each comprise a series of nodes 41 where each node comprises an input, an output and a logic element of the type previously described, located between the input and the output. The output of one node connects to the input of the next sequential node in a junction area.

Row 61 has not been programmed and consequently is blank. Row 62 comprises a normally closed contact 70 in node $N_{2,1}$, normally open contact 71 in node $N_{2,2}$ and coil 72 in node $N_{2,3}$. Row 63 comprises normally open contact 73 in node $N_{3,1}$ and normally closed contact 74 in node $N_{3,2}$. Row 64 comprises normally open contact 75 in node $N_{4,1}$, normally open contact 76 in node $N_{4,2}$ and coil 77 in node $N_{4,3}$. Row 65 comprises normally closed contact 78 in node $N_{5,1}$ and normally open contact 80 in node $N_{5,2}$. Rows 66 and 67 are blank, and row 68 comprises normally open contact 81 in node $N_{8,1}$, normally open contact 82 in node $N_{8,2}$ and coil 83 in Node $N_{8,3}$. Each of the previously described contacts and coils represents a logic element of a node in the relay logic ladder diagram. It should be noted that many more nodes may be programmed into each row.

Additionally, each row may be interconnected with adjacent rows. Such interconnections occur within the junction areas between nodes. In FIGURE 29 there is shown a connection 84 between rows 62 and 63, a connection 85 between rows 64 and 65, a connection 86 between rows 62, 63, and 64 and a connection 87 between rows 65, 66, 67 and 68. These connections can be referred to by their placement in the network. Thus connections 84 can be referred to as the logic true state for variable "$C_{V_{3,1}}$"; that is, a connection between the output of node $N_{3,1}$ and $N_{2,1}$.

As shown in FIGURES 22A-D, the CPU of the programmable controller uses a hardware column solver 59 for performing an algorithm to solve equations for the power flow across a nodal junction area on a column-by-column basis for the entire network. Thus power flow equations for the nodal junctions in the first column are solved first followed by the nodal junctions, in the second column, etc. This column solving approach is unique to the present invention and provides high speed network solving.

The column solver incorporated into the CPU of the programmable controller employs a concept called connectivity in solving the network power flow equations; that is whether variable $C_V$ is true between adjacent nodes in the same column. Connectivity defines whether there is a connection between adjacent rows in the same column. If there is connectivity, power can flow in either direction; i.e., from the upper row line to the lower row or from the lower row to the upper row. Since the connections between rows occur at the junction between nodes of the network, the CPU solves the power flow equations for each line by determining whether or not power is present just to the right of each nodal junction $J_{i,j}$, where "i" and "j" define the junction location by row and column respectively. Thus for example, the power input status to node $N_{2,2}$ is defined by discrete variable $P_{IN_{2,1}}$; that is, the power input status from node $N_{2,1}$ taking into account any vertical power flow. The presence of power is determined as a function of the power status just to the left of the nodal junction; that is, "$P_{OUT}$" from the node, logically ORed with the connectivity power state relating to power flow from interconnected lines.

In FIGURE 29, in order to illustrate the column solving technique, phantom line A is placed just to the left of the first column's nodal junctions and represents the power output status for each node in column 1. Line B is placed just to the right of the first column's nodal junctions and represents the power input status for each node to the right from the node to the left in combination with any vertical power flow. If we assume that power is applied to all lines at power rail P shown in FIGURE 29 and that normally open contacts close when their reference is ON and open when their reference is OFF; it is seen that $P_{OUT}$ from a node is true if there is input power to the node and the node contact is closed. This can be stated generally by the following equation: $P_{OUT_{i,j}} = P_{IN_{i,j-1}} \cdot C_{i,j}$, where $C_{i,j}$ is the conductivity state of node $N_{i,j}$. Other elements in the nodes conduct depending upon the states of their references. Thus a normally closed switch conducts if the reference is OFF, etc. These conducting states are set forth in Tables 8A-8H, 9A-9B, and 10A-10D. The output power from the node is coupled with the vertical output status at the junction between two adjacent nodes in the same column. Thus the junction between nodes $N_{3,1}$ and node $N_{3,2}$ is junction $J_{3,1}$. The power to junction $J_{3,1}$ is the power output from node $N_{3,1}$ -- that is, $P_{OUT_{3,1}}$ -- plus the vertical power down -- that is $P_{VD_{3,1}}$ -- due to vertical connector 84 (alternatively designated $C_{V_{3,1}}$) and vertical power up -- that is $P_{VU_{3,1}}$ --. Vertical power up or down is true if there is a corresponding vertical connection and if a power out is true to the connection from an interconnected node. Thus for junction $J_{3;1}$ vertical power down -- $P_{VD_{3,1}}$ is true because a connector 84 ($C_{V_{3,1}}$) exists (is true) and power out from node $N_{2,1}$ is true assuming element 70 is conducting).

Thus the power in <u>from</u> node $N_{3,1}$ is the power out from node $N_{3,1}$ ($P_{OUT_{3,1}}$) logically ORed with the vertical down

power ($P_{VD_{3,1}}$) and the vertical power up power ($P_{VU_{3,1}}$). In Boolean logic, this statement can be set forth for any node in the user network by the following equation:

(1) $P_{IN_{i,j}} = P_{OUT_{i,j}} + P_{VU_{i,j}} + P_{VD_{i,j}}$ where

(2) $P_{OUT_{i,j}} = P_{IN_{i,j-1}} + C_{i,j}$

where $C_{i,j}$ is the conductivity state, of node $N_{i,j}$,

where

(3) $P_{VU_{i,j}} = P_{IN_{i-1,j}} \cdot C_{U_{i,j}}$

where $C_{U_{i,j}}$ is the connectivity state between the output of node $N_{i,j}$ and node $N_{i-1,j}$,

and where

(4) $P_{VD_{i,j}} = P_{IN_{i+1,j}} \cdot C_{D_{i,j}}$,

where $C_{D_{i,j}}$ is the connectivity state between the output of node $N_{i,j}$ and node $N_{i+1,j}$;

Alternatively, since power vertical is equal to the logically "anding" of power out and vertical connectors, the following Boolean equations can define the power input to the next horizontal node from the node to its left:

$$(1)\quad P_{IN_{i,j}} = P_{OUT_{i,j}} + P_{OUT_{i-1}} \cdot C_{V_{i,j}} + P_{OUT_{i-2,j}} \cdot C_{V_{i-1,j}} \cdot C_{V_{i,j}} + \ldots + P_{OUT_{1,j}} \cdot C_{V_{2,j}} \cdot C_{V_{3,j}} \ldots C_{V_{i,j}} + P_{OUT_{i+1,j}} \cdot C_{V_{i+1,j}} + P_{OUT_{i+2,j}} \cdot C_{V_{i+2,j}} \cdot C_{V_{i+1,j}} + \ldots + P_{OUT_{I,j}} \cdot C_{V_{I,j}} \cdot C_{V_{I-1,j}} \ldots C_{V_{i+1,j}}$$

where

$$(2)\quad P_{OUT_{i,j}} = P_{IN_{i-1,j}} \cdot C_{i,j}$$

where $C_{i,j}$ is the conductivity state of node $N_{i,j}$,

and where $C_{V_{i,j}}$ is the connectivity state between node $N_{i,j}$ and node $N_{i-1,j}$.

Visually, the power status for each of the lines 61 through 68 at line A shown in FIGURE 29 is determined as follows: in this discussion a "1" indicates the presence of power and "0" indicates the absence of power. The power status of row 61 at line A is obviously 0 since no connection exists between the power rail P and line A in row 61. Since the normally closed contact 70 of row 62 is false if reference "007" is true, the power status at line A ($P_{OUT_{2,1}}$) for row 62 is also 0. The normally open contact 73 in row 63 will close when reference 001 is true. Since power in ($P_{IN_{3,0}}$) is true, the power out status ($P_{OUT_{3,1}}$)

at line A will be 1. Similarly, the power status at line A for row 64 will also be 1 if reference 002 is true. Row 65 is similar to row 62, and the power status at line A will be 0 if reference 001 is true. The power status at line A will also be 0 for lines 66 and 67 since no nodes exist. Row 68 is similar to rows 63 and 64 and therefore the power status at point A will be 1 if reference 002 is true. This resultant series of 1's and 0's is the output power status at point A and is referred to as a power byte. This power byte is generated by the software within the mainframe and is transferred to the column solver 59 (FIGURES 22A-22D) as signals BBOH through BB7H. The power byte at line A is shown in Table 29 for rows 1-8 from left to right.

Table 29

0 0 1 1 0 0 0 1

The next step is to determine the connectivity between the rows for the first column. In determining connectivity a 1 indicates a connection to the row above the row in question, and a 0 indicates no connection to the row above. Referring again to FIGURE 29, it can be seen that for row 61 there is no row above so consequently the connectivity status for row 61 at column one ($C_{V_{11}}$) is always zero and therefore is shown as a blank on Table 30 below. It can be seen that there is no connection between rows 62 and 61 so the connectivity status of row 62 ($C_{V_{211}}$) is 0. The connectivity status of row 63, however, is 1 since there is a connection to row 62. Similarly, the connectivity for row 64 is a 0, for row 65 is a 1, and for rows 66, 67 and 68 are all 0. This result is illustrated in TABLE 30 for rows 1-8 from left to right. The previous data comprising the power status at line A and connectivity is determined by the software of the programmable controller.

Table 30

- 0 1 0 1 0 0 0

This data is stored as part of the logic data within the mainframe and is transferred to the column solver (FIGURES 22A-22D) as signals LROL through LR6L.

The CPU of the controller then solves the power flow equations for each row at phantom line B. Power can be present at line B for each row in one of three ways. 1) Power can flow directly through the row from line A if the node is in the conducting state; 2) power can flow from line A of a row above through a connection to the row being solved; and 3) power can flow from line A of a row below through a connection to the row being solved. In the example shown in FIGURE 29 it can be seen that the power status at line B of row 61 is 0. The power status at line B of row 62, however, is 1 since power can flow from line A of row 63 up through connection 84. The power status at line B of row 64 is 1 since power flows directly from line A to line B if contact 73 is closed (reference 001 is true). Power also flows from line A of row 64 down through connector 85 to line B of row 65 making the power status at line B of row 65 also 1. Since it can be seen that no connections exist, the power status at line B of rows 66 and 67 is 0. It can also be seen that the power status at line B of row 68 is 1 since power can flow directly from line A to line B of row 68. The solution to the power flow equation for each column is an input power byte, such as that shown in Table 31 for rows 1 through 8 from left to right.

Table 31

0 1 1 1 1 0 0 1

This data is generated by the column solver 59 shown in FIGURES 22A-22D on output lines VROL through VR7L.

The software of the programmable controller (Appendix A, pages 66, 187, 188) furnishes the column solver with information of the power input to the left of the nodal junction and the connectivity data relating to connections between lines. The column solver then determines the input power byte just to the right of the nodal junction. The software then uses this input power byte to determine power flow through the next node, in order to get the power input at the following nodal junction. The column solver of the controller continues to solve the lines in this columnar manner in a left to right fashion until the overall power status of the network is determined, resulting in a power byte for each output coil for the entire network (nodes $N_{2,3}$, $N_{4,2}$, $N_{8,3}$ for FIGURE 29).

The logic hardware implementation that performs the column solving is shown in FIGURES 22A-D. For the sake of simplicity, only the logic steps involved in determining the output for one line of any particular column is described. Referring to FIGURE 22C, there is shown a number of logic elements or gates. Lines to and from the logic gates are referred to by an alphanumeric number comprising the component and the input or output line number. Also shown in FIGURE 22C are input lines BB2H, BB3H, LR1L and LR2L and output lines VR2L and VR3L. Input line BB2H carries the input power data for row 2. Input line BB3H carries the input power data for row 3. Line LR6L carries the connectivity data relating to connectivity between rows 1 and 2, and line LR5L carries connectivity data relating to connectivity between rows 2 and 3. In terms of this particular logic arrangement, a logical 1 on lines BB2H and BB3H indicates power and a logical 0 on lines LR1L and LR2L indicates connectivity between the respective lines. Line VR6L carries the output power data relating to row 2 and shows a logical 0 when power is present. The input power data and connectivity data is supplied to the hardware column solver from the software of the CPU.

The method of determining the power status on output line VR2L will now be described. From the previous discussion, it is apparent that output line VR2L can exhibit a logical 0 indicating the presence of power when any of three situations occurs: 1) when power flows directly from input line BB2H; 2) when power flows down from the row above; or 3) when power flows up from a row below. The case where power is present on input line BB2H will now be examined. If power is present on line BB2H, a logical 1 will appear on line B4-6. When either line B4-6 or line B4-5 is a logical 1, line B4-4 becomes a logical 0. This output also appears on line B2-5. Whenever the status of line B2-4 or B2-5 or both is a logical 0, line B2-6 becomes a logical 0. In that way, it can be seen that when input line BB2H carries a logical 1, output line VR2L will be a logical 0 indicating power is present.

The case of power flowing down from a row above will now be examined. It can be seen that when the input line BB3H carries a logical 1, line B3-10 will be a logical 0 making line B3-11 also a logical 0. Line B3-12 is connected to input line LR2L which carries the connectivity data relating to connectivity between rows 6 and 5. If connectivity exists, this line will carry a logical 0 also making line B3-12 a logical 0. When both lines B3-11 and B3-12 are a logical 0, line B3-13 becomes a logical 1. It can be seen that when power exists at input line BB3H, and there is connectivity between that line and line BB2H, the presence of the logical 1 on line B3-13 also applied to line B4-9, will in turn cause a logical 0 at the output VR2L indicating the presence of power.

In a similar fashion, lines B4-1 and B4-4 determine whether there is a connection to the row below and also whether there is power flowing in that row. It is clear that both conditions of power flowing and connection between rows must be true in order for the output line VR2L to show a logical 0 indicating the presence of power.

It should be noted that the column solver is not limited to the specific hardware implementation shown, or to any hardware implementation. The function of the column solver could easily be done by a software program or by other hardware construction.

Any software program or hardware implementation that performs the following logic algorithm would accomplish the result of the column solver of the present invention.

$$D_n = O_{n+1} \cdot D_{n+1} + P_n$$
$$U_n = O_{n-1} \cdot U_{n-1} + P_n$$
$$O_n = D_n + U_n$$

where $D_n$ = power flowing up from below to line n.
$U_n$ = power flowing down from above to line n.
$O_n$ = power output on line n.
$O_{n+1}$ = power output on line below (line n+1)
$D_{n+1}$ = connectivity from line below (line n+1)
$O_{n-1}$ = power output on line above (line n-1)
$U_{n-1}$ = connectivity from line above (line n-1)
$P_n$ = power input on line n.

The concept of column solving as embodied in the present invention is superior to other techniques utilized by other programmable controllers in the solving of network ladder diagrams. Prior to the present invention, ladder diagrams were solved on a line-by-line basis. This technique would often create problems for the programmer who would often have to rewrite his ladder diagrams in order to conform to a specified programming format.

FIGURE 30 illustrates a network that is easily solvable by the column solver of the present invention, but presents difficulties to the conventional line solver controller.

A conventional controller using prior art line solving technology would solve the relay logic ladder diagram shown in FIGURE 30 in the following fashion. The power flow for node 90 would be solved first followed by the solving of nodes 91 and 92. Prior to solving nodes 91 and 92, however, the results of the power flow through node 90 would be stored in a register for later use. This stored value would correspond to the power status at point 95. The power flow solution to nodes 91 and 92 would also have to be stored in a register. This value would correspond to the power status at point 97. After storing the status of point 97, the conventional controller would return to point 95 and using the previously stored power status value, it would then solve for node 94. This value would be stored for the power status at point 96, and the controller would return to solve for node 98. The solution to node 98 would be basically ORed with the stored value at point 96 and the resultant value ORed with the value at point 97. The results from this would be then used to solve the power flow for node 93. It is quite apparent that for a complicated network having many node branches, a large amount of register storage is required in order to hold intermediate power status values while other nodes are solved. This storage space requirement in prior art controllers necessitates limitations on the format of the user network so as to limit the number of logically ORed nodes. The column solver of the present invention, however, is not adversely affected in its execution of such logic functions and is therefore faster and more efficient than prior art controllers.

Network Insertion

The programmable controller via its software allows for the insertion of networks between two sequentially adjacent existing networks. Since the networks are solved sequentially in the order of their step number (see the status/ assembly area in FIGURE 6A), the sequential solution order of the programmable controller can be altered by network insertion. The portion of the software for implementing this network insertion is set forth in Appendix A at pages 112-125 and 131-132.

Coil Designation

The programmable controller not only allows the user to insert networks between two existing networks in his or her control program but also allows the user to designate any desired output point in the I/O system for any line within any network. Thus user lines may be inserted anywhere within the control program without affecting other lines within the control program or their coil numbers. In prior art programmable controllers employing the user line concept, each user line had a fixed coil number representing its logical output state. Thus for example it was not possible to change user line "6" to have an output coil designated "9" or any other number, other than "6". In the present invention, the output coil of any user line is identifiable with any number within the output address state of the I/O system. Thus it is not necessary that the coil numbers of outputs within user networks be equal to the number of the line in that network. For example, in network number one (step number one) the first line output can reference any I/O point from "1" to the maximum number of I/O points in the I/O system; typically, 256. Similarly, the second line of that network need not have a coil output numbered "2" but can be any number within the I/O output field. Therefore, the present invention is unlike prior art programmable controllers where the solution order of the user program was the same as the line number order. In the present programmable controller, the line number order can be designated arbitrarily by the user while the solution order of his or her program is by the step number (network number) of the networks in the control program. The software for programming the user line outputs is set forth in Appendix B while the software used by the mainframe 39 to solve the user program and setting output points in the I/O system is set forth in Appendix A.

Table 32

```
/*   Convert Node */

/*   Direction and Type of Convert is Specified in
     Bits 1-0 of R1 */
/*   IF R1(1-0) = 00B, Discrete Source Node */
/*   IF R1(1-0) = 01B, Register Source Node */
/*   IF R1(1-0) = 10B, Convert to BCD, Store in Discrete */
/*   IF R1(1-0) = 11B, Convert to Binary, Store in Register */

/*   Discrete Source is always a Discrete Input */
/*   Discrete Destination is always a Discrete Output
     (i.e. Not an Internal Coil) */
/*   Registers are always Holding Registers */

/*   GET Type of Convert Node */

R11 = R1.AND.3

/*   Vector OFF R11 */

/*   If R11 = 00, then Discrete Source Node */

/*   Coil ADDR REG has been Loaded */
/*   GET Coil Increment Code */
R11 = CTR LINCC

/*   Clear Assembly Area for Data */
[R5,R6] = 0

/*   Set Up Count */
```

R2 = $-12_{10}$

```
FOR I = 1, 12 (using R2 for counting).

/*   SHIFT Discrete Bits */
[R5,R6] = [R5,R6].Rotate Left. 1

/*   Bring in Next Discrete Input */
[R5,R6] = [R5,R6].OR.CRINPUT
IVOCTRL <= R11

NEXT I
```

Table 32, Cont'd

```
/*   Store Source Data *
[CONVSRCH, CONVSRCL] = [R5,R6]

Go To Logic 020 /* Solve Next Node */

/*   If R11 = 01B, Then Register Source Node */

/*   Save R1 */
Save R1 = R1

Call REGVAL

/*   Save Source Data */

[CONVSRCH, CONVSRCL] = [R5,R6]

/*   Solve Next Node */

/*   If R11 = 10B, Then Discrete Destination, with Binary
     to BCD Convert */

/*   Save R1 */
Save R1 = R1
Save R3,R4 => Save R3, Save R4
/*   GET Binary Source Data */
[R5,R6] = [CONVSRCH, CONVSRCL]
/*   Set Up Count A */
BCD Value = 0, [R3,R4] = 0
R1 = -4

Do R1 To 0, Step 1

/*   Set Up Count B */
R2 = -4
Multiply BCD Value By 2, [R3,R4] = 2.*[R3,R4]
Do R2 to 0, Step 1

/*   Subtract 800 from BIN Value */
[Aux,R11] = [R5,R6]  - 800_10

If [Aux,R11].GE.0

Then Do
/*   Replace BIN Value */
[R5,R6] = [Aux,R11]

/*   Add one to BCD Value */
[R3,R4] = [R3,R4] + 1

Else:
```

Table 32, Cont'd

```
ENDIF

ENDDO

/*   Divide BCD Value By 16 */
[R3,R4] = [R3,R4].Rotated Right.4

/*   Mult BIN Value By 10 */
[R5,R6] = [R5,R6] * 10

ENDDO

/*   BCD Value is In [R3,R4]
/*   Future Rotates with [R3,R4] will be Wrap-Around
     With Carryout => Carryin */

/*   Coil Addr Reg is set, GET INCR Code */
R11 = CTRLINCC

/*   Set Count */
R2 = -12₁₀

/*   Rotate First Bit into Position */
[R5,R6] = [R5,R6].Rotate Left 5

DO   R2 to 0 Step 1
     /* Output a Bit */
     CROUTPUT = [R4]

     /*  Rotate Next Bit into Position */
     [R3,R4] = [R3,R4].Rotate Left.1

ENDDO

/*   Restore Registers */

R1 = Save R1
R3 = Save R3
R4 = Save R4

/*   Set Power */

R3 = (R3.AND.3̄).OR.2

/*   Solve Next Node */
```

Table 32, Cont'd

```
/*   If R11 = 11B, Register Destination with BCD to
     Binary Convert */

/*   Save R1, R2, R3, and R4 */
Save R1 = R1
Save R2 = R2
Save R3 = R3
Save R4 = R4

/*   Get Source Data */

[R1,R2] = [CONVSRCH, CONVSRCL]

/*   Set Bin to 0 ]

[R3,R4] = 0

1 Set Count */
R11 = -3

Do R11 to 0, Step 1

     /*  Multiply Bin Value by 10 */
         [R3,R4] = [R3,R4] * 10

     /*  Add Next Digit to Bin Value */
         [R3,R4]  = [R3,R4] + R1

     /*   Move next Digit into Position */
         [R1,R2] = [R1,R2]. Rotate Left. 4. AND.7777

ENDDO

/*   Save Bin Data */
[CONVSRCH, CONVSRCL] = [R3,R4]

/ Restore R1, R2 */
R1 = Save R1
R2 = Save R2

/ GET REG ADDR */
CALL REGVAL

/ GET Bin Data */
[R1,R2] = [CONVSRCH, CONVSRCL]

CALL STORE
```

Table 32, Cont'd

```
/*   Restore Registers */

R1 = Save R1
R3 = Save R3
R4 = Save R4

/*   Set Power */

R3 = (R3.AND.NOT.3).OR.2

/*   Solve Next Node */
```

<u>Programming Panel</u>

The programming panel 29 shown in FIGURE 1 is presented in detail in FIGURES 24A-28D. As shown in FIGURE 24A and 24C, it incorporates an Intel 8080A microprocessor Z1 and associated circuitry. The software controlling the microprocessor is set forth in Appendix B. The resultant programming panel in conjunction with the hardware and software of the mainframe allow the user to program, monitor and debug his or her control program. Furthermore, the programming panel in conjunction with the mainframe allows for the real-time display of a node as selected by the cursor control keys of the programming panel, the insertion of networks between two existing networks within the control program as well as allowing the user to assign the coil output state of any line within any network without being constrained by the line number of the line within the network. The programming panel in combination with the mainframe provides a real-time output on LED (see FIGURE 1) for any node or CRT screen 36 as selected by cursor 47 (see FIGURES 2, 4, and 5). It also allows the user to perform specialized searches of the control program.

Thus what has been described is an improved, low cost programmable controller intended to replace from 8 to 256 hardwired relays used in typical industrial control applications. This improved programmable controller allows the user to enter his or her control program via a programming panel having a CRT display and utilizing networks comprising up to seven rows by eleven columns of user selected elements. The solution order of the control program is performed in sequence by the network number associated with each of the user networks. In this manner, in situations where the solution order is important to the proper functioning of the control system, the user can have the programmable controller perform the solution of one network before another network. This capability is enhanced by the programmable controller, in conjunction with its programming panel, allowing the user to insert a network between two existing networks in the control program.

Furthermore, the programmable controller described in this application allows the user to designate the output coil associated with a user line without being constrained by the line number of the user line. This gives the user more freedom in generating the control program since the output coil numbers are not fixed by the line numbers of the control program. This, in conjunction with the capability of inserting networks between existing networks within the control program, further helps the user obtain a desired control system.

In addition, the programmable controller described in this application allows the networks of the user control programs to have vertical interconnection between adjacent lines in the network. Although such vertical connections have existed in prior art programmable controllers, the present invention overcomes a problem in the prior programmable controllers in having a column solver which eliminates most of the constraints on the user in setting up the network and also which greatly reduces the hardware and software requirements of the programmable controller to solve the network. The present programmable controller thus solves each user network on a column-by-column basis with one portion of the solution being the state of the element within the nodes within a particular column of the network and the next step being the determination of vertical power flow from any line to any adjacent line due to vertical interconnections.

Lastly, the programmable controller as described in this application has a CRT display which utilizes a cursor which when placed on any node of the user generated networks displays on an LED the real-time power status of that node. Furthermore, the programming panel in conjunction with the mainframe of the programmable controller allows the user to perform various search operations of the user program so as to facilitate monitoring and debugging of the user program.

The combination of these various features and improvements yields an advance in the state of the art of programmable controllers.

It will thus be seen that the objects set forth above, and those made apparent from the preceding description, are efficiently attained and, since certain changes may be made in the above construction without departing from the scope of the invention, it is intended that all matter contained in the above description or shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween.

Having described the invention, what is claimed is:

1. An improved programmable controller of the type having a mainframe including a central processing unit, associated electronics and memory for solving a user control program, an input/output system for communicating input data from external devices to the mainframe and for transferring output data from the mainframe to the external devices for control thereof in response to the control program, and a programming panel for programming, monitoring and displaying the user selected control program, wherein the improvement comprises:

A) an improved programming panel having first means for allowing the user to generate a control program in a network format, each network comprising up to I rows and J columns, where I and J are positive integers each greater than one, each network comprising up to I x j nodes where the location of each node is $N_{ij}$, where i = 1, 2, . . . I, j = 1, 2, . . . J, and where each of at least some of these nodes are designatable by the user as representing an electrical circuit element that can reference other nodes, and having a power output status that is a function of the input power status to the node in combination with the conductivity status of the element, and having second means for allowing the user to generate vertical interconnections between the output of node $N_{i,j}$ with the output of Node $N_{i-1,j}$ and with output of node $N_{i+1,j}$, for all existant nodes $N_{i-1,j}$ and $N_{i+1,j}$, wherein the power input status from node $N_{i,j}$ to node $N_{i,j+1}$ is represented by the following Boolean equation;

1) $P_{IN_{i,j}} = P_{OUT_{i,j}} + P_{VU_{i,j}} + P_{VD_{i,j}}$ where

2) $P_{OUT_{i,j}} = P_{IN_{i,j-1}} + C_{i,j}$

where $C_{i,j}$ is the conductivity state, of node $N_{i,j}$,

where

3) $P_{VU_{i,j}} = P_{IN_{i-1,j}} \cdot C_{U_{i,j}}$

where $C_{U_{i,j}}$, is the connectivity state between the output of node $N_{i,j}$ and node $N_{i-1,j}$,

and where

4) $P_{VD_{i,j}} = P_{IN_{i+1,j}} \cdot C_{D_{i,j}}$,

where $C_{D_{i,j}}$ is the connectivity state between the output of node $N_{i,j}$ and node $N_{i+1,j}$;

and

B) an improved mainframe having means for solving equation (1) for each node in each column of the user generated network on a column by column basis.

2. An improved programmable controller of the type having a mainframe including a central processing unit, associated electronics and memory for solving a user control program, an input/output system for communicating input data from external devices to the mainframe and for transferring output data from the mainframe to the external devices for control thereof in response to the control program, and a programming panel for programming, monitoring and displaying the user selected control program, wherein the improvement comprises:

A) an improved programming panel having first means for allowing the user to generate a control program in a network format, each network comprising up to I rows and J columns, where I and J are positive integers each greater than one, each network comprising up to I x J nodes where the location of each node is $N_{ij}$, where i = 1, 2, . . . I, j = 1, 2, . . . J, and where each of at least some of these nodes are designatable by the user as representing an electrical circuit element that can reference other nodes, and having a power output status that is a function of the input power status to the node in combination with the conductivity status of the element, and having second means for allowing the user to generate vertical interconnections between the output of node $N_{i,j}$ with the output of node $N_{i-1,j}$ and with output of node $N_{i+1,j}$, for all existant nodes $N_{i-1,j}$ and $N_{i+1,j}$, wherein the power input status from node $N_{k,j}$ is represented by the following Boolean equation:

1) $$P_{IN_{i,j}} = P_{OUT_{i,j}} + P_{OUT_{i-1}} \cdot C_{V_{i,j}} + P_{OUT_{i-2,j}} \cdot C_{V_{i-1,j}} \cdot C_{V_{i,j}} + \ldots + P_{OUT_{1,j}} \cdot C_{V_{2,j}} \cdot C_{V_{3,j}} \cdot \cdot \cdot C_{V_{i,j}} + P_{OUT_{i+1,j}} \cdot C_{V_{i+1,j}} + P_{OUT_{1+2,j}} \cdot C_{V_{i+2,j}} \cdot C_{V_{i+1,j}} + \cdot \cdot \cdot + P_{OUT_{I,j}} \cdot C_{V_{I,j}} \cdot C_{V_{I-1,j}} \cdot \cdot \cdot C_{V_{i+1,j}}$$

where

2) $$P_{OUT_{i,j}} = P_{IN_{i-1,j}} \cdot C_{i,j}$$

where $C_{i,j}$ is the conductivity state ot node $N_{i,j}$,

and where $C_{V_{i,j}}$ is the connectivity state between node $N_{i,j}$ and node $N_{i-1,j}$.

B) an improved mainframe having means for solving equation (1) for each node in each column of the user generated network on a column by column basis.

3. An improved programmable controller of the type having a mainframe including a central processing unit, associated electronics and memory for solving a user control program comprising a plurality of nodes in a network format, the nodes representing user selectable circuit elements that can reference other nodes, an input/output system for communicating input data from external devices to the mainframe and for transferring output data from the mainframe to the external devices for control thereof in response to the control program, and a programming panel for programming, monitoring and displaying on a cathode ray tube (CRT) at least a portion of the user selected control program, wherein the improvement comprises an improved programming panel and mainframe each having interacting means for performing one of a plurality of search functions containing one or more search parameters as designated by the user so as to display on the programming panel CRT the control program network satisfying the search parameters, wherein the search parameters that can be designated by the user include the searching for the first node of a network, the searching for the first occurrence of a particular contact type of a particular circuit element, the searching for the first occurrence of a particular reference number, the searching for the first occurrence of a particular circuit element having a particular reference number, and the searching for the first occurrence of a particular node.

4. An improved programmable controller as defined in Claim 3, wherein the improved programming panel has means allowing the user to generate vertical interconnections between the output of two nodes in adjacent rows of the network, and wherein the search parameters that can be designated by the user include the searching for the first occurrence of a vertical connector, the searching for the first occurrence of a particular contact type of a particular circuit element having a vertical connector and the searching for the first occurrence of a particular reference number having a vertical connector.

5. An improved controller of the type having a mainframe including a central processing unit, associated electronics and memory for solving a user control program comprising a plurality of nodes, an input/output system for communicating input data from external devices to the mainframe and for transferring output data from the mainframe to the external devices for control thereof in response to the control program, and a programming panel, including a cathode ray tube (CRT) display, for programming, monitoring and displaying at least a portion of the user selected control program, wherein the improvement comprises an improved programming panel and mainframe wherein the programming panel has a CRT visual display and a cursor which can be moved from node to node of the control program as displayed on the visual display, and wherein the programming panel further includes means for indicating to a user the real-time power status of the node upon which the cursor is placed independent of the CRT refresh rate.

6. An improved programmable controller as defined in Claim 5, wherein the real-time power status indicating means is a light and means for energizing the light in response to the real-time power status of the node.

7. An improved programmable controller of the type having a mainframe including a central processing unit, associated electronics and memory for solving a user control program, an input/output system for communicating input data from external devices to the mainframe and for transferring output data from the mainframe to the external devices for control thereof in response to the control program, and a programming panel for programming, monitoring and displaying the user selected control program, wherein the improvement comprises an improved mainframe having means for solving calculate functions in the user control program wherein at least some of the calculate functions have more than one discrete output designating information concerning the result of the calculate function.

8. An improved programmable controller as defined in Claim 7, wherein the means for solving calculate functions includes means for solving the subtract function with three discrete outputs, a first of the outputs having a first state indicating when the minuend is less than or equal to the subtrahend and a second state indicating when the minuend is greater than the subtrahend, a second output having a first state indicating when the minuend is not equal to the subtrahend and a second state indicating when the minuend is equal to the subtrahend, and a third output having a first state indicating when the minuend is greater than or equal to the subtrahend and a second state when the minuend is less than the subtrahend.

FIG. I

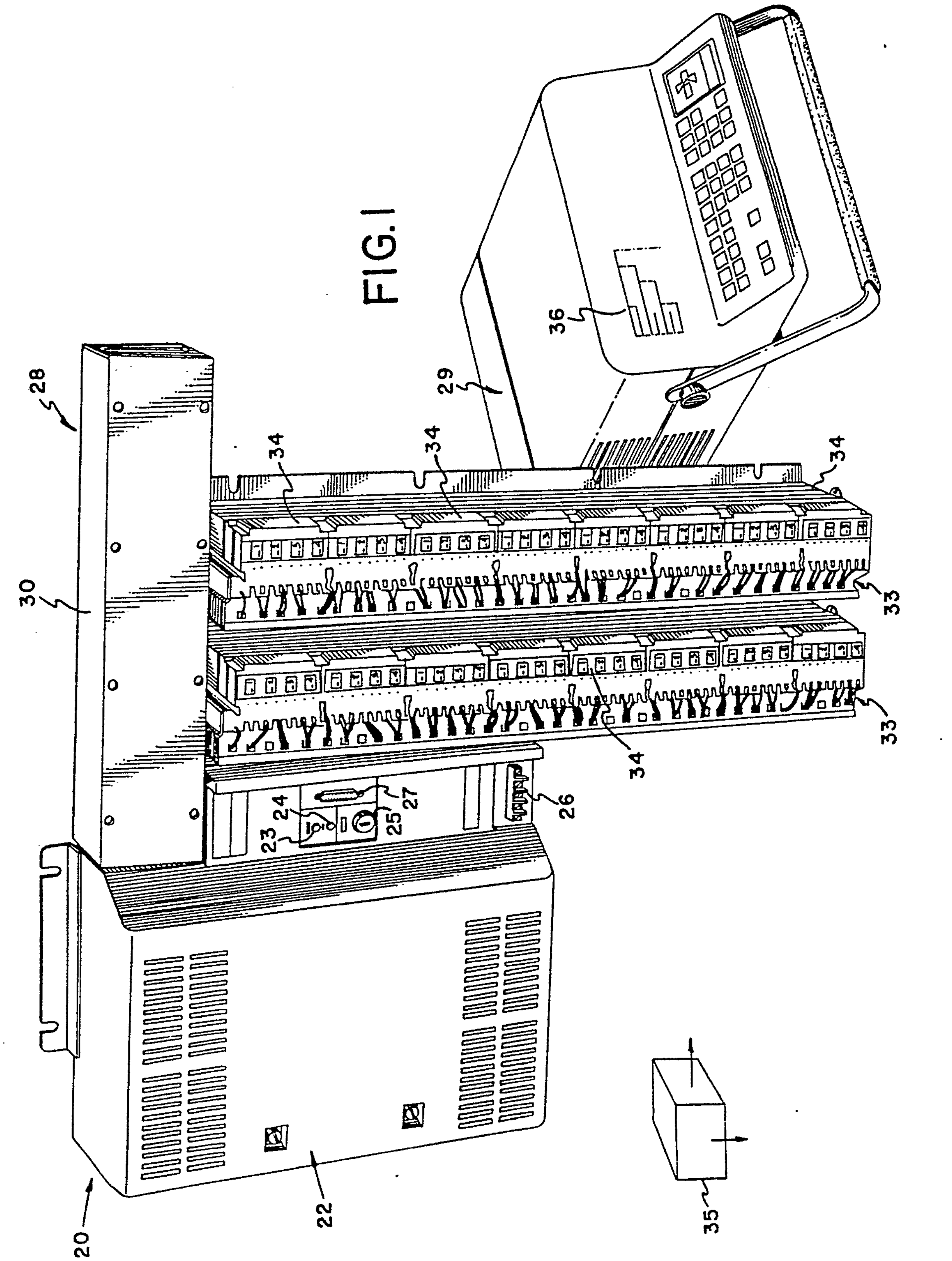

FIG. 1A

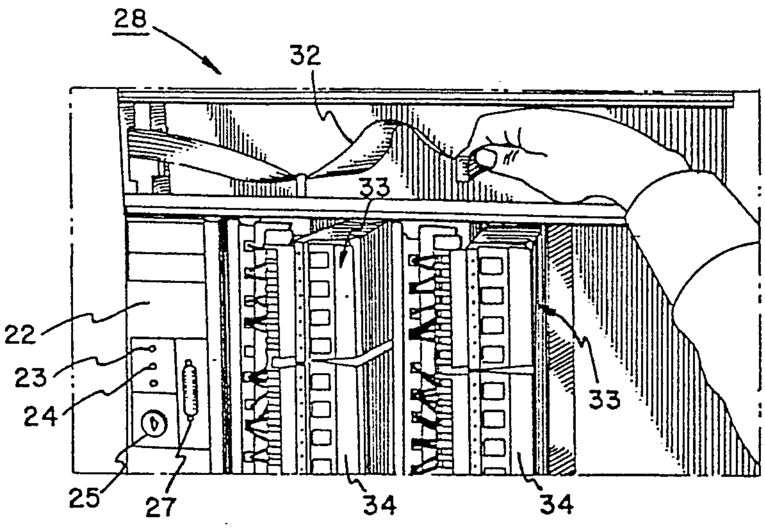


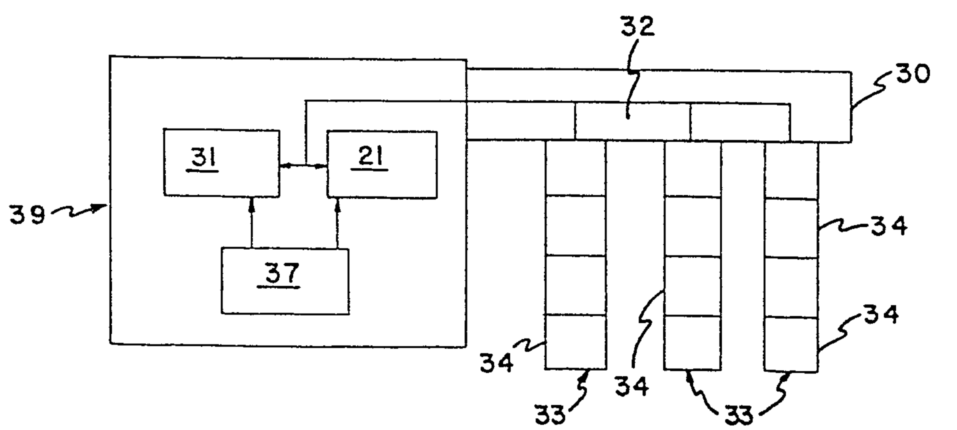


FIG. 1B

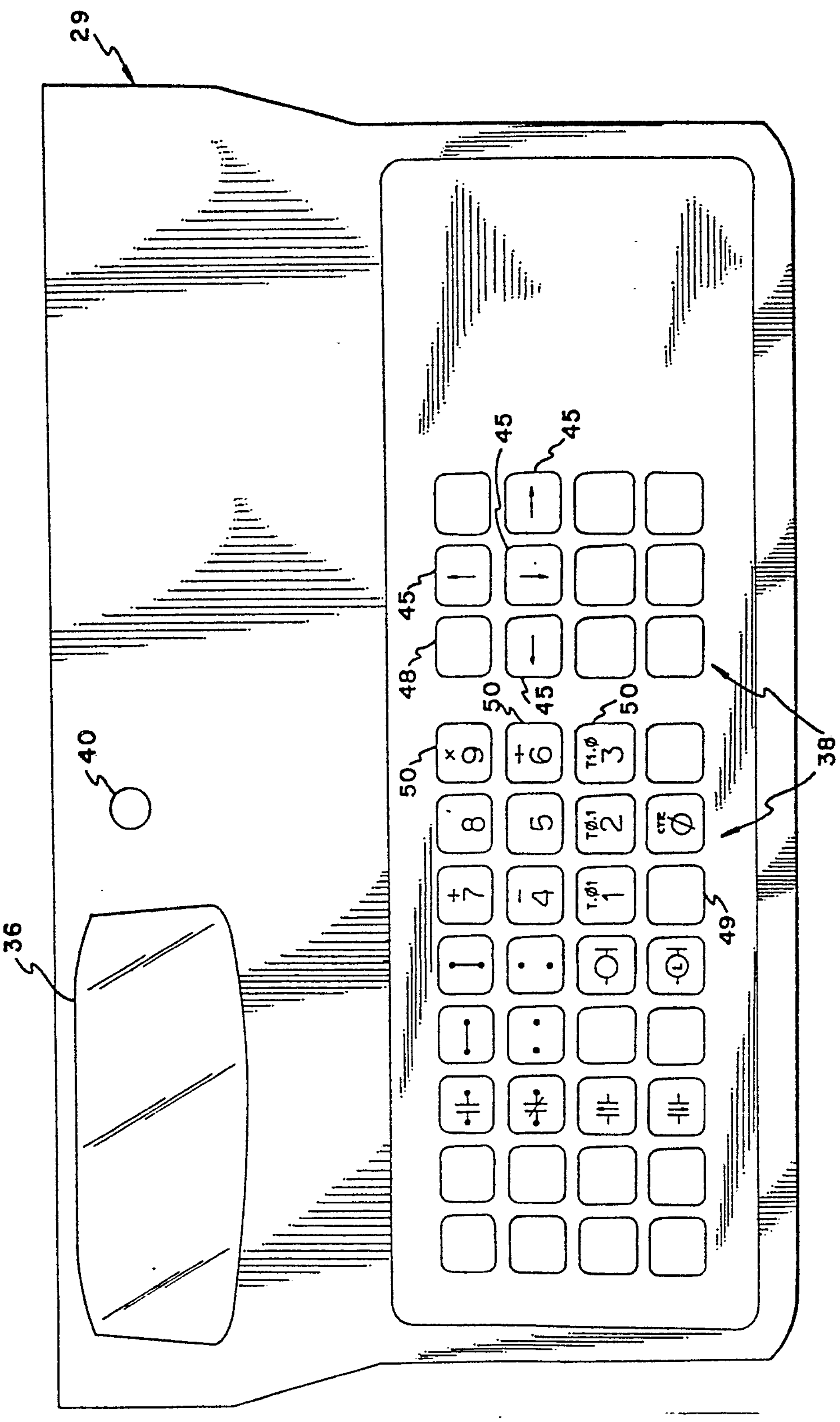


FIG.2

FIG. 3

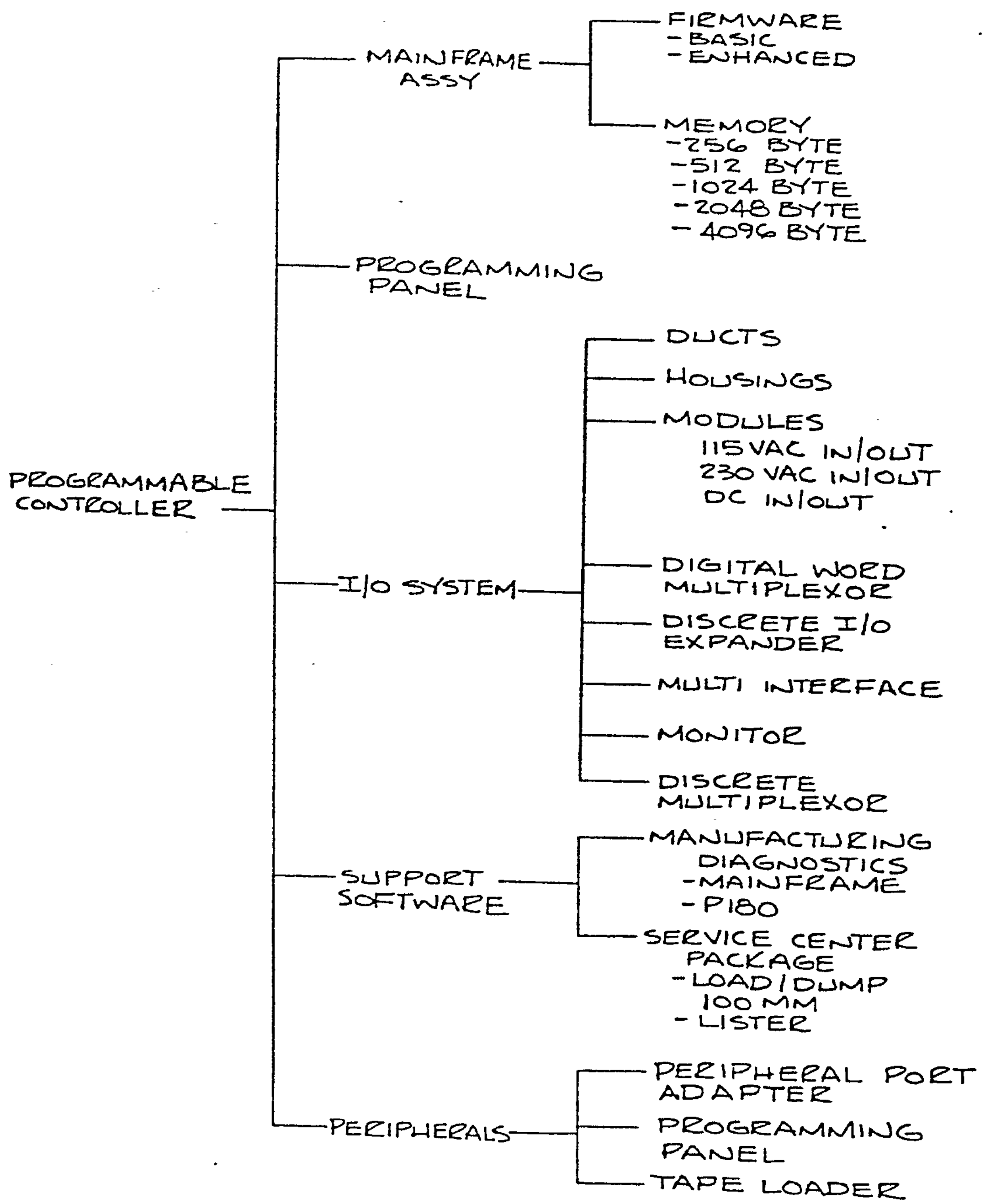
PROGRAMMABLE CONTROLLER
MAINFRAME ASSY
FIRMWARE
-BASIC
-ENHANCED
MEMORY
-256 BYTE
-512 BYTE
-1024 BYTE
-2048 BYTE
-4096 BYTE
PROGRAMMING PANEL
I/O SYSTEM
DUCTS
HOUSINGS
MODULES
115VAC IN/OUT
230 VAC IN/OUT
DC IN/OUT
DIGITAL WORD MULTIPLEXOR
DISCRETE I/O EXPANDER
MULTI INTERFACE
MONITOR
DISCRETE MULTIPLEXOR
SUPPORT SOFTWARE
MANUFACTURING DIAGNOSTICS
-MAINFRAME
-P180
SERVICE CENTER PACKAGE
-LOAD/DUMP 100 MM
-LISTER
PERIPHERALS
PERIPHERAL PORT ADAPTER
PROGRAMMING PANEL
TAPE LOADER

FIG. 4

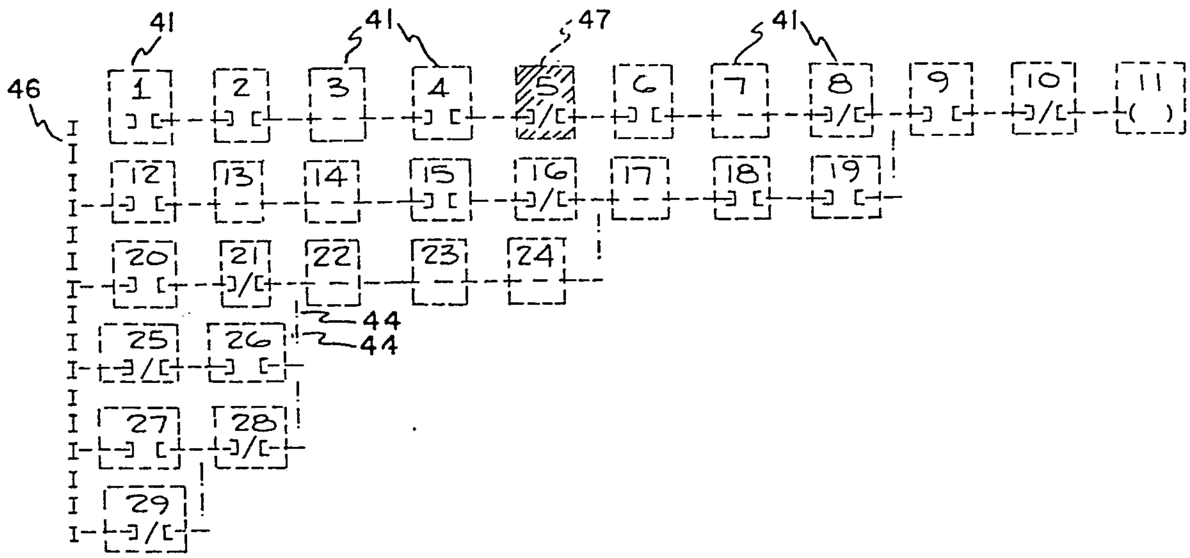


FIG. 5

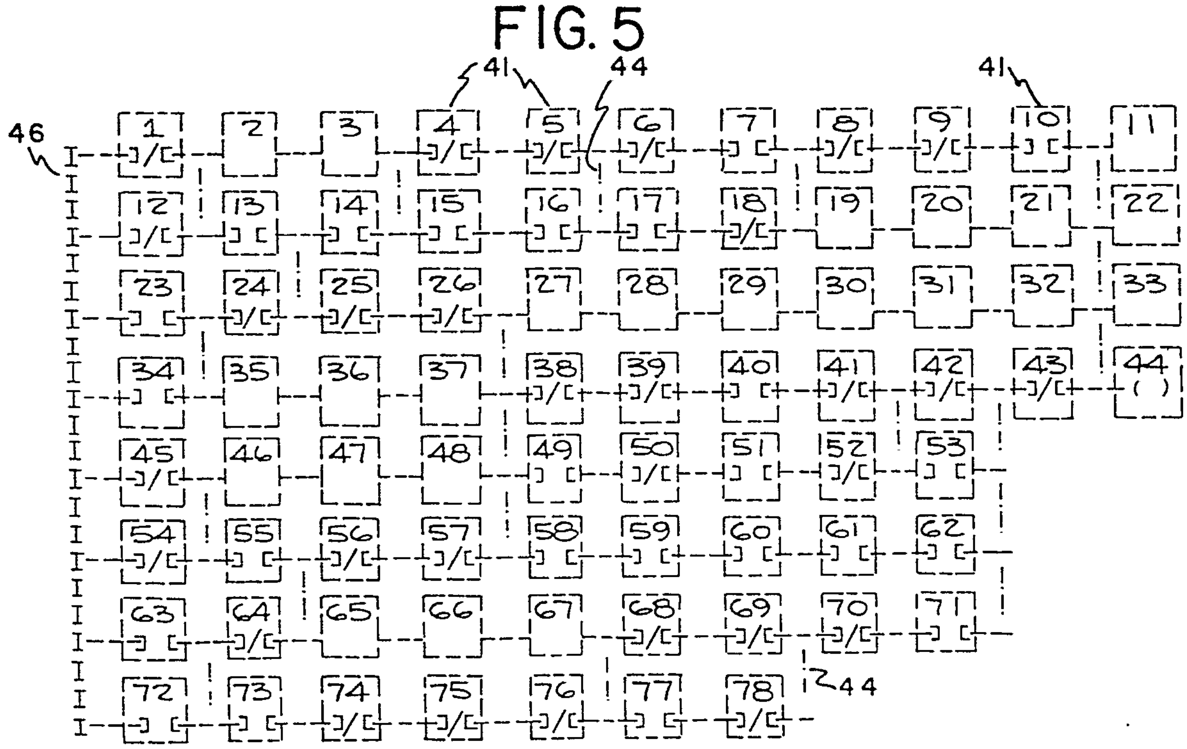

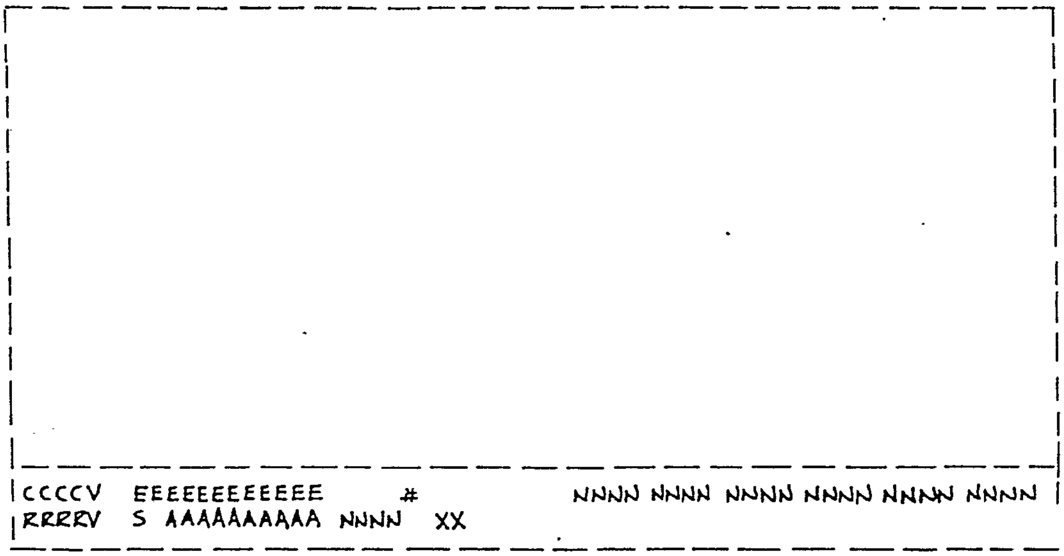


FIG. 6A

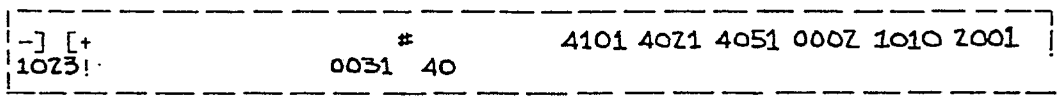


FIG. 6B

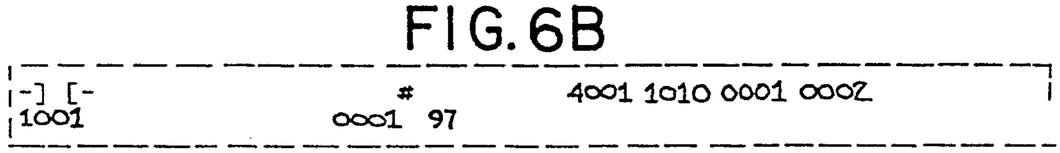


FIG. 6C

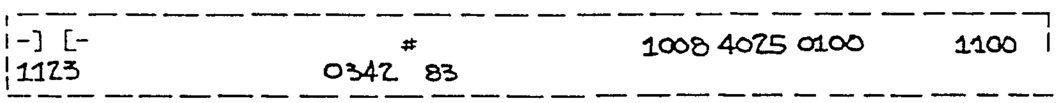


FIG. 6D

-----

CCCC:
EEEEEEEEEEEE:
VV:
S:
AAAAAAAAAA:

FIG. 6E

FIG. 7

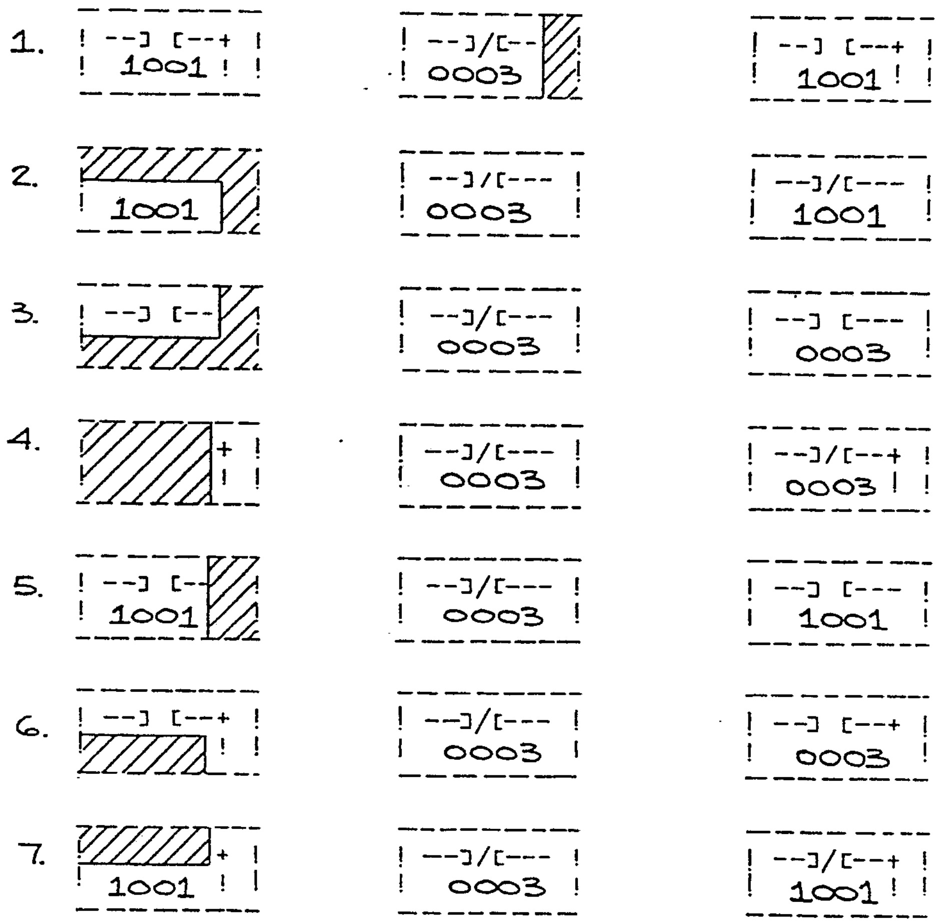

ASSEMBLY AREA    SEARCH

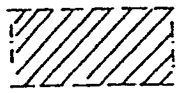

SEARCH FOR FIRST NODE

FIG. 8A

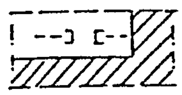

SEARCH FOR FIRST OCCURRENCE OF THAT CONTACT TYPE

FIG. 8B

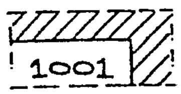


SEARCH FOR FIRST OCCURRENCE OF THAT REFERENCE NUMBER

FIG. 8C

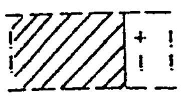

SEARCH FOR FIRST OCCURRENCE OF THAT VERTICAL CONNECTOR

FIG. 8D

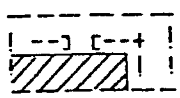

SEARCH FOR FIRST OCCURRENCE OF THAT CONTACT TYPE AND VERTICAL

FIG. 8E

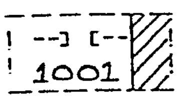


SEARCH FOR FIRST OCCURRENCE OF THAT CONTACT TYPE AND REFERENCE NUMBER

FIG. 8F

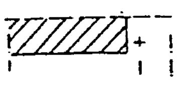

SEARCH FOR FIRST OCCURRENCE OF THAT REFERENCE NUMBER AND VERTICAL

FIG. 8G

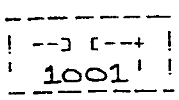


SEARCH FOR THE FIRST OCCURRENCE OF THAT NODE

FIG. 8H

FIG. 9

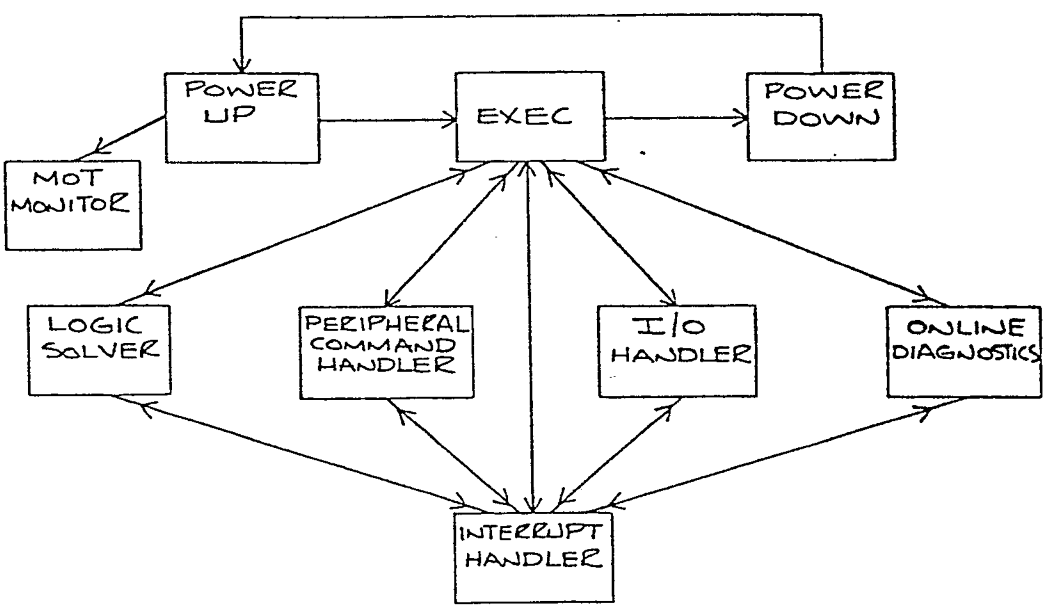
POWER UP
EXEC
POWER DOWN
MOT MONITOR
LOGIC SOLVER
PERIPHERAL COMMAND HANDLER
I/O HANDLER
ONLINE DIAGNOSTICS
INTERRUPT HANDLER

FIG. 10A

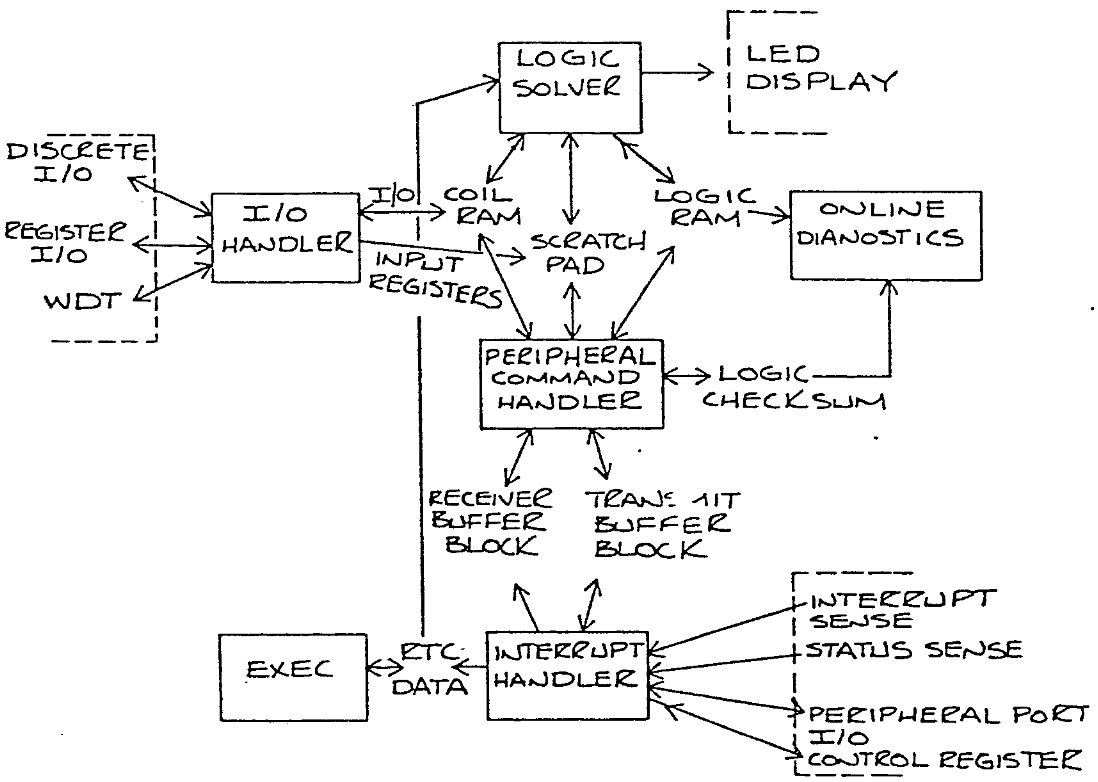


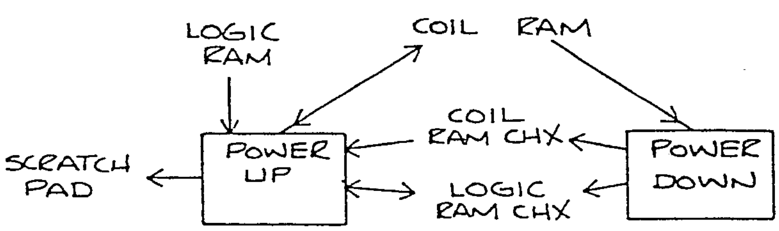


FIG. 10B

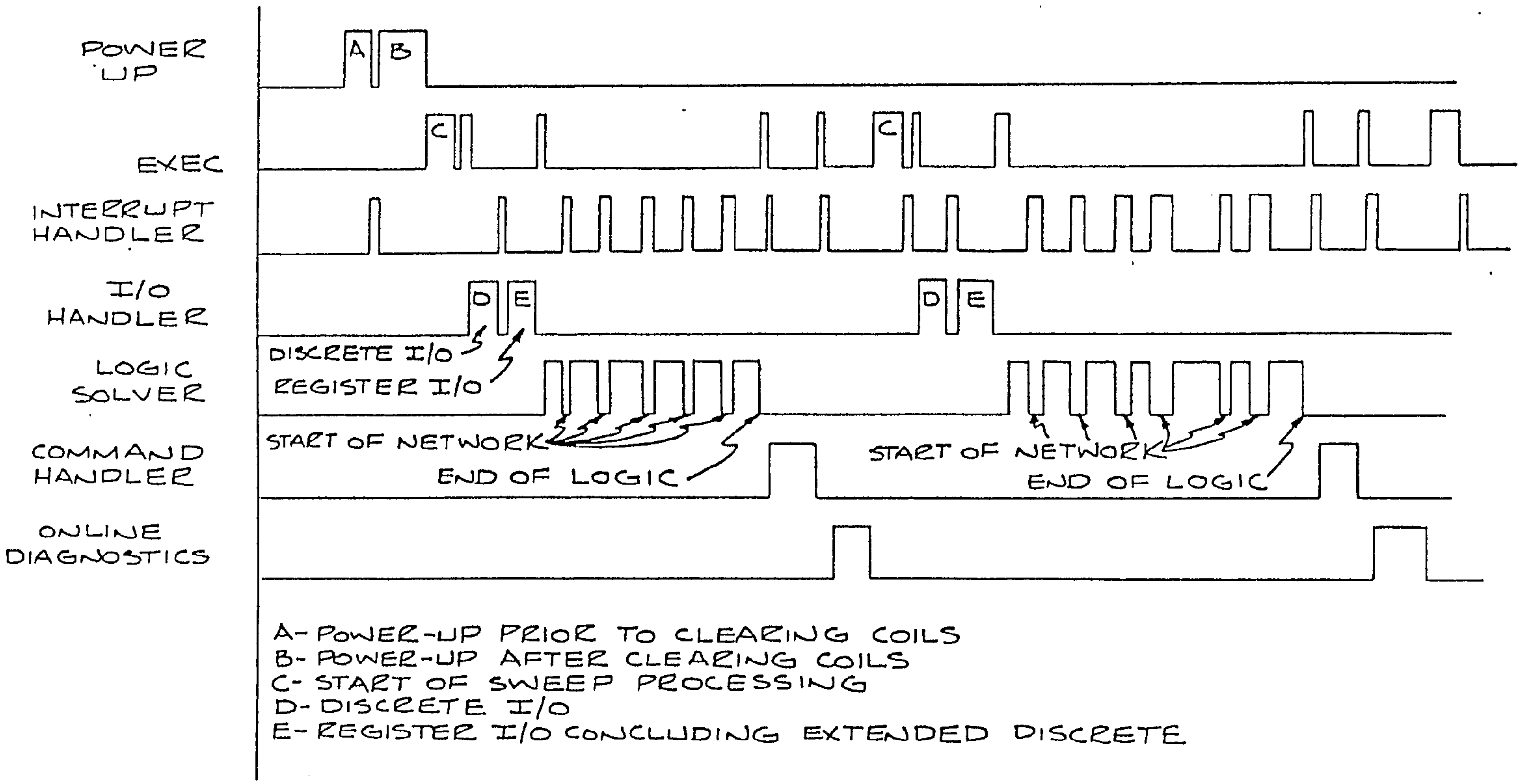
POWER UP
EXEC
INTERRUPT HANDLER
I/O HANDLER
LOGIC SOLVER
COMMAND HANDLER
ONLINE DIAGNOSTICS
A
B
C
D
E
DISCRETE I/O
REGISTER I/O
START OF NETWORK
END OF LOGIC
A- POWER-UP PRIOR TO CLEARING COILS
B- POWER-UP AFTER CLEARING COILS
C- START OF SWEEP PROCESSING
D- DISCRETE I/O
E- REGISTER I/O CONCLUDING EXTENDED DISCRETE

FIG. 11

FIG. 12

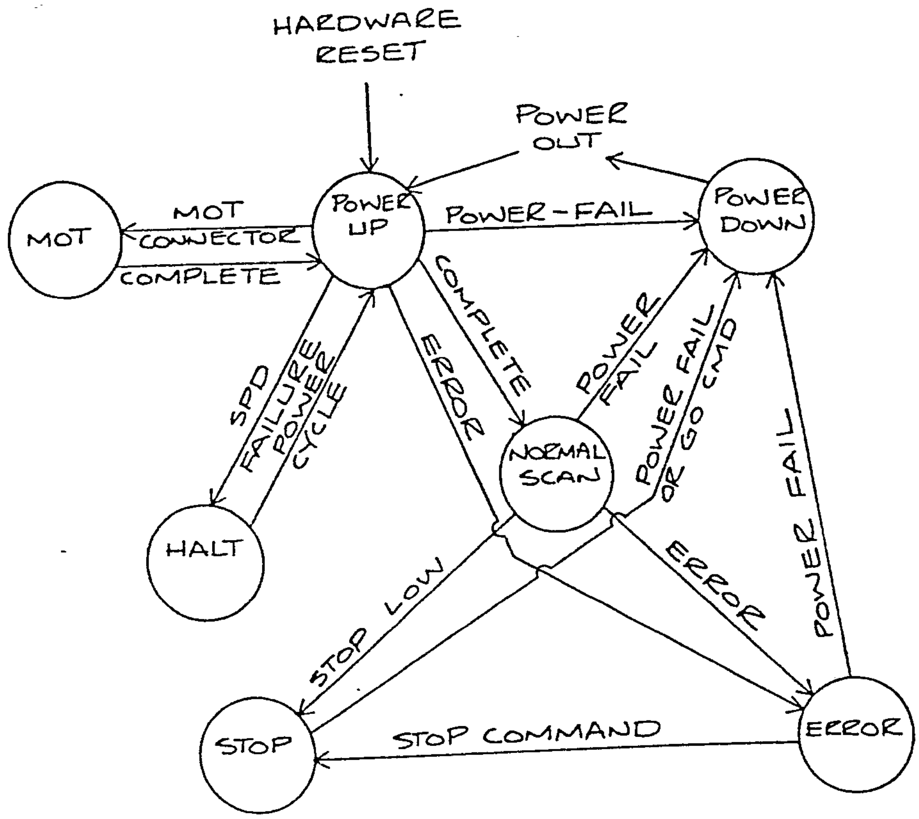
HARDWARE RESET
POWER OUT
MOT
POWER UP
POWER DOWN
MOT CONNECTOR
COMPLETE
POWER-FAIL
COMPLETE
ERROR
SPD FAILURE
POWER CYCLE
POWER FAIL
POWER FAIL OR GO CMD
NORMAL SCAN
HALT
POWER FAIL
STOP LOW
ERROR
STOP
STOP COMMAND
ERROR

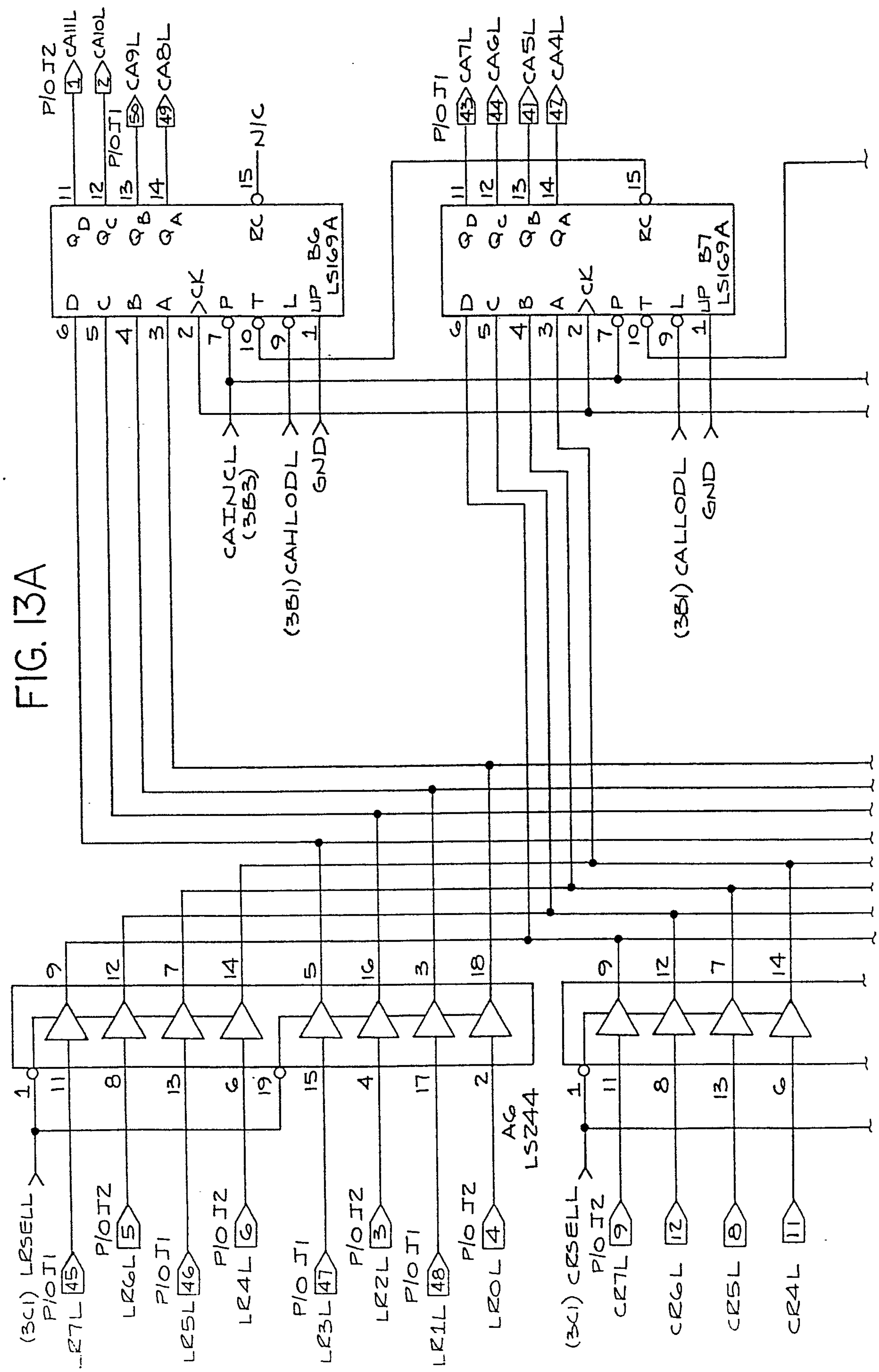
P/O J2
CA11L
CA10L
P/O J1
CA9L
CA8L
N/C
RC
B6
LS169A
CAINCL
(3B3)
(3B1) CAHLODL
GND
P/O J1
CA7L
CA6L
CA5L
CA4L
B7
LS169A
(3B1) CALLODL
GND
A6
LS244
(3C1) LRSELL
LR7L
LR6L
LR5L
LR4L
LR3L
LR2L
LR1L
LR0L
(3C1) CRSELL
CR7L
CR6L
CR5L
CR4L

FIG. 13A

FIG. 13B

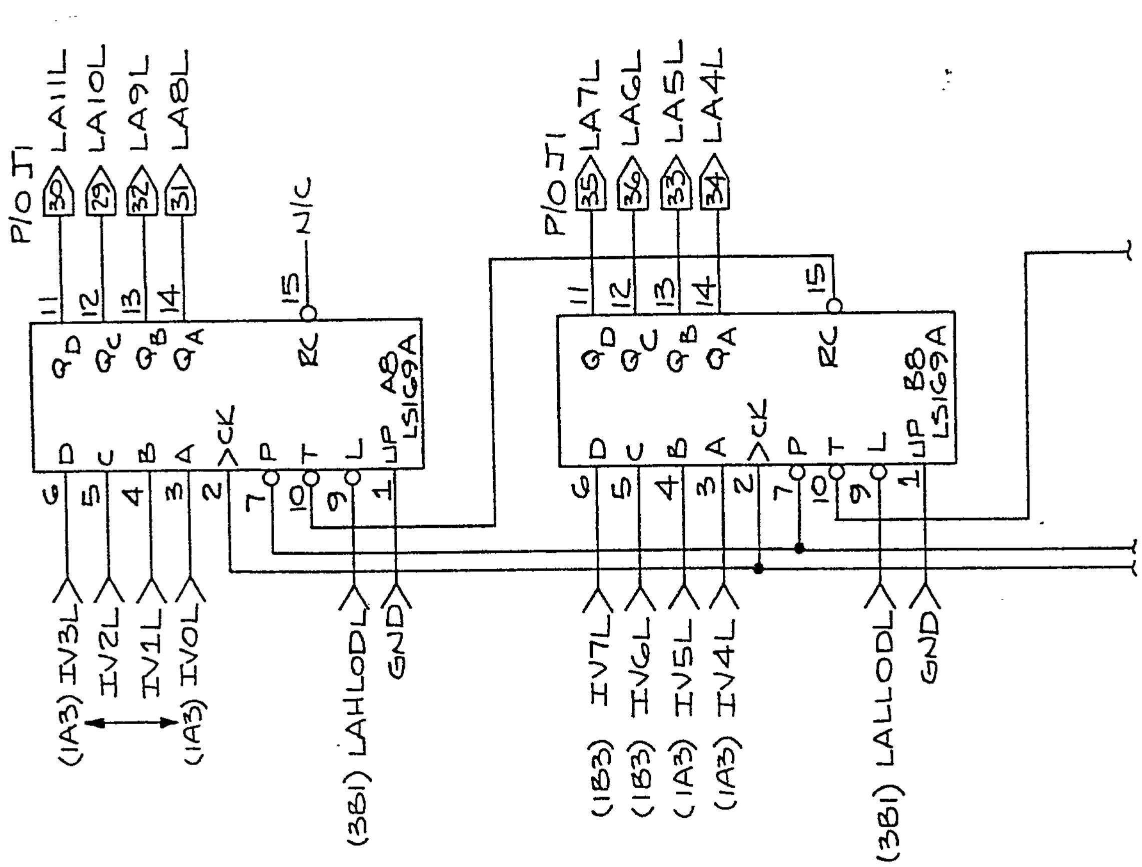
P/O J1
LA11L
LA10L
LA9L
LA8L
N/C
QD
QC
QB
QA
RC
D
C
B
A
>CK
P
T
L
UP
A8
LS169A
P/O J1
LA7L
LA6L
LA5L
LA4L
B8
LS169A
(1A3) IV3L
IV2L
IV1L
(1A3) IV0L
(3B1) LAHLODL
GND
(1B3) IV7L
(1B3) IV6L
(1A3) IV5L
(1A3) IV4L
(3B1) LALLODL
GND

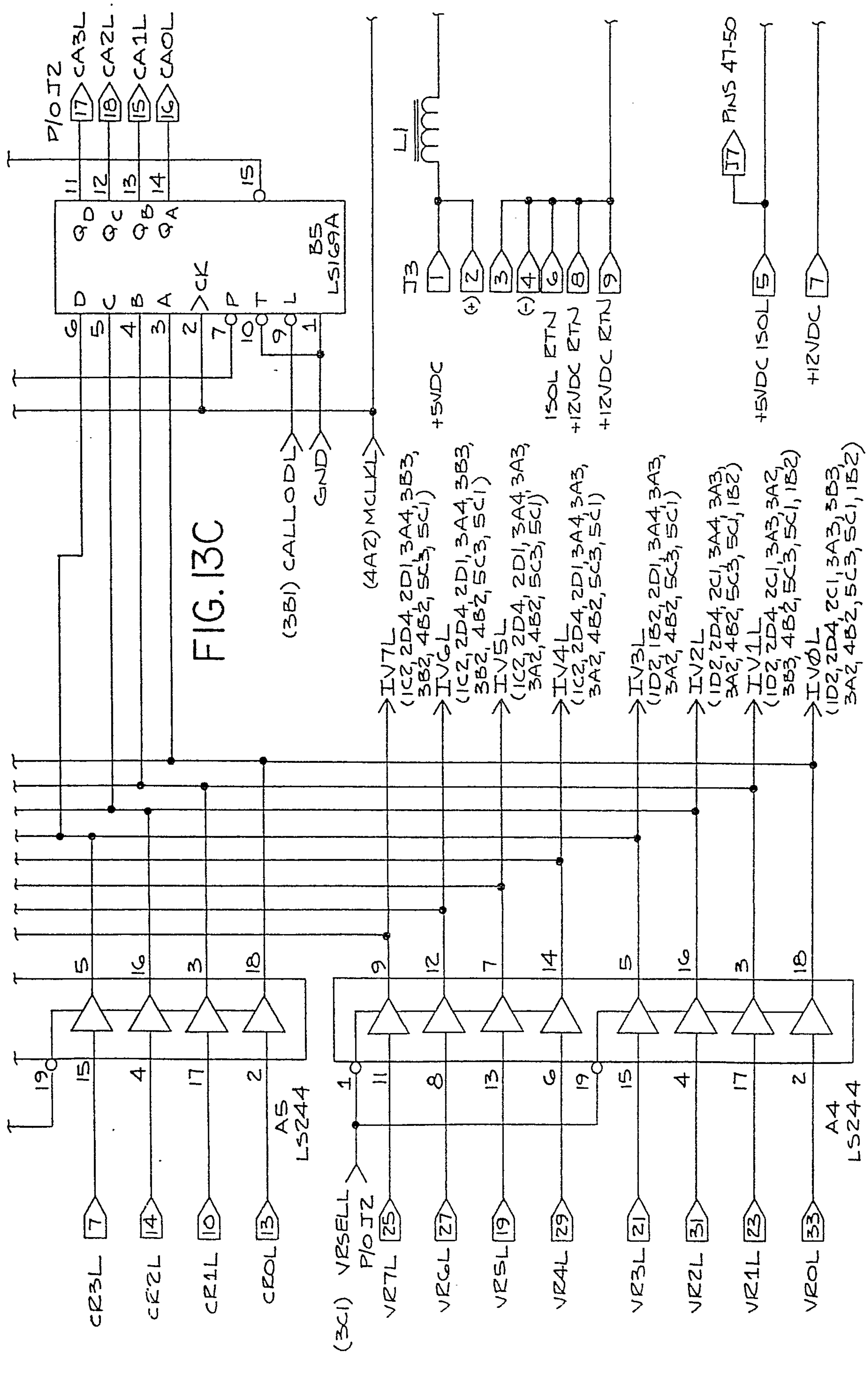
P/O J2
CA3L
CA2L
CA1L
CA0L
B5
LS169A
L1
J3
+5VDC
ISOL RTN
+12VDC RTN
+12VDC RTN
PINS 47-50
+5VDC ISOL
+12VDC
(3B1) CALLODL
GND
(4A2) MCLKL
IV7L
IV6L
IV5L
IV4L
IV3L
IV2L
IV1L
IV0L
A5
LS244
A4
LS244
CR3L
CR2L
CR1L
CR0L
(3C1) VRSELL
P/O J2
VR7L
VR6L
VR5L
VR4L
VR3L
VR2L
VR1L
VR0L

FIG. 13C

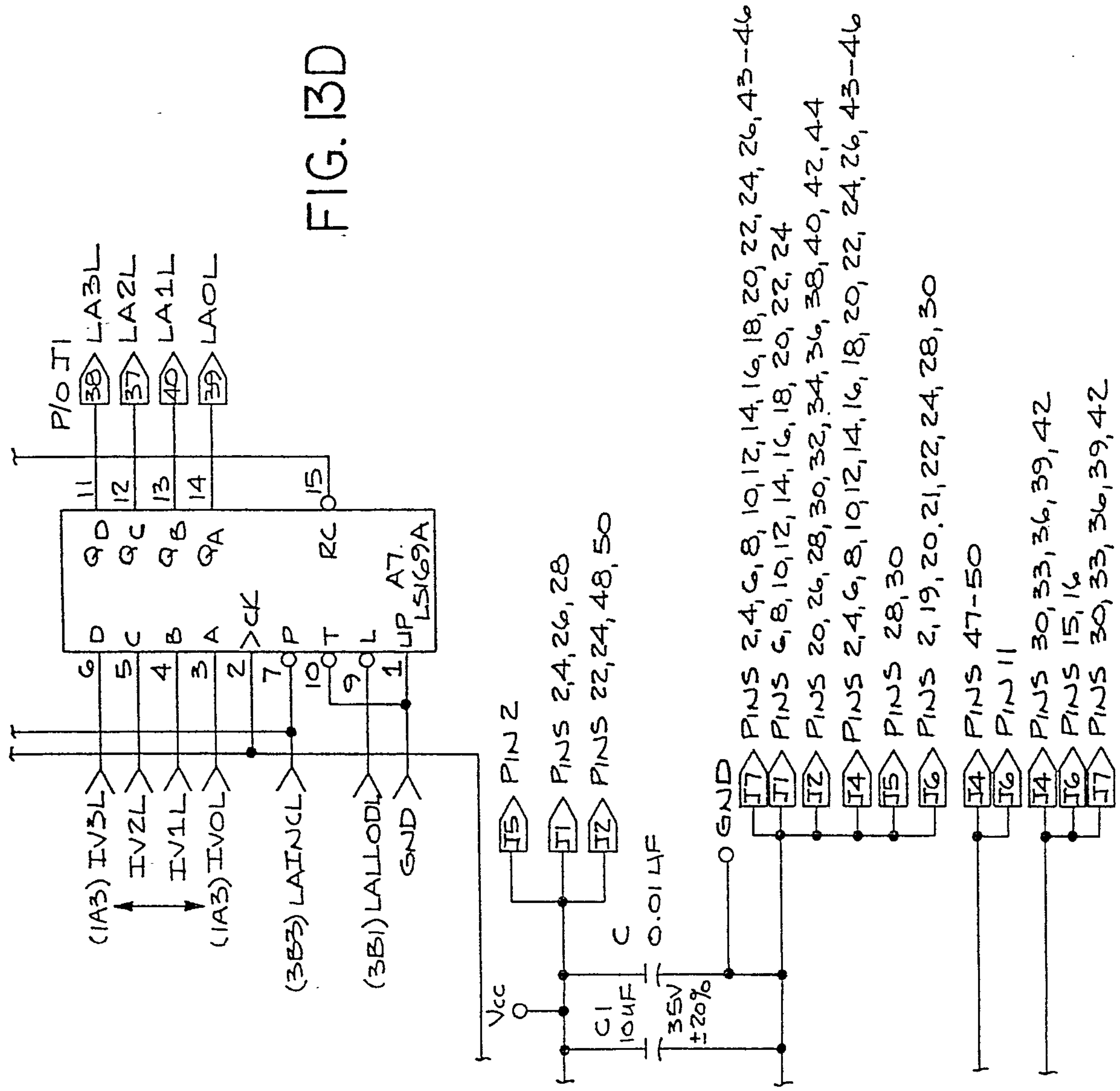
P/O J1
LA3L
LA2L
LA1L
LA0L
QD
QC
QB
QA
RC
A7
LS169A
D
C
B
A
>CK
P
T
L
UP
(1A3) IV3L
IV2L
IV1L
(1A3) IV0L
(3B3) LAINCL
(3B1) LALLODL
GND
Vcc
PIN 2
PINS 2,4,26,28
PINS 22,24,48,50
C
0.01 µF
C1
10 uF
35V
±20%
GND
PINS 2,4,6,8,10,12,14,16,18,20,22,24,26,43-46
PINS 6,8,10,12,14,16,18,20,22,24
PINS 20,26,28,30,32,34,36,38,40,42,44
PINS 2,4,6,8,10,12,14,16,18,20,22,24,26,43-46
PINS 28,30
PINS 2,19,20,21,22,24,28,30
PINS 47-50
PIN 11
PINS 30,33,36,39,42
PINS 15,16
PINS 30,33,36,39,42

FIG. 13D

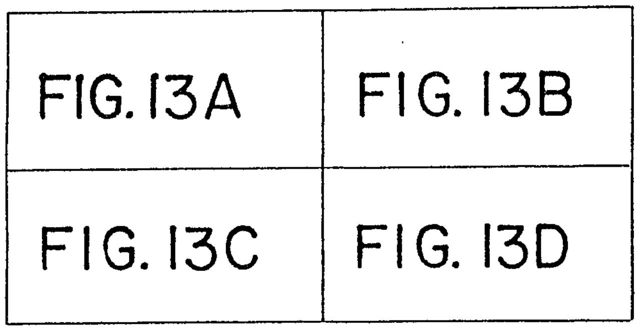


FIG. 13E

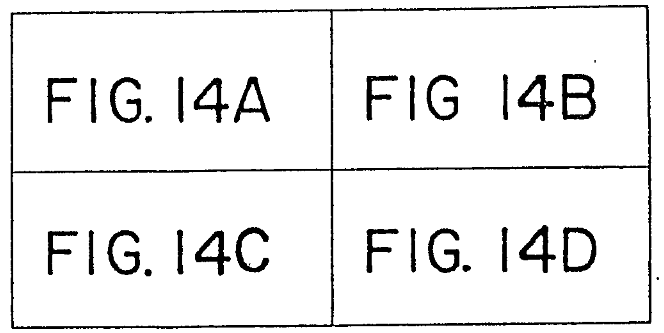


FIG. 14E

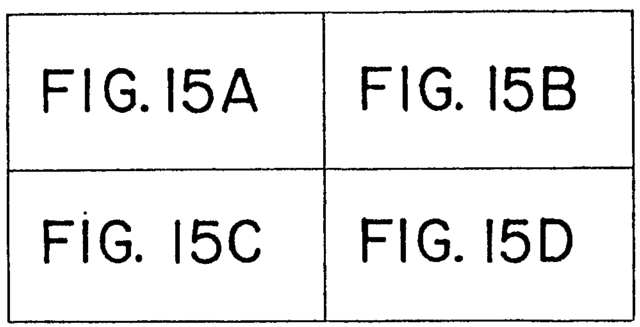


FIG. 15E

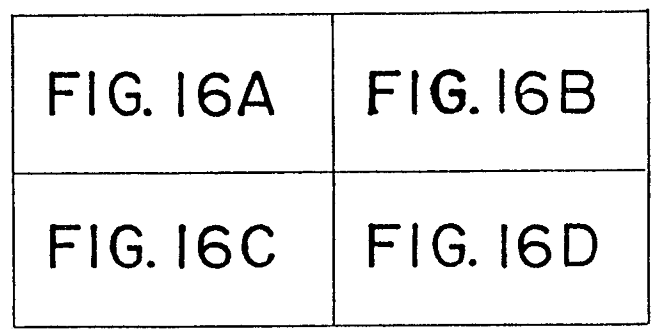


FIG. 16E

FIG.14A

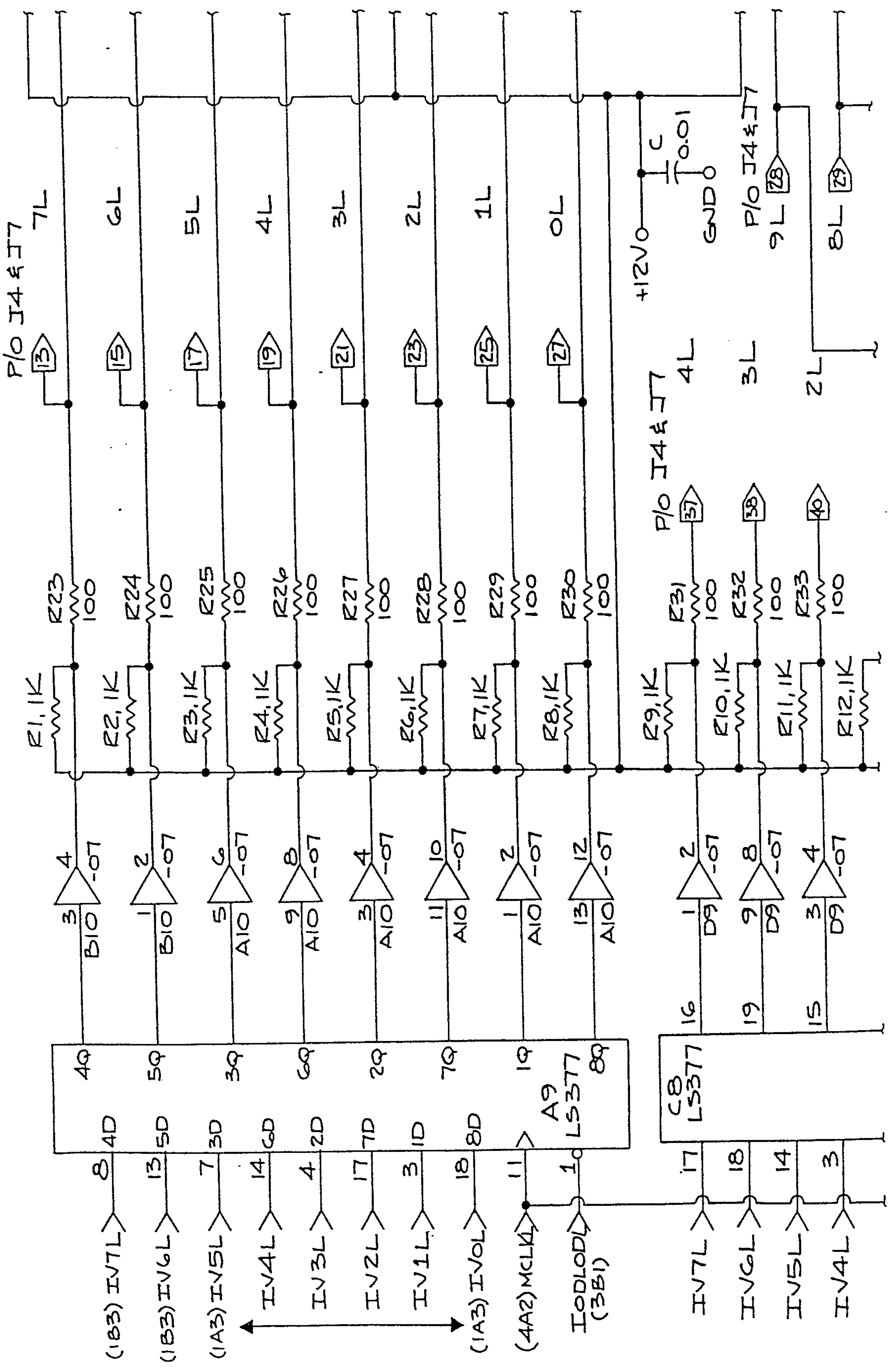
P/O J4 & J7
7L
6L
5L
4L
3L
2L
1L
0L
+12V
C
0.01
GND
P/O J4 & J7
9L
8L
4L
3L
2L
R23 100
R24 100
R25 100
R26 100
R27 100
R28 100
R29 100
R30 100
R31 100
R32 100
R33 100
R1, 1K
R2, 1K
R3, 1K
R4, 1K
R5, 1K
R6, 1K
R7, 1K
R8, 1K
R9, 1K
R10, 1K
R11, 1K
R12, 1K
-07
B10
A10
D9
A9
LS377
C8
LS377
(1B3) IV7L
(1B3) IV6L
(1A3) IV5L
IV4L
IV3L
IV2L
IV1L
(1A3) IV0L
(4A2) MCLK
IODLODL
(3B1)
IV7L
IV6L
IV5L
IV4L

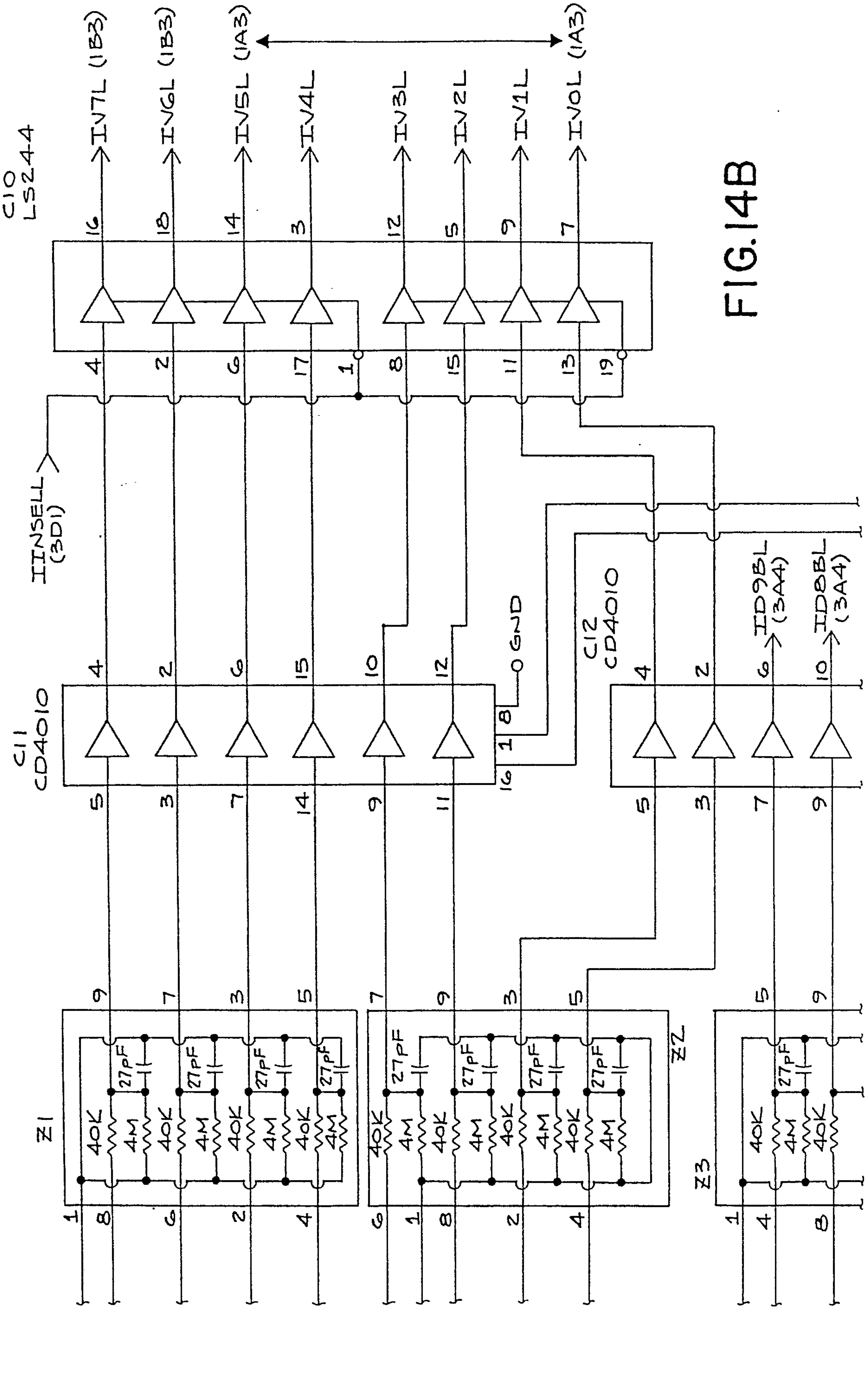
C10
LS244
IV7L (1B3)
IV6L (1B3)
IV5L (1A3)
IV4L
IV3L
IV2L
IV1L
IV0L (1A3)
IINSELL
(3D1)
C11
CD4010
GND
C12
CD4010
ID9BL
(3A4)
ID8BL
(3A4)
Z1
Z2
Z3
27pF
40K
4M

FIG.14B

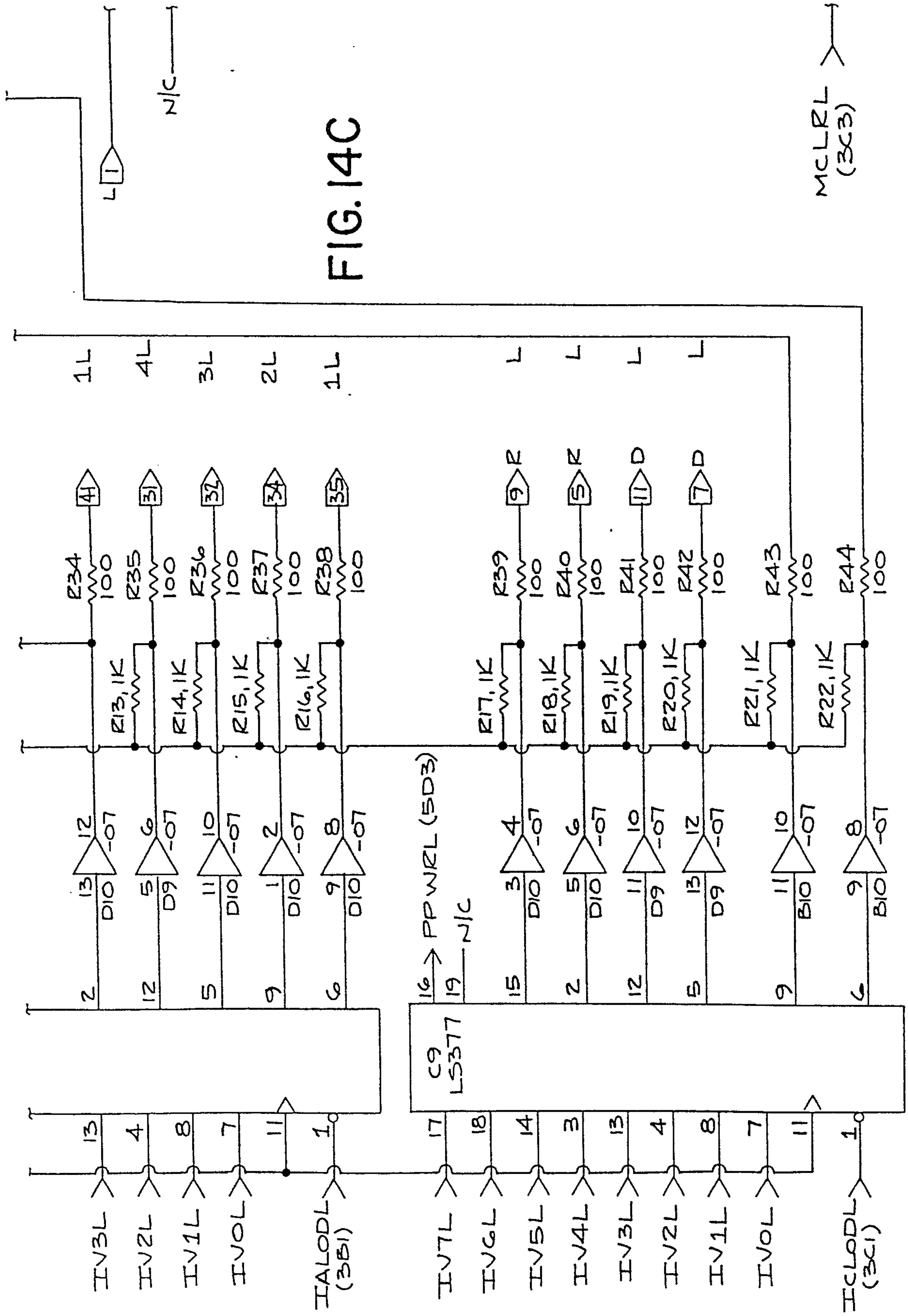
N/C
MCLRL
(3C3)
IV3L
IV2L
IV1L
IV0L
IALODL
(3B1)
IV7L
IV6L
IV5L
IV4L
IV3L
IV2L
IV1L
IV0L
ICLODL
(3C1)
C9
LS377
PPWRL (5D3)
N/C
R13,1K
R14,1K
R15,1K
R16,1K
R17,1K
R18,1K
R19,1K
R20,1K
R21,1K
R22,1K
R34 100
R35 100
R36 100
R37 100
R38 100
R39 100
R40 100
R41 100
R42 100
R43 100
R44 100
D10
D9
B10
-07
1L
4L
3L
2L
1L
L

FIG. 14C

FIG. 14D

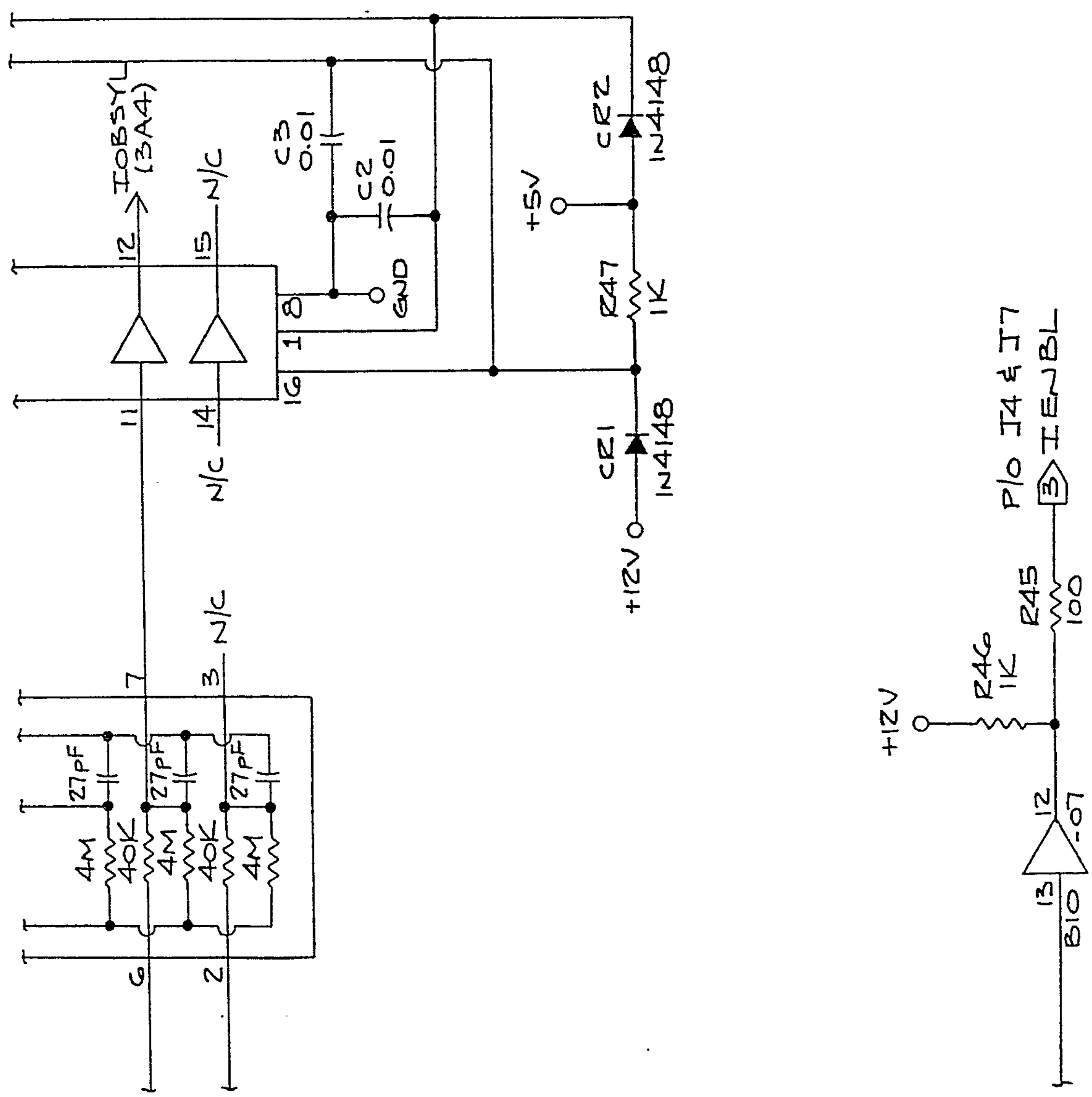
IOBSYL
(3A4)
N/C
C3
0.01
C2
0.01
GND
CR2
1N4148
+5V
R47
1K
CR1
1N4148
+12V
27pF
4M
40K
P/O I4 & I7
IENBL
R46
1K
R45
100
B10
-07

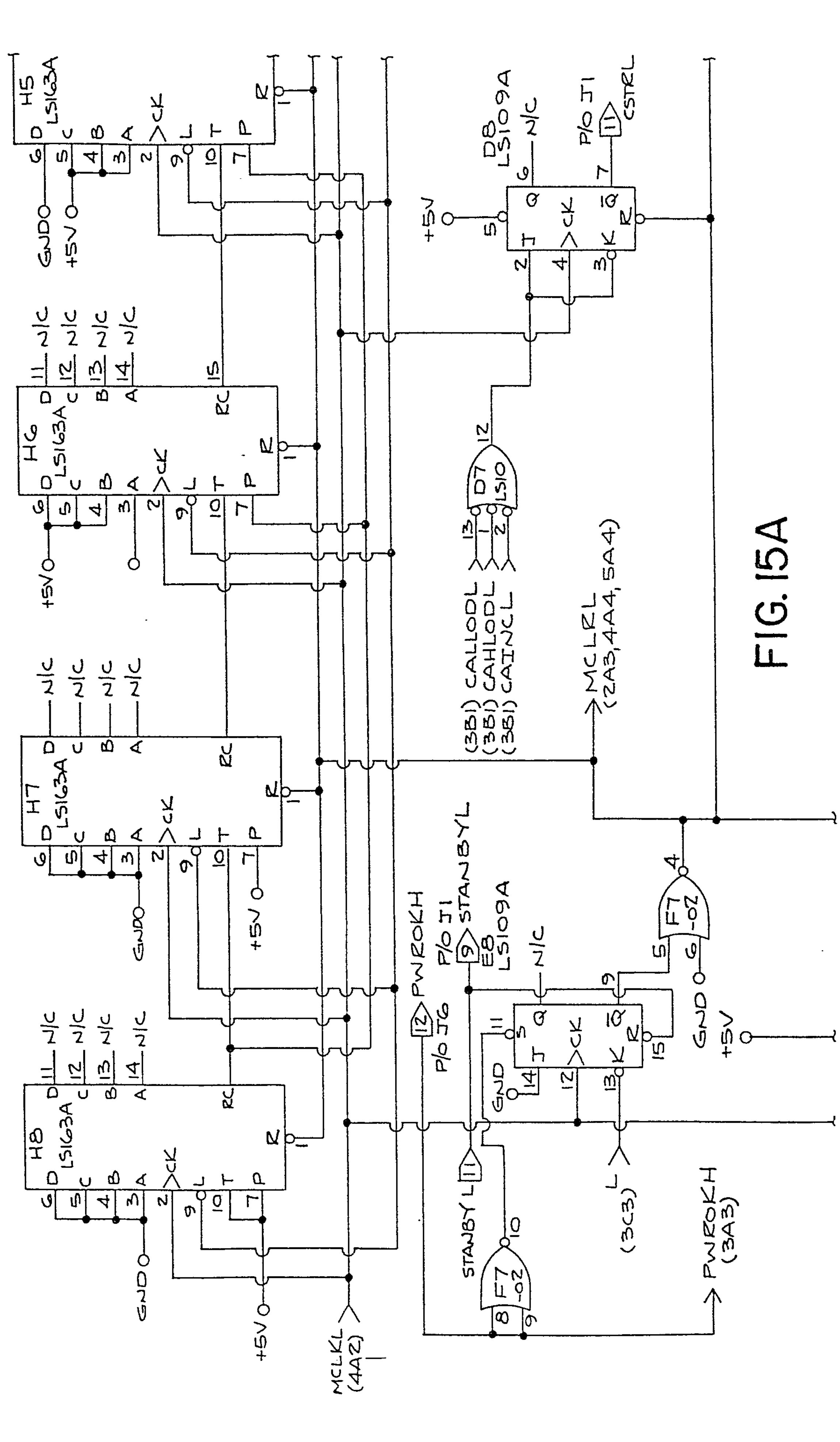
H5
LS163A
H6
LS163A
H7
LS163A
H8
LS163A
D8
LS109A
E8
LS109A
D7
LS10
F7
-02
N/C
GND
+5V
P/O J1
CSTRL
P/O J1
STANBYL
PWROKH
P/O JG
STANBY L
(3B1) CALLODL
(3B1) CAHLODL
(3B1) CAINCL
MCLRL
(2A3,4A4,5A4)
MCLKL
(4A2)
L
(3C3)
PWROKH
(3A3)

FIG. 15A

FIG.15B

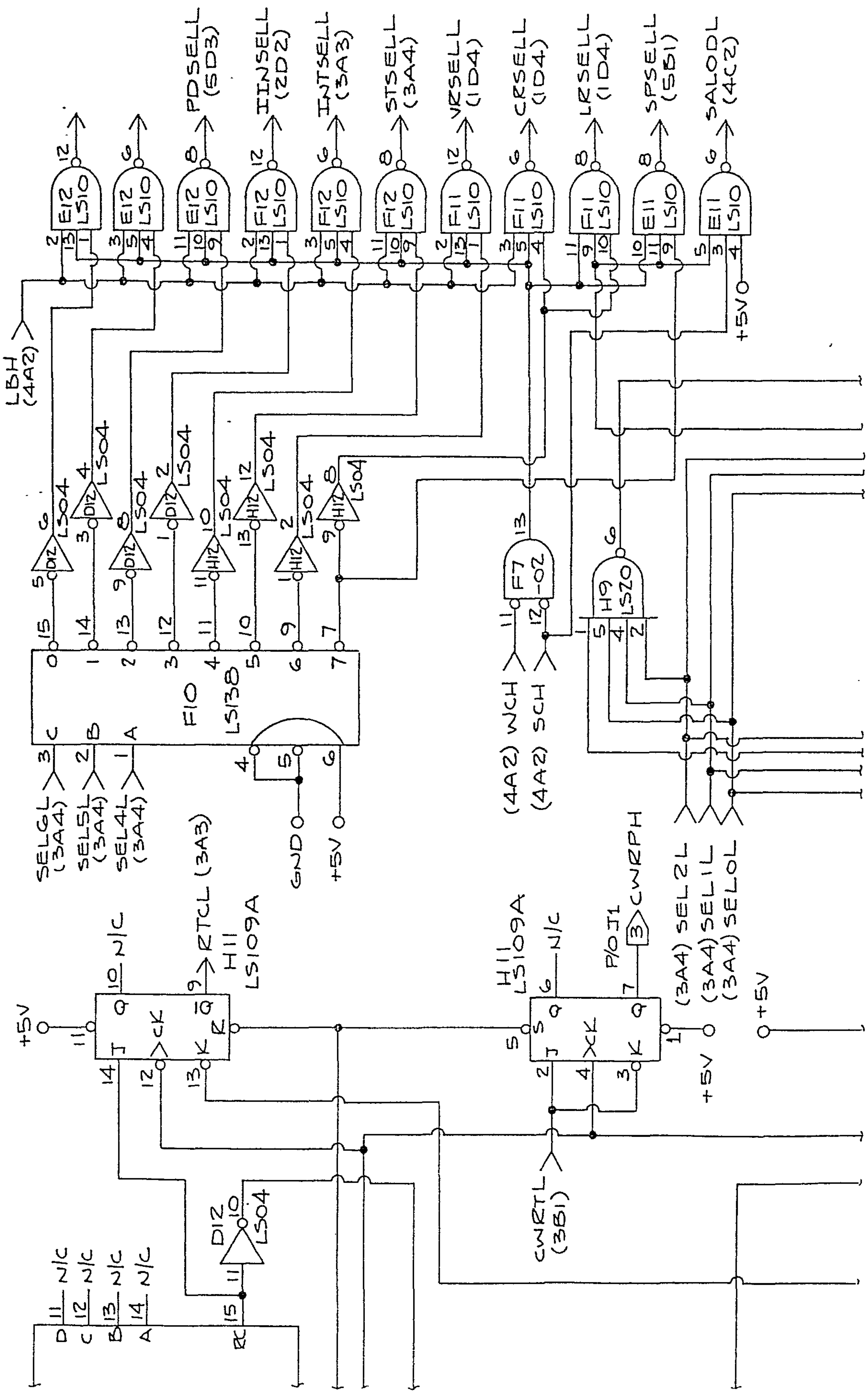

PDSELL (5D3)
IINSELL (2D2)
INTSELL (3A3)
STSELL (3A4)
VRSELL (1D4)
CRSELL (1D4)
LRSELL (1D4)
SPSELL (5B1)
SALODL (4C2)
LBH (4A2)
E12 LS10
F12 LS10
F11 LS10
E11 LS10
D12 LS04
H12 LS04
F7 -02
H9 LS20
F10 LS138
SELGL (3A4)
SEL5L (3A4)
SEL4L (3A4)
GND
+5V
(4A2) WCH
(4A2) SCH
RTCL (3A3)
H11 LS109A
N/C
P/OJ1
CWRPH
(3A4) SEL2L
(3A4) SEL1L
(3A4) SEL0L
CWRTL (3B1)

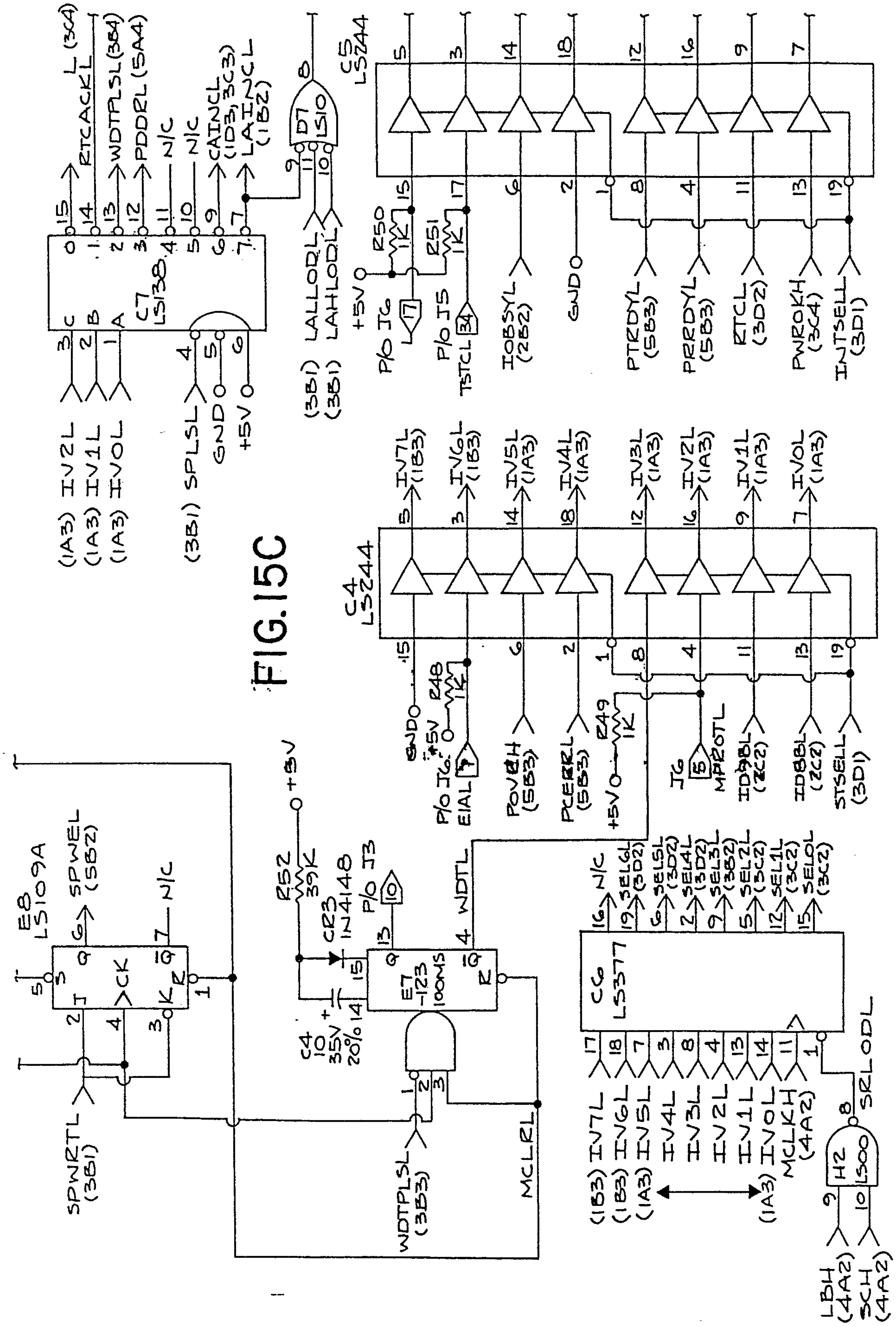

FIG.15C

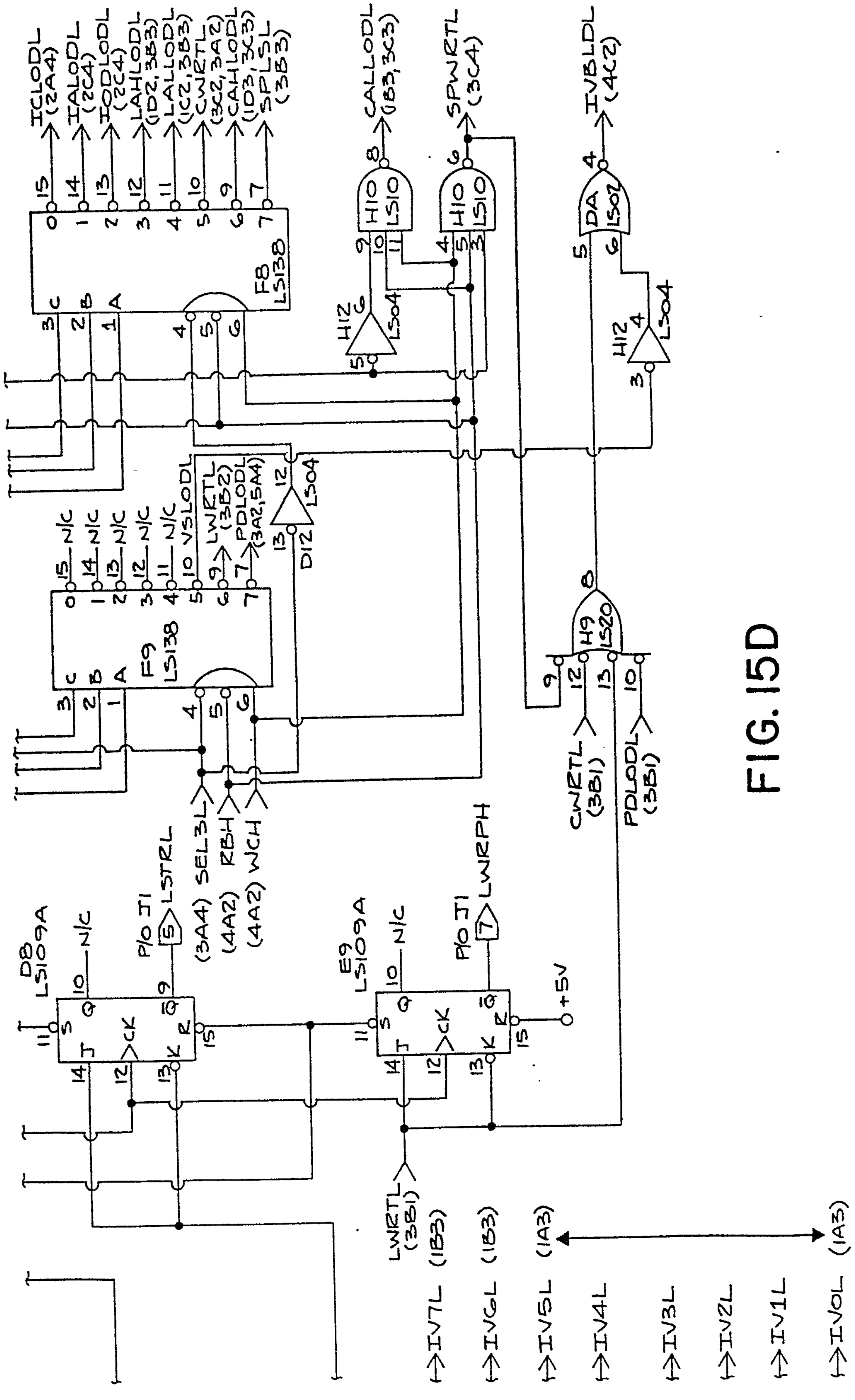

ICLODL (2A4)
IALODL (2C4)
IODLODL (2C4)
LAHLODL (1D2,3B3)
LALLODL (1C2,3B3)
CWRTL (3C2,3A2)
CAHLODL (1D3,3C3)
SPLSL (3B3)
CALLODL (1B3,3C3)
SPWRTL (3C4)
IVBLDL (4C2)
F8 LS138
F9 LS138
H10 LS10
H12 LS04
DA LS02
D12 LS04
H9 LS20
VSLODL
LWRTL (3B2)
PDLODL (3A2,5A4)
N/C
CWRTL (3B1)
PDLODL (3B1)
D8 LS109A
E9 LS109A
P/O J1 LSTRL
P/O J1 LWRPH
(3A4) SEL3L
(4A2) RBH
(4A2) WCH
+5V
LWRTL (3B1)
IV7L (1B3)
IV6L (1B3)
IV5L (1A3)
IV4L
IV3L
IV2L
IV1L
IV0L (1A3)


FIG. 15D

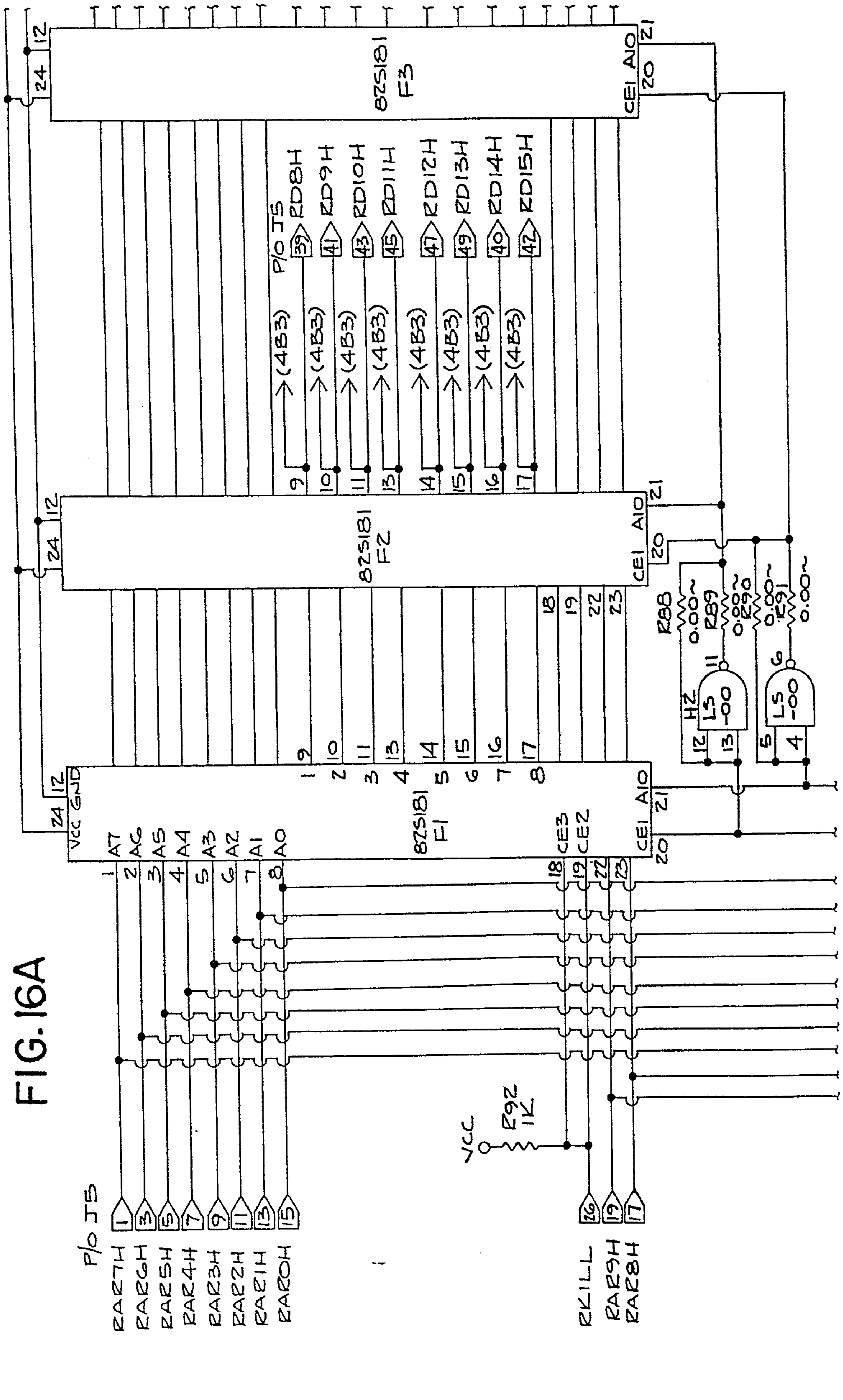

FIG. 16A

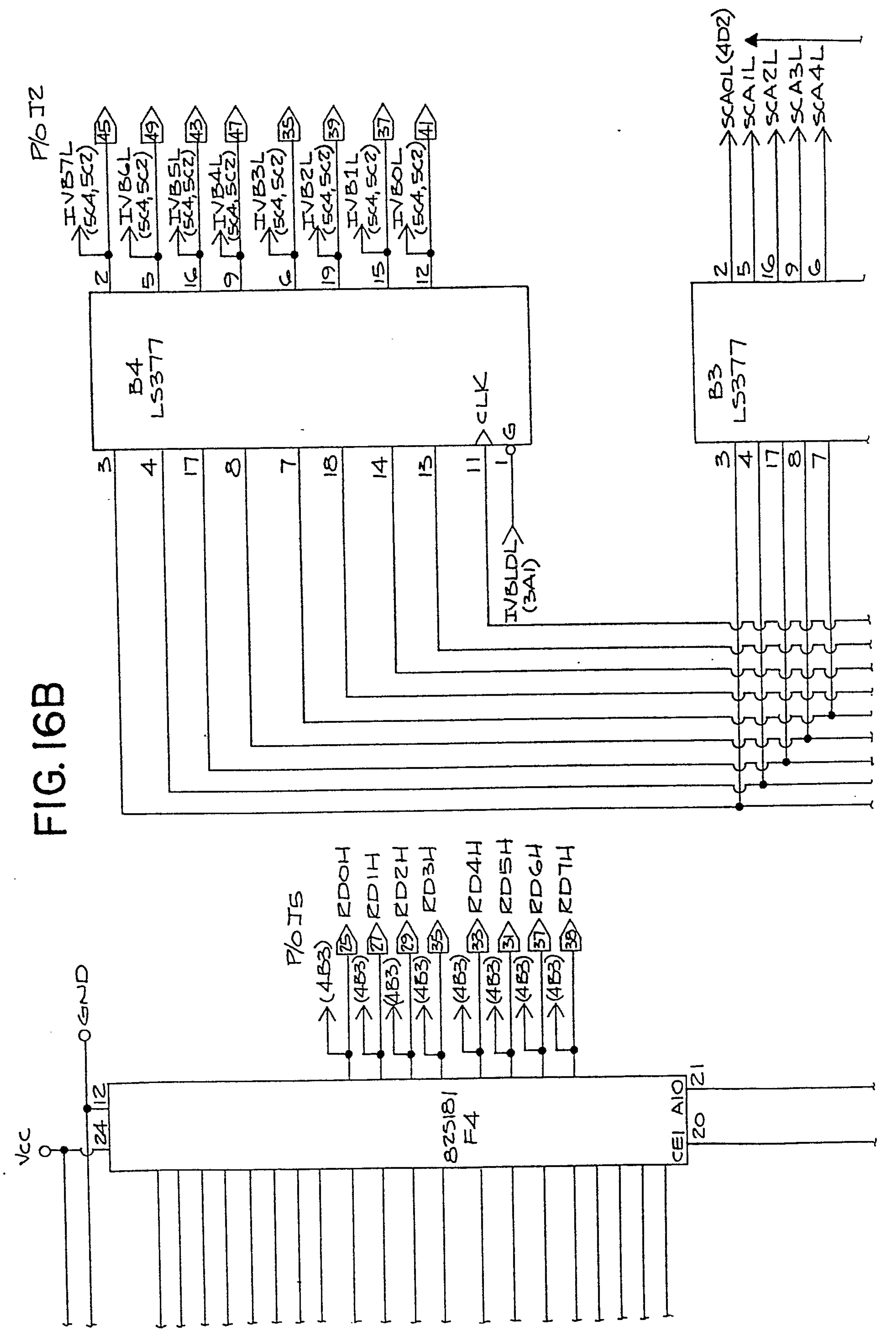
P/O J2
IVB7L (SC4,SC2)
IVB6L (SC4,SC2)
IVB5L (SC4,SC2)
IVB4L (SC4,SC2)
IVB3L (SC4,SC2)
IVB2L (SC4,SC2)
IVB1L (SC4,SC2)
IVB0L (SC4,SC2)
B4
LS377
CLK
G
IVBLDL (3A1)
SCA0L (4D2)
SCA1L
SCA2L
SCA3L
SCA4L
B3
LS377
Vcc
GND
82S181
F4
CE1 A10
P/O J5
RD0H
RD1H
RD2H
RD3H
RD4H
RD5H
RD6H
RD7H
(4B3)

FIG. 16B

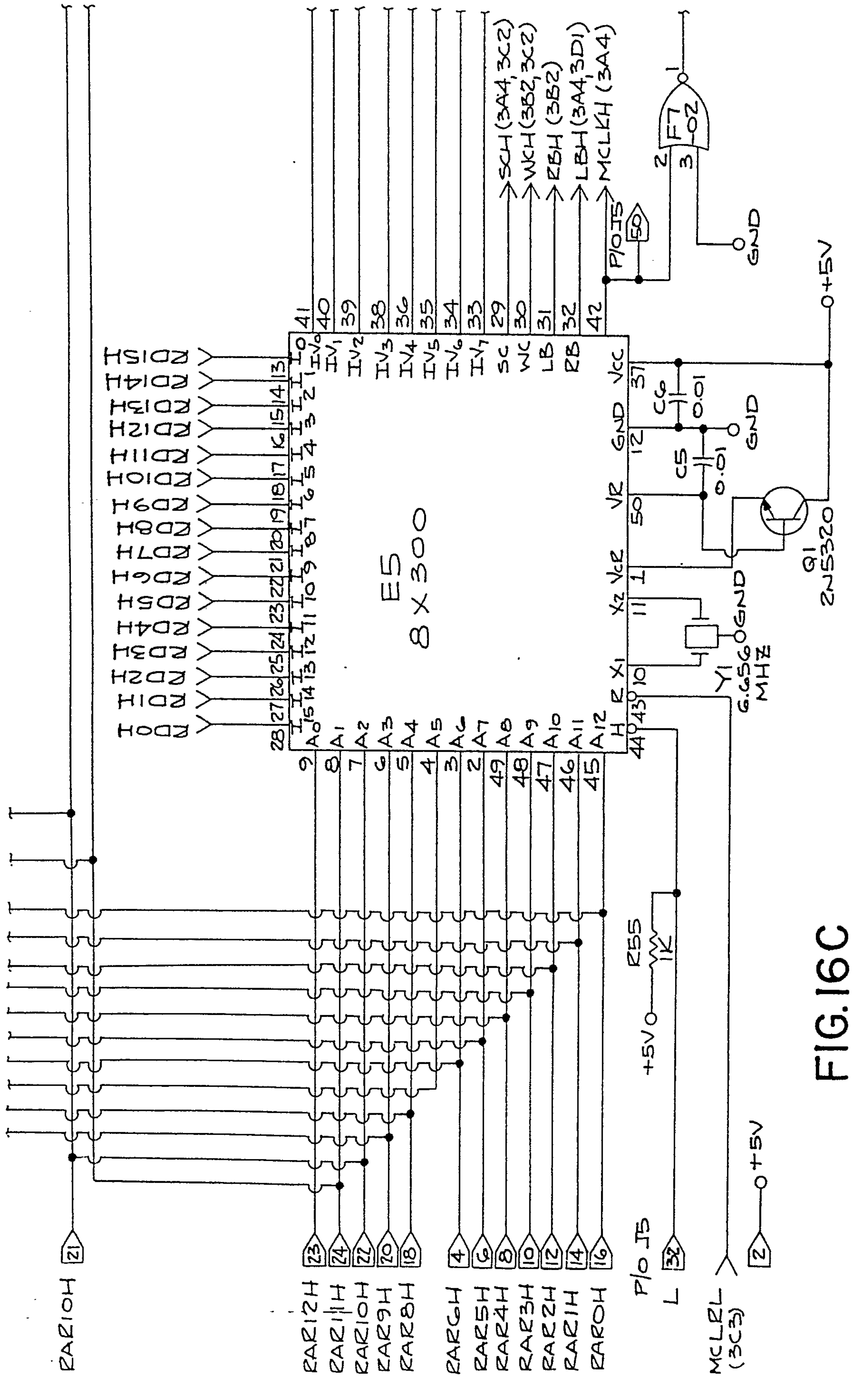
E5
8X300
RD0H
RD1H
RD2H
RD3H
RD4H
RD5H
RD6H
RD7H
RD8H
RD9H
RD10H
RD11H
RD12H
RD13H
RD14H
RD15H
SCH (3A4, 3C2)
WCH (3B2, 3C2)
RBH (3B2)
LBH (3A4, 3D1)
MCLKH (3A4)
P/O J5
F7
02
GND
+5V
C6
0.01
C5
0.01
Q1
2N5320
Y1
6.656
MHZ
R55
1K
RAR10H
RAR12H
RAR11H
RAR10H
RAR9H
RAR8H
RAR6H
RAR5H
RAR4H
RAR3H
RAR2H
RAR1H
RAR0H
P/O J5
L
MCLRL
(3C3)

FIG.16C

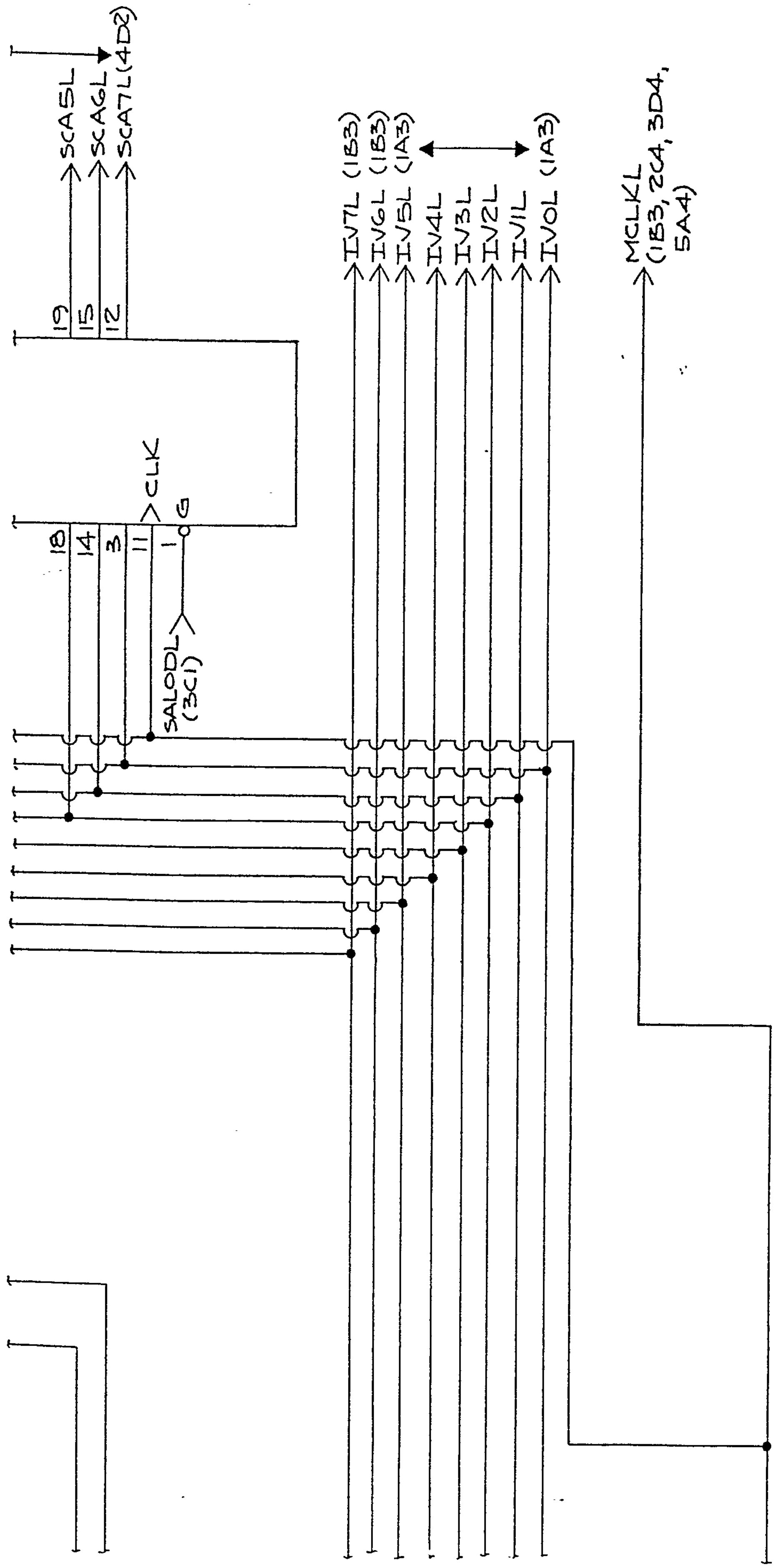

SCA5L
SCA6L
SCA7L(4D2)
19
15
12
CLK
G
18
14
3
11
1
SALODL
(3C1)
IV7L (1B3)
IV6L (1B3)
IV5L (1A3)
IV4L
IV3L
IV2L
IV1L
IV0L (1A3)
MCLKL
(1B3, 2C4, 3D4,
5A4)


FIG.16D

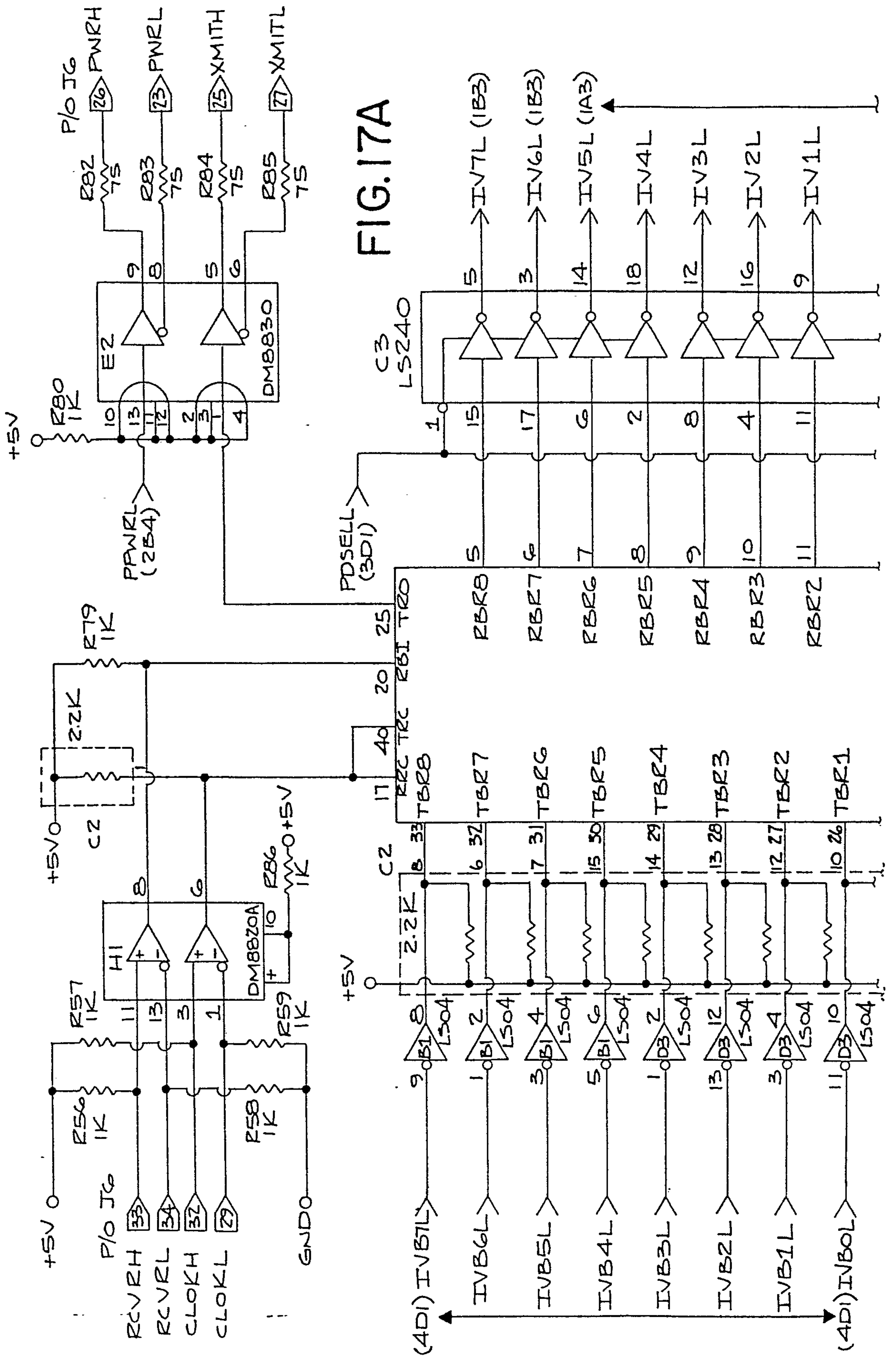
P/O J6
PWRH
PWRL
XMITH
XMITL
R82 75
R83 75
R84 75
R85 75
+5V
R80 1K
E2
DM8830
PPWRL (2B4)
PDSELL (3D1)
C3 LS240
IV7L (1B3)
IV6L (1B3)
IV5L (1A3)
IV4L
IV3L
IV2L
IV1L
R79 1K
2.2K
C2
TRO
RBI
TRC
RRC
RBR8
RBR7
RBR6
RBR5
RBR4
RBR3
RBR2
TBR8
TBR7
TBR6
TBR5
TBR4
TBR3
TBR2
TBR1
H1
DM8820A
R86 1K
R57 1K
R56 1K
R59 1K
R58 1K
RCVRH
RCVRL
CLOKH
CLOKL
GND
LS04
(4D1) IVB7L
IVB6L
IVB5L
IVB4L
IVB3L
IVB2L
IVB1L
(4D1) IVB0L

FIG.17A

FIG. 17B

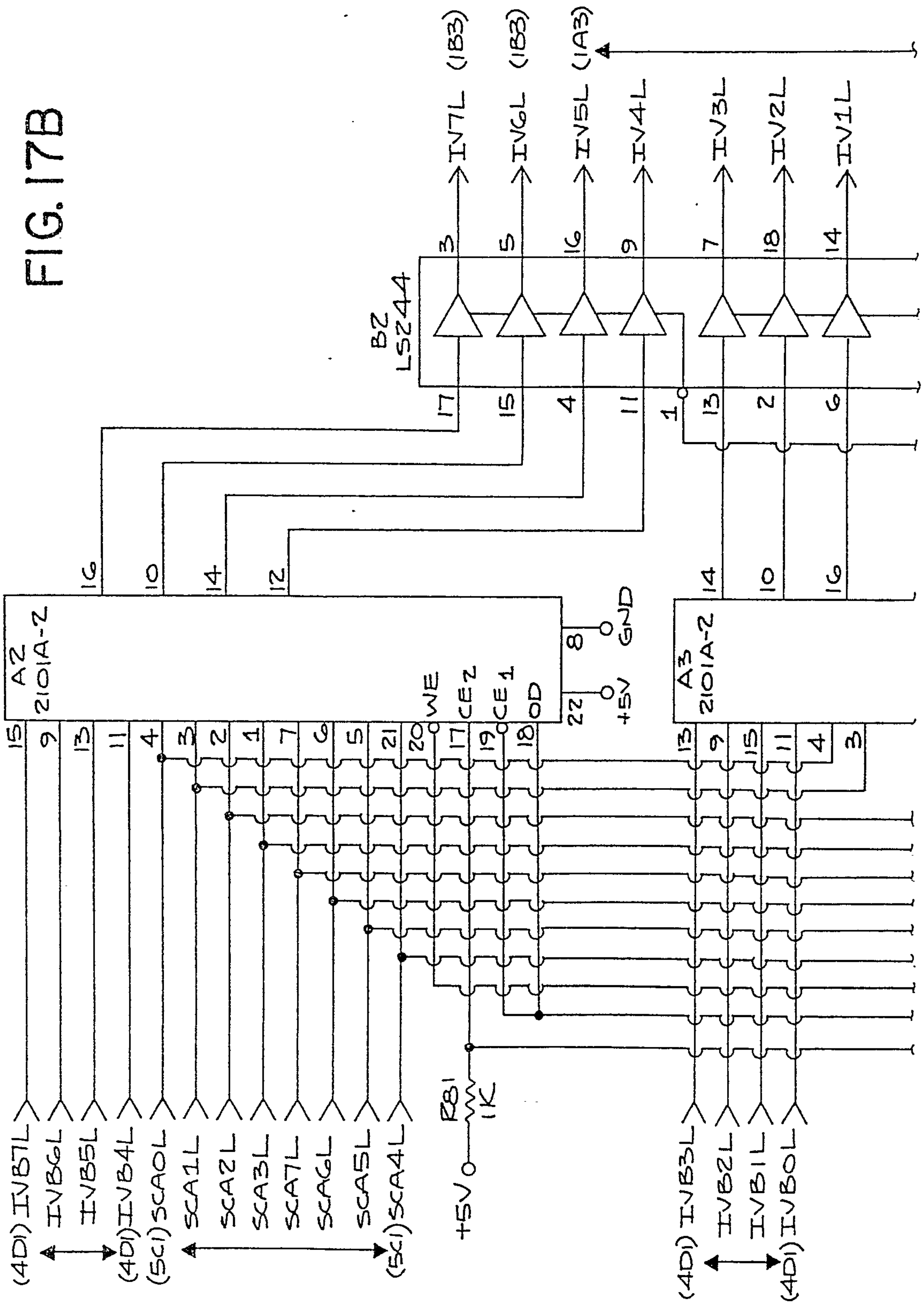
B2
LS244
A2
2101A-2
A3
2101A-2
IV7L (1B3)
IV6L (1B3)
IV5L (1A3)
IV4L
IV3L
IV2L
IV1L
WE
CE2
CE1
OD
GND
+5V
R81
1K
+5V
(4DI) IVB7L
IVB6L
IVB5L
(4DI) IVB4L
(5CI) SCA0L
SCA1L
SCA2L
SCA3L
SCA7L
SCA6L
SCA5L
(5CI) SCA4L
(4DI) IVB3L
IVB2L
IVB1L
(4DI) IVB0L

0007153



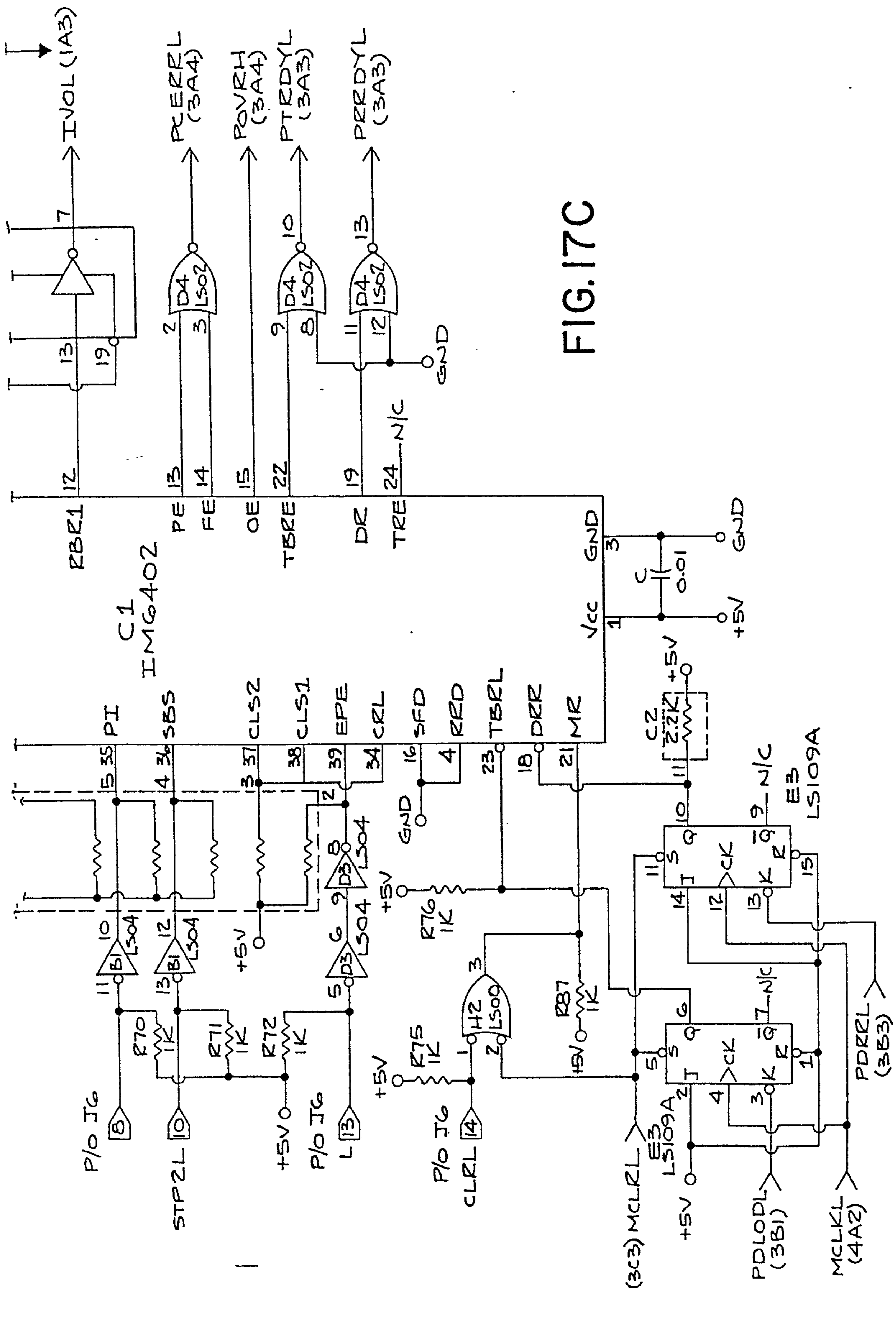


FIG.17C

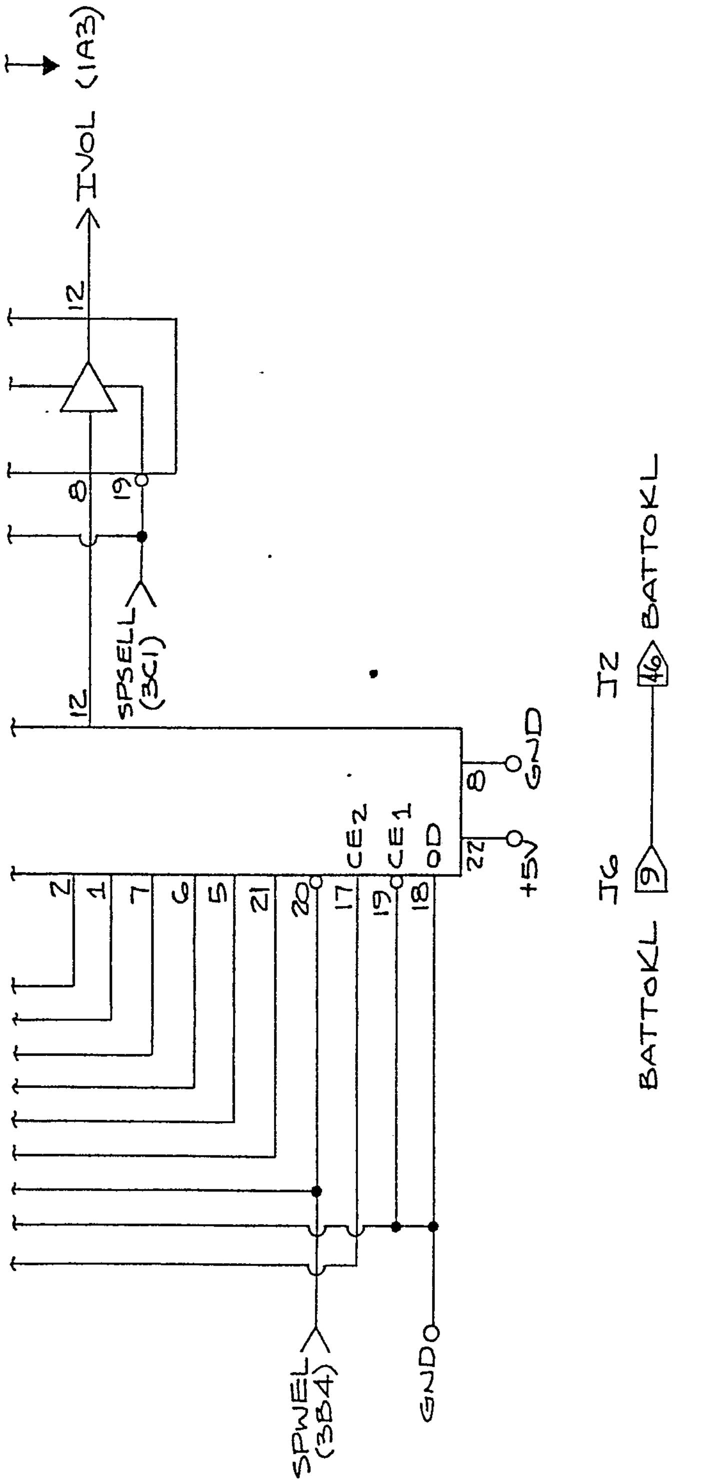


FIG.17D

| | |
|---|---|
| FIG. 17A | FIG. 17B |
| FIG. 17C | FIG. 17D |

FIG. 17E

| | |
|---|---|
| FIG. 18A | FIG. 18B |
| FIG. 18C | FIG. 18D |

FIG. 18E

| | |
|---|---|
| FIG. 19A | FIG. 19B |
| FIG. 19C | FIG. 19D |

FIG. 19E

| | |
|---|---|
| FIG. 20A | FIG. 20B |
| FIG. 20C | FIG. 20D |

FIG. 20E

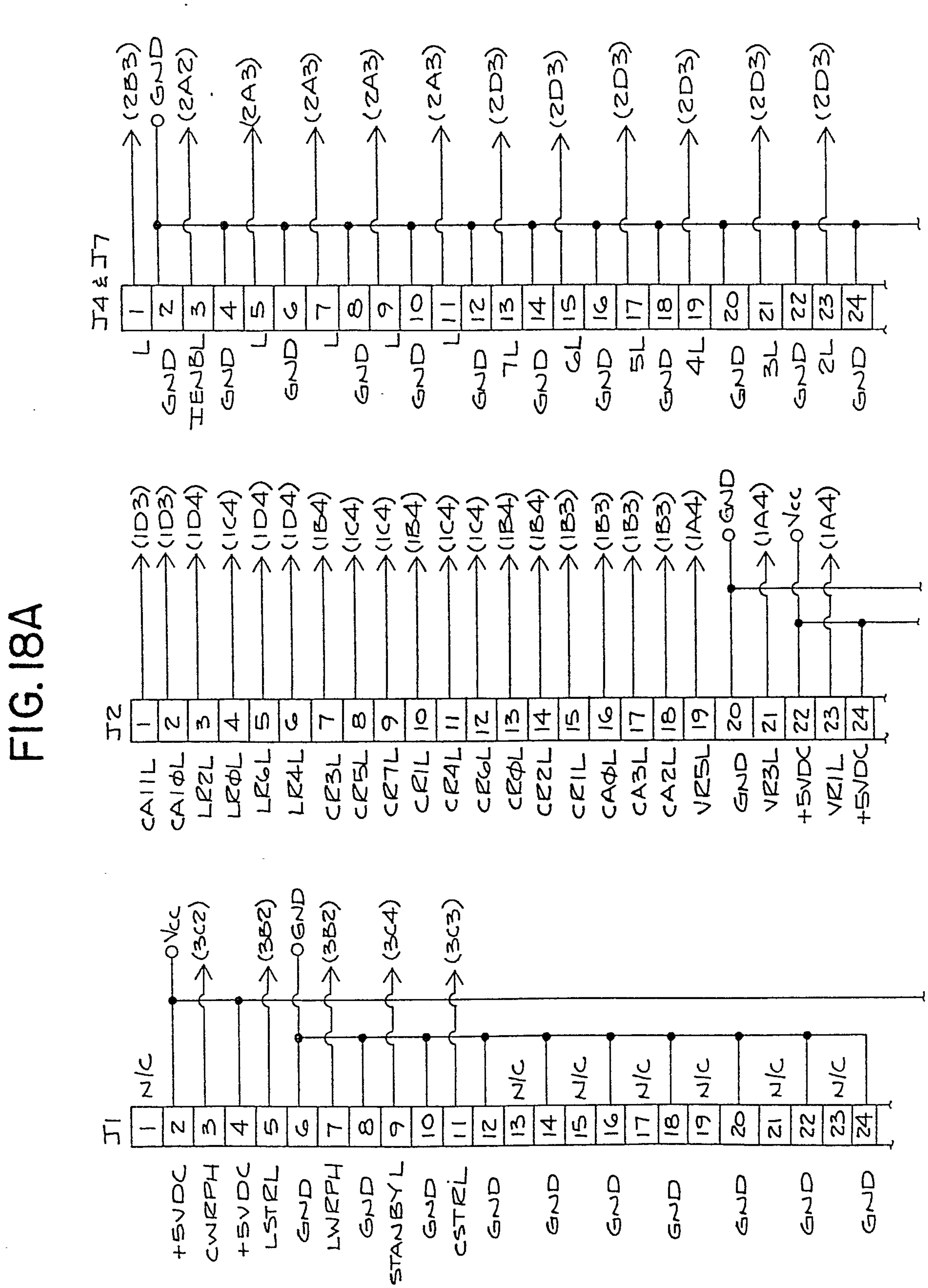
FIG. 18A
J1
N/C
+5VDC
CWRPH
+5VDC
LSTRL
GND
LWRPH
GND
STANBY L
GND
CSTRL
GND
N/C
Vcc
(3C2)
(3B2)
GND
(3B2)
(3C4)
(3C3)
J2
CA11L
CA1ΦL
LR2L
LRΦL
LR6L
LR4L
CR3L
CR5L
CR7L
CR1L
CR4L
CR6L
CRΦL
CR2L
CR1L
CAΦL
CA3L
CA2L
VR5L
GND
VR3L
+5VDC
VR1L
+5VDC
(1D3)
(1D4)
(1C4)
(1B4)
(1B3)
(1A4)
Vcc
J4 & J7
L
GND
IENBL
7L
6L
5L
4L
3L
2L
(2B3)
(2A2)
(2A3)
(2D3)

FIG. 18B

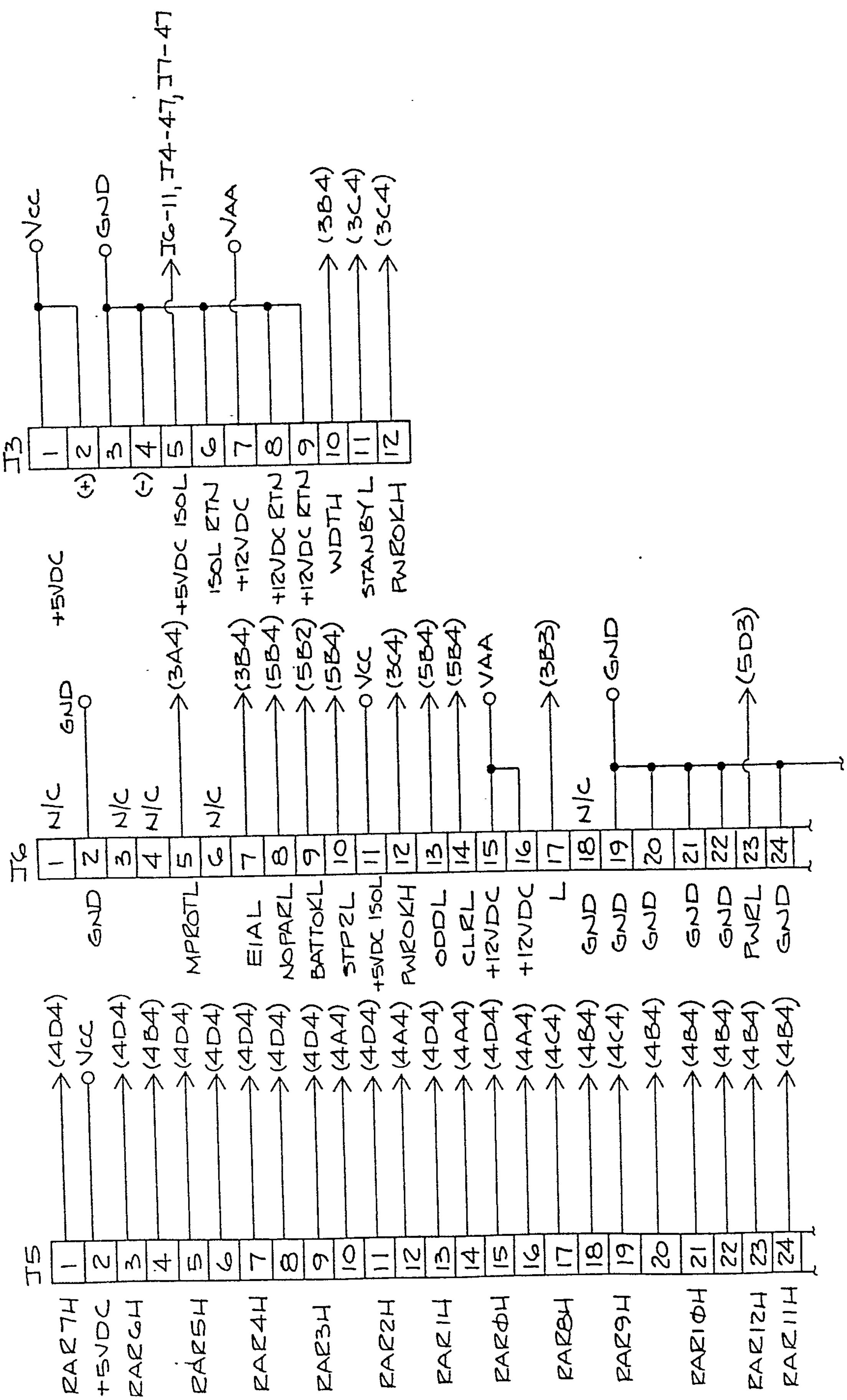
J3
1 2 3 4 5 6 7 8 9 10 11 12
Vcc
GND
J6-11, J4-47, J7-47
VAA
(3B4)
(3C4)
(3C4)
+5VDC
(+)
(-)
+5VDC ISOL
ISOL RTN
+12VDC
+12VDC RTN
+12VDC RTN
WDTH
STANBY L
PWROKH
J6
1 2 3 4 5 6 7 8 9 10 11 12 13 14 15 16 17 18 19 20 21 22 23 24
N/C
GND
N/C
N/C
N/C
(3A4)
(3B4)
(5B4)
(5B2)
(5B4)
Vcc
(3C4)
(5B4)
(5B4)
VAA
(3B3)
N/C
GND
(5D3)
GND
MPROTL
EIAL
NOPARL
BATTOKL
STP2L
+5VDC ISOL
PWROKH
ODDL
CLRL
+12VDC
+12VDC
L
GND
GND
GND
GND
GND
PWRL
GND
J5
1 2 3 4 5 6 7 8 9 10 11 12 13 14 15 16 17 18 19 20 21 22 23 24
(4D4)
Vcc
(4D4)
(4B4)
(4D4)
(4D4)
(4D4)
(4D4)
(4D4)
(4A4)
(4D4)
(4A4)
(4D4)
(4A4)
(4D4)
(4A4)
(4C4)
(4B4)
(4C4)
(4B4)
(4B4)
(4B4)
(4B4)
(4B4)
RAR7H
+5VDC
RAR6H
RAR5H
RAR4H
RAR3H
RAR2H
RAR1H
RARΦH
RAR8H
RAR9H
RAR1ΦH
RAR12H
RAR11H

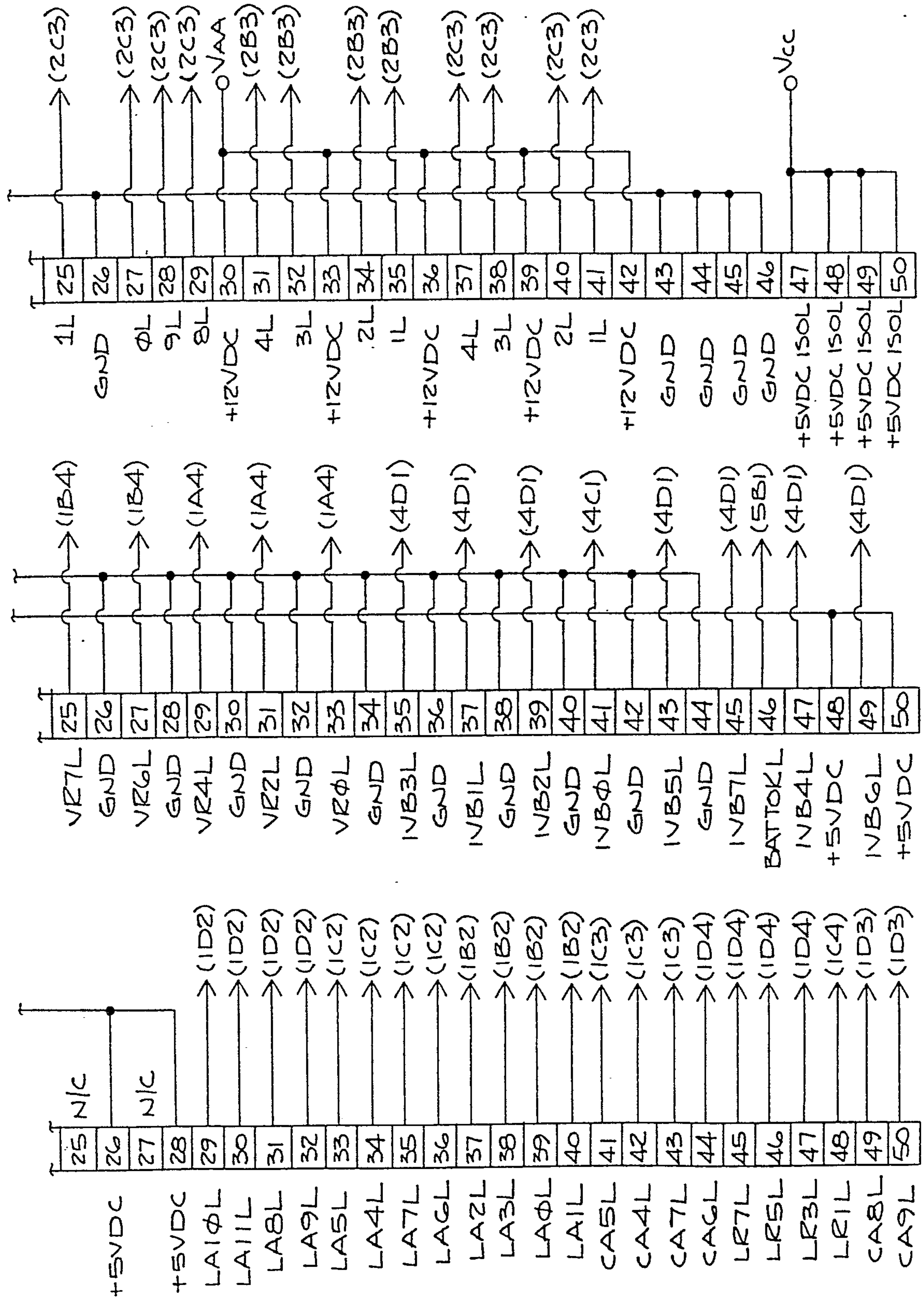

FIG.18C

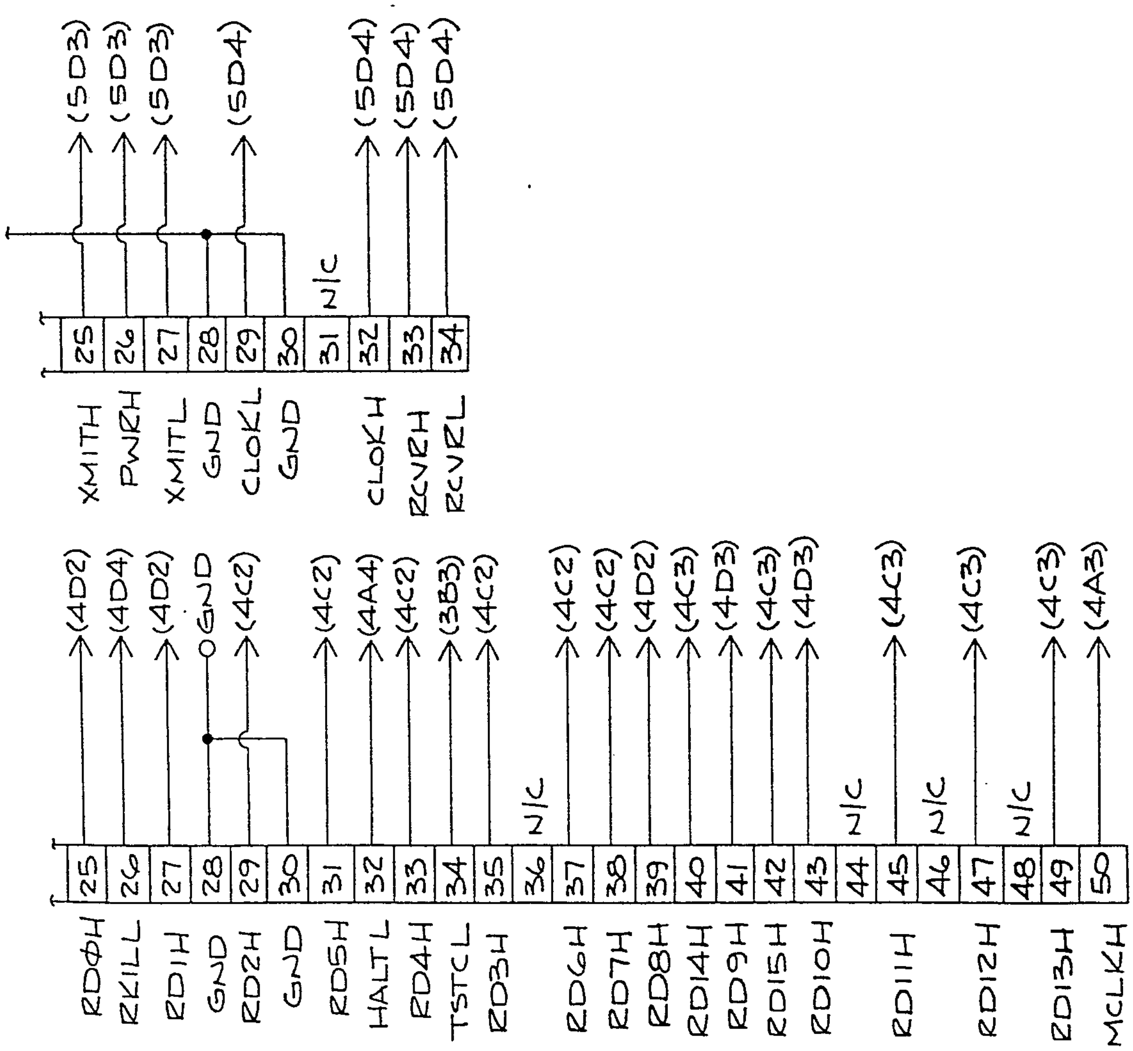

XMITH 25 (5D3)
PWRH 26 (5D3)
XMITL 27 (5D3)
GND 28
CLOKL 29 (5D4)
GND 30
31 N/C
CLOKH 32 (5D4)
RCVRH 33 (5D4)
RCVRL 34 (5D4)
RDΦH 25 (4D2)
RKILL 26 (4D4)
RD1H 27 (4D2)
GND 28 GND
RD2H 29 (4C2)
GND 30
RD5H 31 (4C2)
HALTL 32 (4A4)
RD4H 33 (4C2)
TSTCL 34 (3B3)
RD3H 35 (4C2)
36 N/C
RD6H 37 (4C2)
RD7H 38 (4C2)
RD8H 39 (4D2)
RD14H 40 (4C3)
RD9H 41 (4D3)
RD15H 42 (4C3)
RD10H 43 (4D3)
44 N/C
RD11H 45 (4C3)
46 N/C
RD12H 47 (4C3)
48 N/C
RD13H 49 (4C3)
MCLKH 50 (4A3)


FIG. 18D

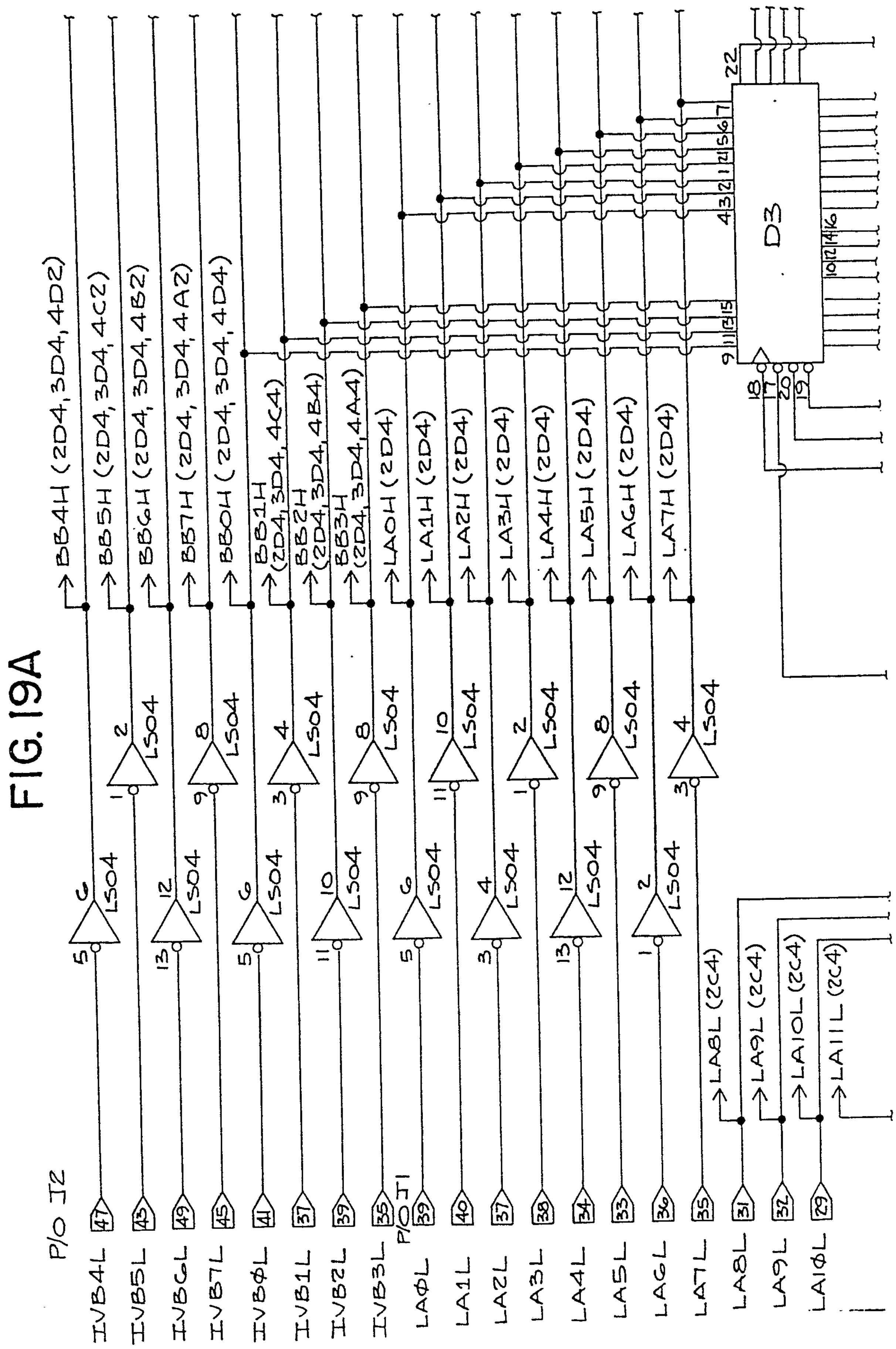
P/O J2
P/O J1
IVB4L
IVB5L
IVB6L
IVB7L
IVBΦL
IVB1L
IVB2L
IVB3L
LAΦL
LA1L
LA2L
LA3L
LA4L
LA5L
LA6L
LA7L
LA8L
LA9L
LA1ΦL
LS04
BB4H (2D4, 3D4, 4D2)
BB5H (2D4, 3D4, 4C2)
BB6H (2D4, 3D4, 4B2)
BB7H (2D4, 3D4, 4A2)
BB0H (2D4, 3D4, 4D4)
BB1H (2D4, 3D4, 4C4)
BB2H (2D4, 3D4, 4B4)
BB3H (2D4, 3D4, 4A4)
LA0H (2D4)
LA1H (2D4)
LA2H (2D4)
LA3H (2D4)
LA4H (2D4)
LA5H (2D4)
LA6H (2D4)
LA7H (2D4)
LA8L (2C4)
LA9L (2C4)
LA10L (2C4)
LA11L (2C4)
D3

FIG.19A

FIG.19B

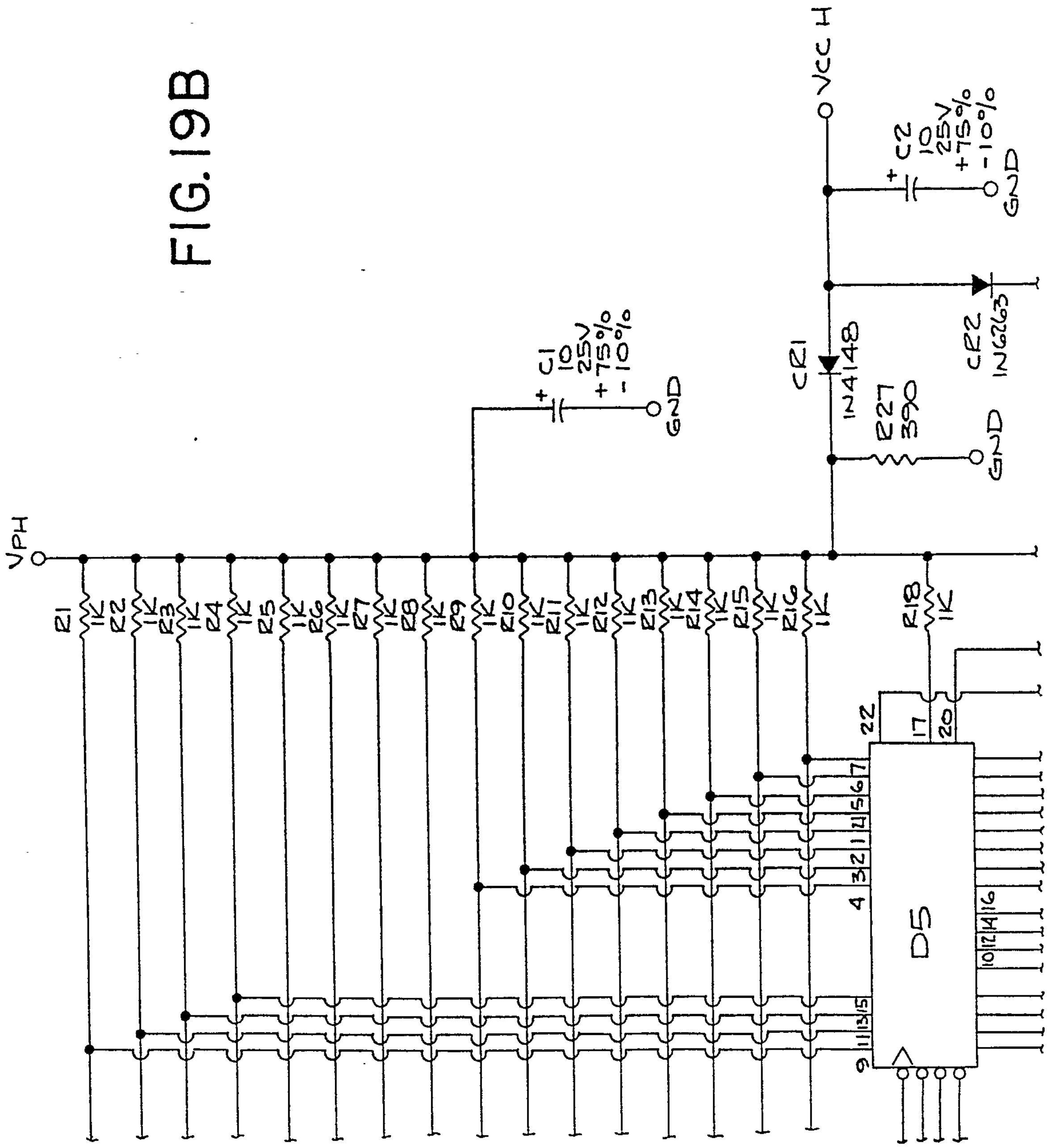
VPH
R1 1K
R2 1K
R3 1K
R4 1K
R5 1K
R6 1K
R7 1K
R8 1K
R9 1K
R10 1K
R11 1K
R12 1K
R13 1K
R14 1K
R15 1K
R16 1K
R18 1K
C1 10 25V +75% -10%
GND
VCC H
C2 10 25V +75% -10%
GND
CR1 1N4148
CR2 1N6263
R27 390
GND
D5
22
17
20
4
3
2
1
21
5
6
7
9
11
13
15
10
12
14
16

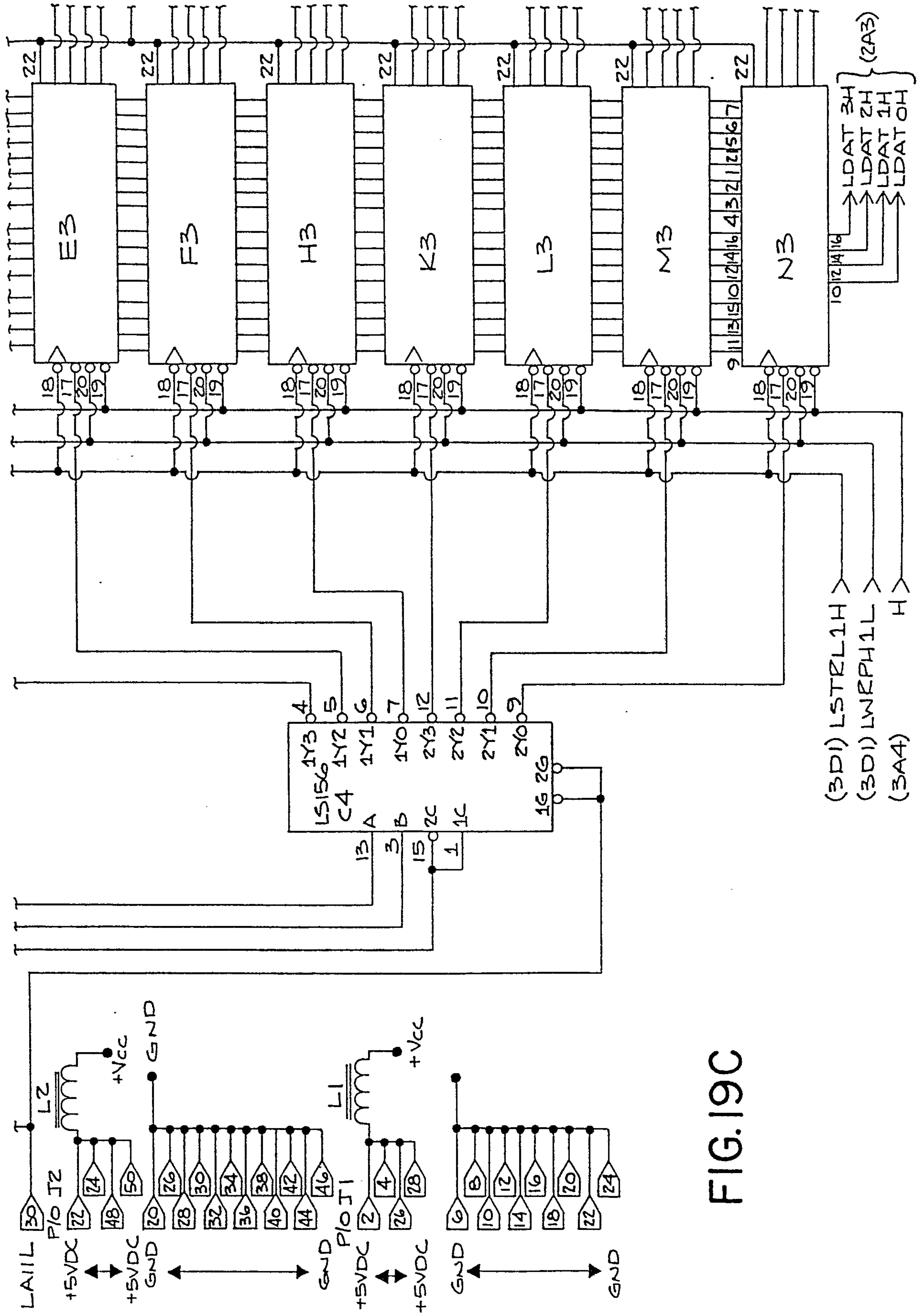
E3
F3
H3
K3
L3
M3
N3
LS156
C4
LDAT 3H
LDAT 2H
LDAT 1H
LDAT 0H
(2A3)
(3D1) LSTRL1H
(3D1) LWRPH1L
(3A4) H
LA11L
P/O J2
P/O J1
L2
L1
+Vcc
GND
+5VDC

FIG.19C

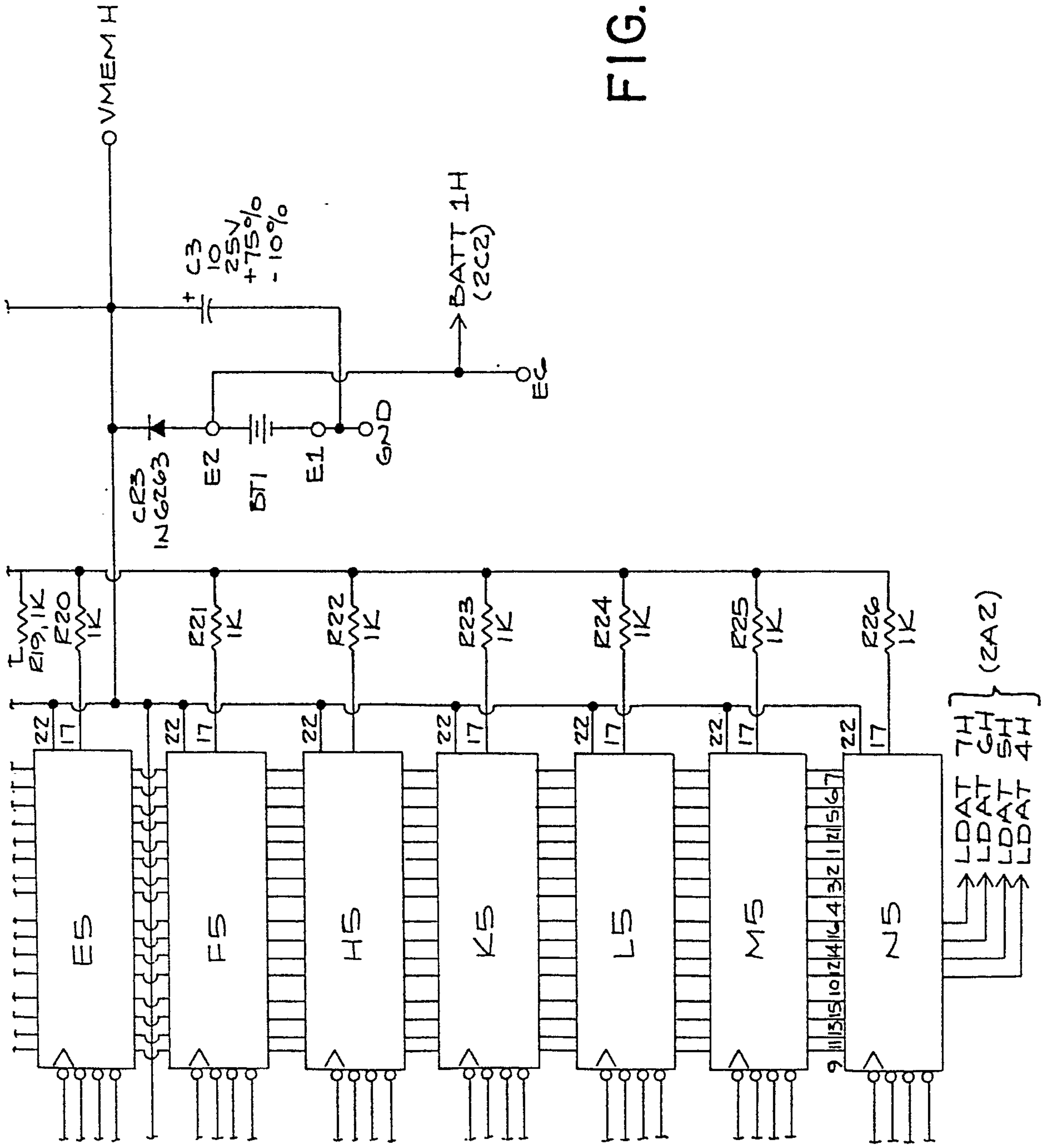

VMEM H
C3
10
25V
+75%
-10%
BATT 1H
(2C2)
E2
CR23
IN6263
E2
BT1
E1
GND
R19,1K
R20
1K
R21
1K
R22
1K
R23
1K
R24
1K
R25
1K
R26
1K
22
17
E5
F5
H5
K5
L5
M5
N5
LDAT 7H
LDAT 6H
LDAT 5H
LDAT 4H
(2A2)


FIG. 19D

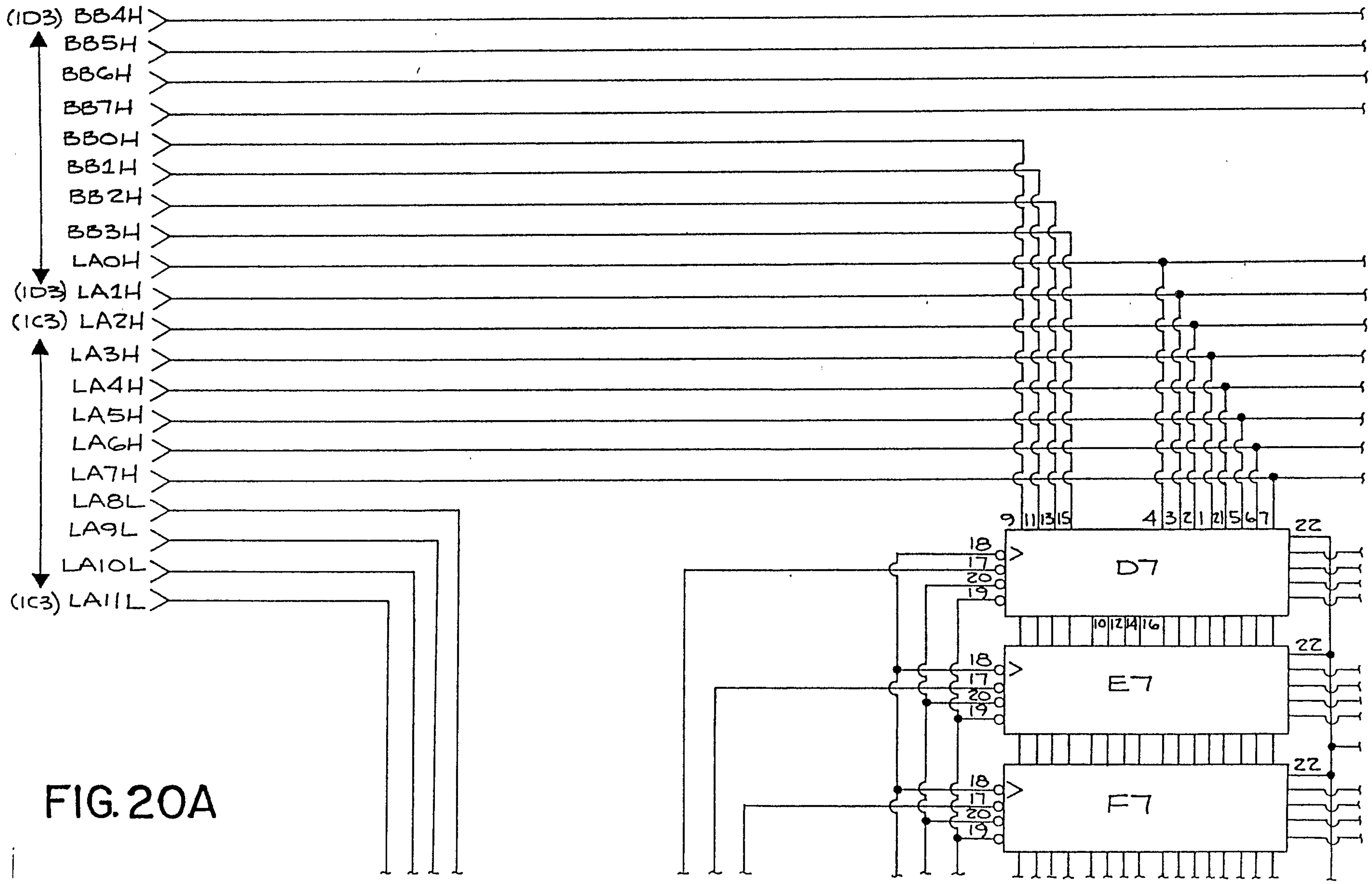
(1D3) BB4H
BB5H
BB6H
BB7H
BB0H
BB1H
BB2H
BB3H
LA0H
(1D3) LA1H
(1C3) LA2H
LA3H
LA4H
LA5H
LA6H
LA7H
LA8L
LA9L
LA10L
(1C3) LA11L
D7
E7
F7
9 11 13 15
4 3 2 1 21 5 6 7
22
18
17
20
19
10 12 14 16

FIG. 20A

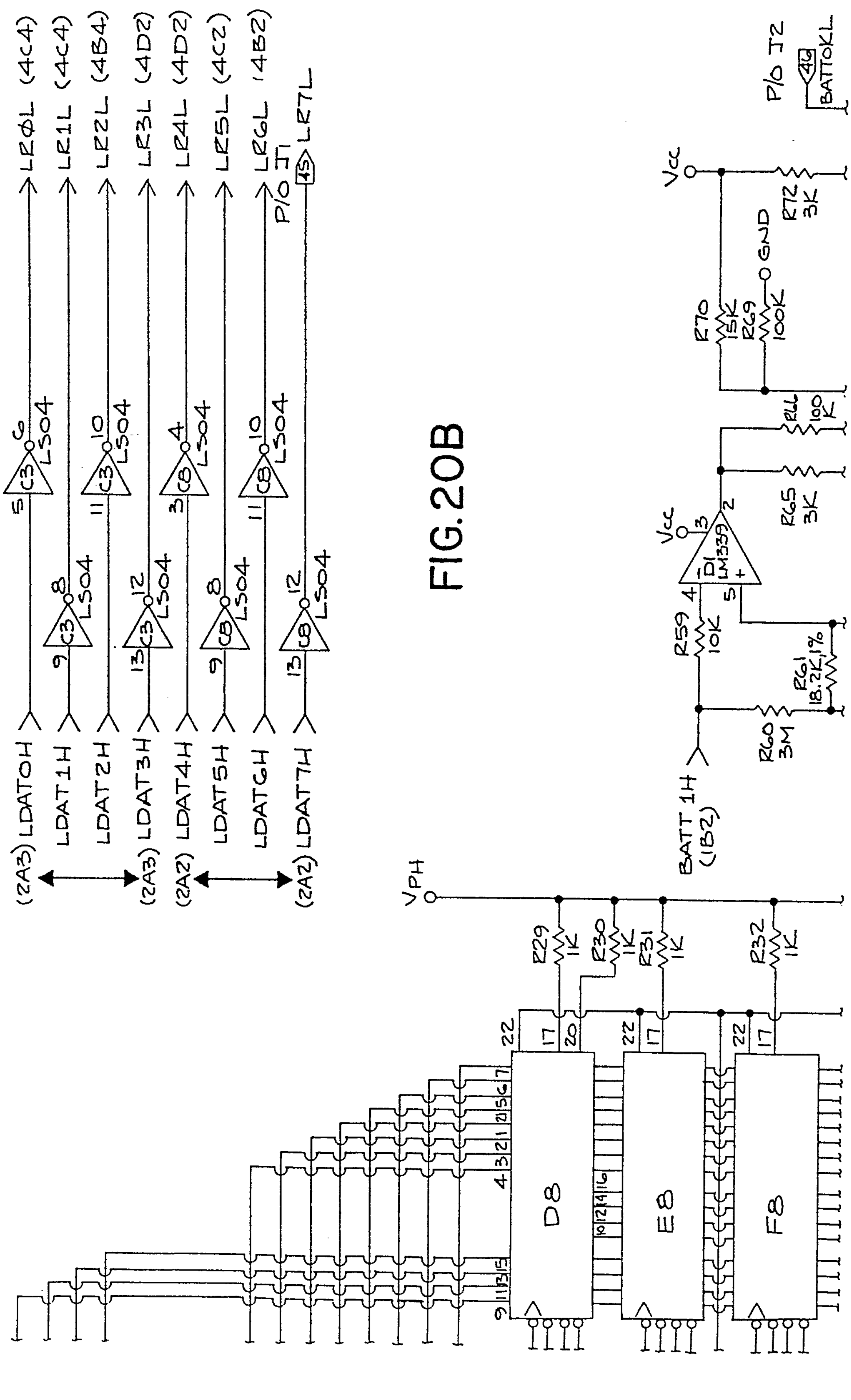
LDAT0H
LDAT1H
LDAT2H
LDAT3H
LDAT4H
LDAT5H
LDAT6H
LDAT7H
LR0L (4C4)
LR1L (4C4)
LR2L (4B4)
LR3L (4D2)
LR4L (4D2)
LR5L (4C2)
LR6L (4B2)
LR7L
P/O J1
P/O J2
BATTOKL
BATT 1H (1B2)
LM339
R59 10K
R60 3M
R61 18.2K 1%
R65 3K
R66 100K
R69 100K
R70 15K
R72 3K
R29 1K
R30 1K
R31 1K
R32 1K
D8
E8
F8
LS04
GND

FIG.20B

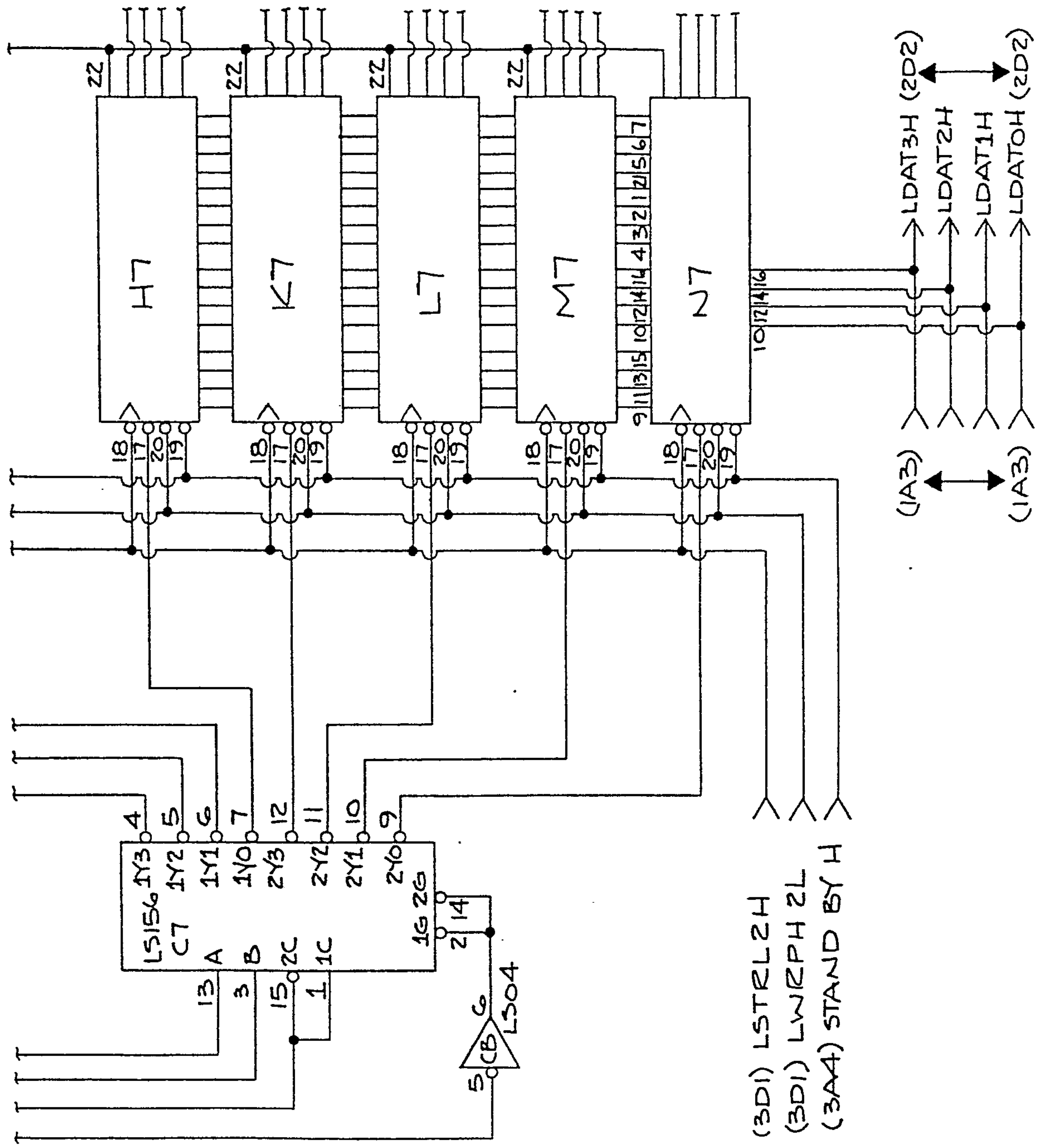
H7
K7
L7
M7
N7
LDAT3H (2D2)
LDAT2H
LDAT1H
LDAT0H (2D2)
(1A3)
(1A3)
LS156 C7
LS04
(3D1) LSTRL2H
(3D1) LWRPH 2L
(3A4) STAND BY H

FIG.20C

0007153

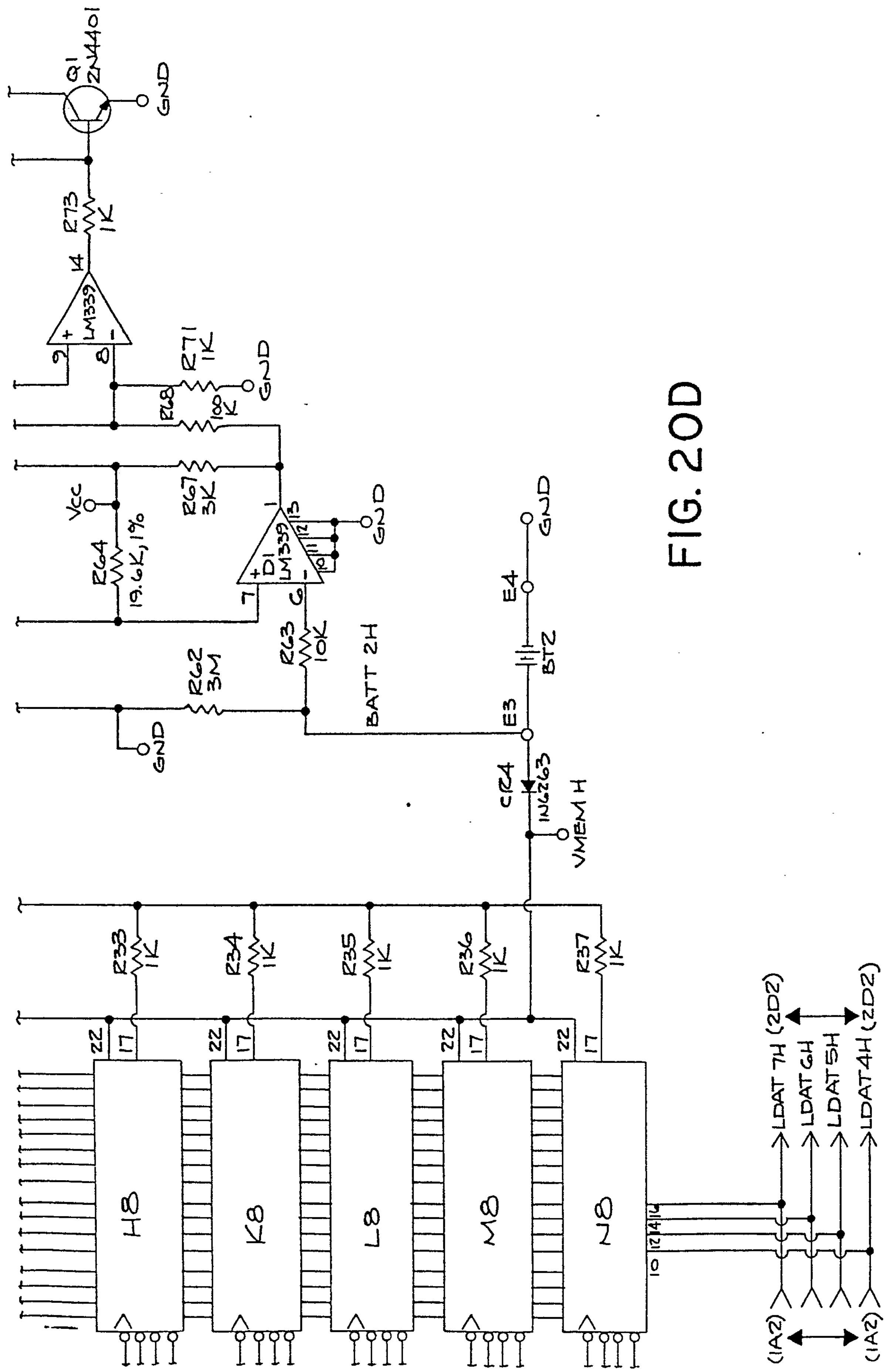


FIG. 20D

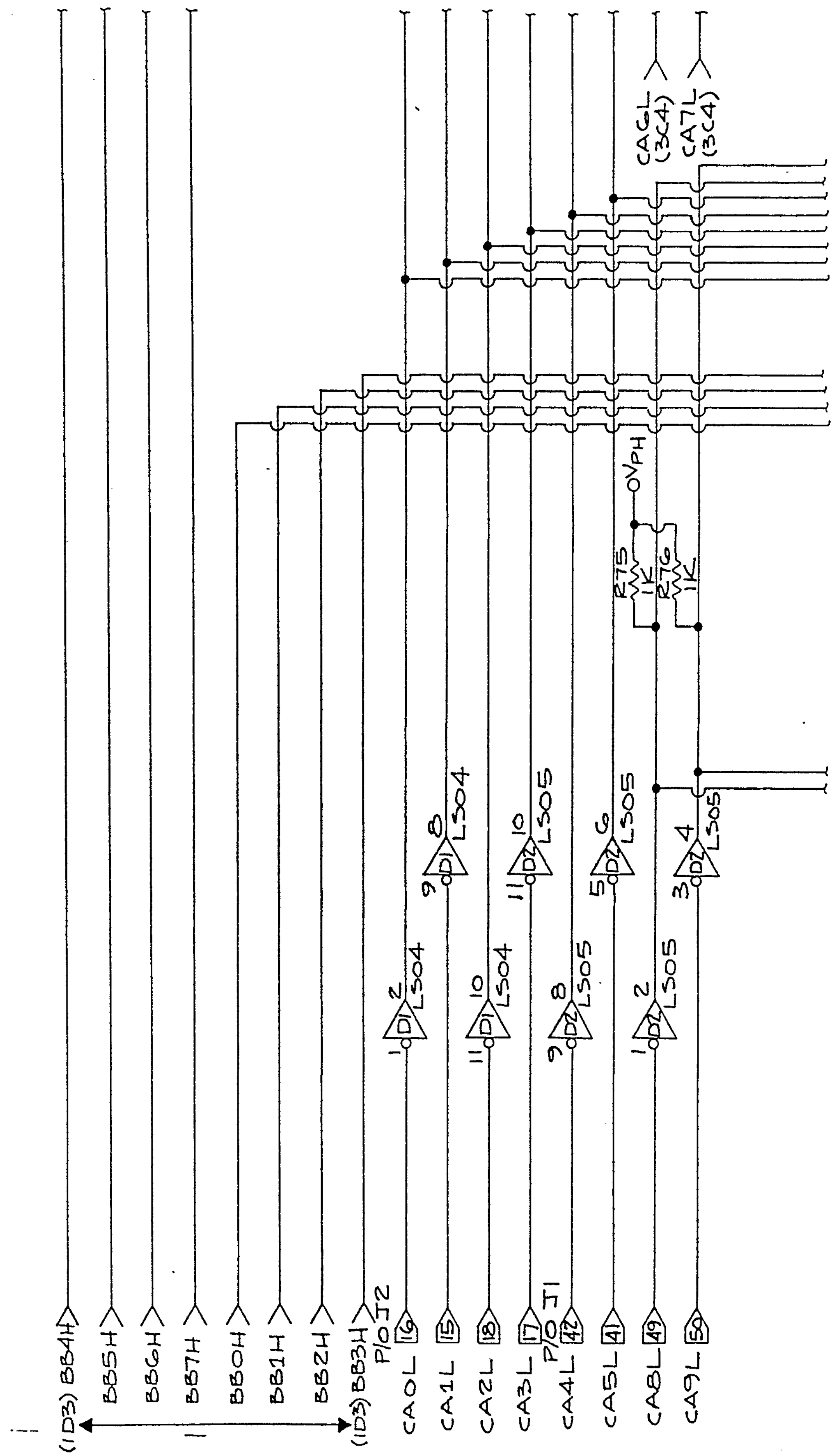
(1D3) BB4H
BB5H
BB6H
BB7H
BB0H
BB1H
BB2H
(1D3) BB3H
P/O J2
CA0L
CA1L
CA2L
CA3L
P/O J1
CA4L
CA5L
CA8L
CA9L
16
15
18
17
42
41
49
50
L504
L505
CA6L (3C4)
CA7L (3C4)
R75 1K
R76 1K
VPH

FIG. 21A

FIG. 21B

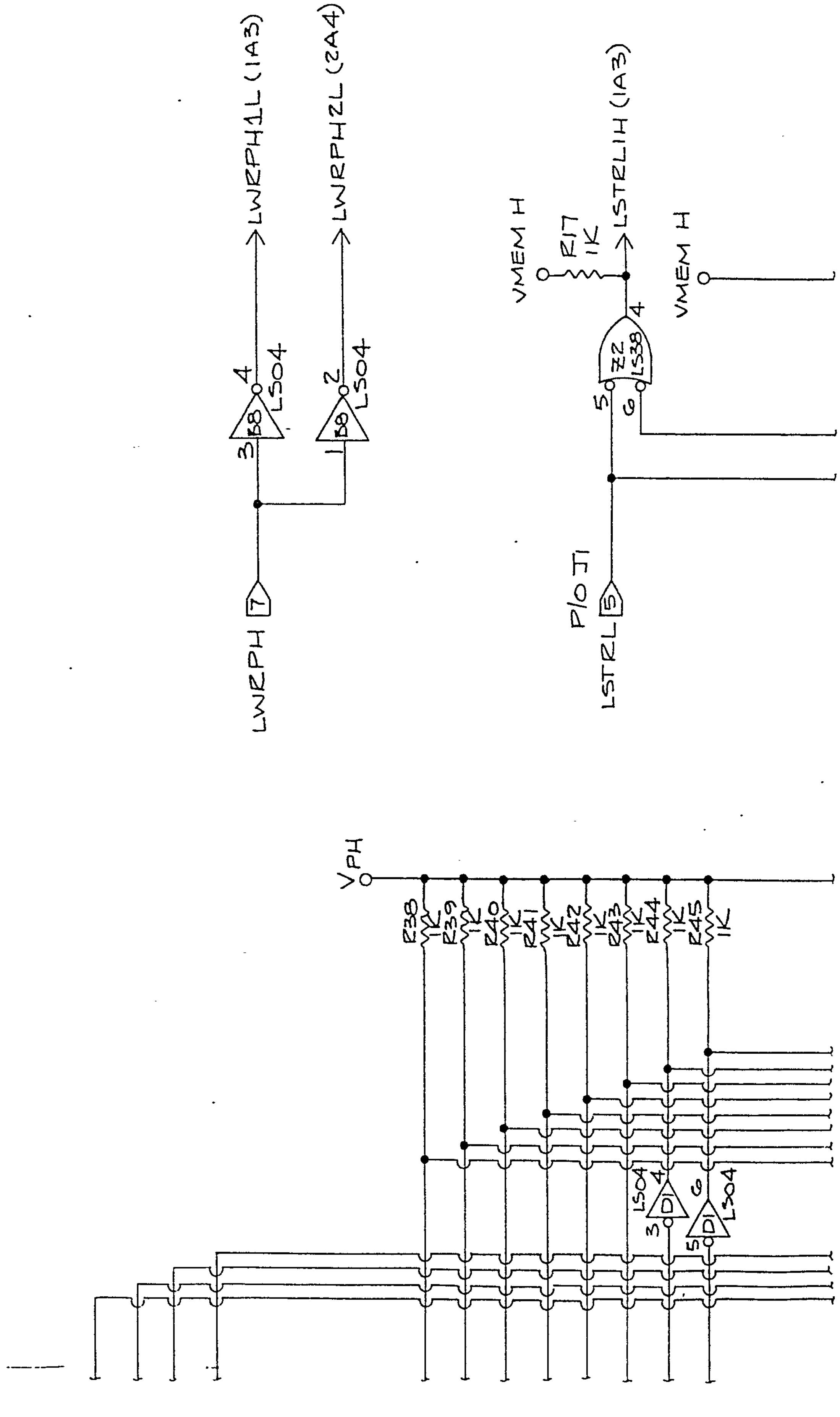
LWRPH
7
LWRPH1L (1A3)
LWRPH2L (2A4)
B8
LS04
P/O J1
LSTRL
5
VMEM H
R17
1K
LSTRL1H (1A3)
Z2
LS38
VPH
R38
R39
R40
R41
R42
R43
R44
R45
1K
D1
LS04

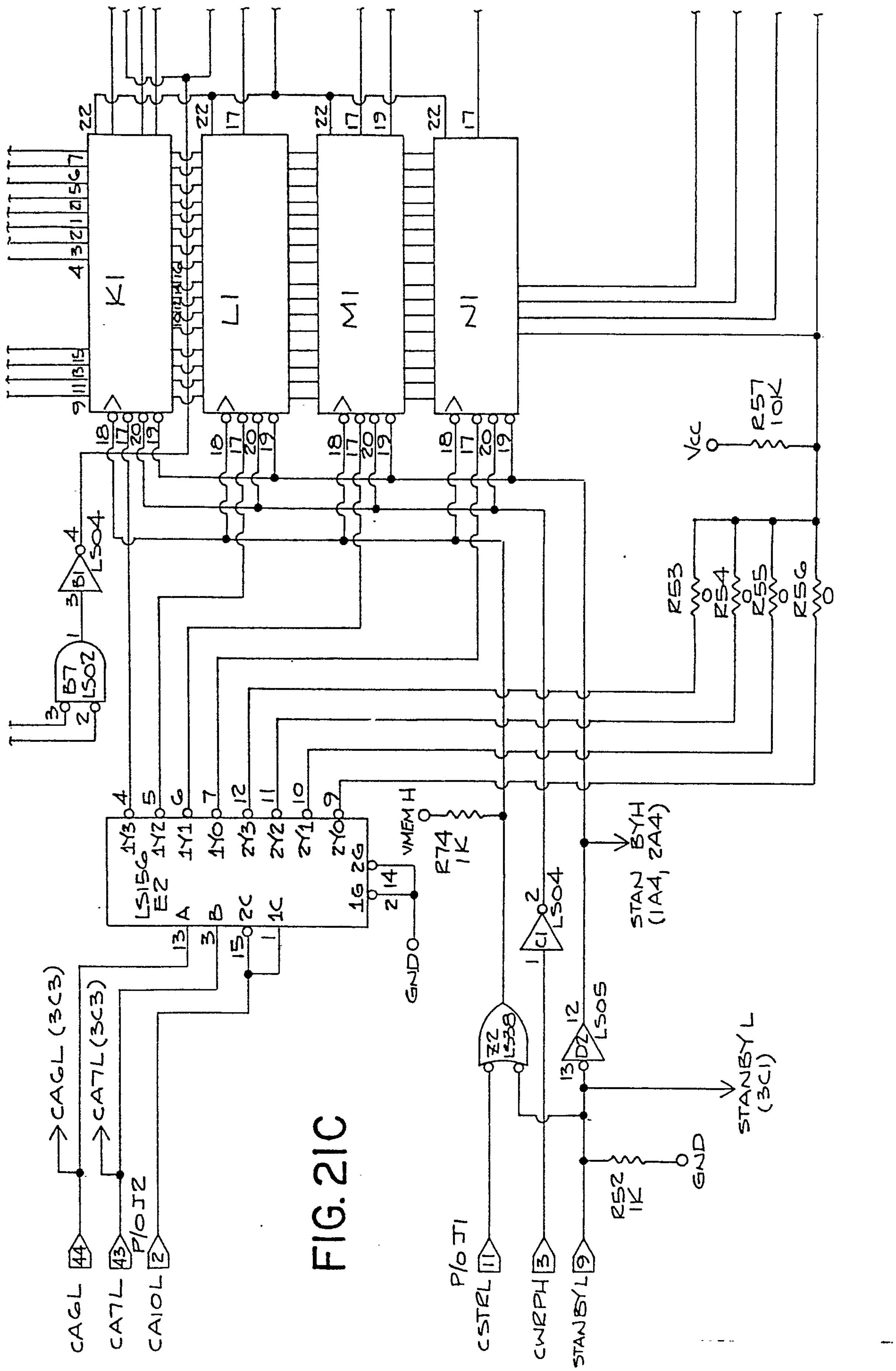
K1
L1
M1
N1
LS04
LS02
LS156
E2
Vcc
R57
10K
R53
R54
R55
R56
VMEM H
R74
1K
STAN BYH
(1A4, 2A4)
STANBYL
(3C1)
R52
1K
GND
LS38
LS05
CAGL (3C3)
CA7L (3C3)
P/O J2
P/O J1
CAGL
CA7L
CA10L
CSTRL
CWRPH
STANBYL

FIG. 21C

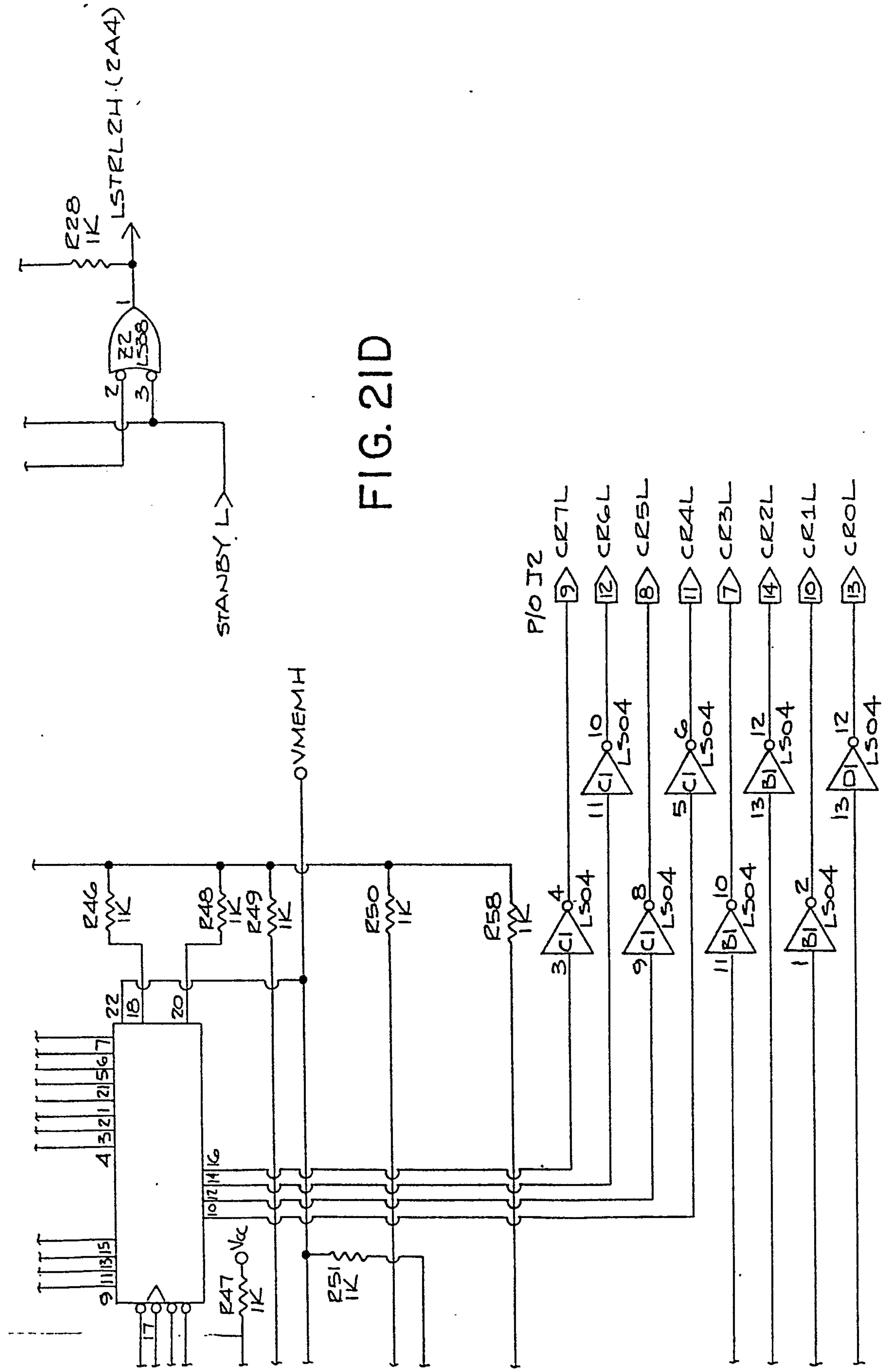
LSTRL2H (2A4)
R28
1K
Z2
LS38
STANBY L
VMEMH
R46
1K
R48
1K
R49
1K
R50
1K
R58
1K
R51
1K
R47
1K
Vcc
P/O J2
CR7L
CR6L
CR5L
CR4L
CR3L
CR2L
CR1L
CR0L
LS04

FIG. 21D

| | |
|---|---|
| FIG. 21A | FIG. 21B |
| FIG. 21C | FIG. 21D |

FIG. 21E

| | |
|---|---|
| FIG. 22A | FIG. 22B |
| FIG. 22C | FIG. 22D |

FIG. 22E

| | |
|---|---|
| FIG. 23A | FIG. 23B |

FIG. 23C

| | |
|---|---|
| FIG. 24A | FIG. 24B |
| FIG. 24C | FIG. 24D |

FIG. 24E

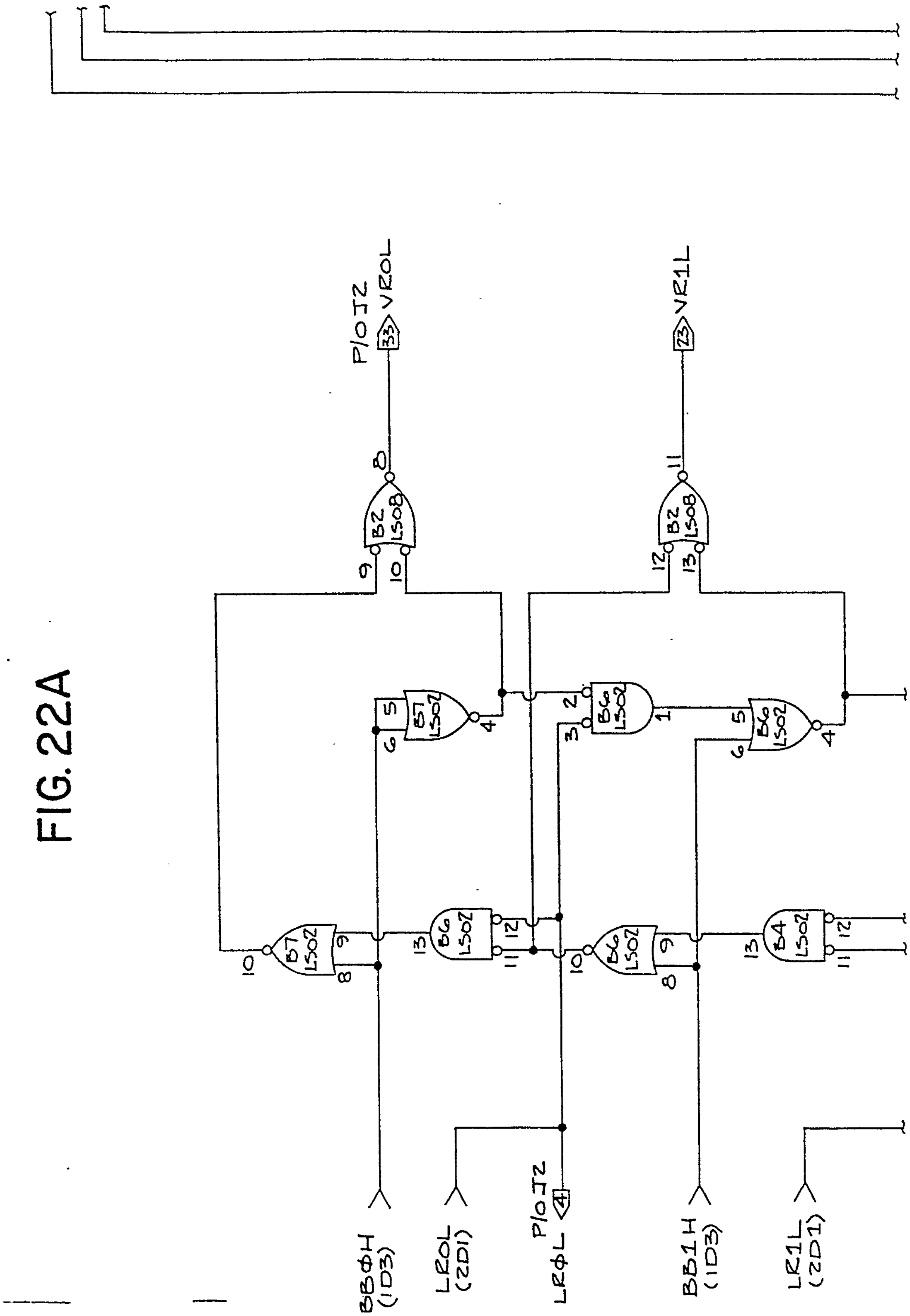
P/O I2
33
VR0L
23
VR1L
B2
LS08
B7
LS02
B6
LS02
B4
LS02
BBΦH
(1D3)
LR0L
(2D1)
P/O I2
4
LRΦL
BB1H
(1D3)
LR1L
(2D1)

FIG. 22A

FIG.22B

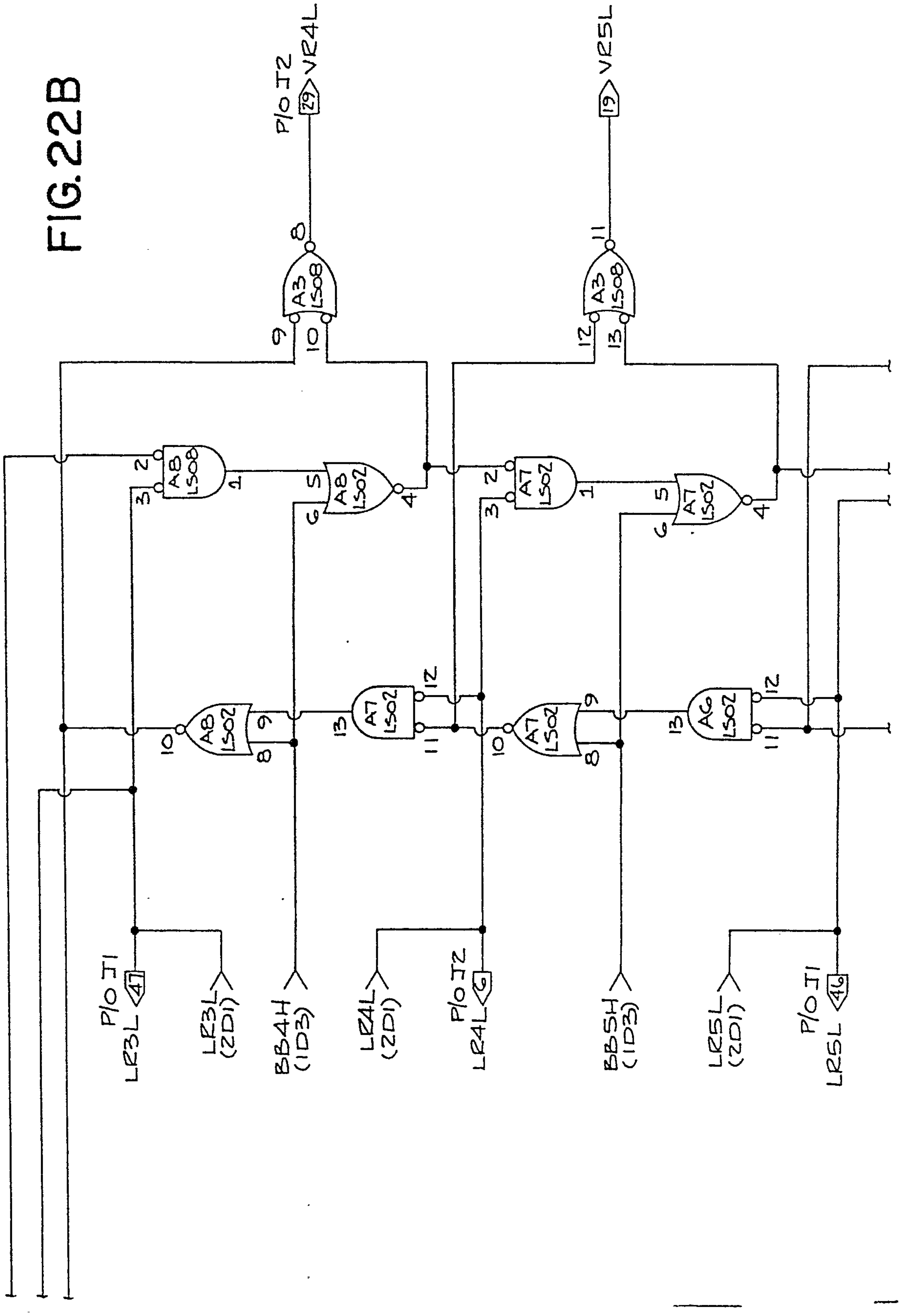
P/O I2
29
VR4L
19
VR5L
A3 LS08
A8 LS08
A8 LS02
A7 LS02
A6 LS02
P/O I1
47
LR3L
LR3L (2D1)
BB4H (1D3)
LR4L (2D1)
P/O I2
6
LR4L
BB5H (1D3)
LR5L (2D1)
P/O I1
46
LR5L

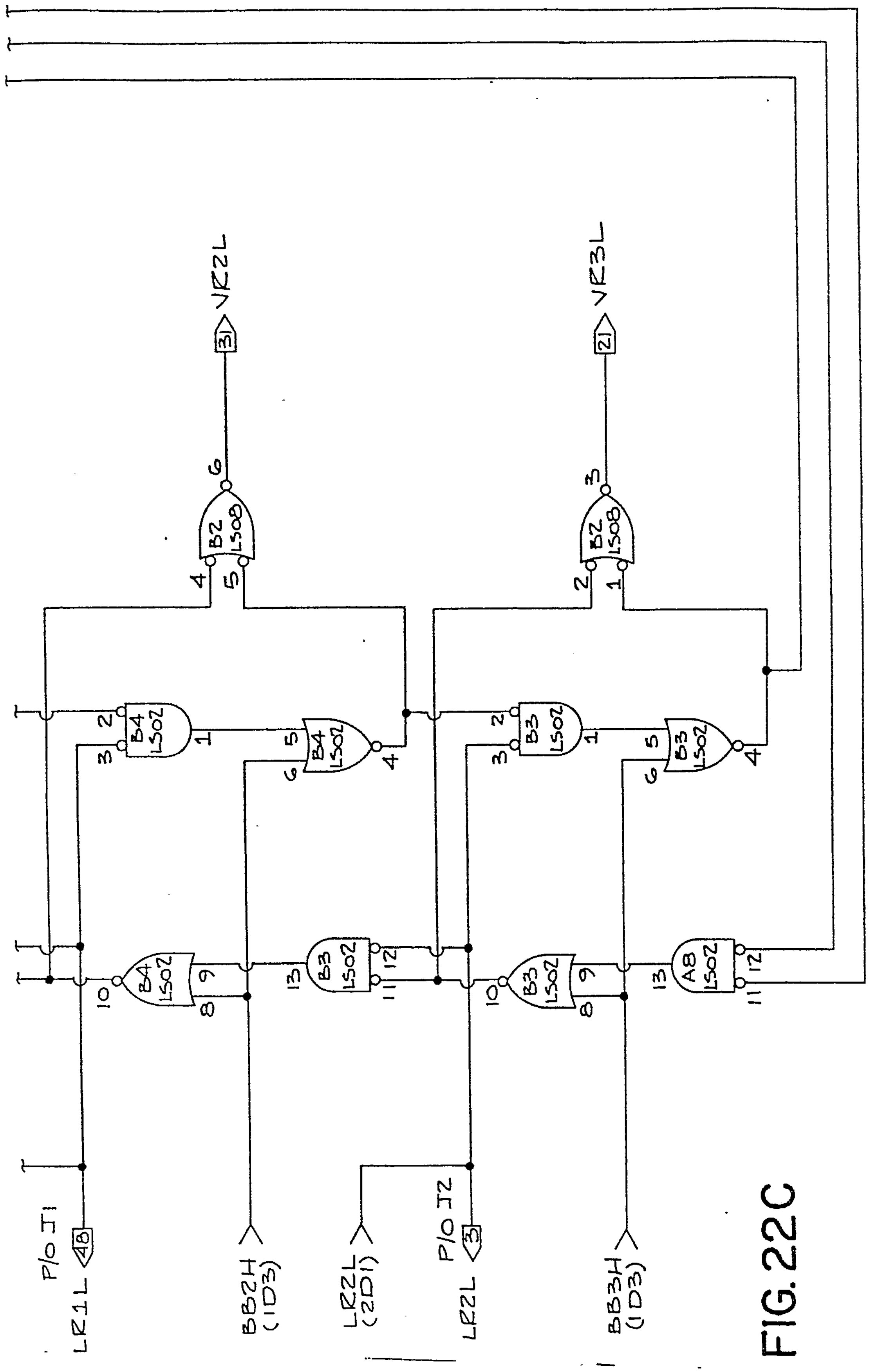
VR2L
31
VR3L
21
B2 LS08
B4 LS02
B3 LS02
A8 LS02
P/O J1
LR1L
48
BB2H (1D3)
LR2L (2D1)
P/O J2
LR2L
3
BB3H (1D3)

FIG. 22C

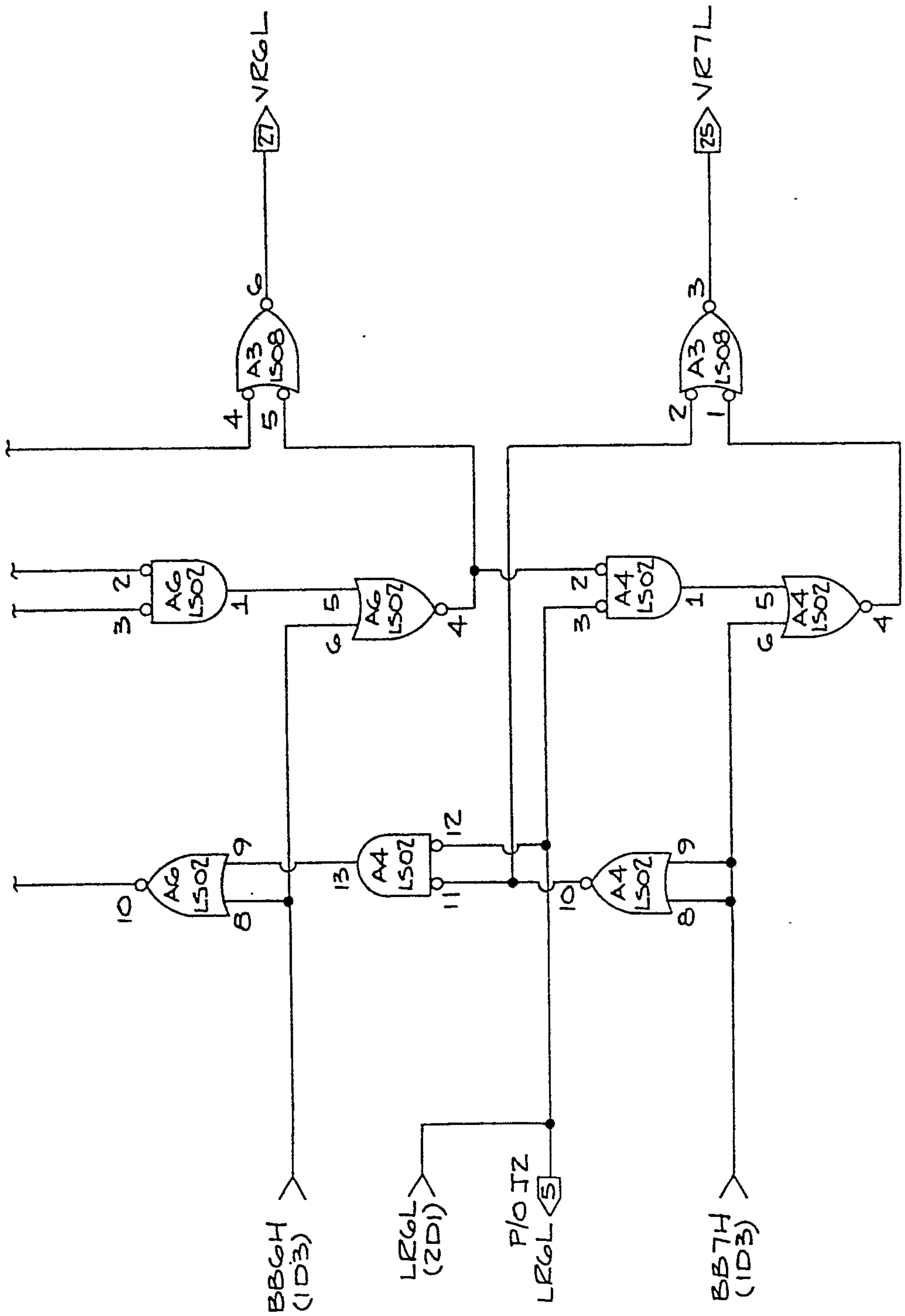

VR6L
27
VR7L
25
A3
LS08
A6
LS02
A4
LS02
BB6H
(1D3)
LR6L
(2D1)
P/O I2
LR6L
5
BB7H
(1D3)


FIG.22D

FIG. 23A

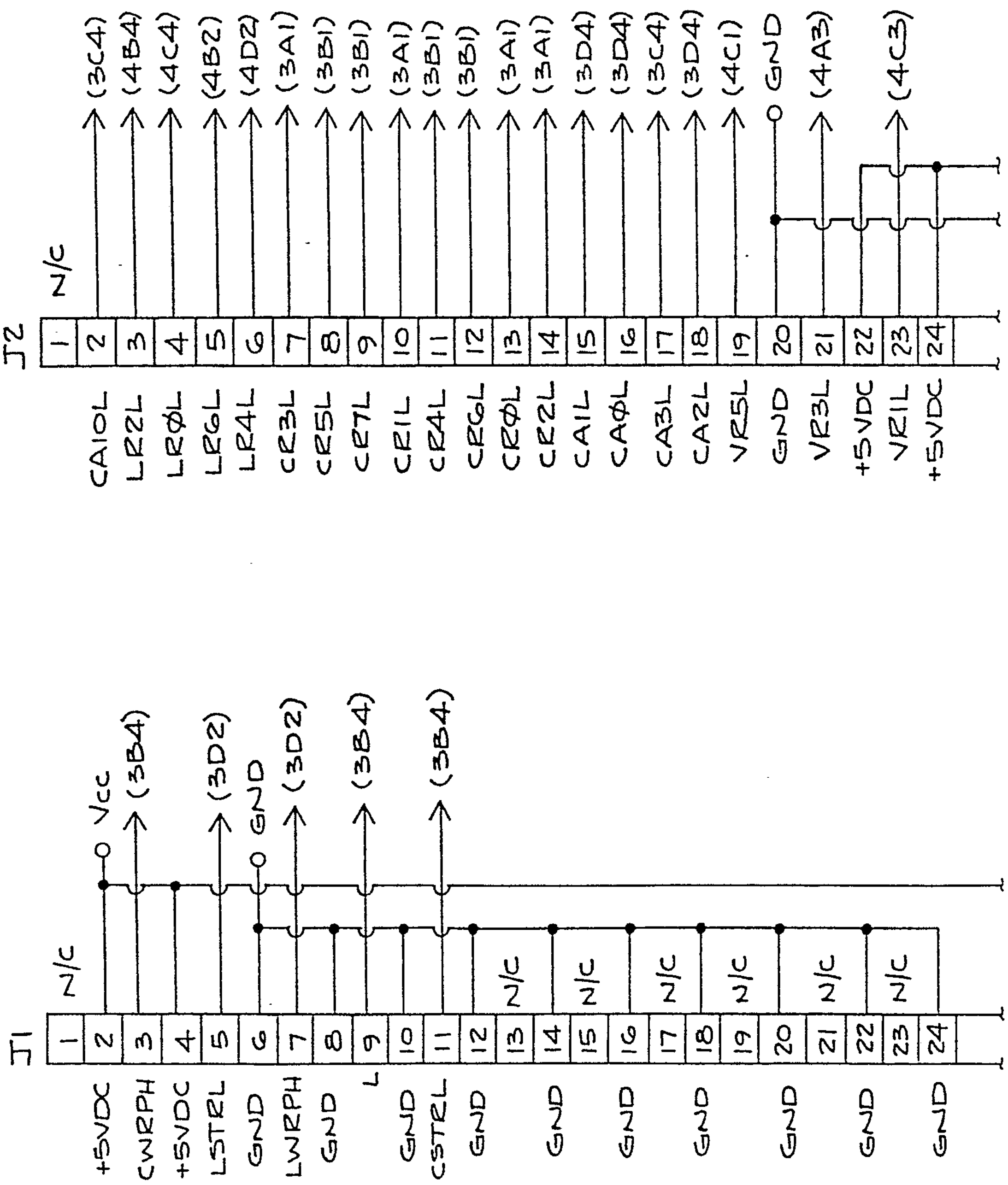
J1
N/C
1 2 3 4 5 6 7 8 9 10 11 12 13 14 15 16 17 18 19 20 21 22 23 24
+5VDC
CWRPH
+5VDC
LSTRL
GND
LWRPH
GND
L
GND
CSTRL
GND
GND
GND
GND
GND
GND
GND
GND
Vcc
(3B4)
(3D2)
GND
(3D2)
(3B4)
(3B4)
N/C
J2
CA10L
LR2L
LRØL
LR6L
LR4L
CR3L
CR5L
CR7L
CR1L
CR4L
CR6L
CRØL
CR2L
CA1L
CAØL
CA3L
CA2L
VR5L
GND
VR3L
+5VDC
VR1L
+5VDC
(3C4)
(4B4)
(4C4)
(4B2)
(4D2)
(3A1)
(3B1)
(3B1)
(3A1)
(3B1)
(3B1)
(3A1)
(3A1)
(3D4)
(3D4)
(3C4)
(3D4)
(4C1)
GND
(4A3)
(4C3)

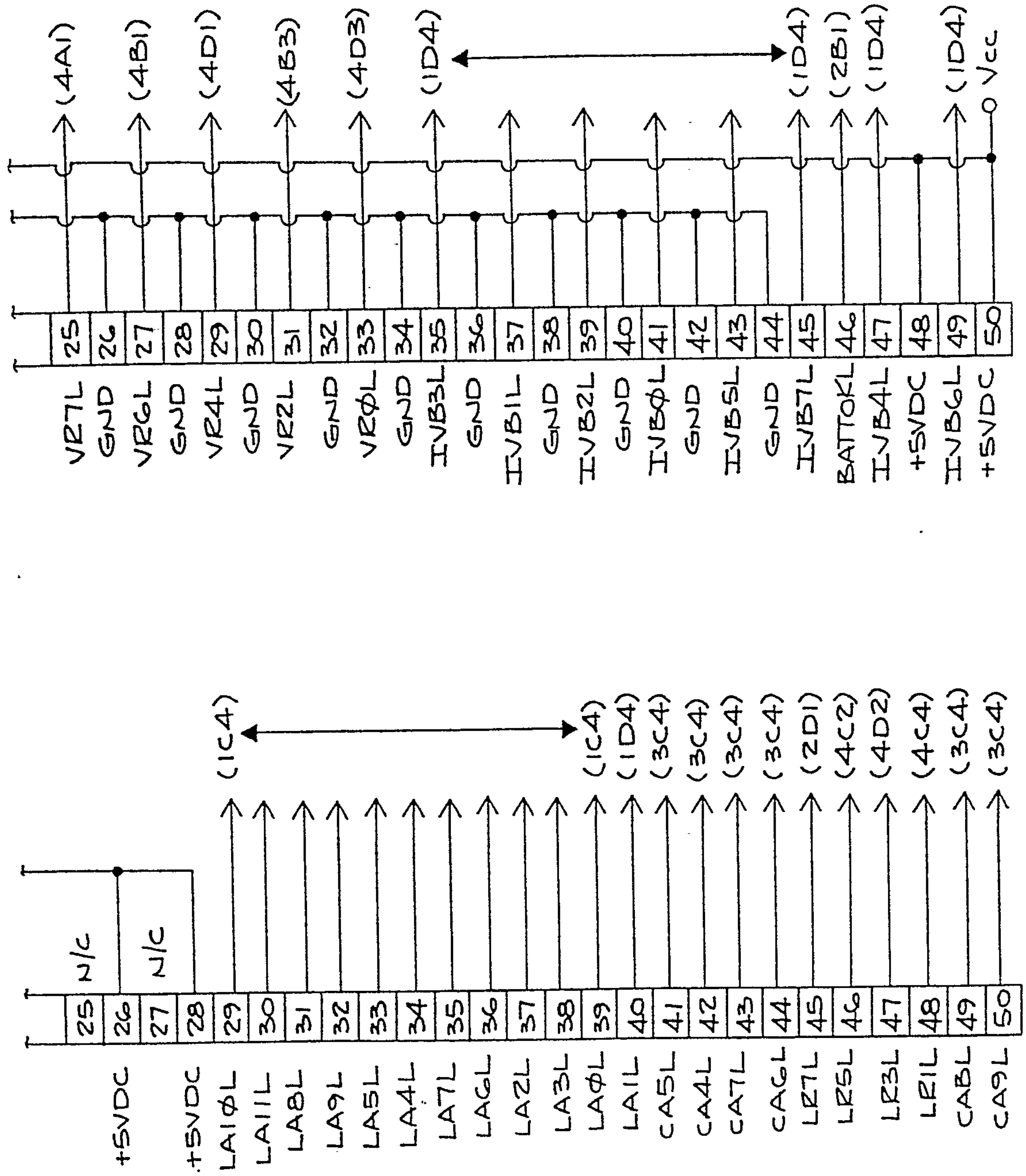

N/C
N/C
+5VDC
+5VDC
LA1ΦL
LA11L
LA8L
LA9L
LA5L
LA4L
LA7L
LA6L
LA2L
LA3L
LAΦL
LA1L
CA5L
CA4L
CA7L
CA6L
LR7L
LR5L
LR3L
LR1L
CA8L
CA9L
(1C4)
(1C4)
(1D4)
(3C4)
(3C4)
(3C4)
(3C4)
(2D1)
(4C2)
(4D2)
(4C4)
(3C4)
(3C4)
VR7L
GND
VR6L
GND
VR4L
GND
VR2L
GND
VRΦL
GND
IVB3L
GND
IVB1L
GND
IVB2L
GND
IVBΦL
GND
IVB5L
GND
IVB7L
BATTOKL
IVB4L
+5VDC
IVB6L
+5VDC
(4A1)
(4B1)
(4D1)
(4B3)
(4D3)
(1D4)
(1D4)
(2B1)
(1D4)
(1D4)
Vcc


FIG.23B

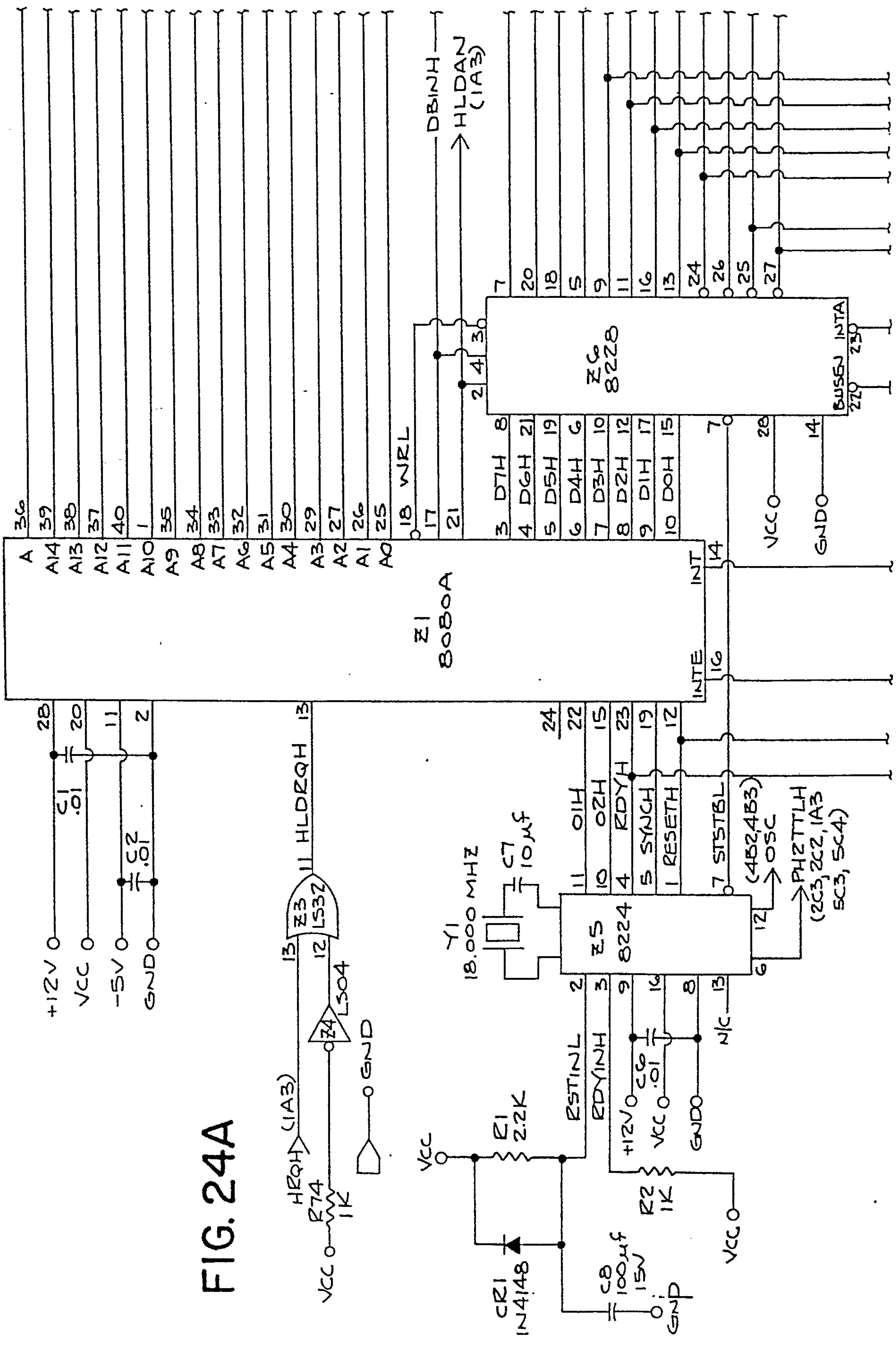
Z1
8080A
Z6
8228
Z5
8224
Z3
LS32
Z4
LS04
Y1
18.000 MHZ
CR1
IN4148
DBINH
HLDAN
(1A3)
HLDRQH
HRQH
STSTBL
RESETH
SYNCH
RDYH
RSTINL
RDYINH
BUSEN
INTA
WRL
+12V
VCC
-5V
GNDO

FIG. 24A

FIG. 24B

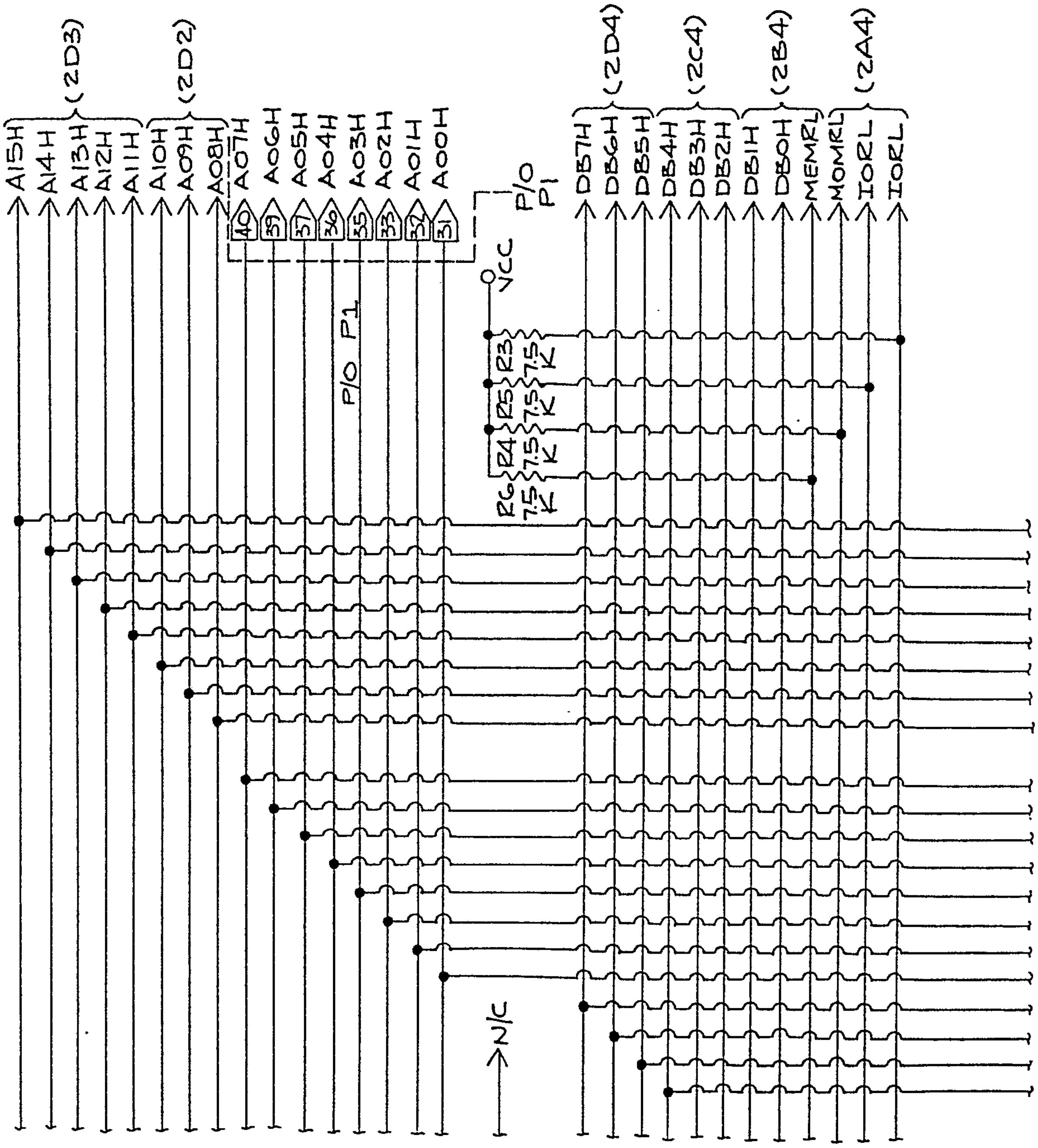

A15H
A14H
A13H
A12H
A11H
A10H
A09H
A08H
(2D3)
(2D2)
A07H
A06H
A05H
A04H
A03H
A02H
A01H
A00H
40
39
37
36
35
33
32
31
P/O P1
VCC
R3 7.5 K
R5 7.5 K
R4 7.5 K
R6 7.5 K
N/C
DB7H
DB6H
DB5H
DB4H
DB3H
DB2H
DB1H
DB0H
MEMRL
MOMRL
IORL
IORL
(2D4)
(2C4)
(2B4)
(2A4)

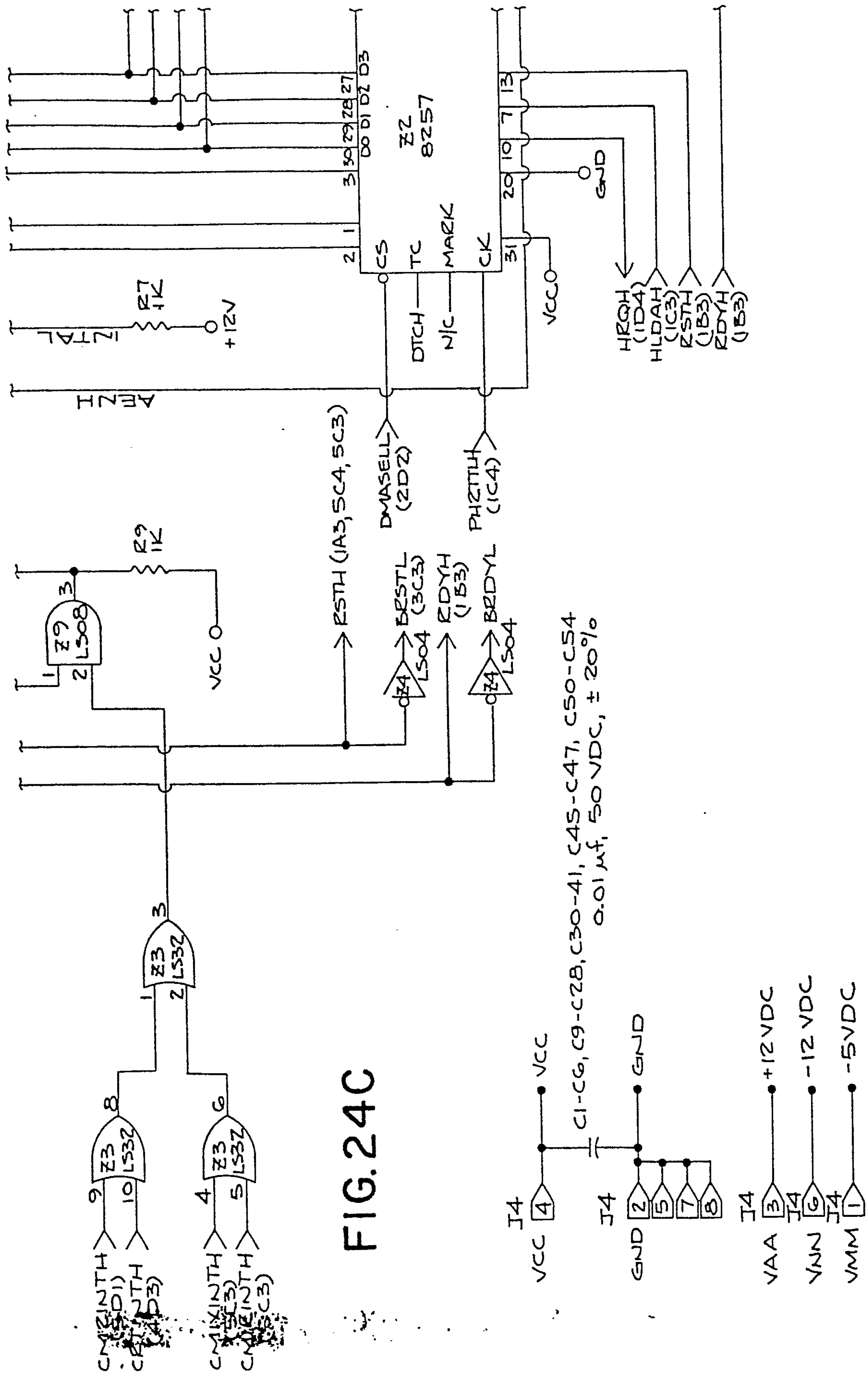
Z2
8257
D0 D1 D2 D3
CS
TC
MARK
CK
GND
VCC
HRQH (1D4)
HLDAH (1C3)
RSTH (1B3)
RDYH (1B3)
R7 1K
+12V
DTCH
N/C
DMASELL (2D2)
PH2TTH (1C4)
RSTH (1A3, 5C4, 5C3)
BRSTL (3C3)
RDYH (1B3)
BRDYL
Z4 LS04
Z9 LS08
R9 1K
Z3 LS32
C1-C6, C9-C28, C30-41, C45-C47, C50-C54
0.01 µf, 50 VDC, ± 20%
J4
VAA
VNN
VMM
+12VDC
-12VDC
-5VDC

FIG.24C

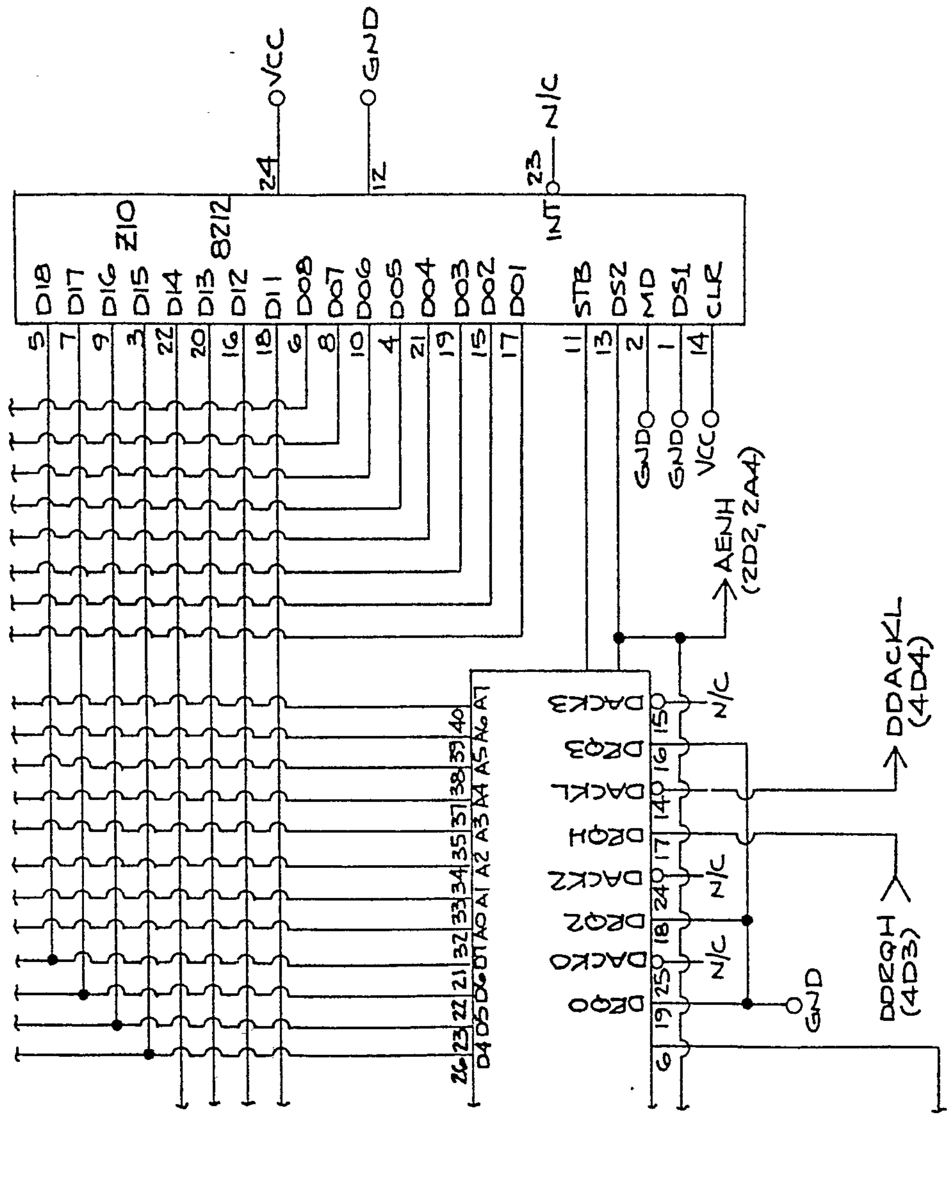
Z10
8212
VCC
GND
N/C
INT
STB
DS2
MD
DS1
CLR
AENH (2D2,2A4)
DDACKL (4D4)
DDREQH (4D3)
DACK3
DRQ3
DACKL
DRQH
DACK2
DRQ2
DACK0
DRQ0

FIG.24D

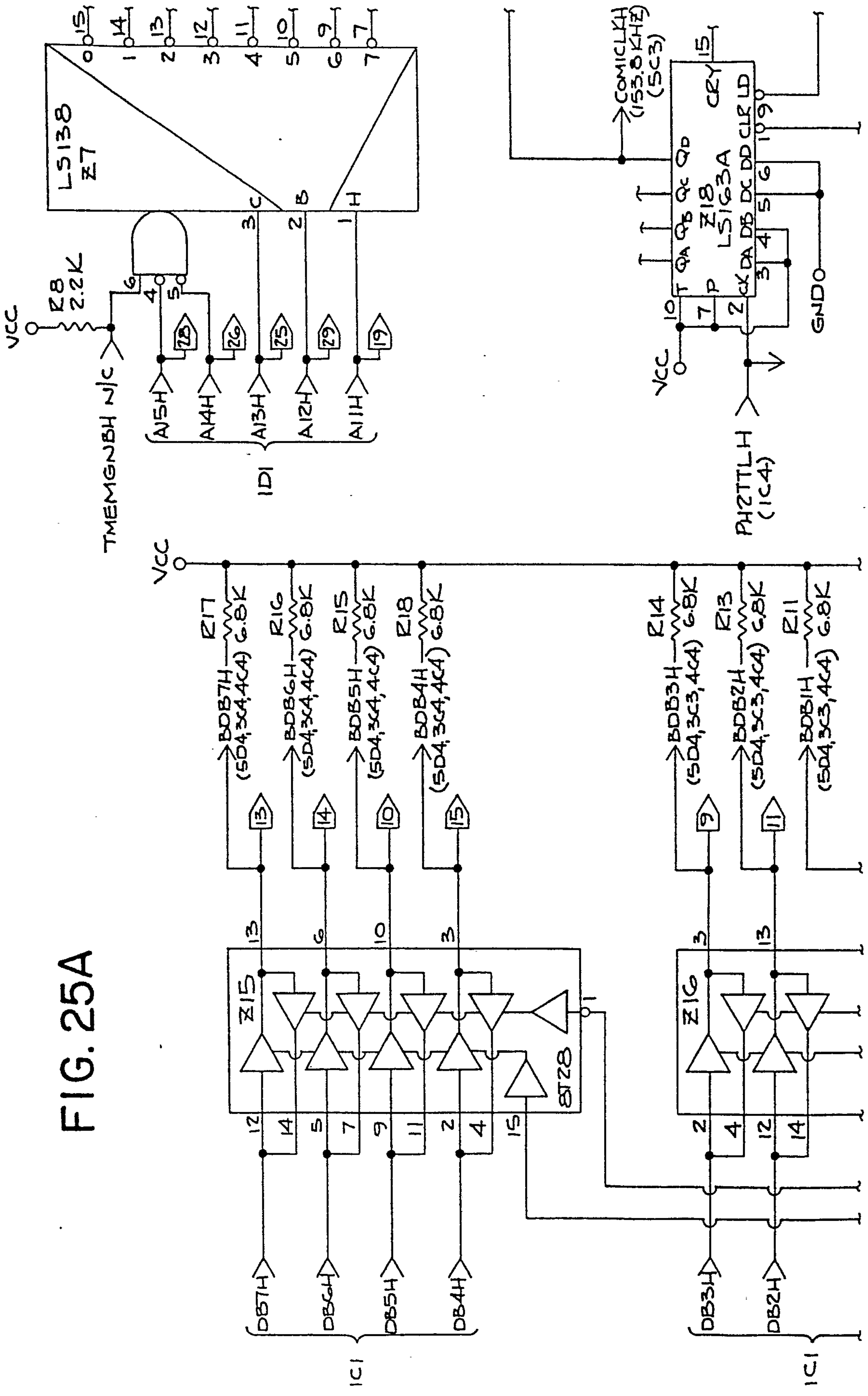
LS138
Z7
R8
2.2K
VCC
TMEMGNBH N/C
A15H
A14H
A13H
A12H
A11H
1D1
COMICLKH
(153.8KHZ)
(5C3)
Z18
LS163A
GND
PH2TTLH
(1C4)
R17
R16
R15
R18
R14
R13
R11
6.8K
BDB7H
BDB6H
BDB5H
BDB4H
(5D4,3C4,4C4)
BDB3H
BDB2H
BDB1H
(5D4,3C3,4C4)
Z15
8T28
Z16
DB7H
DB6H
DB5H
DB4H
DB3H
DB2H
IC1

FIG. 25A

FIG. 25B

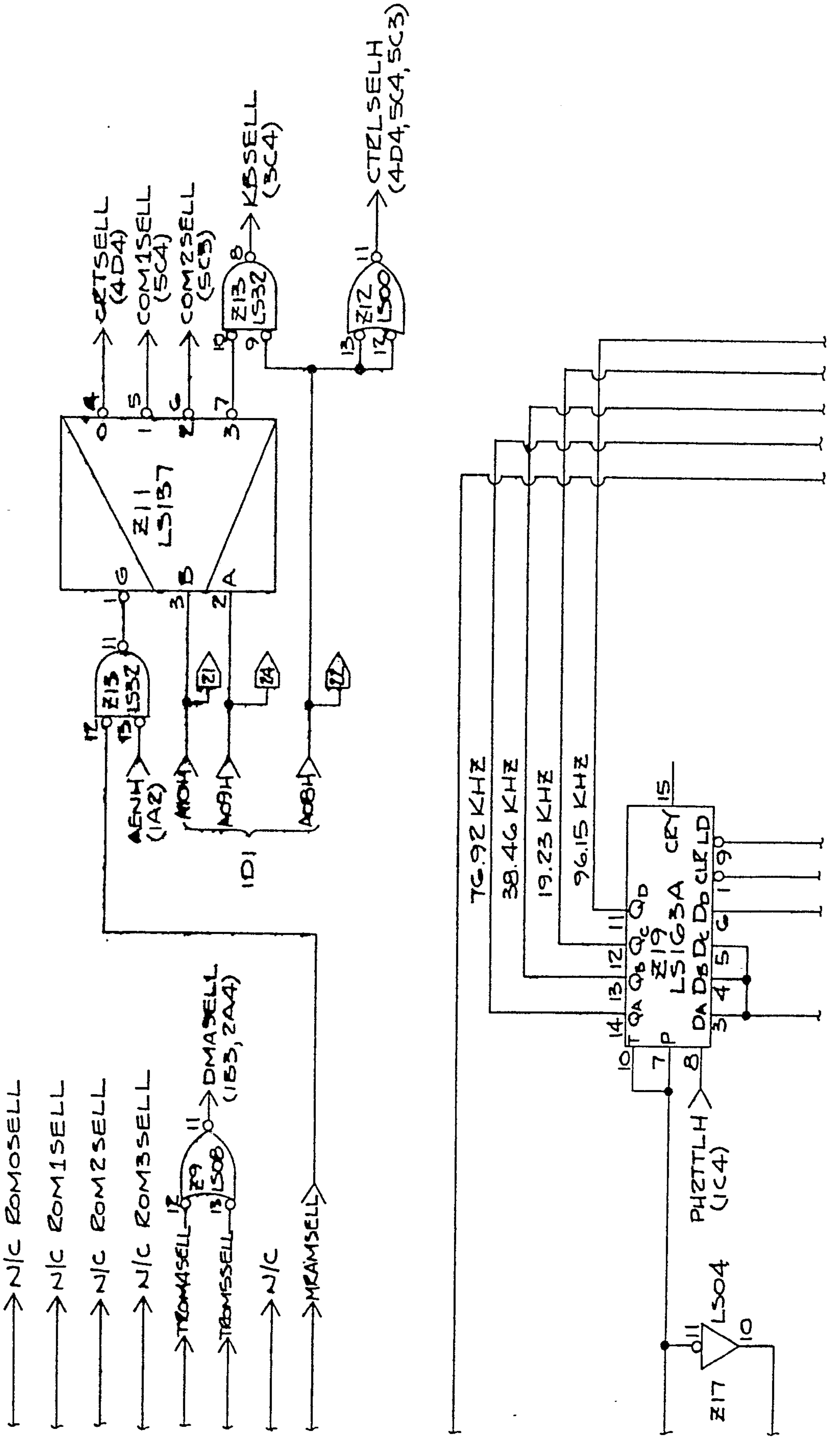

N/C ROM0SELL
N/C ROM1SELL
N/C ROM2SELL
N/C ROM3SELL
TROM4SELL
TROM5SELL
N/C
MRAMSELL
Z9
LS08
DMASELL
(1B3, 2A4)
Z13
LS32
AENH
(1A2)
A10H
A09H
A08H
1D1
Z11
LS137
CRTSELL
(4D4)
COM1SELL
(5C4)
COM2SELL
(5C3)
KBSELL
(3C4)
Z12
LS00
CTRLSELH
(4D4, 5C4, 5C3)
76.92 KHZ
38.46 KHZ
19.23 KHZ
9.615 KHZ
Z19
LS163A
PHZTTLH
(1C4)
Z17
LS04

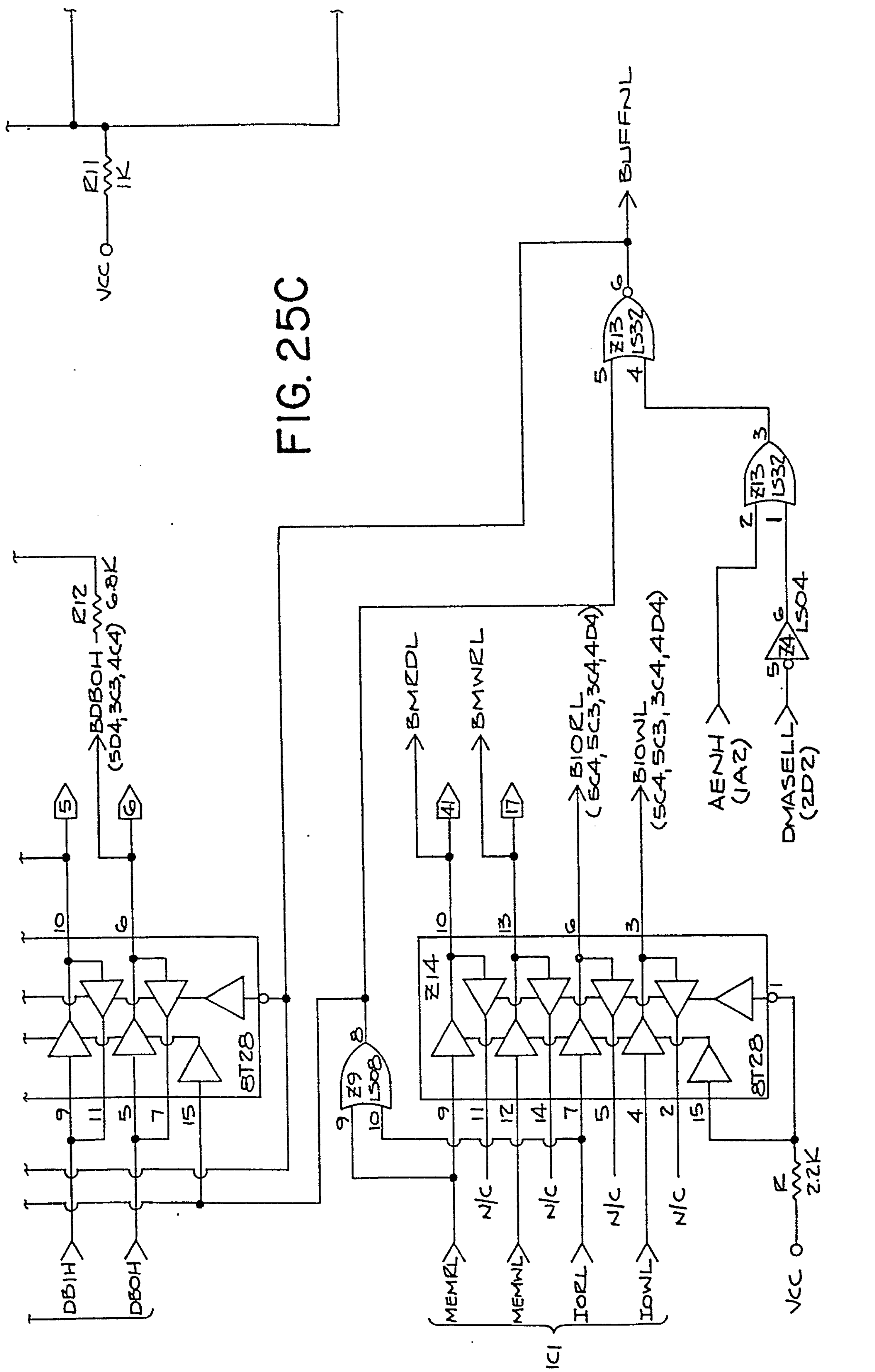
VCC
R11 1K
BUFFNL
Z13 LS32
Z13 LS32
AENH (1A2)
DMASELL (2D2)
Z4 LS04
BDBOH (5D4,3C3,4C4)
R12 6.8K
8T28
Z9 LS08
Z14
8T28
BMRDL
BMWRL
BIORL (6C4,5C3,3C4,4D4)
BIOWL (5C4,5C3,3C4,4D4)
N/C
R 2.2K
VCC
DB1H
DB0H
MEMRL
MEMWL
IORL
IOWL
IC1

FIG. 25C

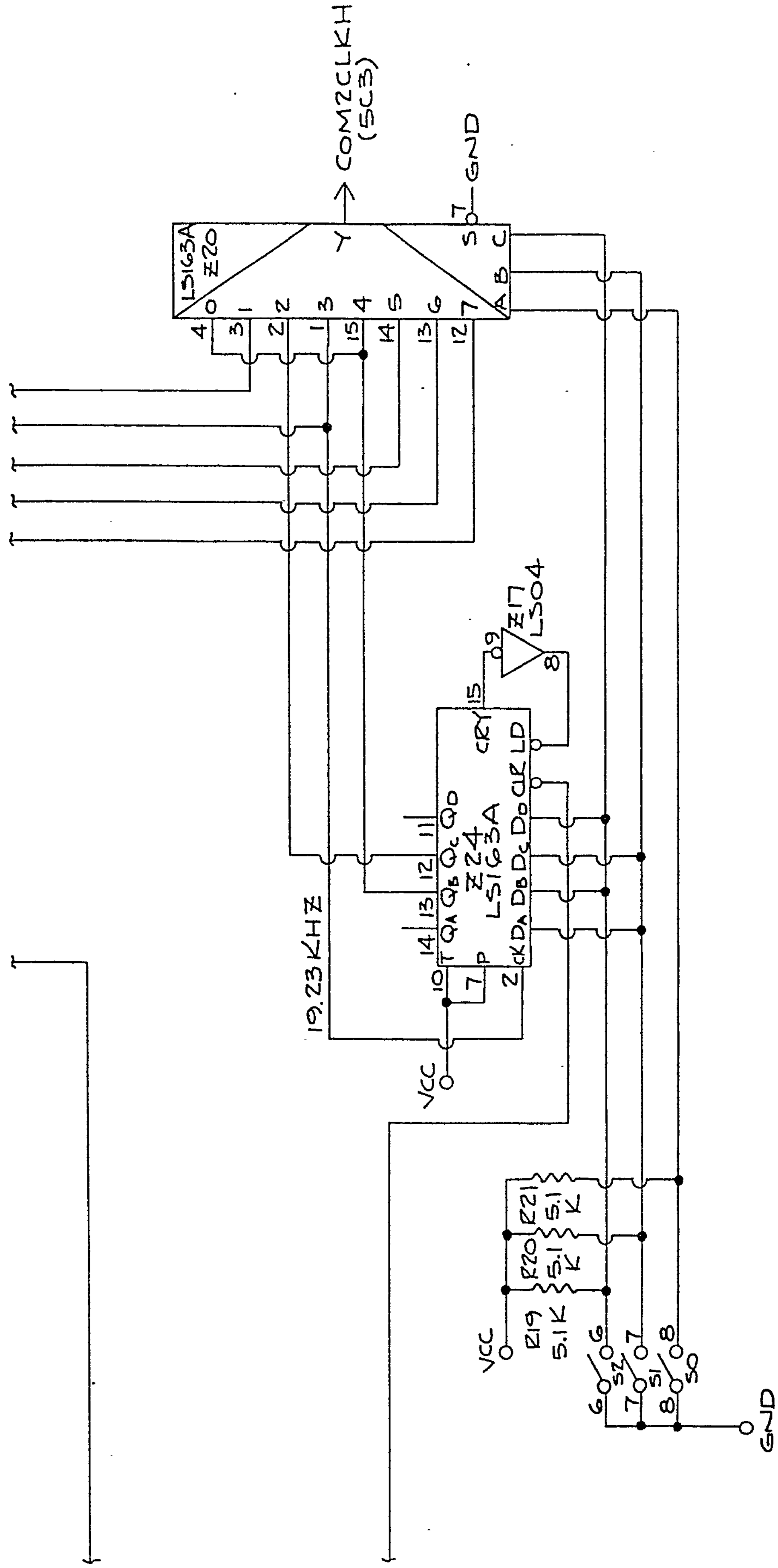
COM2CLKH
(5C3)
GND
LS163A
Z20
Z17
LS04
Z24
LS163A
19.23KHZ
VCC
R19
5.1K
R20
5.1
K
R21
5.1
K
S2
S1
S0
GND

FIG. 25D

| | |
|---|---|
| FIG.25A | FIG.25B |
| FIG.25C | FIG.25D |

FIG.25E

| | |
|---|---|
| FIG. 26A | FIG. 26B |
| FIG. 26C | FIG. 26D |

FIG. 26E

| | |
|---|---|
| FIG. 27A | FIG.27B |
| FIG.27C | FIG.27D |

FIG. 27E

| | |
|---|---|
| FIG.28A | FIG. 28B |
| FIG. 28C | FIG. 28D |

FIG. 28E

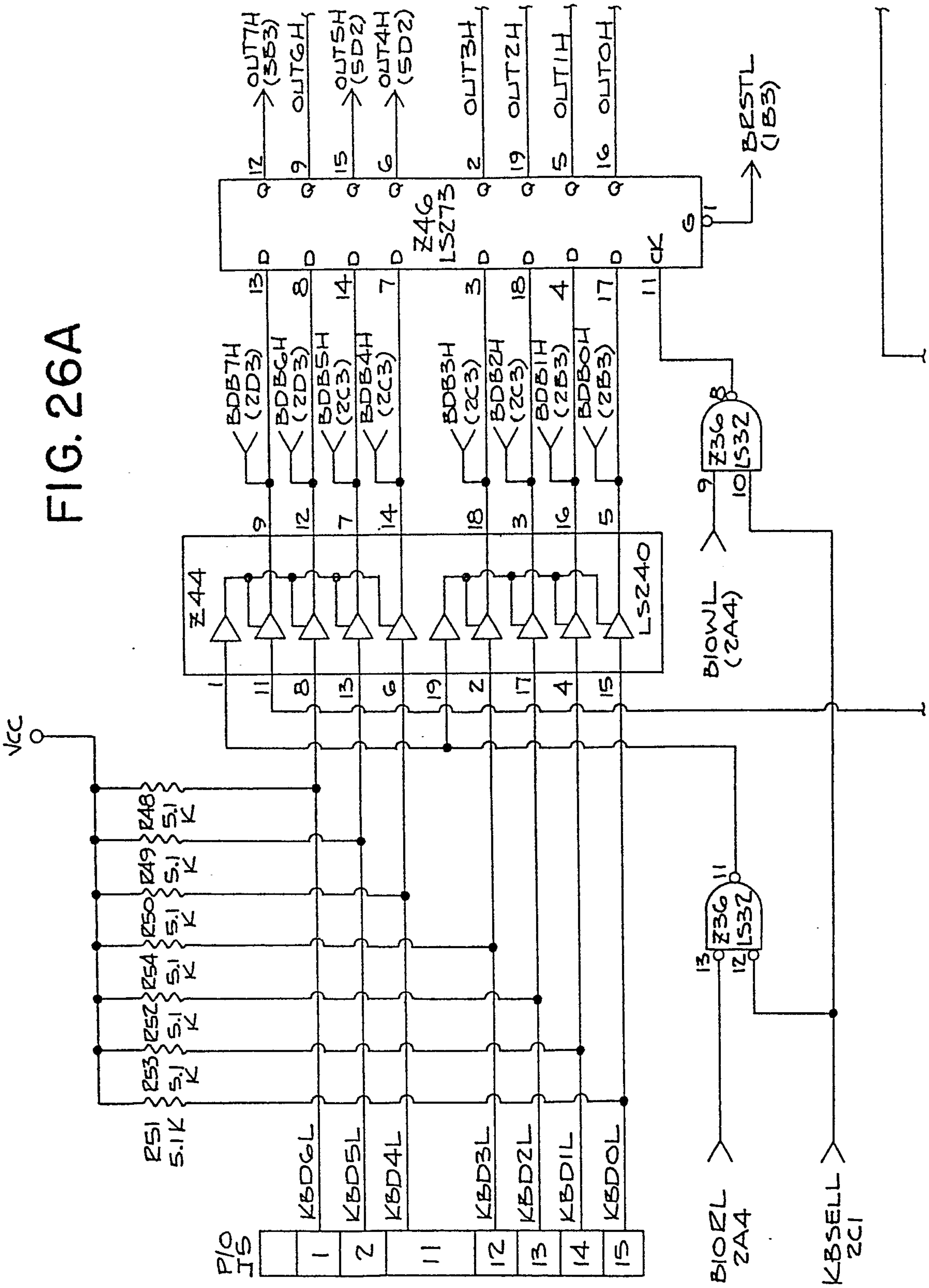

FIG. 26A

FIG. 26B

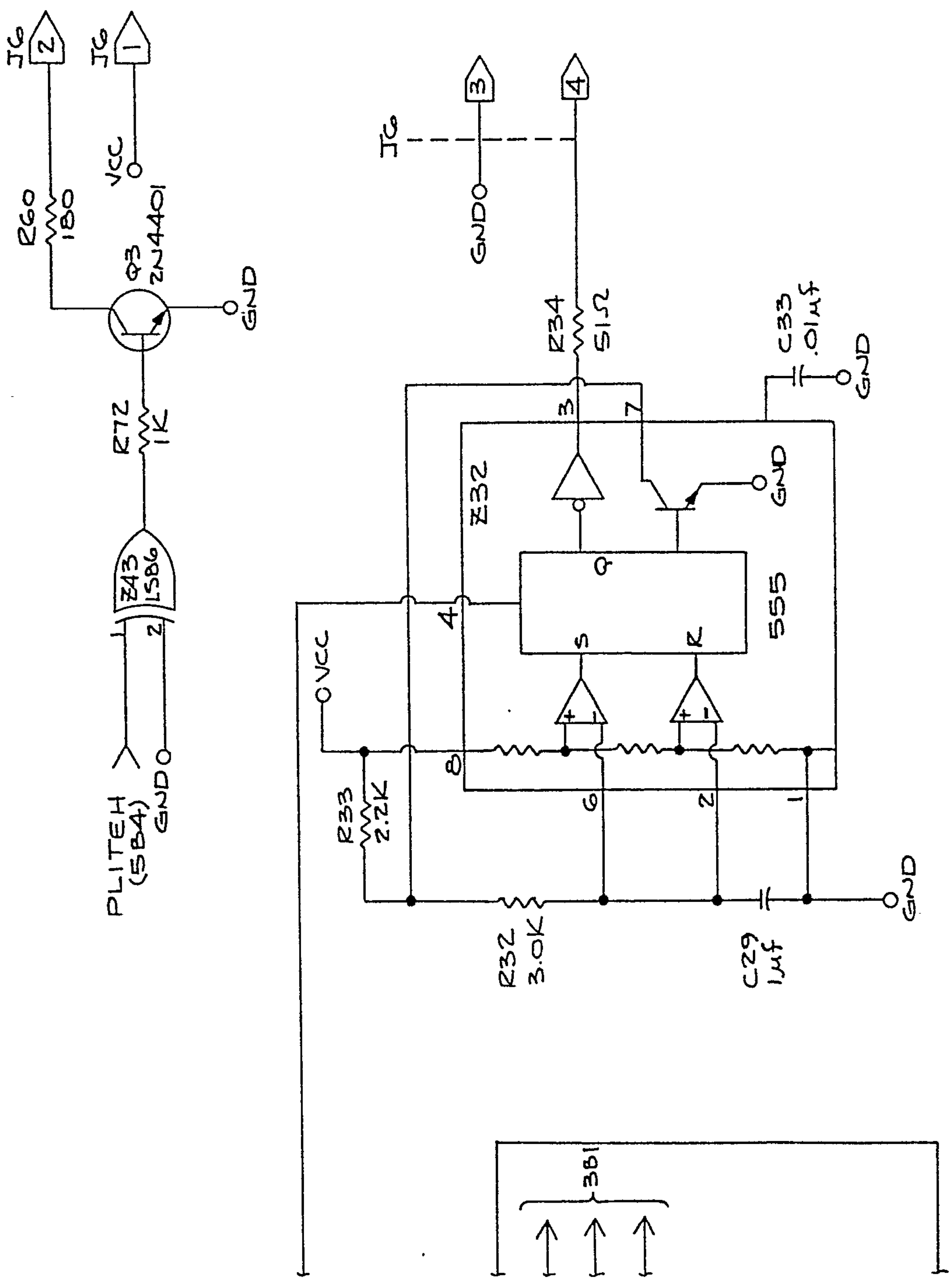
J6
2
J6
1
VCC
R60
180
Q3
2N4401
GND
R72
1K
Z43
LS86
1
2
PLITEH
(5B4)
GND
J6
3
4
GND
R34
51Ω
C33
.01μf
GND
3
7
Z32
GND
Q
4
555
S
R
VCC
8
6
2
1
R33
2.2K
R32
3.0K
C29
1μf
GND
381

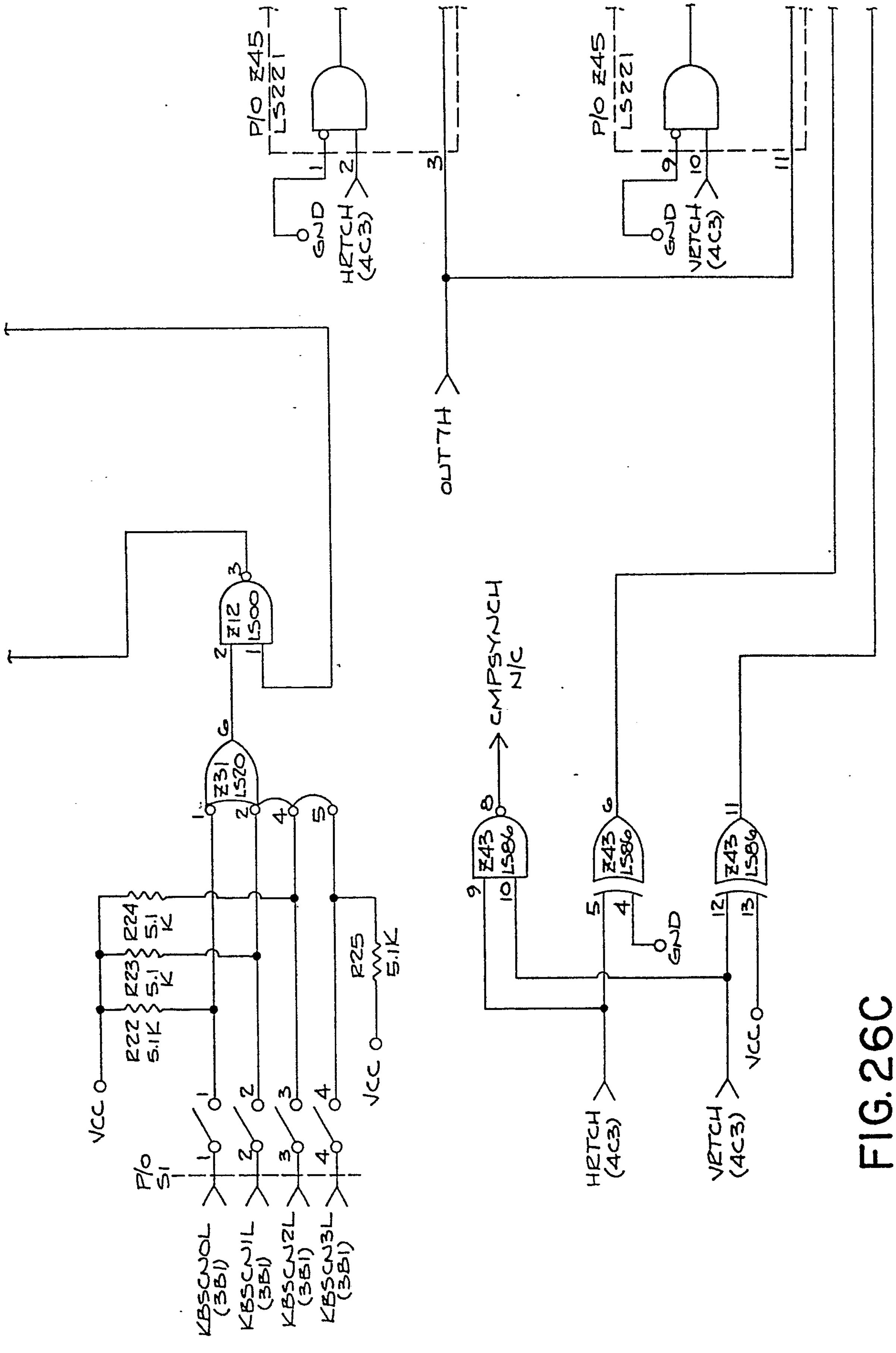
P/O Z45
LS221
GND
HRTCH (4C3)
P/O Z45
LS221
GND
VRTCH (4C3)
OUT7H
Z12
LS00
CMPSYNCH
N/C
Z31
LS20
Z43
LS86
Z43
LS86
Z43
LS86
GND
R24 5.1 K
R23 5.1 K
R22 5.1K
R25 5.1K
VCC
VCC
VCC
HRTCH (4C3)
VRTCH (4C3)
P/O S1
KBSCN0L (3B1)
KBSCN1L (3B1)
KBSCN2L (3B1)
KBSCN3L (3B1)

FIG.26C

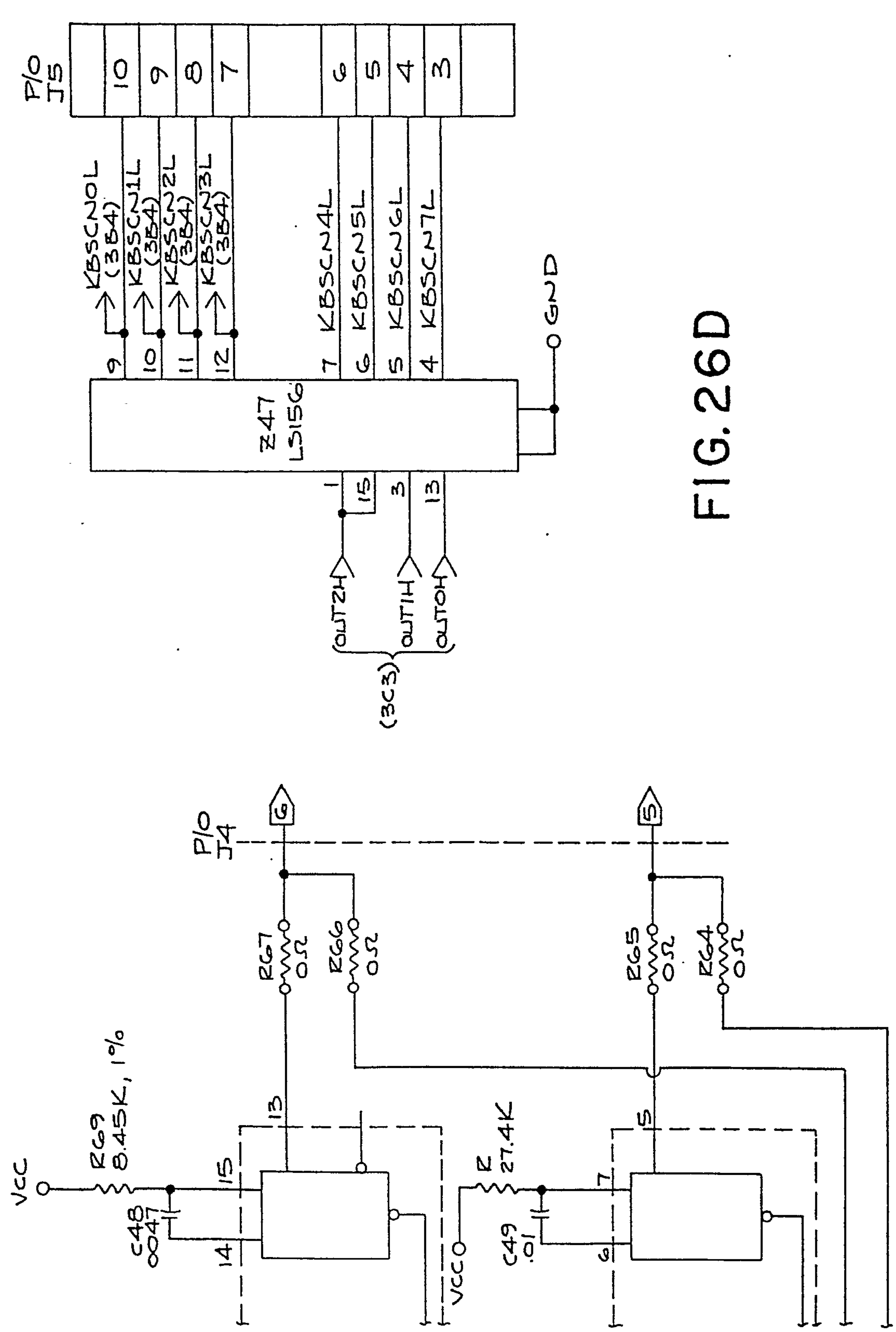
P/O J5
10
9
8
7
6
5
4
3
KBSCN0L (3B4)
KBSCN1L (3B4)
KBSCN2L (3B4)
KBSCN3L (3B4)
KBSCN4L
KBSCN5L
KBSCN6L
KBSCN7L
GND
Z47 LS156
OUT2H
OUT1H
OUT0H
(3C3)
P/O J4
R67 0Ω
R66 0Ω
R65 0Ω
R64 0Ω
VCC
R69 8.45K, 1%
C48 .0047
R 27.4K
C49 .01
VCC

FIG. 26D

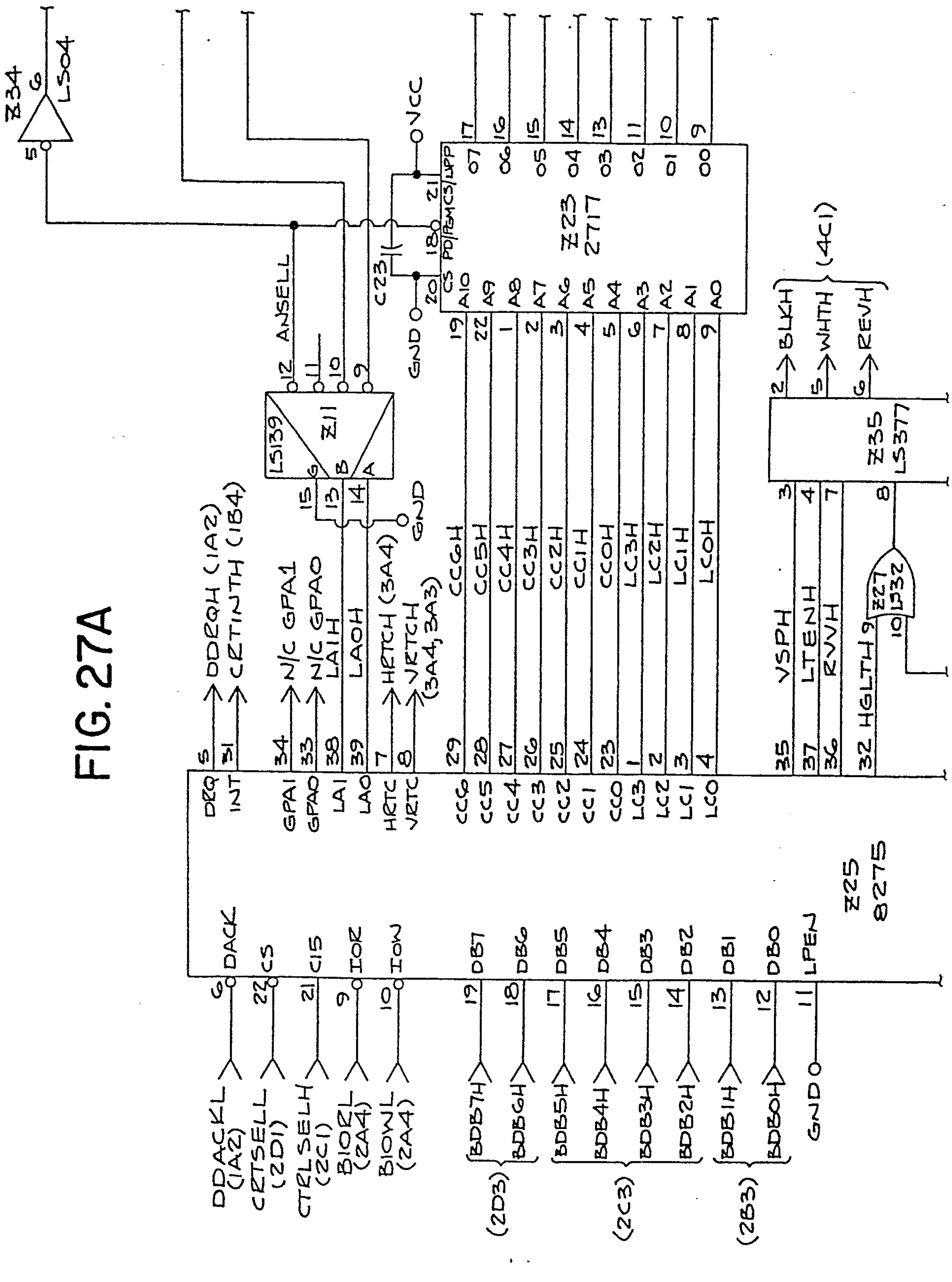
Z34
G
LS04
Z23
2717
VCC
GND
C23
ANSELL
LS139
Z11
Z25
8275
Z35
LS377
Z27
LS32
DDRQH (1A2)
CRTINTH (1B4)
N/C GPA1
N/C GPA0
LA1H
LA0H
HRTCH (3A4)
VRTCH
(3A4, 3A3)
CC6H
CC5H
CC4H
CC3H
CC2H
CC1H
CC0H
LC3H
LC2H
LC1H
LC0H
VSPH
LTENH
RVVH
HGLTH
BLKH
WHTH
REVH
(4C1)
DDACKL
(1A2)
CRTSELL
(2D1)
CTRLSELH
(2C1)
BIORL
(2A4)
BIOWL
(2A4)
BDB7H
BDB6H
BDB5H
BDB4H
BDB3H
BDB2H
BDB1H
BDB0H
(2D3)
(2C3)
(2B3)
GND
FIG. 27A

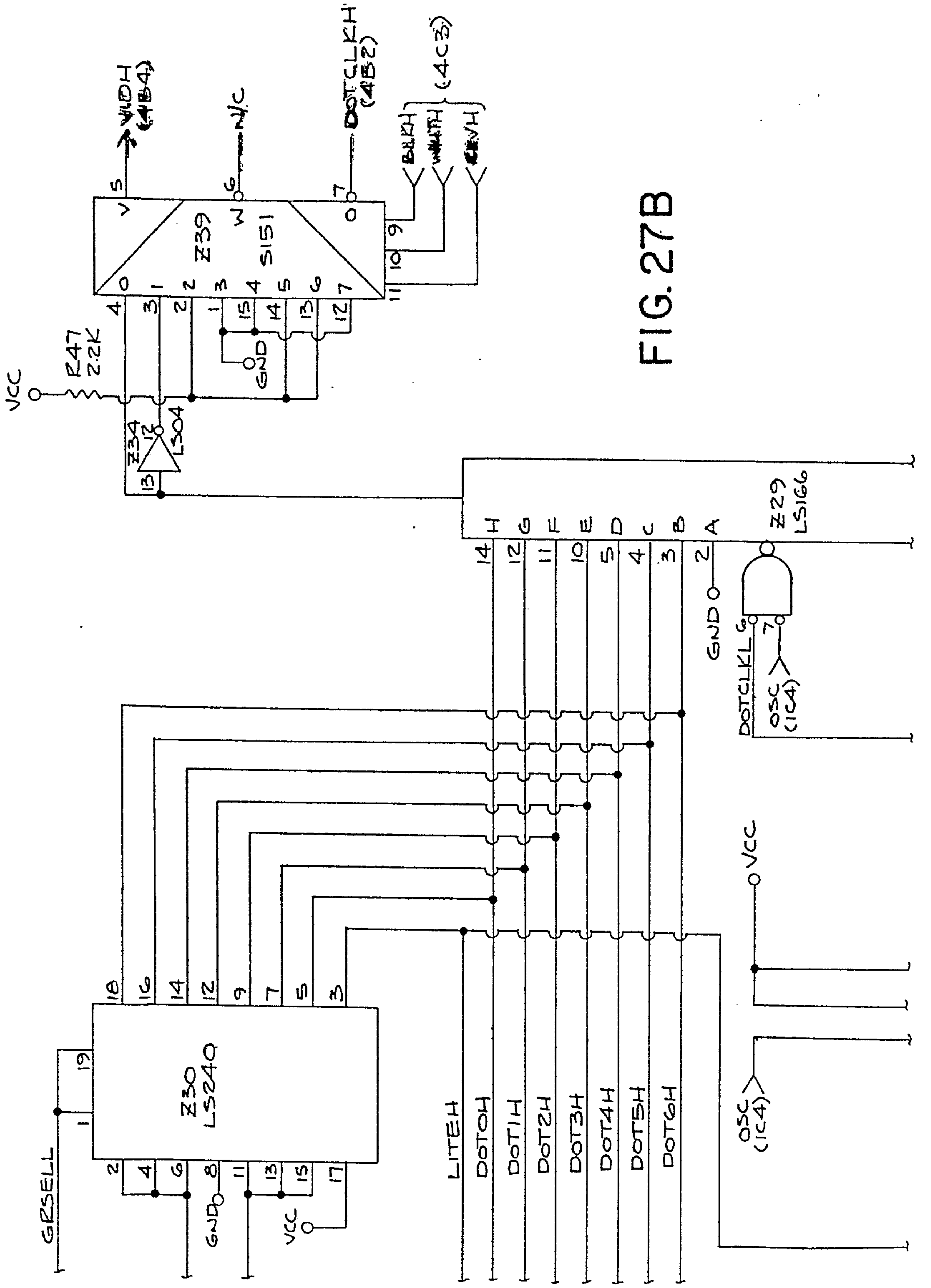
VIDH (4B4)
N/C
DOTCLKH (4B2)
BLKH
WHTH
LEVH
(4C3)
Z39
S151
VCC
R47
2.2K
GND
Z34
LS04
Z29
LS166
DOTCLKL
OSC (1C4)
Z30
LS240
GRSELL
LITEH
DOT0H
DOT1H
DOT2H
DOT3H
DOT4H
DOT5H
DOT6H

FIG. 27B

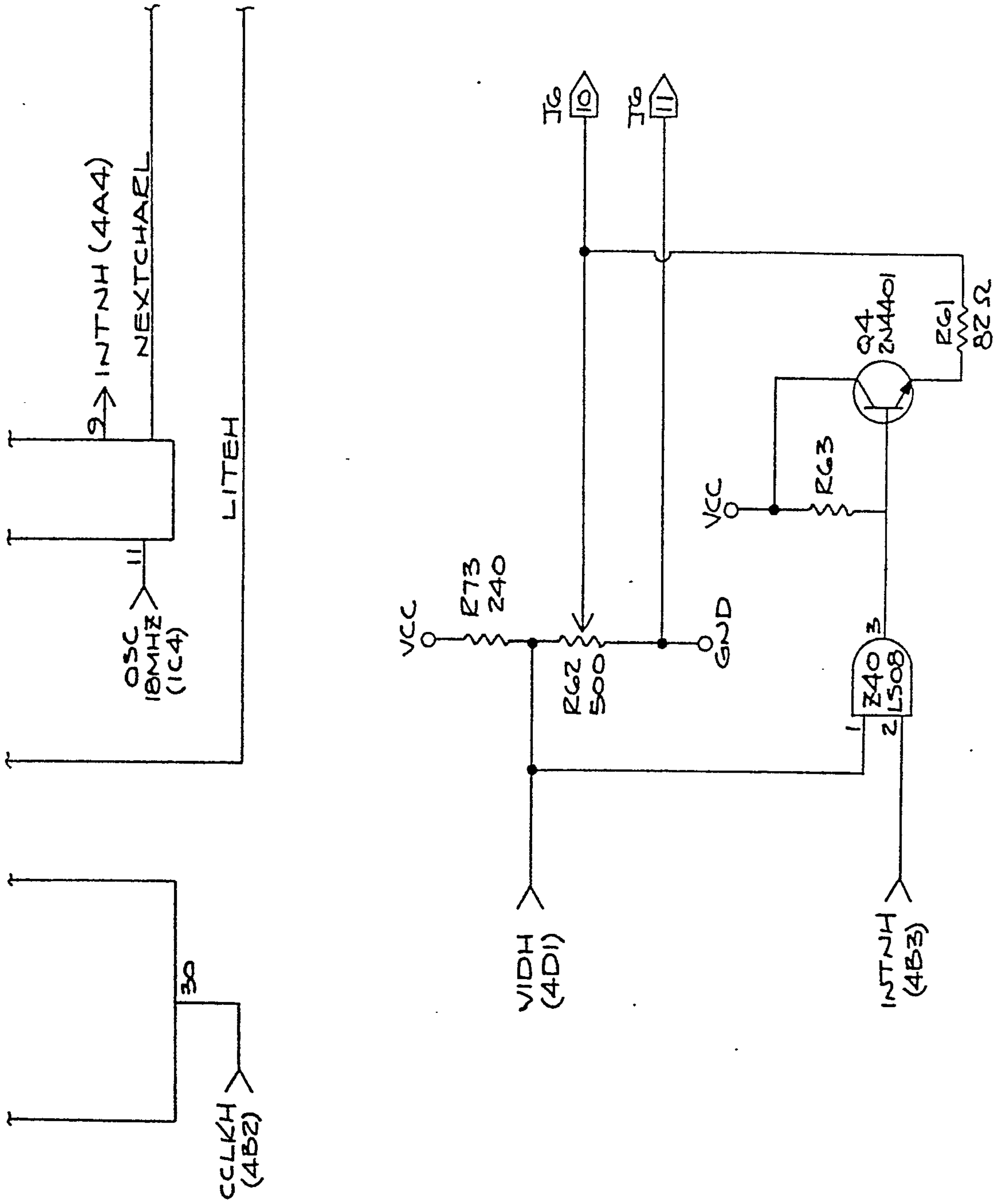

INTNH (4A4)
NEXTCHARL
LITEH
9
11
OSC
18MHZ
(1C4)
30
CCLKH
(4B2)
TG
10
TG
11
Q4
2N4401
R61
82Ω
VCC
R63
R73
240
R62
500
GND
Z40
LS08
1
2
3
VIDH
(4D1)
INTNH
(4B3)


FIG. 27C

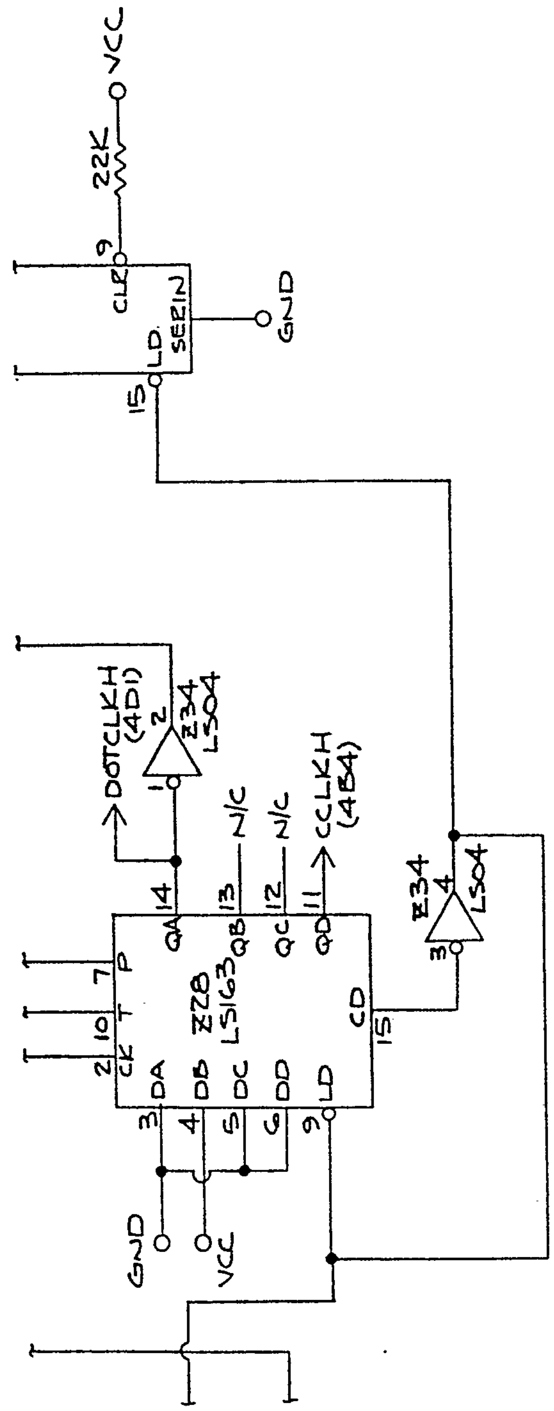
VCC
22K
9
CLR
LD.
SERIN
GND
15
DOTCLKH
(4D1)
2
Z34
LS04
1
N/C
N/C
CCLKH
(4B4)
14
13
12
11
QA
QB
QC
QD
Z28
LS163
P
T
CK
7
10
2
DA
DB
DC
DD
LD
3
4
5
6
9
CD
15
Z34
4
LS04
3
GND
VCC

FIG. 27D

FIG. 28A

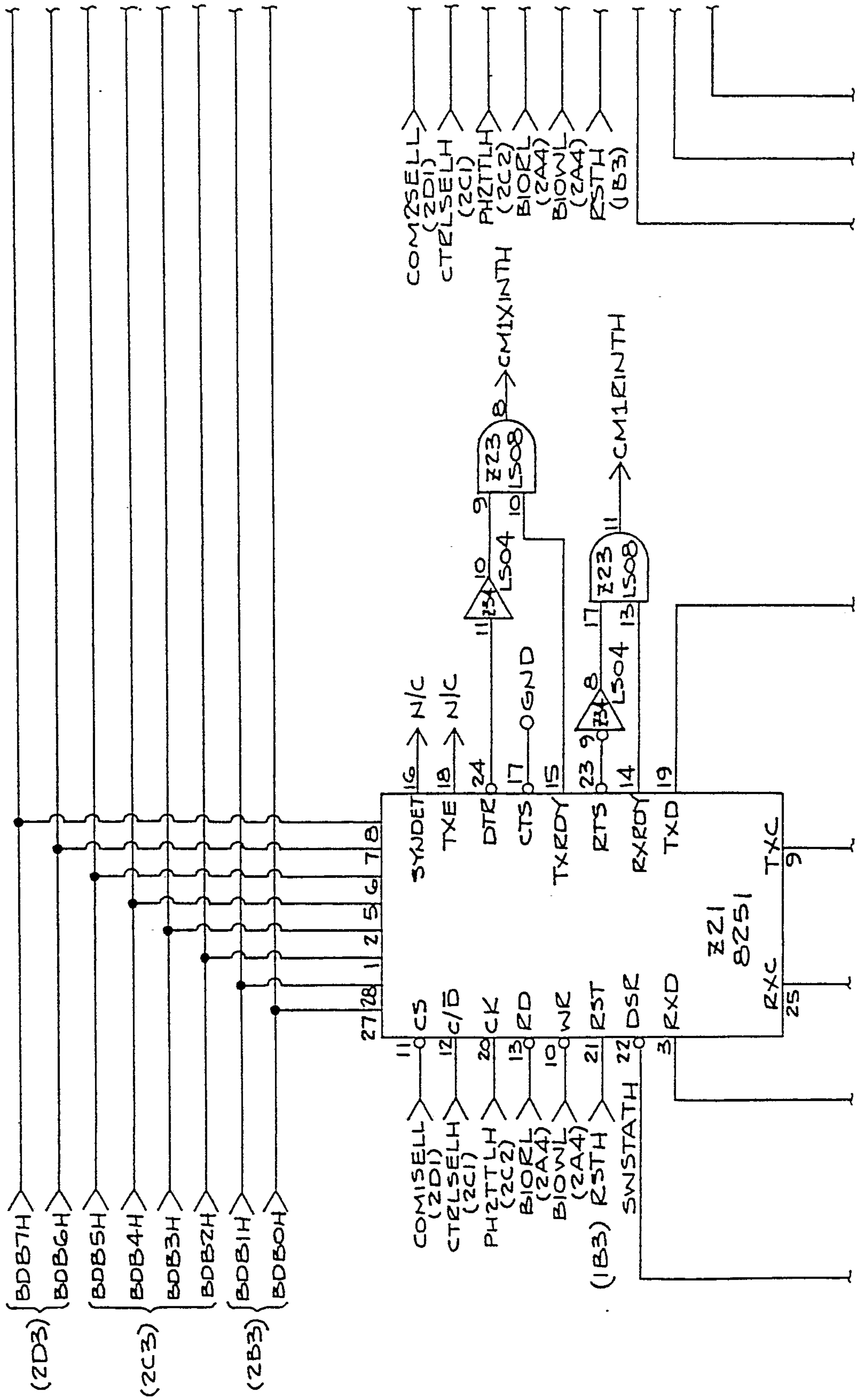
Z21
8251
SYNDET
TXE
DTR
CTS
TXRDY
RTS
RXRDY
TXD
TXC
RXC
CS
C/D
CK
RD
WR
RST
DSR
RXD
N/C
GND
CM1XINTH
CM1RINTH
Z23
LS08
Z34
LS04
COM2SELL (2D1)
CTRLSELH (2C1)
PH2TTLH (2C2)
BIORL (2A4)
BIOWL (2A4)
RSTH (1B3)
COM1SELL (2D1)
SWSTATH
BDB7H
BDB6H
BDB5H
BDB4H
BDB3H
BDB2H
BDB1H
BDB0H
(2D3)
(2C3)
(2B3)

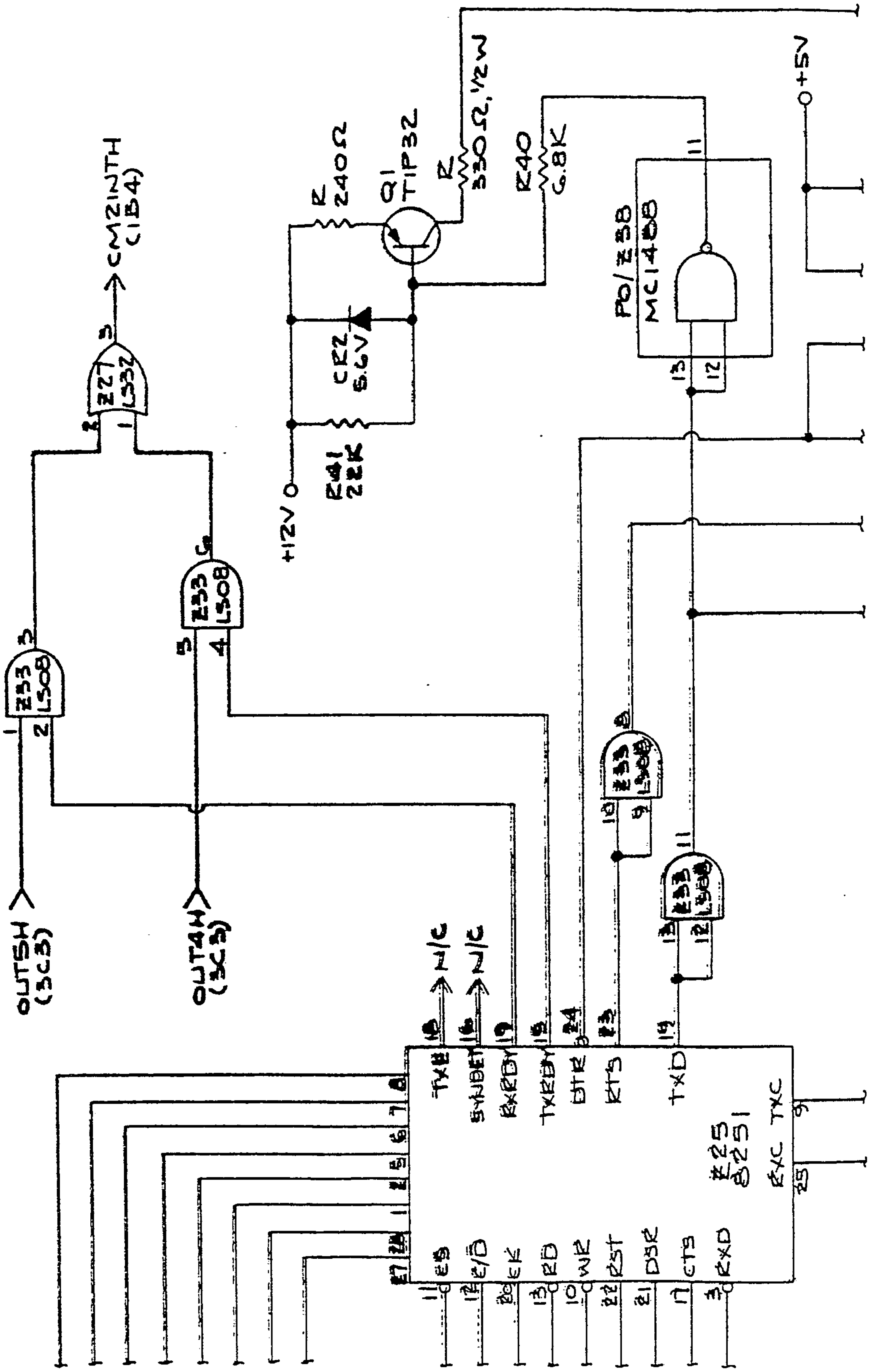
CM2INTH (1B4)
Z27 LS32
Z33 LS08
OUT5H (3C3)
OUT4H (3C3)
+12V
R41 22K
CR2 5.6V
R 240Ω
Q1 TIP32
R 330Ω, 1/2W
R40 6.8K
+5V
N/C
N/C
Z25 8251
TXE
SYNDET
RXRDY
TXRDY
DTR
RTS
TXD
RXC
TXC
CS
C/D
CK
RD
WR
RST
DSR
CTS
RXD

FIG. 28B

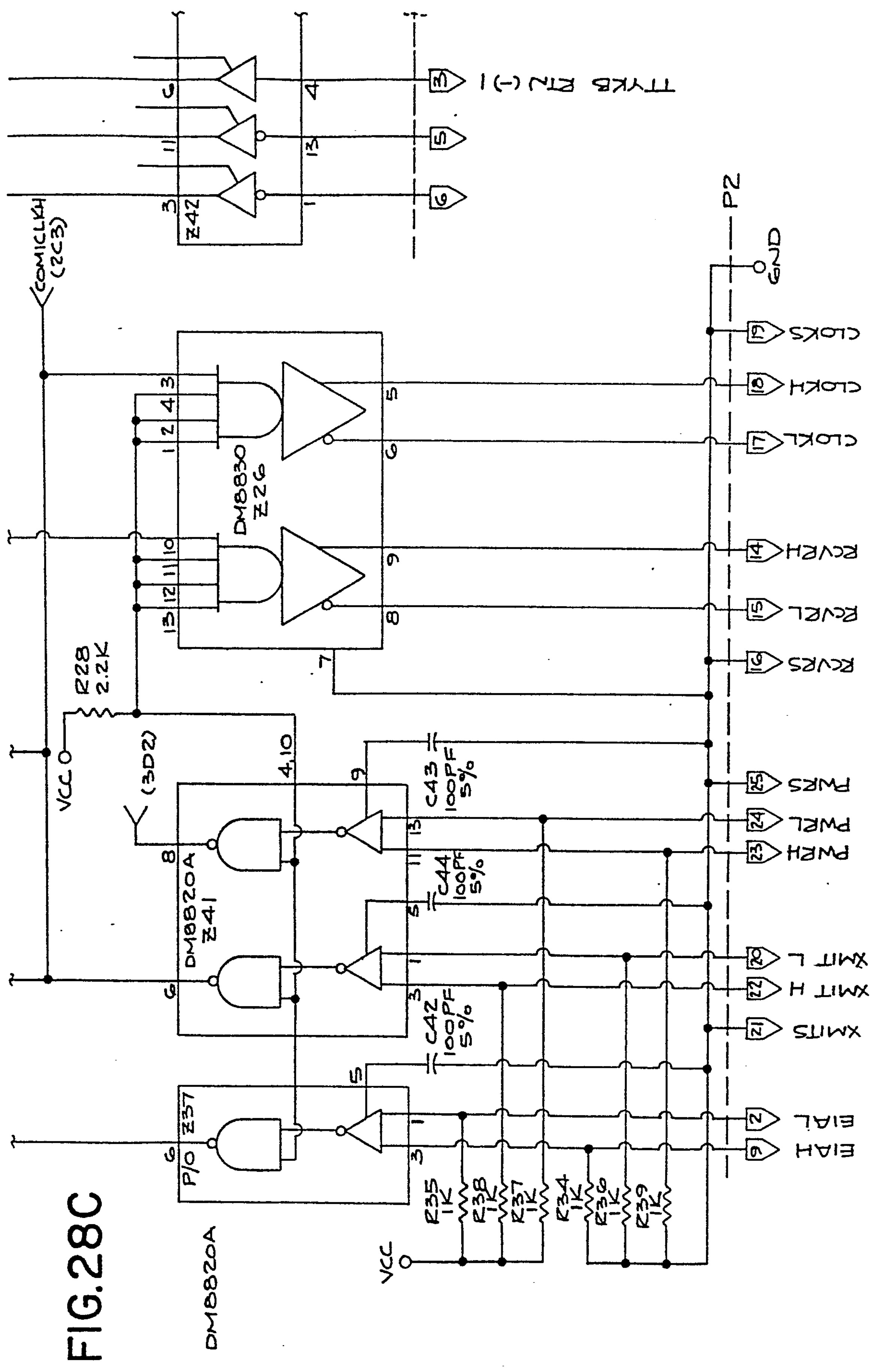
TTYKB RTN (-)1
Z42
COMICLKH
(2C3)
DM8830
Z26
R28
2.2K
VCC
(3D2)
DM8820A
Z41
Z37
P/O
C43
100PF
5%
C44
100PF
5%
C42
100PF
5%
R35
1K
R38
1K
R37
1K
R34
1K
R36
1K
R39
1K
P2
GND
CLOKS
CLOKH
CLOKL
RCVRH
RCVRL
RCVRS
PWRS
PWRL
PWRH
XMIT L
XMIT H
XMITS
EIAL
EIAH
DM8820A

FIG.28C

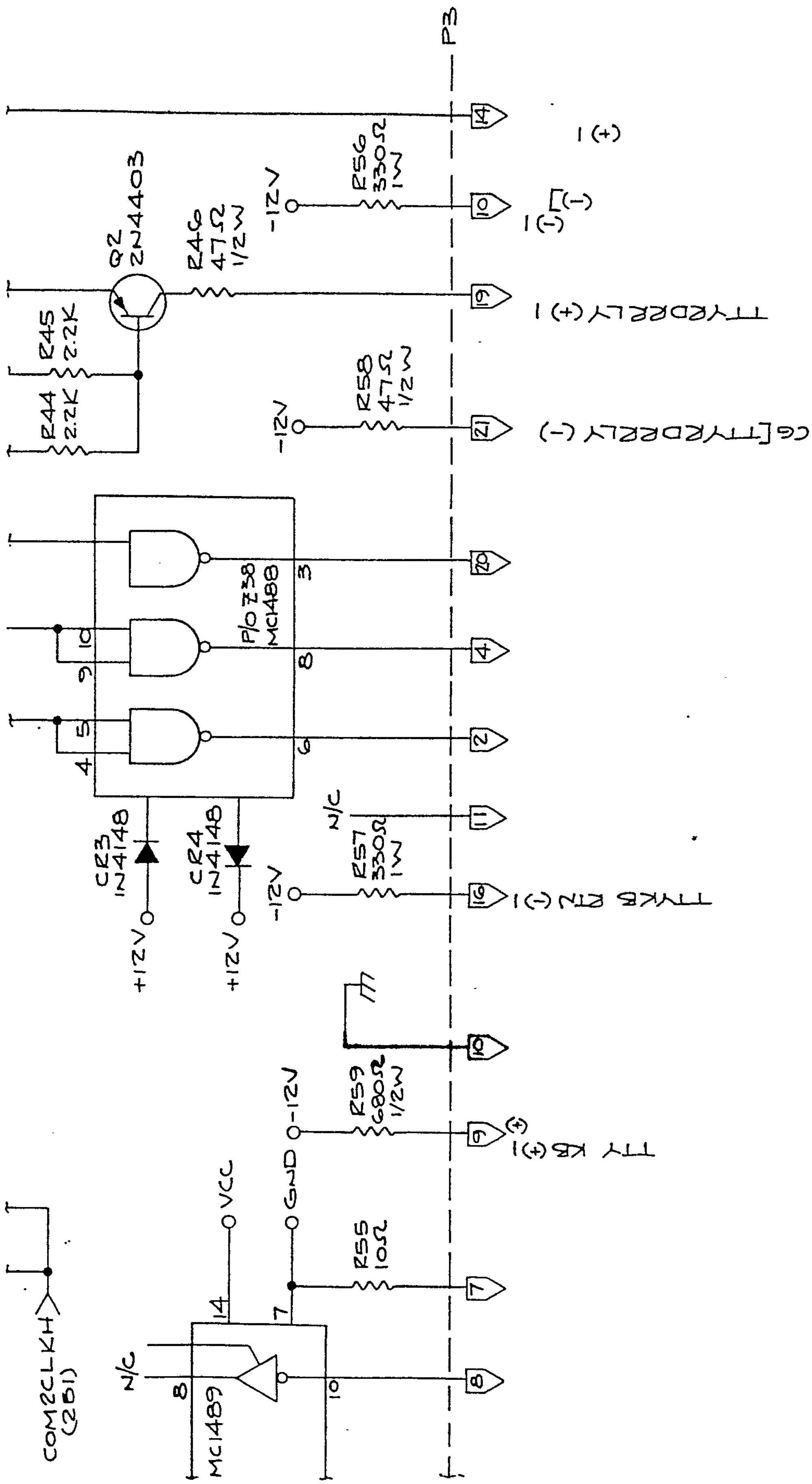
P3
Q2
2N4403
R46
47Ω
1/2W
R45
2.2K
R44
2.2K
R56
330Ω
1W
R58
47Ω
1/2W
-12V
TTYRDRLY(+)
TTYRDRLY(-)
P/O Z38
MC1488
CR3
1N4148
CR4
1N4148
+12V
N/C
R57
330Ω
1W
TTYKB RTN(-)
R59
680Ω
1/2W
TTY KB(+)
VCC
GND
R55
10Ω
MC1489
COM2CLKH
(2B1)

FIG.28D

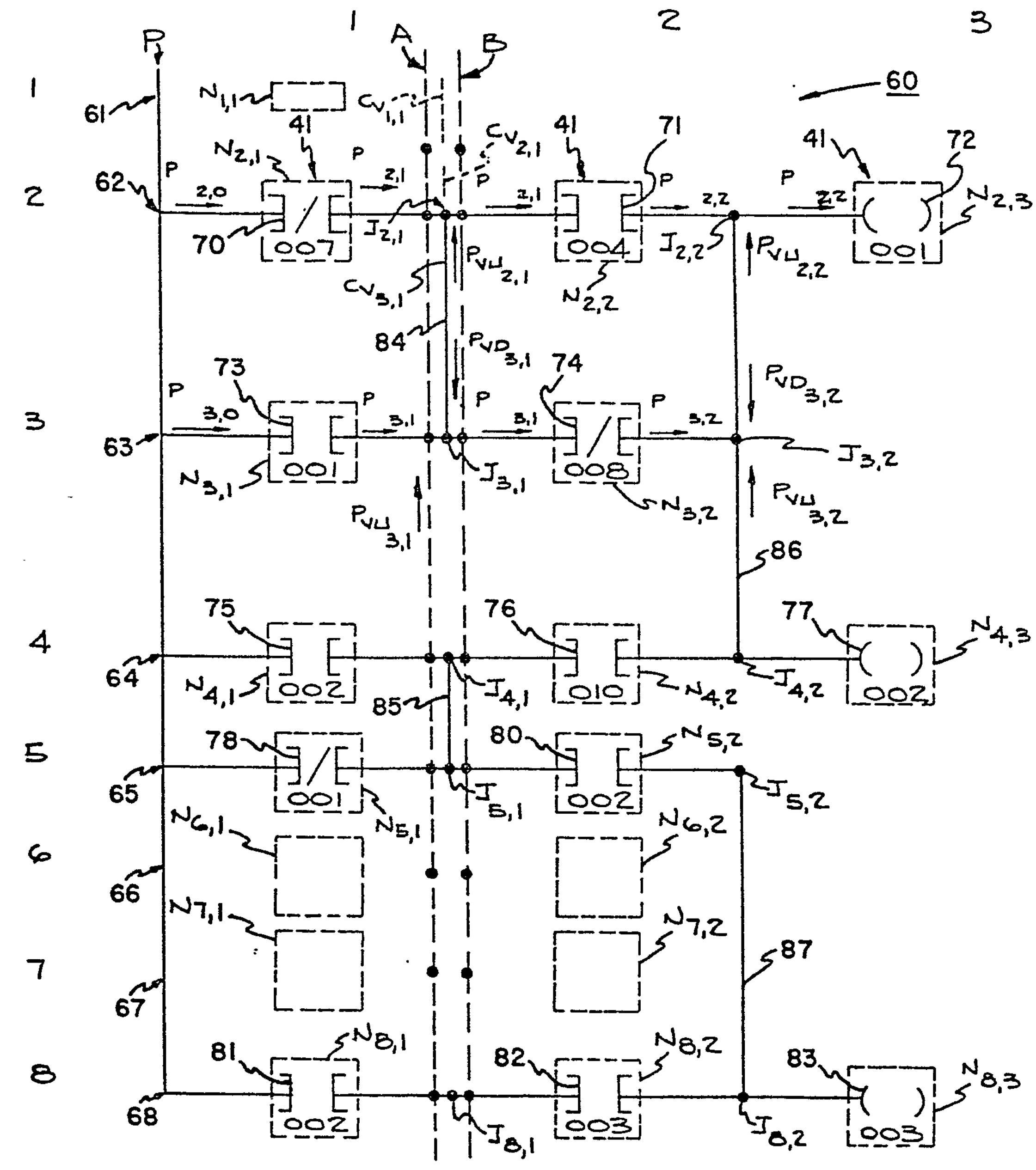

FIG. 29

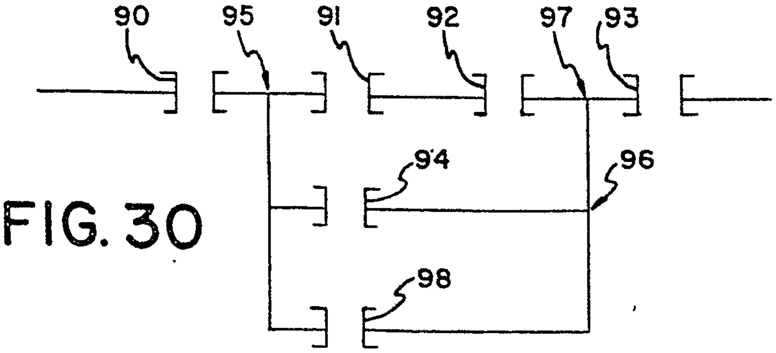

FIG. 30